(19)

Europäisches
Patentamt
European
Patent Office
Office européen
des brevets

(11) **EP 2 457 435 A1**

(12) **EUROPEAN PATENT APPLICATION**
published in accordance with Art. 153(4) EPC

(43) Date of publication:
**30.05.2012 Bulletin 2012/22**

(21) Application number: **10802065.2**

(22) Date of filing: **16.07.2010**

(51) Int Cl.:
**A01G 7/00** *(2006.01)*    **A01G 13/02** *(2006.01)*
**A01M 29/00** *(2011.01)*

(86) International application number:
**PCT/JP2010/004634**

(87) International publication number:
**WO 2011/010444 (27.01.2011 Gazette 2011/04)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **24.07.2009 JP 2009173176**

(71) Applicant: **Kamahara, Masataka
Kochi 780-0804 (JP)**

(72) Inventor: **Kamahara, Masataka
Kochi 780-0804 (JP)**

(74) Representative: **Wimmer, Hubert
WAGNER & GEYER
Gewürzmühlstrasse 5
80538 München (DE)**

(54) **LIGHTING ENVIRONMENT CONTROL FACILITY FOR CULTIVATION OF CROPS, PEST CONTROL METHOD, AND INTENSIVE CULTIVATION METHOD**

(57) Disclosed are: a lighting environment control facility capable of controlling light to be irradiated on cultivated crops to an optimum condition for the growth of the crops, thereby activating a natural defense of the crops against pests; a pest control method capable of determining whether or not to control pests of cultivated crops and controlling the pests on the basis of the determination; and an intensive cultivation method. The facility is used for pesticide-free cultivation, and includes a crop cultivation house which is formed of a light transmissive material and in which crops are cultivated, and a lighting control unit that controls the light to be irradiated upon the crops in the crop cultivation house. The lighting control unit is adapted to control spectral radiance ($B_1$) of a wavelength range of blue light, spectral radiance ($R_1$) of a wavelength range of red light, and spectral radiance ($FR_1$) of a wavelength range of far-red light among the light to be irradiated on the crops that are cultivated in the crop cultivation house so as to be a predetermined condition.

[FIG. 1]

【図 1】

760mm

760mm

1900mm

**Description**

TECHNICAL FIELD

The present invention relates to a lighting environment control facility for cultivation of crops, a pest control method, and an intensive cultivation method, and more particularly to a lighting environment control facility for cultivation of crops, which includes a crop cultivation house which is formed of a light transmissive material and in which the crops are cultivated, and a lighting control means that adjusts light to be irradiated on the crops in the crop cultivation house, a pest control method, and an intensive cultivation method.

BACKGROUND ART

Crops are mainly cultivated in the open air, but pesticides are typically used to control predation caused by pests. However, pesticide-free cultivation has recently been expected according to the increase in the inclination toward food safety of consumers.

Therefore, pesticide-free cultivation methods where no pesticides are used have been proposed.
For example, (1) a method of cultivating crops in a facility that is free from the invasion of pests (a cultivation house or a plant factory) (Patent Documents 1 and 2) and (2) a method of cultivating crops by keeping pests off using an attracting characteristic or a repellant effect of insects to light (Patent Documents 3 and 4) have been proposed.
In the case of the cultivation in an environment according to method (1), since no pests are present in the facility, this case is excellent in that the cultivation is possible without using pesticides.
On the other hand, in method (2), for example, (I) a method of limiting insects' access by removing ultraviolet rays that are apt to attract the insects from light to be irradiated on crops, (II) a method of applying light having a wavelength that repels insects, and (III) a method of weaving colored yarns that reflect light (e.g. red light) having a wavelength that repels insects into an agricultural net, and reflecting such light on the pests have been proposed.

However, method (1) has a problem in that there is a need to provide a building that completely isolates the cultivated crops from an external world to maintain the environment with no pests, and it is impossible to avoid an increase in facility expenses for providing this building.
Further, method (2) can reduce predation damage caused by pests to a certain extent, because the pests can be forced to have difficulty approaching a crop cultivation space. However, method (2) has a problem in that, since it is difficult to control all the pests, when the pests stay on the crops, it is impossible to avoid the predation damage.

Meanwhile, according to the disclosure of Patent Document 5, crops have proper growth environments with regard to respective factors, and optimum lighting environment with respect to light.
The optimum lighting environment refers to a lighting environment (hereinafter, a light state of sunlight filtering through foliage) in which, in bushes or woods where wild species of fruit vegetables and leaf vegetables grow in the natural world, sunlight reaching such plants is limited. If the crops are cultivated in the optimum lighting environment, this produces a comfortable effect on the crops.

That is, it is suggested in Patent Document 5 that the crops are cultivated in the optimum lighting environment, and thereby grow well even without using an artificial method.

Under the existing circumstances, however, there is no exemplary method based on the technical idea that offers the cultivated crops themselves resistance to the pests and thus keeps the pests away.

PRIOR ART DOCUMENT

PATEND DOCUMENT

Patent Document 1:     JP 2006-042706A
Patent Document 2:     JP 2004-121173A
Patent Document 3:     JP 2007-109678A
Patent Document 4:     JP 2006-204250A
Patent Document 5:     JP 2007-222039A

## SUMMARY OF THE INVENTION

## PROBLEMS TO BE SOLVED BY THE INVENTION

Accordingly, the present invention has been made keeping in mind the above problems occurring in the related art, and an object of the present invention is to provide a lighting environment control facility capable of controlling light to be irradiated upon cultivated crops to an optimum state for the growth of the crops, thereby activating a natural defense of the crops against pests. Further, another object of the present invention is to provide a pest control method capable of determining whether or not to control pests of cultivated crops and controlling the pests on the basis of the determination, and an intensive cultivation method.

## MEANS FOR SOLVING THE PROBLEMS

A lighting environment control facility for cultivation of crops according to a first invention is used for pesticide-free cultivation, and includes: a crop cultivation house which is formed of a light transmissive material and in which crops are cultivated; and a lighting control means for adjusting light to be irradiated on the crops in the crop cultivation house. When spectral radiance of a wavelength range of blue light is denoted by $B_0$, spectral radiance of a wavelength range of red light is denoted by $R_0$, and spectral radiance of a wavelength range of far-red light is denoted by $FR_0$ among the light to be irradiated on the crop cultivation house, the lighting control means adjusts spectral radiance ($B_1$) of a wavelength range of blue light, spectral radiance ($R_1$) of a wavelength range of red light, and spectral radiance ($FR_1$) of a wavelength range of far-red light among the light to be irradiated on the crops in the crop cultivation house so that a ratio of $R_1/B_1$ becomes greater than a ratio of $R_0/B_0$, and a value (RBaV) obtained by subtracting the ratio of $R_0/B_0$ from the ratio of $R_1/B_1$ is greater than RBaV when the lighting control means is not installed, and so that a ratio of $R_0/FR_0$ is greater than a ratio of $R_1/FR_1$, and a value (RFRaV) obtained by subtracting the ratio of $R_1/FR_1$ from the ratio of $R_0/FR_0$ is greater than RFRaV when lighting control means is not installed.

It should be noted that the pesticide-free cultivation used herein includes not only a cultivation method in which no chemically synthesized pesticides are used, but also a pesticide-reduced cultivation method in which the number or amount of application of the chemically synthesized pesticide is reduced, a cultivation method in which specified pesticides are used, a cultivation method in which wood vinegar is used, or the like.

A lighting environment control facility for cultivation of crops according to a second invention is **characterized in that**, in the first invention, the lighting control means adjusts the light to be irradiated on the crops in the crop cultivation house so that the spectral radiance ($B_1$) of the wavelength range of the blue light has a shorter wavelength than the spectral radiance of the wavelength range of the blue light when the lighting control means is not installed.

A lighting environment control facility for cultivation of crops according to a third invention is **characterized in that**, in the first or second invention, the lighting control means includes a reflective material that is installed in the crop cultivation house, reflects transmitted light transmitted into the crop cultivation house, and irradiates the reflected light on the crops; and the reflective material causes the spectral radiance of the wavelength range of the blue light included in the reflected light to become lower than the spectral radiance of the wavelength range of the blue light of the transmitted light transmitted into the crop cultivation house, and causes the spectral radiance of the wavelength range of the far-red light included in the reflected light to become relatively higher than the spectral radiance of the wavelength range of the red light included in the reflected light.

A lighting environment control facility for cultivation of crops according to a fourth invention is **characterized in that**, in the first, second, or third invention, the lighting control means includes a net installed to cover the crops to be cultivated; and the net causes the spectral radiance of the wavelength range of the blue light included in the light to be irradiated on the crops to become lower than the spectral radiance of the wavelength range of the blue light when the net is not installed, and causes the spectral radiance of the wavelength range of the far-red light included in the light to be irradiated on the crops to become relatively higher than the spectral radiance of the wavelength range of the red light included in the light to be irradiated on the crops.

A lighting environment control facility for cultivation of crops according to a fifth invention is **characterized in that**, in the first, second, third or fourth invention, the light transmissive material of which the crop cultivation house is formed attenuates and transmits the spectral radiance of the wavelength range of the blue light among the light to be irradiated on the crop cultivation house, and causes the spectral radiance of the wavelength range of the far-red light included in the transmitted light to become relatively higher than the spectral radiance of the wavelength range of the red light included in the transmitted light.

A lighting environment control facility for cultivation of crops according to a sixth invention is **characterized in that**, in the first, second, third, fourth or fifth invention, the crops in the crop cultivation house are fruit vegetables, and the lighting control means adjusts light to be irradiated on the fruit vegetables so that the RBaV is equal to or more than 0.319 and the RFRaV is equal to or more than 0.098.

A lighting environment control facility for cultivation of crops according to a seventh invention is **characterized in that**, in the first, second, third, fourth, fifth or sixth invention, the crops in the crop cultivation house are leaf vegetables, and the lighting control means adjusts light to be irradiated on the leaf vegetables so that the RBaV is equal to or more than 0.367 and the RFRaV is equal to or more than 0.149.

A lighting environment control facility for cultivation of crops according to an eighth invention is **characterized in that**, in the seventh invention, the lighting control means includes a light source that adjusts a lighting environment to be irradiated on the leaf vegetables.

A lighting environment control facility for cultivation of crops according to a ninth invention is **characterized in that**, in the eighth invention, the light source is installed to irradiate light from outside to inside the crop cultivation house, and includes a control means that controls operation of the light source, and the control means includes: a house irradiation wavelength measuring apparatus that measures the spectral radiance ($B_0$) of the wavelength range of the blue light, the spectral radiance ($R_0$) of the wavelength range of the red light, and the spectral radiance ($FR_0$) of the wavelength range of the far-red light among the light to be irradiated on the crop cultivation house; a crop irradiation wavelength measuring apparatus that measures the spectral radiance ($B_1$) of the wavelength range of the blue light, the spectral radiance ($R_1$) of the wavelength range of the red light, and the spectral radiance ($FR_1$) of the wavelength range of the far-red light among the light to be irradiated on the crops to be cultivated in the crop cultivation house; and a controller that controls the operation of the light source so that a value (RBaV) obtained by subtracting a ratio of $R_0/B_0$ from a ratio of $R_1/B_1$, both of which are calculated on the basis of intensities of wavelengths measured by the house irradiation wavelength measuring apparatus and the crop irradiation wavelength measuring apparatus, becomes greater than RBaV when the lighting control means is not installed, and so that a value (RFRaV) obtained by subtracting a ratio of $R_1/FR_1$ from a ratio of $R_0/FR_0$ becomes greater than RFRaV when the lighting control means is not installed.

A lighting environment control facility for cultivation of crops according to a tenth invention is **characterized in that**, in the first to ninth inventions, the crops in the crop cultivation house are fruit vegetables; the crop cultivation house is equipped therein with a light source that irradiates light to shady spots where the leaves are shaded due to overlapping of the leaves of neighboring crops according to growth of the cultivated crops; and the light source adjusts a state of light so that, among the light to be irradiated on the shady spots, the ratio of $R_1/B_1$ is greater than the ratio of $R_0/B_0$, and the value (RBaV) obtained by subtracting the ratio of $R_0/B_0$ from the ratio of $R_1/B_1$ is equal to or more than 0.319, and the ratio of $R_0/FR_0$ is greater than the ratio of $R_1/FR_1$, and the value (RFRaV) obtained by subtracting the ratio of $R_1/FR_1$ from the ratio of $R_0/FR_0$ is equal to or more than 0.098.

A lighting environment control facility for cultivation of crops according to an eleventh invention is **characterized in that**, in the tenth invention, the light source irradiates light of the wavelength range of the red light on the cultivated crops.

A pest control method according to a twelfth invention includes: a process of measuring spectral radiance of a wavelength range of red light (R), spectral radiance of a wavelength range of blue light (B), and spectral radiance of a wavelength range of far-red light (FR) in a cultivation environment of target crops as the red light (R), the blue light (B), and the far-red light (FR), respectively; a process of measuring the spectral radiance of the wavelength range of the red light, the spectral radiance of the wavelength range of the blue light, and the spectral radiance of the wavelength range of the far-red light in a bare field as bare-field red light ($R_0$), bare-field blue light ($B_0$), and bare-field far-red light ($FR_0$), respectively; a process of calculating a difference between a ratio of the bare-field red light ($R_0$) to the bare-field blue light ($B_0$) and a ratio of the red light (R) to the blue light (B) as an R/B difference (RBaV); and a process of calculating a difference of a ratio of the bare-field red light ($R_0$) to the bare-field far-red light ($FR_0$) from a ratio of the red light (R) to the far-red light (FR) as an R/FR difference (RFRaV), wherein respective values of the R/B difference and the R/FR difference are calculated using the bare field as a criterion, thereby determining whether or not to control pests of the target crops, and the crops are cultivated on a condition that the R/B difference and the R/FR difference become predetermined values.

A pest control method according to a thirteenth invention is **characterized in that**, in the twelfth invention, in the crop cultivation house having the lighting environment control facility according to claims 1 to 11, the house is set to a predetermined artificial lighting environment by at least one of a process of reflecting sunlight to a reflective material and a process of transmitting the sunlight to a light transmissive material.

A pest control method according to a fourteenth invention is **characterized in that**, in the thirteenth invention, the reflective material and the light transmissive material have a spectrum of color in which spectral radiance of visible light other than a color reflecting the red light (R) and a color reflecting the far-red light (FR) is lower than each of the red light (R) and the far-red light (FR).

A pest control method according to a fifteenth invention is **characterized in that**, in the twelfth invention, in the crop cultivation house having the lighting environment control facility according to claims 1 to 11, the house is set to a predetermined artificial lighting environment by mixing the red light (R) and the far-red light (FR) using artificial lighting and by irradiating the mixed light on the crops, and for the mixed light that is irradiated, the spectral radiance of the red light (R) is lower than that of the far-red light (FR), and spectral radiance of visible light other than the red light (R) and the far-red light (FR) is lower than each of the red light (R) and the far-red light (FR) .

A pest control method according to a sixteenth invention is **characterized in that**, in the fifteenth invention, the mixed light is produced by irradiating at least one of lighting that is a combination of lightings of the red light (R) and the far-red light (FR) that are mixed in a cultivation space, and mixed lighting having spectra of the red light (R) and the far-red light (FR).

A pest control method according to a seventeenth invention is **characterized in that**, in the twelfth invention, in the crop cultivation house having the lighting environment control facility according to claims 1 to 11, the crops are cultivated under an artificial lighting environment in which the ratio of the red light (R) to the blue light (B) in the cultivation environment is changed to be at least 0.319 more than in the bare field, and in which the ratio of the red light (R) to the far-red light (FR) in the cultivation environment is changed to be at least 0.098 less than in the bare field, and for vegetables vulnerable to the pests, the ratio of the red light (R) to the blue light (B) in the cultivation environment is changed to be at least 0.367 more than in the bare field, and the ratio of the red light (R) to the far-red light (FR) in the cultivation environment is changed to be at least 0.149 less than in the bare field.

A pest control method according to an eighteenth invention is **characterized in that**, in the fifteenth invention, in the crop cultivation house having the lighting environment control facility according to claims 1 to 11, for vegetables vulnerable to the pests, the ratio of the red light (R) to the blue light (B) in the cultivation environment is changed to be at least 0.367 more than in the bare field, and the ratio of the red light (R) to the far-red light (FR) in the cultivation environment is changed to be at least 0.149 less than in the bare field, and vegetables other than the vegetables vulnerable to the pests are cultivated under an artificial lighting environment in which the ratio of the red light (R) to the blue light (B) in the cultivation environment is changed to be at least 0.319 more than in the bare field, and in which the ratio of the red light (R) to the far-red light (FR) in the cultivation environment is changed to be at least 0.098 less than in the bare field.

A pest control method according to a nineteenth invention is **characterized in that**, in the sixteenth invention, in the crop cultivation house having the lighting environment control facility according to claims 1 to 11, for vegetables vulnerable to the pests, the ratio of the red light (R) to the blue light (B) in the cultivation environment is changed to be at least 0.367 more than in the bare field, and the ratio of the red light (R) to the far-red light (FR) in the cultivation environment is changed to be at least 0.149 less than in the bare field, and vegetables other than the vegetables vulnerable to the pests are cultivated under an artificial lighting environment in which the ratio of the red light (R) to the blue light (B) in the cultivation environment is changed to be at least 0.319 more than in the bare field, and in which the ratio of the red light (R) to the far-red light (FR) in the cultivation environment is changed to be at least 0.098 less than in the bare field.

A pest control method according to a twentieth invention is **characterized in that**, in the thirteenth invention, in the crop cultivation house having the lighting environment control facility according to claims 1 to 11, for vegetables vulnerable to the pests, the ratio of the red light (R) to the blue light (B) in the cultivation environment is changed to be at least 0.367 more than in the bare field, and the ratio of the red light (R) to the far-red light (FR) in the cultivation environment is changed to be at least 0.149 less than in the bare field, and vegetables other than the vegetables vulnerable to the pests are cultivated under an artificial lighting environment in which the ratio of the red light (R) to the blue light (B) in the cultivation environment is changed to be at least 0.319 more than in the bare field, and in which the ratio of the red light (R) to the far-red light (FR) in the cultivation environment is changed to be at least 0.098 less than in the bare field.

A pest control method according to a twenty-first invention is **characterized in that**, in the fourteenth invention, in the crop cultivation house having the lighting environment control facility according to claims 1 to 11, for vegetables vulnerable to the pests, the ratio of the red light (R) to the blue light (B) in the cultivation environment is changed to be at least 0.367 more than in the bare field, and the ratio of the red light (R) to the far-red light (FR) in the cultivation environment is changed to be at least 0.149 less than in the bare field, and vegetables other than the vegetables vulnerable to the pests are cultivated under an artificial lighting environment in which the ratio of the red light (R) to the blue light (B) in the cultivation environment is changed to be at least 0.319 more than in the bare field, and in which the ratio of the red light (R) to the far-red light (FR) in the cultivation environment is changed to be at least 0.098 less than in the bare field.

A pest control method according to a twenty-second invention is **characterized in that**, in the twelfth invention, in addition to the irradiation based on at least one of the reflection and transmission of the sunlight, a predetermined artificial lighting environment is set by using irradiation of artificial light in which the red light (R) and the far-red light (FR) are mixed, and the artificial lighting is constructed so that the spectral radiance of the red light (R) is lower than that of the far-red light (FR), and spectral radiance of visible light other than the red light (R) and the far-red light (FR) is lower than each of the red light (R) and the far-red light (FR).

A pest control method according to a twenty-third invention is **characterized in that**, in the twenty-second invention, in the crop cultivation house having the lighting environment control facility according to claims 1 to 11, for vegetables vulnerable to the pests, the ratio of the red light (R) to the blue light (B) in the cultivation environment is changed to be at least 0.367 more than in the bare field, and the ratio of the red light (R) to the far-red light (FR) in the cultivation environment is changed to be at least 0.149 less than in the bare field, and vegetables other than the vegetables vulnerable to the pests are cultivated under an artificial lighting environment in which the ratio of the red light (R) to the blue light (B) in the cultivation environment is changed to be at least 0.319 more than in the bare field, and in which the ratio of the red light (R) to the far-red light (FR) in the cultivation environment is changed to be at least 0.098 less than in the bare field.

A pest control method according to a twenty-fourth invention is **characterized in that**, in the twelfth invention, in the crop cultivation house having the lighting environment control facility according to claims 1 to 11, greater brightness than or equal to an intensity of light at which a rate of photosynthesis of vegetables that are cultivated in the house is saturated is secured by at least one of a transmittance property of a light transmissive material and a reflectance property of a reflective material, and for the cultivation environment inside the house, the ratio of the red light (R) to the blue light (B) is greater than that of the bare field, and the ratio of the red light (R) to the far-red light (FR) is less than that of the bare field.

A pest control method according to a twenty-fifth invention is **characterized in that**, in the twenty-fourth invention, for the cultivation environment inside the crop cultivation house having the lighting environment control facility according to claims 1 to 11, the ratio of the red light (R) to the blue light (B) becomes at least 0.319 more than that of the bare field, and the ratio of the red light (R) to the far-red light (FR) becomes at least 0.098 less than that of the bare field, and for vegetables vulnerable to the pests, the ratio of the red light (R) to the blue light (B) is changed to be at least 0.367 more than that of the bare field, and the ratio of the red light (R) to the far-red light (FR) is changed to be at least 0.149 less than that of the bare field.

A pest control method according to a twenty-sixth invention is **characterized in that**, in the twenty-fourth invention, an artificial lighting for irradiation in cultivating the vegetables is used, and as irradiated light of the artificial lighting, the red light (R) has a lower spectral radiance than the far-red light (FR), and spectral radiance of visible light other than the red light (R) and the far-red light (FR) is lower than that of each of the red light (R) and the far-red light (FR).

A pest control method according to a twenty-seventh invention is **characterized in that**, in the twenty-sixth invention, the irradiated light of the artificial lighting is configured so that the spectral radiance of visible light other than the red light (R) and the far-red light (FR) is zero.

A pest control method according to a twenty-eighth invention is **characterized in that**, in the twenty-fourth invention, the light transmissive material is a material used to cultivate the vegetables; and a material which has a property of transmitting visible light of a wavelength range of 380 to 780 nm among sunlight, which holds a color whose spectrum reflects the red light (R) and a color whose spectrum reflects the far-red light (FR), and in which spectral radiance of a color reflecting the visible light other than the color reflecting the red light (R) and the color reflecting the far-red light (FR) is lower than spectral radiances of the color reflecting the red light (R) and the color reflecting the far-red light (FR), is used as the light transmissive material.

A pest control method according to a twenty-ninth invention is **characterized in that**, in the twenty-eighth invention, the light transmissive material is configured so that the spectral radiance of the color reflecting the visible light other than the color reflecting the red light (R) and the color reflecting the far-red light (FR) is zero.

A pest control method according to a thirtieth invention is **characterized in that**, in the twelfth invention, the crops are $C_3$ plants rather than shade plants or semi-shade plants, and the ratio of the red light (R) to the blue light (B) in the cultivation environment is caused to be greater than in the bare field, and the ratio of the red light (R) to the far-red light (FR) in the cultivation environment is caused to be less than in the bare field.

A pest control method according to a thirty-first invention is **characterized in that**, in the twelfth invention, in the crop cultivation house having the lighting environment control facility according to claims 1 to 11, cultivation light of vegetables in the crop cultivation house is adjusted to a spectrum of light of a sunny spot among sunlight filtering through foliage by changing a spectrum balance of sunlight so that the ratio of the red light (R) to the blue light (B) becomes more than that of the bare field, and so that the ratio of the red light (R) to the far-red light (FR) becomes less than that of the bare field by at least one of reflection and transmission of sunlight without using artificial lighting.

An intensive cultivation method according to a thirty-second invention is a method of cultivating crops using the pest control method according to claims 12 to 31, and includes irradiating artificial lighting on shady spots of dense plant vegetation, wherein the light of the artificial lighting is light which has red light (R) and in which spectral radiance of visible light other than the red light (R) is lower than that of the red light (R).

An intensive cultivation method according to a thirty-third invention is **characterized in that**, in the thirty-second invention, the light of the artificial lighting is configured to have the red light (R) and so that the spectral radiance of the visible light other than the red light (R) is zero.

An intensive cultivation method according to a thirty-fourth invention is **characterized in that**, in the thirty-second or thirty-third invention, the artificial lighting is irradiated on some of plant leaves of the shady spots of dense plant vegetation; and the light of the artificial lighting is configured to have the red light (R) and so that the spectral radiance of the visible light other than the red light (R) is lower than that of the red light (R).

A cultivation method according to a thirty-fifth invention is a method of, in the twelfth invention, cultivating crops using the pest control method according to claims 12 to 31, sealing a cultivation house in which eggplants are cultivated among fruit vegetables, arranging a time zone in the daytime in which carbon dioxide is made insufficient, arranging a time zone at night in which oxygen is made insufficient, and setting a day in which a peak temperature is equal to or higher than a temperature at which the eggplants wither when cultivated in the cultivation house to be equal to or more than one day in a week.

[ADVANTAGEOUS EFFECTS OF INVENTION]

According to the first invention, regardless of the state of the light to be irradiated on the crop cultivation house, the light to be irradiated on the crops in the crop cultivation house can be adjusted so that the ratio of $R_1/B_1$ becomes greater than the ratio of $R_0/B_0$, and the value (RBaV) obtained by subtracting the ratio of $R_0/B_0$ from the ratio of $R_1/B_1$ becomes greater than RBaV when no lighting control means is installed, and so that the ratio of $R_0/FR_0$ becomes greater than the ratio of $R_1/FR_1$, and the value (RFRaV) obtained by subtracting the ratio of $R_1/FR_1$ from the ratio of $R_0/FR_0$ becomes greater than RFRaV when no lighting control means is installed. Then, the light to be irradiated on the crops can be adjusted to the optimum state for the growth of the crops. Accordingly, it is possible to cultivate the crops that can well activate resistance to the pests.

According to the second invention, the ratio of $R_1/B_1$ can be greater than the ratio of $R_0/B_0$, and the value (RBaV) obtained by subtracting the ratio of $R_0/B_0$ from the ratio of $R_1/B_1$ becomes greater than RBaV when no lighting control means is installed.

According to the third invention, since some of the transmitted light transmitted into the crop cultivation house is reflected by the reflective material, the illuminance of the light irradiated on the crops in the crop cultivation house can be higher than that when no reflective material is installed.

Moreover, since the spectral radiance of the wavelength range of the blue light included in the reflected light caused by the reflective material is lower than the spectral radiance of the wavelength range of the blue light of the transmitted light that is transmitted into the crop cultivation house, the RBaV can be greater than that when no reflective material is present. Further, since the spectral radiance of the wavelength range of the far-red light included in the reflected light caused by the reflective material becomes relatively higher than the spectral radiance of the wavelength range of the red light included in the reflected light, the RFRaV can be greater than that when no reflective material is present.

According to the fourth invention, the net is installed so that the illuminance of the light to be irradiated on the crops in the crop cultivation house can be lower than that when no net is installed.

Moreover, since the spectral radiance of the wavelength range of the blue light included in the light to be irradiated on the crops is lower than the spectral radiance of the wavelength range of the blue light when no net is present, the RBaV can be greater than that when no net is present.

Further, due to the net, the spectral radiance of the wavelength range of the far-red light included in the light to be irradiated on the crops is relatively higher than the spectral radiance of the wavelength range of the red light included in light to be irradiated on the crops. As such, the RFRaV can be greater than that when no net is present.

According to the fifth invention, the light transmissive material causes the illuminance of the light to be irradiated on the crops in the crop cultivation house to be lower than that when no light transmissive material is installed.

Moreover, since the spectral radiance of the wavelength range of the blue light included in the light to be irradiated on the crops is lower than the spectral radiance of the wavelength range of the blue light irradiated on the crops in the crop cultivation house when no light transmissive material is provided, the RBaV can be greater than that when no light transmissive material is provided.

Further, due to the light transmissive material, the spectral radiance of the wavelength range of the far-red light included in the light to be irradiated on the crops becomes relatively higher than the spectral radiance of the wavelength range of the red light included in the transmitted light. As such, the RFRaV can be greater than that when no light transmissive material is provided.

According to the sixth invention, the light to be irradiated on the crops in the crop cultivation house is adjusted so that the RBaV is equal to or more than 0.319 and the RFRaV is equal to or more than 0.098. Thereby, the light to be irradiated on the fruit vegetables such as eggplants, cucumbers, and tomatoes in the crop cultivation house can be adjusted to the optimum state of the lighting environment for the growth.

According to the seventh invention, the light to be irradiated on the crops in the crop cultivation house is adjusted so that the RBaV is equal to or more than 0.367 and the RFRaV is equal to or more than 0.149. Thereby, the light to be irradiated on the leaf vegetables such napa cabbage and cabbage in the crop cultivation house can be adjusted to the optimum state of the lighting environment for the growth.

According to the eighth invention, since the light to be irradiated on the leaf vegetables in the crop cultivation house is adjusted so that the RBaV is equal to or more than 0.367 and the RFRaV is equal to or more than 0.149, it can be adjusted to optimum state of the light for the growth of the leaf vegetables.

Here, even in the leaf vegetables, which suffer from damage other than eating caused by the pests more easily than the fruit vegetables, it is possible to cultivate the leaf vegetables that have an active resistance to the pests.

According to the ninth invention, since the sunlight irradiated on the crop cultivation house can be supplemented, the light to be irradiated on the crops in the crop cultivation house can be adjusted to the optimum state for the growth of the crops.

According to the tenth invention, even when the leaves of the neighboring eggplants that grow in the crop cultivation house overlap, the state of the lighting environment of the shady spots under the leaves can also be adjusted to the optimum state for the growth of the eggplants.

Here, even when the eggplants are cultivated in a dense state, it is possible to cultivate the eggplants that have an active resistance to the pests.

According to the eleventh invention, the spectral radiance ($R_1$) of the wavelength range of the red light among the light to be irradiated on the eggplants at the shady spots formed by the leaves of the eggplants is increased, so that the RBaV is caused to be equal to or more than 0.319.

According to the twelfth to thirty-first inventions, when cultivating $C_3$ plants rather than shade plants and semi-shade plants, the spectrum of sunlight is further changed than that of the bare field using the transmissive material and/or the reflective material along with the sunlight. As such, no substantial electricity cost or facility cost is required, which is advantageous in an economical aspect. Furthermore, even when the light sources for the artificial lighting are used together, a small number of light sources may only be used temporarily. Further, the pests can be controlled in the house. Particularly, this is favorable when the eggplants are cultivated. Moreover, when cultivating the $C_3$ plants rather than the shade plants and the semi-shade plants, the cultivation method of the present invention can be used to adjust the light spectrum in order to evaluate the pesticide-free cultivation for the $C_3$ plants or to change the balance of the sunlight spectrum without using the artificial lighting.

According to the thirty-second to thirty-fourth inventions, the red light (R) is irradiated on the shady spots under the leaves, thereby increasing a yield of the crops. Furthermore, the crops become healthier, so that the crops can be cultivated for a long time.

According to the thirty-fifth invention, the ratio of light of the sunlight spectrum is adjusted to increase the ratio of R/B and decrease the ratio of R/FR even under a severe environment, and thereby the eggplants can be cultivated. In this way, the eggplants are cultivated under severe conditions that are impossible in the natural world, so that it is possible to obtain eggplants that are low in harsh taste or unripe taste and have a consistently good taste.

BRIEF DESCRIPTION OF THE DRAWINGS

FIG. 1 is an explanatory diagram of an angled C-shaped reflective plate when viewed from the top and front.
FIG. 2 is a spectrum balance of sunlight filtering through foliage of tree branches (shady spot).
FIG. 3 is a spectrum balance of sunlight filtering through foliage of tree branches (sunny spot).
FIG. 4 is a spectrum balance after tree branch measurement (bare field).
FIG. 5 is an explanatory diagram of agricultural crops and reflective plates when viewed from the top and front.
FIG. 6 is a spectrum balance of reflected light of a green construction paper.
FIG. 7 is measurement condition 1 when measured using a radiance meter.
FIG. 8 is measurement condition 2 when measured using a radiance meter.
FIG. 9 is a measuring jig of the radiance meter.
FIG. 10 is an explanatory diagram of species and pots of eggplants of an aboveground house when viewed from the top.
FIG. 11 is a spectrum balance of reflected light of blue construction paper.
FIG. 12 is a spectrum balance of reflected light of red construction paper.
FIG. 13 is an explanatory diagram of arrangement of reflective plates when viewed from the top.
FIG. 14 is an explanatory diagram of the arrangement of the reflective plates when viewed from the top.
FIG. 15 is a spectrum balance of a sunny spot in a wooden box.
FIG. 16 is a spectrum balance inside a sheet.
FIG. 17 is a spectrum balance outside the sheet (1).
FIG. 18 is a spectrum balance outside the sheet (2).
FIG. 19 is a spectrum balance of reflected light of thin pink vinyl.
FIG. 20 is a spectrum balance of reflected light of water paint.
FIG. 21 is a block diagram of a structure of a radiance meter.
FIG. 22 is a spectrum balance of reflected light of a blue net.
FIG. 23 is a spectrum balance of reflected red light of oil paint.
FIG. 24 is a spectrum balance of reflected light of a blue LED.

FIG. 25 is an explanatory diagram of a structure of a cultivation house 1 and an arrangement of cultivation pots.
FIG. 26 is an explanatory diagram of a structure of a cultivation house 2 and an arrangement of cultivation pots.
FIG. 27 is an explanatory diagram of a structure of a cultivation house 3 and an arrangement of cultivation pots.
FIG. 28 is an explanatory diagram of a structure of a cultivation house 5 and an arrangement of cultivation pots.
FIG. 29 is an explanatory diagram of a structure of a cultivation house 6 and an arrangement of cultivation pots.
FIG. 30 is an explanatory diagram of a structure of a cultivation house and an arrangement of cultivation pots.
FIG. 31 is an explanatory diagram of a structure of a cultivation house and an arrangement of cultivation pots.
FIG. 32 is an explanatory diagram of structures of cultivation houses A and E and an arrangement of cultivation pots.
FIG. 33 is an explanatory diagram of a structure of a cultivation house B and an arrangement of cultivation pots.
FIG. 34 is an explanatory diagram of a structure of a cultivation house C and an arrangement of cultivation pots.
FIG. 35 is an explanatory diagram of a structure of a cultivation house D and an arrangement of cultivation pots.
FIG. 36 is a correlation graph between illuminance and time.
FIG. 37 is a correlation graph between illuminance and time.
FIG. 38 is a correlation graph between illuminance and time.
FIG. 39 is a correlation graph between illuminance and time.
FIG. 40 is a correlation graph between illuminance and time.
FIG. 41 is a correlation graph between illuminance and time.
FIG. 42 is a correlation graph between illuminance and time.
FIG. 43 is an explanatory diagram of structures of cultivation houses 1, 2 and 5 and an arrangement of cultivation pots.
FIG. 44 is an explanatory diagram of structures of cultivation houses 6, 7 and 11 and an arrangement of cultivation pots.
FIG. 45 is an explanatory diagram of a structure of a cultivation house 12 and an arrangement of cultivation pots.
FIG. 46 is an explanatory diagram of structures of cultivation houses 1 and 2 and an arrangement of cultivation pots.
FIG. 47 is an explanatory diagram of structures of cultivation houses 13 and A and an arrangement of cultivation pots.
FIG. 48 is an explanatory diagram of structures of cultivation houses 3 and 4 and an arrangement of cultivation pots.
FIG. 49 is an explanatory diagram of structures of cultivation houses A and 13 and an arrangement of cultivation pots.
FIG. 50 is an explanatory diagram of structures of cultivation houses 8, 9 and 10 and an arrangement of cultivation pots.
FIG. 51 is an explanatory diagram of a structure of a cultivation house 2 and an arrangement of cultivation pots.
FIG. 52 is an explanatory diagram of a structure of a cultivation house 1 and an arrangement of cultivation pots.
FIG. 53 is an explanatory diagram of a structure of a cultivation house 3 and an arrangement of cultivation pots.
FIG. 54 is an explanatory diagram of structures of cultivation houses 3 and 4 and an arrangement of cultivation pots.
FIG. 55 is an explanatory diagram of cultivation houses 4 and 5 and an arrangement of cultivation pots.
FIG. 56 is an explanatory diagram of structures of cultivation houses 8 and 9 and an arrangement of cultivation pots.
FIG. 57 is a spectrum of a main photoreaction of plants.
FIG. 58 is reflected light of cellophane.
FIG. 59 is reflected light of cellophane.
FIG. 60 is an explanatory diagram of a structure of a cultivation house 7 and an arrangement of cultivation pots.
FIG. 61 is an explanatory diagram of a structure of a cultivation house G-A and an arrangement of cultivation pots.
FIG. 62 is an explanatory diagram of a structure of a cultivation house G-B and an arrangement of cultivation pots.
FIG. 63 is transmitted light of cellophane.
FIG. 64 is transmitted light of cellophane.
FIG. 65 is a plan layout diagram of Experiment 6 and an explanatory diagram of an LED reflective plate.
FIG. 66 is a plan layout diagram of Experiment 6 and an explanatory diagram of an LED reflective plate.
FIG. 67 is an explanatory diagram of a structure of a cultivation house B and an arrangement of cultivation pots.
FIG. 68 is an explanatory diagram of a structure of a cultivation house 2 and an arrangement of cultivation pots.
FIG. 69 is an explanatory diagram of a structure of an improved cultivation house G and an arrangement of cultivation pots.
FIG. 70 is an explanatory diagram of a cross-sectional structure of a cultivation house and sunlight incidence.
FIG. 71 is an explanatory diagram of a perspective structure of a cultivation house and sunlight incidence.
FIG. 72 is an explanatory diagram of a structure of a cultivation house 5 and an arrangement of cultivation pots.
FIG. 73 is an explanatory diagram of a structure of a cultivation house and an arrangement of cultivation pots.
FIG. 74 is an explanatory diagram of a structure of a cultivation house 14 and an arrangement of cultivation pots.
FIG. 75 is an explanatory diagram of a structure of a cultivation house 12 and an arrangement of cultivation pots.
FIG. 76 is an explanatory diagram of a structure of a cultivation house 13 and an arrangement of cultivation pots.
FIG. 77 is an explanatory diagram of a structure of a cultivation house 7 and an arrangement of cultivation pots.
FIG. 78 is Table 33.
FIG. 79 is Table 34.

FIG. 80 is Table 35.
FIG. 81 is Table 36.

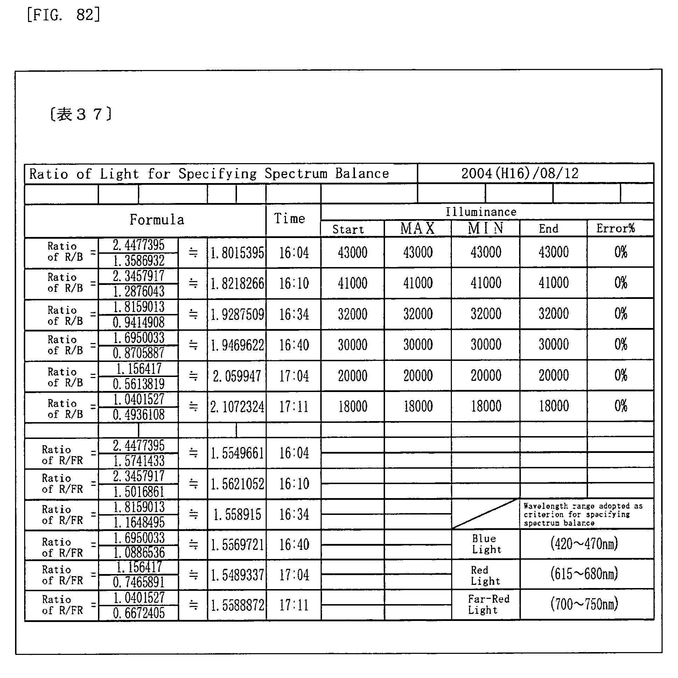

FIG. 82 is Table 37.
FIG. 83 is Table 38.
FIG. 84 is Table A01.
FIG. 85 is Table 23.
FIG. 86 is Table A02.
FIG. 87 is Table A03.
FIG. 88 is Table A04.
FIG. 89 is Table A05.
FIG. 90 is Table A06.
FIG. 91 is Table 1.
FIG. 92 is Table 2.
FIG. 93 is Table 3.
FIG. 94 is Table A07.
FIG. 95 is Table 4.
FIG. 96 is Table 5.
FIG. 97 is Table 6.
FIG. 98 is Table 7.
FIG. 99 is Table 8.
FIG. 100 is Table 9.
FIG. 101 is Table 10.
FIG. 102 is Table 11.
FIG. 103 is Table 12.
FIG. 104 is Table 13.
FIG. 105 is Table A08.
FIG. 106 is Table A09.
FIG. 107 is Table 14.
FIG. 108 is Table 15.
FIG. 109 is Table-A10.
FIG. 110 is Table-16.
FIG. 111 is Table A11.
FIG. 112 is Table-17.
FIG. 113 is Table-18.
FIG. 114 is Table-A12.
FIG. 115 is Table-19.
FIG. 116 is Table-20.
FIG. 117 is Table-21.
FIG. 118 is Table-22.
FIG. 119 is Table-A13.
FIG. 120 is Table-A14.
FIG. 121 is Table-A16.
FIG. 122 is Table A17.
FIG. 123 is Table A18.
FIG. 124 is Table A19.
FIG. 125 is Table A20.
FIG. 126 is Table A21.
FIG. 127 is Table A.
FIG. 128 is Table B.
FIG. 129 is Table A22.
FIG. 130 is Table C.
FIG. 131 is Table D.
FIG. 132 is Table A24.
FIG. 133 is Table A25.
FIG. 134 is Table A26.
FIG. 135 is Table A27.
FIG. 136 is Table A28.
FIG. 137 is Table A29.

FIG. 138 is Table A30.
FIG. 139 is Table A31.
FIG. 140 is Table A32.
FIG. 141 is Table A33.
FIG. 142 is Table A34.
FIG. 143 is Table A-35.
FIG. 144 is Table A-36.
FIG. 145 is Table A-43.
FIG. 146 is Table A-38.
FIG. 147 is Table A-46.

EMCODIMENT FOR CARRYING OUT THE INVENTION

The present invention is directed to a lighting environment control facility for cultivation of crops, a pest control method, and an intensive cultivation method. The pest control method or the intensive cultivation method of the present invention can be conducted through various facilities, but is most effective when conducted through the lighting environment control facility for cultivation of crops of the present invention.
Accordingly, first, the lighting environment control facility for cultivation of crops will be described.

(Description of Lighting Environment Control Facility for Cultivation of Crops)

The lighting environment control facility for cultivation of crops of the present invention includes a crop cultivation house, and a lighting control means for controlling light to be irradiated upon the crops, and is **characterized in that** the light to be irradiated upon the cultivated crops is controlled to cause the interior of the crop cultivation house to be adjusted to a balance state of the light pouring down on a region where wild species of crops grow in the natural world, i.e. to an optimum state for the growth of the crops.

(Description of Crop Cultivation House)

First, the crop cultivation house will be described.
The crop cultivation house is a building having a ceiling and sidewalls, and has a cultivation space which is surrounded by the ceiling and the sidewalls and in which crops are cultivated.
The ceiling and the sidewalls of this crop cultivation house are formed of a material that transmits light (hereinafter simply referred to as a "light transmissive material").
In other words, such a crop cultivation house is formed so as not to directly irradiate light (e.g. sunlight or its reflected light, light of illumination, or the like, hereinafter simply referred to as "external light"), which is irradiated from the outside of the crop cultivation house, on the crops that are cultivated in the crop cultivation house, but to irradiate the external light transmitting the light transmissive material (hereinafter simply referred to as "transmitted light") on the crops that are cultivated in the crop cultivation house.
As long as the crop cultivation house has the function mentioned above, a structure thereof is not particularly limited.
For example, the crop cultivation house may have a structure that is covered on a framework of wood or steel with a sheet having a transmissive property, for instance a film formed of a synthetic resin such as a polyolefin-based (polypropylene, polyethylene, etc.) resin, a fluorine resin, or the like, starting with polyvinyl chloride (PVC), like a large crop cultivation house.
In the case of such a structure, since the crop cultivation house can form a cultivation space for cultivating the crops which is covered with the sheet, the crop cultivation house allows only the light transmitting the sheet to be irradiated on the crops in the cultivation space. Of course, it goes without saying that a crop cultivation house forming a ceiling and sidewalls using glass instead of the sheet may be used as the crop cultivation house according to the embodiment of the present invention. Furthermore, even when a simple crop cultivation house for tunnel cultivation which is formed using a rod-shaped material such as bamboo as a support is employed as the crop cultivation house according to the embodiment of the present invention, the same effects can be produced.

(Description of Lighting Control Means)

Next, the lighting control means will be described.
The lighting environment control facility according to the embodiment of the present invention includes the lighting control means in addition to the aforementioned crop cultivation house.

The lighting control means controls transmitted light, thereby controlling a quantity of light to be irradiated on the crops.
As described above, since the external light is not directly irradiated on the crops in the crop cultivation house, the light to be irradiated on the crops in the crop cultivation house can be adjusted using the lighting control means.
That is, with the lighting control means, a state of the light to be irradiated on the crops in the crop cultivation house is equal to a state of the light pouring down in a region where wild species of crops grow in the natural world, i.e. an optimum state for the growth of the crops. In other words, the state of the light to be irradiated on the crops in the crop cultivation house can become the optimum state for the growth of the crops.

In the case of cultivating the crops in the cultivation space inside the crop cultivation house, if the state of the light to be irradiated on such crops becomes the optimum state for the growth of the crops due to the lighting control means, it is possible to activate a natural defense function of the crops, particularly a defense function against pests. That is, it is possible to cultivate sound crops having resistance to pests.

(Description of Optimum State of Light)

Next, the optimum state of light in regard to the growth of crops will be described.
In the natural world, the wild species of crops grow in an environment surrounded with standing trees or bushes (in a wild environment). The sunlight of the sun passes between leaves, etc. of the standing trees and the bushes, and then is irradiated on wild species plants of the crops growing in this wild environment.
Here, the state of the light pouring down on the region where the wild species of crops grow in the aforementioned natural world refers to a state of light in a region where the wild species plants of the crops grow in the wild environment. Hereinafter, such a state of light is simply referred to as a crop wild-species growth light state.

When the spectral radiance of a wavelength range of blue light is denoted by B, the spectral radiance of a wavelength range of red light is denoted by R, and the spectral radiance of a wavelength range of far-red light is denoted by FR, this crop wild-species growth light state can be expressed using R/B and R/FR representing a relative balance of the respective wavelengths.

In the direct sunlight of the natural world, the spectral radiance of a wavelength range of blue light is denoted by $B_0$, the spectral radiance of a wavelength range of red light is denoted by $R_0$, and the spectral radiance of a wavelength range of far-red light is denoted by $FR_0$.
Further, in the light to be irradiated on the crops (hereinafter simply referred to as "direct light crops ($C_4$ plants)") growing in a region where the sunlight is directly irradiated, the spectral radiance of a wavelength range of blue light is denoted by $B_2$, the spectral radiance of a wavelength range of red light is denoted by $R_2$, and the spectral radiance of a wavelength range of far-red light is denoted by $FR_2$.
Furthermore, in the light to be irradiated on crops growing in a region of the crop wild-species growth light state, the spectral radiance of a wavelength range of blue light is denoted by $B_1$, the spectral radiance of a wavelength range of red light is denoted by $R_1$, and the spectral radiance of a wavelength range of far-red light is denoted by $FR_1$.

In the crop wild-species growth light state, a ratio of $R_2/B_2$ and a ratio of $R_0/B_0$ in the direct light crops are substantially the same, and a ratio of $R_0/FR_0$ and a ratio of $R_2/FR_2$ are substantially the same, whereas a ratio of $R_1/B_1$ becomes greater than a ratio of $R_0/B_0$, and a ratio of $R_0/FR_0$ becomes greater than a ratio of $R_1/FR_1$.
That is, a state in which a value RBaV obtained by subtracting the ratio of $R_0/B_0$ from the ratio of $R_1/B_1$ becomes greater than a value RBaVc obtained by subtracting the ratio of $R_0/B_0$ from the ratio of $R_2/B_2$ for the direct light crops, as well as a state in which a value RFRaV obtained by subtracting the ratio of $R_1/FR_1$ from the ratio of $R_0/FR_0$ becomes greater than a value RFRaVc obtained by subtracting the ratio of $R_2/FR_2$ from the ratio of $R_0/FR_0$ for the direct light crops, corresponds to the crop wild-species growth light state.

(Description of Optimum State of Light in Crop Cultivation House)

When crops are cultivated in the crop cultivation house, if a state of light to be irradiated on such crops is adjusted to be the state mentioned above, it is possible to adjust the state of light to be irradiated on such crops to the optimum state for the growth of crops.

In the light to be irradiated on the crop cultivation house, i.e. in the external light, the spectral radiance of a wavelength range of blue light is denoted by $B_0$, the spectral radiance of a wavelength range of red light is denoted by $R_0$, and the spectral radiance of a wavelength range of far-red light is denoted by $FR_0$.
Further, in the light to be irradiated on the crops cultivated in the crop cultivation house, the spectral radiance of a wavelength range of blue light is denoted by $B_1$, the spectral radiance of a wavelength range of red light is denoted by $R_1$, and the spectral radiance of a wavelength range of far-red light is denoted by $FR_1$.

Then, the light to be irradiated on the crops is adjusted such that a ratio of $R_1/B_1$ becomes greater than a ratio of $R_0/B_0$, and a value RBaV obtained by subtracting the ratio of $R_0/B_0$ from the ratio of $R_1/B_1$ becomes greater than

RBaV when the lighting control means is not installed (substantially the same as RBaVc mentioned above), and such that a ratio of $R_0/FR_0$ becomes greater than a ratio of $R_1/FR_1$, and a value RFRaV obtained by subtracting the ratio of $R_1/FR_1$ from the ratio of $R_0/FR_0$ becomes greater than RFRaV when the lighting control means is not installed (substantially the same as RFRaVc mentioned above).

If the light to be irradiated on the crops is adjusted to the state described above by the lighting control means, the interior of the crop cultivation house can be kept in the crop wild-species growth light state, i.e. in the optimum state for the growth of crops.

Then, the crops growing in the crop cultivation house have an active natural defense against pests, and thus it is possible to cultivate the crops having resistance to the pests. Moreover, due to the low possibility of suffering from predation, etc. by pests, it is possible to cultivate the crops without substantially using pesticide.

As the respective wavelength ranges of $B_0$ and $B_1$, $R_0$ and $R_1$, and $FR_0$ and $FR_1$, for instance, wavelength ranges of 420 to 470 nm for a measured wavelength range of $B_0$ and $B_1$, 615 to 680 nm for a measured wavelength range of $R_0$ and $R_1$, and 700 to 750 nm for a measured wavelength range of $FR_0$ and $FR_1$ may be adopted. However, if RBaV and RFRaV can be calculated, each measured wavelength range is not particularly limited.

(One Example of Lighting Control Means of the Present Embodiment)

If the state of light to be irradiated on the crops can be adjusted to the aforementioned crop wild-species growth light state, any means may be adopted as the aforementioned lighting control means.

The case of adopting (1) a reflective material and (2) a net as examples of the lighting control means will be described below.

(Description of Reflective Material)

First, the case (1) of adopting the reflective material will be described.

If the reflective material is installed in the crop cultivation house as the aforementioned lighting control means, it is possible to adjust the light to be irradiated on the crops.

The reflective material reflects part of transmitted light or light (hereinafter simply referred to as "internal reflected light") which is obtained such that the transmitted light is irradiated on and reflected from the interior of the crop cultivation house, and to irradiate the reflected light (hereinafter simply referred to as "reflected light") on the crops.

Further, a surface of the reflective material (hereinafter simply referred to as a "reflecting surface") is formed to be able to reflect light. Moreover, the reflecting surface is adjusted to function to adjust and reflect light irradiated on the reflecting surface to be in a predetermined state.

In detail, the reflecting surface is adjusted so that the spectral radiance of the wavelength range of the blue light contained in the reflected light is lower than the spectral radiance of the wavelength range of the blue light of the transmitted light.

Moreover, the reflecting surface is also adjusted such that the spectral radiance of the wavelength range of the far-red light contained in the reflected light is relatively higher than the spectral radiance of the wavelength range of the red light contained in the reflected light.

When the reflective material as mentioned above is installed in the crop cultivation house, the reflected light can be irradiated on the crops in addition to the transmitted light.

Then, the light irradiated on the crops in the crop cultivation house is caused to have higher illuminance than that when the reflective material is not installed.

Moreover, the spectral radiance of the wavelength range of the blue light in the light to be irradiated on the crops is caused to be relatively low, compared to when the reflective material is not installed.

Further, the spectral radiance of the wavelength range of the far-red light in the light to be irradiated on the crops is caused to be relatively higher than the spectral radiance of the wavelength range of the red light, compared to when the reflective material is not installed.

Then, the light to be irradiated on the crops can be adjusted to a state of light that meets requirements of the aforementioned crop wild-species growth light state.

(Red Reflective Material)

As a method of adjusting the reflecting surface of the reflective material to have the function described above, for example, a material whose reflecting surface is red (hereinafter simply referred to as a "red reflective material") may be adopted as the reflective material.

When the red reflective material is installed, the illuminance of the light to be irradiated on the crops becomes higher, compared to that when the red reflective material is not installed. However, the spectral radiance of the wavelength range of the blue light is hardly contained in the reflected light. Here, the spectral radiance of the wavelength range of the blue light in the light to be irradiated on the crops is hardly increased, compared to when the red reflective material is not installed, i.e. when only the transmitted light is irradiated to the crops.

On the other hand, the spectral radiance of the wavelength range of the red light in the light to be irradiated on the crops increases by the spectral radiance of the wavelength range of the red light included in the reflected light, compared to when only the transmitted light is irradiated on the crops.

Here, the spectral radiance of the wavelength range of the blue light in the light to be irradiated on the crops is relatively reduced with respect to the spectral radiance of the wavelength range of the red light, compared to when only the transmitted light is irradiated.

In that case, if the red reflective material is installed, the ratio of $R_1/B_1$ can be higher than the ratio of $R_0/B_0$, and the value RBaV obtained by subtracting the ratio of $R_0/B_0$ from the ratio of $R_1/B_1$ can be higher than RBaV when the red reflective material is not installed.

Further, since the reflecting surface is red, the wavelength range of the red system in the light irradiated on the reflecting surface is more efficiently reflected than that of other colors of light. The light having the wavelength range of the far-red light is included more in the reflected light reflected from the reflecting surface than the light having the wavelength range of the red light.

Here, the spectral radiance of the wavelength range of the far-red light included in the reflected light becomes relatively more than the spectral radiance of the wavelength range of the red light included in the reflected light.

In that case, if the red reflective material is installed, a difference between the spectral radiance of the wavelength range of the red light and the spectral radiance of the wavelength range of the far-red light in the light to be irradiated on the crops increases by a difference by which the spectral radiance of the wavelength range of the far-red light in the reflected light is higher than the spectral radiance of the wavelength range of the red light in the reflected light, compared to when only the transmitted light is irradiated on the crops.

That is, due to the installation of the red reflective material, the ratio of $R_0/FR_0$ can be higher than the ratio of $R_1/FR_1$, and the value RFRaV obtained by subtracting the ratio of $R_1/FR_1$ from the ratio of $R_0/FR_0$ can be higher than RFRaV when the red reflective material is not installed.

(Relationship with Illuminance)

If the reflective material is installed as described above, this is effective when the illuminance of the light to be irradiated on the crops is less sufficient than the illuminance of light required for the growth of the crops, because it is possible to increase the illuminance of the light to be irradiated on the crops. In this case, it is possible to adjust the illuminance of light to an optimum state for the growth of the crops, and to obtain the aforementioned effects as well.

For example, this is effective when crops (sun plants, etc.) such as fruit vegetables growing (photosynthesizing, etc.) under high illuminance are cultivated. If the illuminance of the light irradiated on the crops in this case, i.e. the intensity of light, is higher than necessary minimum illuminance for each type of crop mentioned below, a growth rate of the crop is not reduced. As such, it is possible to secure a crop yield.

Further, if the intensity of light is adjusted to the same extent as the light saturation point, a maximum crop yield can be secured for each type of crop.

(Others)

(Color of Reflecting Surface)

In the aforementioned example, the reflecting surface of the reflective material has been described as being the red reflecting surface. However, if the reflecting surface has the aforementioned function, it is not particularly limited. For example, the reflecting surface may have a color having the wavelength range of the red system. Even when the reflecting surface of the reflective material is covered with a red oil paint, it is possible to obtain similar effects.

(Material for Reflective Material)

Further, the material for the reflective material is not particularly limited either. For example, woody materials such as veneers, synthetic resins such as plastics, or steel materials may be adopted.

(Method of Installing Reflective Material)

Furthermore, a method of installing the reflective material is not particularly limited either. For example, if a reflective material in which the surface of a veneer board is applied with a red color and thereby is formed into a reflecting surface is installed so that the reflecting surface thereof is parallel to a growth direction of the crops, it is possible to always irradiate the reflected light on the crops even when the crops are growing. Further, if this reflective material is installed so that a lengthwise direction thereof is perpendicular to the growth direction of the crops, it is possible to irradiate the reflected light on a plurality of crops using a sheet of reflective material.

Further, the reflective material may be provided with a reflecting surface support member that adjusts an angle of the reflecting surface to the crops. This case is preferable, because it is possible to simply adjust an irradiation state in which the reflected light is irradiated according to a growth situation of the crops, a season, and so on.

(Description of Net)

Next, (2) the case of adopting the net will be described.
If a net that reflects some of external light, transmitted light, or internal reflected light and irradiates the reflected light (hereinafter simply referred to as "net reflected light") on the crops is installed as the aforementioned lighting control means, it is possible to adjust the light to be irradiated on the crops.

Since the net is a member formed in a reticulate shape by warps and woofs, a plurality of through-holes are formed in the net.
Further, the warps and the woofs of the net are adjusted so that surfaces thereof can reflect light.
Furthermore, these surfaces of the warps and the woofs are adjusted to function to adjust the light to be irradiated on the surfaces so that the light to be irradiated on the surfaces is in a predetermined state.

In detail, the state of the surfaces of the warps and the woofs is adjusted so that the warps and the woofs reflect the external light, the transmitted light, or the internal reflected light, and so that the spectral radiance of the wavelength range of the blue light included in the net reflected light is lower than the spectral radiance of the wavelength range of the blue light in the external light or the transmitted light.
Moreover, the adjustment is also made to such an extent that the net reflected light can be adjusted on the surfaces of the warps and the woofs so that the spectral radiance of the wavelength range of the far-red light included in the net reflected light is relatively higher than the spectral radiance of the wavelength range of the red light included in the net reflected light.

Further, when the external light is irradiated on the net, light to be irradiated in the plurality of through-holes formed in the net among the external light is directly irradiated on the transmissive material forming the crop cultivation house. The light to be irradiated on the transmissive material transmits the transmissive material to become transmitted light, and is directly irradiated on the crops in the crop cultivation house.
On the other hand, when the transmitted light is irradiated on the net, light to be irradiated in the plurality of through-holes formed in the net among the transmitted light is directly irradiated on the crops.

If the net is installed to cover the crops in the crop cultivation house as described above, it is possible to irradiate the net reflected light on the crops in addition to the transmitted light directly irradiated on the crops (hereinafter simply referred to as "net direct transmitted light").
Then, the illuminance of the light to be irradiated on the crops in the crop cultivation house can become lower than that of a condition in which the net is not installed.
Furthermore, the spectral radiance of the wavelength range of the blue light among the light to be irradiated on the crops can become relatively low, compared to when no reflective material is installed.
Further, the spectral radiance of the wavelength range of the far-red light among the light to be irradiated on the crops can be also made relatively high, with respect to the spectral radiance of the wavelength range of the red light.
In that case, the light to be irradiated on the crops can be adjusted to a state of light that meets the requirements of the aforementioned crop wild-species growth light state.

(Red Net)

As a method of adjusting the surfaces of the warps and woofs of the net to have the function described above, for example, a net of which the warps and/or the woofs are red (hereinafter simply referred to as a "red net") may be adopted as a net.
When the red net is installed, the illuminance of the light to be irradiated on the crops is reduced, compared to when the red net is not installed. Furthermore, the spectral radiance of the wavelength range of the blue light is hardly contained in the net reflected light.
Then, the spectral radiance of the wavelength range of the blue light among the light to be irradiated on the crops is reduced, compared to when the red net is not installed, i.e. when only the transmitted light is irradiated on the crops.
In other words, the spectral radiance of the wavelength range of the blue light to be irradiated to the crops may be said to be only the spectral radiance of the wavelength range of the blue light included in the net direct transmitted light.
The spectral radiance of the wavelength range of the red light among the light to be irradiated on the crops is also reduced as much as the illuminance of the light to be irradiated on the crops is reduced, compared to when only the transmitted light is irradiated on the crops.

However, since the spectral radiance of the wavelength range of the red light is included in the net reflected light, the spectral radiance of the wavelength range of the red light among the light to be irradiated on the crops increases much more than when only the net direct transmitted light is irradiated on the crops.

That is, the spectral radiance of the wavelength range of the blue light among the light to be irradiated on the crops is relatively reduced with respect to the spectral radiance of the wavelength range of the red light, compared to a case in which only the transmitted light is irradiated.

Then, if the red net is installed, the ratio of $R_1/B_1$ can be higher than the ratio of $R_0/B_0$, and the value RBaV obtained by subtracting the ratio of $R_0/B_0$ from the ratio of $R_1/B_1$ can become higher than RBaV when the red net is not installed.

Further, since the surfaces of the warps and woofs of the net are red, the light having the wavelength range of the red system among the light irradiated on the surfaces (the external light or the transmitted light) is more effectively reflected than the light having the wavelength range of other colors of light. The light having the wavelength range of the far-red light is included in the net reflected light reflected from the surfaces more than the light having the wavelength range of the red light.

Here, the spectral radiance of the wavelength range of the far-red light included in the net reflected light becomes relatively high with respect to the spectral radiance of the wavelength range of the red light included in the net reflected light.

In that case, if the red net is installed, a difference between the spectral radiance of the wavelength range of the red light and the spectral radiance of the wavelength range of the far-red light in the light to be irradiated on the crops increases by a difference by which the spectral radiance of the wavelength range of the far-red light in the net reflected light is higher than the spectral radiance of the wavelength range of the red light in the net reflected light, compared to when only the transmitted light is irradiated on the crops.

That is, due to the installation of the red net, the ratio of $R_0/FR_0$ can be higher than the ratio of $R_1/FR_1$, and the value RFRaV obtained by subtracting the ratio of $R_1/FR_1$ from the ratio of $R_0/FR_0$ can be higher than RFRaV when the red net is not installed.

(Relationship with Illuminance)

If the net is installed as described above, this is effective when the illuminance of the light to be irradiated on the crops is higher than the illuminance of light required for the growth of the crops, because it is possible to reduce the illuminance of the light to be irradiated on the crops. In this case, it is possible to adjust the illuminance of light to an optimum state for the growth of the crops, and to obtain the aforementioned effects as well.

For example, this is effective when crops (shade plants, etc.) such as leaf vegetables growing (photosynthesizing, etc.) under low illuminance are cultivated. If the illuminance of the light irradiated on the crops in this case, i.e. the intensity of light, is higher than a necessary minimum illuminance for each type of crop mentioned below, it is possible to prevent, for instance, photoinhibition, and a growth rate of the crops is not reduced. As such, it is possible to secure a crop yield. Further, if the intensity of light is adjusted to the same extent as the light saturation point, a maximum crop yield can be secured for each type of crop.

(Others)

(Color of Net)

In the aforementioned example, the warps and/or the woofs forming the net are described as being red. However, as long as the warps and/or the woofs have the aforementioned function, it is not particularly limited to red. For example, the warps and/or the woof may have a color having the wavelength range of the red system, or a color such as pink having the wavelength range of the red system. Even when the warps and/or the woofs are colored in red, it is possible to obtain similar effects.

(Method of Installing Net)

Further, a method of installing the net may include a method of installing the net inside the crop cultivation house. For example, the net may be installed to cover a framework of wood, steel, etc. in the crop cultivation house with the net and thus to cultivate crops in a space covered with the net. This case is preferable, because, when a plurality of types of crops are cultivated in one crop cultivation house, it is possible to adjust the state of light to be irradiated on the respective types of crops to an optimum state for the growth of the respective types of crops.

Furthermore, as a method of installing the net outside the crop cultivation house, for example, the net may be installed outside the crop cultivation house to cover the crop cultivation house with the net using a ceiling and sidewalls of the crop cultivation house as supports. This case is preferable when a single type of crop is cultivated in one crop cultivation house, because no framework is required to form the space covered with the net, and because the light in the entire crop cultivation house can be adjusted to the same state.

(Another Example of Net)

Furthermore, as such a net, for example, a bird-proof net whose warps and/or woofs are red may be adopted. A golf net, an insect-proof net, etc. may also produce equivalent effects.

(Example of Use When Fruit Vegetables are Cultivated)

Next, an example of use of the lighting control means is described.
As the example of use of the lighting control means, the configuration as mentioned below may be adopted.
For example, in the case of cultivating fruit vegetables in the crop cultivation house, when both the red reflective material and the red net described above are installed, it is possible to adjust the light to be irradiated on the fruit vegetables to an optimum state for the growth of the fruit vegetables.
When both the red reflective material and the red net are installed, it is possible to reduce the spectral radiance of the wavelength range of the blue light in all irradiated light (hereinafter simply referred to as "entire crop irradiated light") including all the light to be irradiated on the crops such as the transmitted light and the reflected light or the net reflected light, compared to when only one of the red reflective material and the red net is installed.
Further, in comparison with a case in which only one of the red reflective material and the red net is installed, the spectral radiance of the wavelength range of the far-red light in the crop entire irradiated light is also possible so that a difference of the spectral radiance of the wavelength range of the red light therefrom is further increased.
Then, since the light to be irradiated on the fruit vegetables can be adjusted to the state of light that meets the requirements of the crop wild-species growth light state as described above, the light to be irradiated on the fruit vegetables can be adjusted to the optimum state for the growth of the fruit vegetables.
In detail, due to the red reflective material and the red net, the ratio of $R_1/B_1$ can be higher than the ratio of $R_0/B_0$, and the value RBaV obtained by subtracting the ratio of $R_0/B_0$ from the ratio of $R_1/B_1$ can become higher than RBaV when the red reflective material and the red net are not installed.
Further, the ratio of $R_0/FR_0$ can be higher than the ratio of $R_1/FR_1$, and the value RFRaV obtained by subtracting the ratio of $R_1/FR_1$ from the ratio of $R_0/FR_0$ can be higher than RFRaV when the red reflective material and the red net are not installed.
For example, when the fruit vegetables such as eggplants, cucumbers, and tomatoes are cultivated, because RBaV and RFRaV in the optimum state of light for the growth of the fruit vegetables are equal to or more than 0.319 and 0.098 respectively, it is possible to adjust the light to be irradiated to the fruit vegetables so that RBaV and RFRaV become such values.
In this case, it is also possible to install the red net to cover the outside of the crop cultivation house.

(Example of Adjusting State of Light Using Light Transmissive Material)

As an example of the lighting control means that adjusts the light to be irradiated on the crops in the crop cultivation house, the configuration that adopts the reflective material and the net has been described above. However, even if a configuration to be described below is adopted, it is similarly possible to adjust the light to be irradiated on the crops, and to adjust the light to the optimum state for the growth of the crops.
For example, if a material described below is adopted as the light transmissive material that forms the ceiling and sidewalls of the crop cultivation house, the state of the light to be irradiated on the crops that are cultivated in the crop cultivation house can be adjusted by not only the lighting control means but also the crop cultivation house.

(Description of Light Transmissive Material)

In detail, as the light transmissive material, a material that functions to attenuate the spectral radiance of the wavelength range of the blue light included in the transmitted light among the transmitted light more than the spectral radiance of the wavelength range of the blue light in the external light is preferably used.
Here, it is more preferable that the material have a function of making the spectral radiance of the wavelength range of the far-red light included in the transmitted light relatively higher than the spectral radiance of the wavelength range of the red light.
If the material having the function as mentioned above is adopted as the light transmissive material, the illuminance of the light to be irradiated on the crops in the crop cultivation house is caused to be lower than that when such a light transmissive material is not adopted.

Furthermore, the spectral radiance of the wavelength range of the blue light among the light to be irradiated on the crops can become low, compared to a case in which the light transmissive material having such a function is not adopted.

Further, the spectral radiance of the wavelength range of the far-red light among the light to be irradiated on the crops can become relatively higher than the spectral radiance of the wavelength range of the red light, compared to a case in which such a light transmissive material is not installed.

In that case, the light to be irradiated on the crops can be adjusted to such a state of light that meets requirements of the crop wild-species growth light state as described above.

(Red Sheet)

The light transmissive material is used as the material having the function as described above, and a sheet of a red color (hereinafter simply referred to as "red sheet") may be adopted as the light transmissive material.

When the red sheet is adopted, the illuminance of the light to be irradiated on the crops is reduced, compared to when the red sheet is not installed. Furthermore, the spectral radiance of the wavelength range of the blue light among the transmitted light transmitting the red sheet (hereinafter simply referred to as "red sheet transmitted light") is reduced by a level of attenuation caused by the red sheet. Then, the spectral radiance of the wavelength range of the blue light among the light to be irradiated on the crops is reduced, compared to the case in which the red sheet is not installed, i.e. the case in which the light transmissive material other than the red sheet is installed.

The spectral radiance of the wavelength range of the red light among the light to be irradiated on the crops is reduced as much as the illuminance of the light to be irradiated on the crops is reduced, compared to the case in which the light transmissive material other than the red sheet is installed.

However, due to the red sheet, the spectral radiance of the wavelength range of the red light among the external light to be irradiated on the red sheet is not attenuated. Then, the spectral radiance of the wavelength range of the red light among the red sheet transmitted light is hardly increased, like the case in which the light transmissive material other than the red sheet is installed.

That is, the spectral radiance of the wavelength range of the blue light among the light to be irradiated on the crops is to be relatively reduced, with respect to the spectral radiance of the wavelength range of the red light, compared to the case in which the light transmissive material other than the red sheet is installed.

Then, if the red sheet is installed, the ratio of $R_1/B_1$ can be higher than the ratio of $R_0/B_0$, and the value RBaV obtained by subtracting the ratio of $R_0/B_0$ from the ratio of $R_1/B_1$ can become higher than RBaV when the red sheet is not installed.

Further, since the light transmissive material is red, the wavelength range of the far-red light is included in the red sheet transmitted light of the light transmissive material more than the wavelength range of the red light.

Then, the spectral radiance of the wavelength range of the far-red light included in this red sheet transmitted light becomes relatively higher than the spectral radiance of the wavelength range of the red light included in this red sheet transmitted light.

In that case, if the red sheet is adopted, a difference between the spectral radiance of the wavelength range of the red light and the spectral radiance of the wavelength range of the far-red light in the light to be irradiated on the crops increases by a difference by which the spectral radiance of the wavelength range of the far-red light in the red sheet transmitted light is higher than the spectral radiance of the wavelength range of the red light in the red sheet transmitted light, compared to the case in which the light transmissive material other than the red sheet is installed.

That is, the ratio of $R_0/FR_0$ can be higher than the ratio of $R_1/FR_1$, and the value RFRaV obtained by subtracting the ratio of $R_1/FR_1$ from the ratio of $R_0/FR_0$ can become higher than RFRaV when the red sheet is not installed.

(Others)

(Color of Sheet)

In the aforementioned example, the red sheet has been described as being adopted as the light transmissive material. However, the light transmissive material is not particularly limited as long as it has the above function. For example, the light transmissive material may be covered with a red oil paint, and thereby it is possible to add the aforementioned function. Then, a light transmissive material other than the red sheet may also exert the same effect as the aforementioned red sheet.

Further, the light transmissive material is not particularly limited as long as it has a color having the wavelength range of the red system. For example, a sheet of a color such as pink having the wavelength range of the red system may be adopted.

(Material for Light Transmissive Material)

Further, for instance, if a polyethylene product having a thickness of 0.05 mm is adopted, the material for the light transmissive material may be excellent in weather resistance and handy, but it is not limited thereto. For example, a sheet having transmissive property, such as a film formed of a synthetic resin such as a polyolefin-based (polypropylene, polyethylene, etc.) resin, a fluorine resin, or the like, starting with polyvinyl chloride (PVC) may be used as the material for the light transmissive material. Of course, a member formed of glass instead of the sheet may also be adopted.

(Example of Cultivating Leaf Vegetables)

Next, an example of use of the above crop cultivation house will be described.
As an example of a use in which light is adjusted to become the optimum state of light for the growth of the crops, a configuration described below may be adopted.
For example, when leaf vegetables are cultivated in the crop cultivation house, if the red sheet is adopted as the light transmissive material forming the ceiling and sidewalls of the crop cultivation house as described above, it is possible to adjust light to be irradiated on the leaf vegetables to an optimum state for the growth of the leaf vegetables.
If the red sheet is adopted as the light transmissive material, the spectral radiance of the wavelength range of the blue light among the light to be irradiated on the crops can become lower than that when the red sheet is not installed. Further, the spectral radiance of the wavelength range of the far-red light is caused to be relatively higher than the spectral radiance of the wavelength range of the red light.
Thus, since the light to be irradiated on the leaf vegetables can be adjusted to a state of light that meets requirements of the crop wild-species growth light state as described above, it can be adjusted to the optimum state for the growth of the leaf vegetables.
In detail, if the red sheet is adopted, the ratio of $R_1/B_1$ can become higher than the ratio of $R_0/B_0$, and the value RBaV obtained by subtracting the ratio of $R_0/B_0$ from the ratio of $R_1/B_1$ can become higher than RBaV when the red sheet is not adopted.
Further, by adopting the red sheet, the ratio of $R_0/FR_0$ can become higher than the ratio of $R_1/FR_1$, and the value RFRaV obtained by subtracting the ratio of $R_1/FR_1$ from the ratio of $R_0/FR_0$ can become higher than RFRaV when the red sheet is not adopted.
For example, when the leaf vegetables such as napa cabbage and cabbage are cultivated, because RBaV and RFRaV in the optimum state of light for the growth of the leaf vegetables are equal to or more than 0.367 and 0.149 respectively, it is possible to adjust the light to be irradiated to the leaf vegetables so that RBaV and RFRaV become such values.

(Description of Relationship with Illuminance)

If the reflective material is installed as described above, it is possible to reduce the illuminance of the light to be irradiated on the crops. As such, this is effective when the illuminance of the light to be irradiated on the crops is higher than the illuminance of light required for the growth of the crops. In this case, it is possible to adjust the illuminance of light to an optimum state for the growth of the crops, and to obtain the aforementioned effects as well.
That is, like the case of the above net, if the illuminance of the light to be irradiated on the crops is adjusted to be higher than a necessary minimum illuminance for each type of crop, it is possible to prevent photoinhibition of the crops such as shade plants, and a growth rate of the crops is not reduced. As such, it is possible to secure a sufficient crop yield.
Further, if the illuminance of light is adjusted to the same extent as the light saturation point, this is preferable because it is possible to secure a maximum crop yield for each type of crop.

(Light Saturation Point and Necessary Minimum Illuminance of Each Type of Crop)

For example, when the eggplants among the fruit vegetables are cultivated, the eggplants have a light saturation point of 40,000 lux, and a necessary minimum illuminance of 24,000 lux. As such, if the transmittance of light of the red sheet is set so that the illuminance of the light to be irradiated on the eggplants is equal to or more than 40,000 lux, it is possible to secure a sufficient crop yield.
For example, among the leafy vegetables, head lettuce and leaf lettuce have a necessary minimum illuminance of 18,000 lux, Japanese parsley, Japanese mustard spinach and leaf leeks have a necessary minimum illuminance of 15,000 lux, and crown daisies and *Angelica keiskei* (Ashitaba) have a necessary minimum illuminance of 12,000 lux. As for the light saturation point of the fruit vegetables, tomatoes require 70,000 lux, watermelons require 80,000 lux, cucumbers and melons require 55,000 lux, and bell peppers and chili peppers require 30,000 lux.
Accordingly, even when these crops are cultivated, if the illuminance of the light to be irradiated on the crops is more than the light saturation point with regard to each crop, it is possible to secure a sufficient crop yield.

(Description of Use of Artificial Light)

Next, like the aforementioned lighting control means or crop cultivation house, the following construction using artificial light may be adopted to adjust the state of the light to be irradiated on the crops that are cultivated inside the crop cultivation house.
For example, when the external light to be irradiated on the crop cultivation house is only sunlight, a quantity of light required to adjust the state of the light to be irradiated on the crops may not be obtained, for instance, when the weather is cloudy.
Even in this case, if a light source irradiating artificial light from the outside of the crop cultivation house is installed, the light to be irradiated from the light source can compensate for the quantity of light that is insufficient for such adjustment. Then, it is possible to obtain a sufficient quantity of transmitted light, which is necessary to adjust the light to be irradiated on the crops in the crop cultivation house, regardless of the weather.
In that case, it is possible to adjust the state of the light to be irradiated on the crops to the optimum state for the growth of the crops at all times.

(Description of Light Source)

Means including a light source for irradiating light on the crop cultivation house, and control means for controlling operation of the light source may be adopted as means of irradiating the artificial light.
The light source includes the spectral radiance of the wavelength range of the blue light, the spectral radiance of the wavelength range of the red light, and the spectral radiance of the wavelength range of the far-red light in the emitted light.
The control means is constructed to be made up of a house irradiation wavelength measuring apparatus, a crop irradiation wavelength measuring apparatus, and a controller equipped with recording means.
The house irradiation wavelength measuring apparatus has a function of measuring the spectral radiance $B_0$ of the wavelength range of the blue light, the spectral radiance $R_0$ of the wavelength range of the red light, and the spectral radiance $FR_0$ of the wavelength range of the far-red light among the external light.
Further, the crop irradiation wavelength measuring apparatus has a function of measuring the spectral radiance $B_1$ of the wavelength range of the blue light, the spectral radiance $R_1$ of the wavelength range of the red light, and the spectral radiance $FR_1$ of the wavelength range of the far-red light among the entire crop irradiated light.
The recording means records the RBaV and RFRaV at which the crops can grow in the optimum state.
For example, the recording means records 0.367 for RBaV and 0.149 for RFRaV for napa cabbage and cabbage among the leaf vegetables, and 0.319 for RBaV and 0.098 for RFRaV in the eggplants among the fruit vegetables.
The controller controls the light of the light source from signals sent from the house irradiation wavelength measuring apparatus and the crop irradiation wavelength measuring apparatus, which are relevant to wavelengths measured by these apparatuses, and from data of the recording means to adjust the state of the light to be irradiated on the crops to the optimum state for the growth of the crops at all times.
With the construction as mentioned above, the control means can adjust the light of the light source which is irradiated on the crop cultivation house so that a value RBaV obtained by subtracting a ratio of $R_0/B_0$ from a ratio of $R_1/B_1$ calculated on the basis of intensities of the wavelengths measured by the house irradiation wavelength measuring apparatus and the crop irradiation wavelength measuring apparatus is compared with the data of the recording means, and the value RBaV becomes greater than RBaV of the recorded data, and so that a value RFRaV obtained by subtracting a ratio of $R_1/FR_1$ from a ratio of $R_0/FR_0$ calculated from these observed wavelengths is compared with the data of the recording means, and the value RFRaV becomes greater than RFRaV of the recorded data. In other words, the control means controls the light source, and thereby is able to adjust the light to be irradiated on the crops to the optimum state for the growth of the crops.
Then, when the leaf vegetables are cultivated in the crop cultivation house, it is possible to adjust the light to be irradiated on the leaf vegetables so that RBaV and RFRaV are equal to or more than 0.367 and 0.149 in the optimum state of light for the growth of the leaf vegetables at all times.
The light source is preferably an instrument employing a light-emitting diode (LED) that has a low calorific value as well as low consumption energy, but it is not limited to such an instrument. For example, the light source may be an instrument employing a fluorescent lamp, a discharge lamp using arc discharge or glow discharge, or the like.
Further, the crop irradiation wavelength measuring apparatus and the house irradiation wavelength measuring apparatus are not particularly limited if they can output the measured wavelengths to an instrument capable of calculating RBaV and RFRaV on the basis of the intensities of the wavelengths. For example, a photometer for measuring emitted light may be used.

(One Example of Lighting Control Means for Intense Cultivation)

Next, there is provided a lighting control means as one example of the above lighting control means that can adjust light at shady spots where shade from leaves is caused by the growth of the crops that are cultivated inside the crop cultivation house.

When the crops are cultivated densely, leaves of the neighboring crops overlap, causing shady spots to appear with the growth of the crops.

Here, the spectral radiance of the wavelength range of the red light among the light to be irradiated on the crops of the shady spots is attenuated more than the spectral radiance of the wavelength range of the red light among the light to be irradiated on the spots other than the shady spots.

Furthermore, a difference between the spectral radiance of the wavelength range of the far-red light and the spectral radiance of the wavelength range of the red light among the light to be irradiated on the crops of the shady spots becomes extremely greater than a difference between the spectral radiance of the wavelength range of the far-red light and the spectral radiance of the wavelength range of the red light among the light to be irradiated on the spots other than the shady spots.

Here, a relative ratio of the spectral radiance of the wavelength range of the far-red light to the spectral radiance of the wavelength range of the red light among the light to be irradiated on the crops of the shady spots becomes extremely greater than a relative ratio of the spectral radiance of the wavelength range of the far-red light to the spectral radiance of the wavelength range of the red light among the light to be irradiated on the spots other than the shady spots.

That is, even when the light to be irradiated on the crops is adjusted to the optimum state for the growth of the crops, the light to be irradiated on the crops of the shady spots deviates from the optimum state for the growth of the crops.

In that case, since the crops in the shady spots are not resistant to pests, such crops suffer damage from the pests at the shady spots.

Accordingly, as one example of the lighting control means for adjusting the light at the shady spots where the leaves are shaded, an example where the light source irradiating the artificial light is adopted at the shady spots where the leaves of eggplants are shaded will be described below.

If the light source, such as the above lighting control means, is installed at shady spots where the neighboring leaves of the eggplants overlap in the crop cultivation house according to the growth of the eggplants, it is also possible to adjust the state of the light of the shady spots to the optimum state for the growth of the eggplants.

Then, even when the eggplants are cultivated in a dense state, it is possible to cultivate the eggplants that are very resistant to the pests.

Means including a light source for irradiating light on the crops of the shady spots, and control means for controls operation of the light source may be adopted as the means for irradiating the artificial light.

The light source includes the spectral radiance of the wavelength range of the red light in the emitted light.

The control means is constructed to be made up of a house irradiation wavelength measuring apparatus, a crop irradiation wavelength measuring apparatus, and a controller equipped with recording means.

The house irradiation wavelength measuring apparatus has a function of measuring the spectral radiance $B_0$ of the wavelength range of the blue light, the spectral radiance $R_0$ of the wavelength range of the red light, and the spectral radiance $FR_0$ of the wavelength range of the far-red light among the external light.

Further, the crop irradiation wavelength measuring apparatus has a function of measuring the spectral radiance $B_1$ of the wavelength range of the blue light, the spectral radiance $R_1$ of the wavelength range of the red light, and the spectral radiance $FR_1$ of the wavelength range of the far-red light among the entire crop irradiated light of the shady spots.

The recording means records RBaV and RFRaV at which the crops can grow in the optimum state. For example, the recording means records 0.319 for RBaV and 0.098 for RFRaV for eggplants among the fruit vegetables.

The controller controls the light of the light source from signals sent from the house irradiation wavelength measuring apparatus and the crop irradiation wavelength measuring apparatus, which are relevant to wavelengths measured by these apparatuses, and from data of the recording means to adjust the state of the light to be irradiated on the crops to the optimum state for the growth of the crops at all times.

With the construction as mentioned above, the control means can adjust the light to be irradiated on the crops of the shady spots from the light source so that a value RBaV obtained by subtracting a ratio of $R_0/B_0$ from a ratio of $R_1/B_1$ calculated on the basis of intensities of the wavelengths measured by the house irradiation wavelength measuring apparatus and the crop irradiation wavelength measuring apparatus is compared with the data of the recording means, and the value RBaV becomes greater than RBaV of the recorded data, and so that a value RFRaV obtained by subtracting a ratio of $R_1/FR_1$ from a ratio of $R_0/FR_0$ calculated from these observed wavelengths is compared with the data of the recording means, and the value RFRaV becomes greater than RFRaV of the recorded data.

In other words, the control means controls the light source, and thereby is able to adjust the light to be irradiated on the crops of the shady spots to the optimum state for the growth of the crops.

Then, since it is also possible to adjust the state of the light of the shady spots to the optimum state for the growth of the eggplants, even when the eggplants are cultivated in a dense state, it is possible to cultivate the eggplants that is sound and have good resistance to the pests.

Then, due to such a light source, a ratio of the spectral radiance of the wavelength range of the red light to the light to be irradiated on the eggplants of the shady spots can be adjusted to the same extent as a ratio of the spectral radiance of the wavelength range of the red light to the light to be irradiated on the spots other than the shady spots. Furthermore, a correlation between the spectral radiance of the wavelength range of the far-red light and the spectral radiance of the wavelength range of the red light can be adjusted to the same extent as a correlation between the spectral radiance of the wavelength range of the far-red light and the spectral radiance of the wavelength range of the red light among the light to be irradiated on the spots other than the shady spots.

That is, the light to be irradiated on the shady spots can be adjusted to be similar to the state of the light of the spots other than the shady spots. In other words, the state of the light of the shady spots can be adjusted to the optimum state for the growth of the eggplants.

For example, if the light of the light source which is to be irradiated on the shady spots of the eggplants is adjusted to the wavelength range of the red light, the spectral radiance of the wavelength range of the red light among the light to be irradiated on the eggplants of the shady spots increases as much as the spectral radiance of the wavelength range of the red light emitted from the light source, compared to a case in which the light source is not installed in the shades of leaves.

Then, if the light source emitting the wavelength range of the red light is installed, with regard to the shady spots, the ratio of $R_1/B_1$ can become greater than the ratio of $R_0/B_0$, and the value RBaV obtained by subtracting the ratio of $R_0/B_0$ from the ratio of $R_1/B_1$ can become greater than RBaV when the light source is not installed.

Furthermore, since the light to be irradiated from the light source falls within the wavelength range of the red light, the spectral radiance of the wavelength range of the red light among the light to be irradiated on the eggplants of the shady spots increases by that of the red light to be irradiated from the light source.

Then, before the light source is installed in the shady spots, the state of the light of the shady spots of the eggplants is as follows. A difference between the spectral radiance of the wavelength range of the far-red light and the spectral radiance of the wavelength range of the red light among the light to be irradiated on the eggplants of the shady spots become extremely increased.

In contrast, by installing the light source in such shady spots, a ratio of the spectral radiance of the wavelength range of the far-red light to the spectral radiance of the wavelength range of the red light in the light to be irradiated on the eggplants of the shady spots can be adjusted to the same extent as a ratio of the spectral radiance of the wavelength range of the far-red light to the spectral radiance of the wavelength range of the red light in the light to be irradiated on the eggplants of the spots other than the shady spots.

Then, the spectral radiance of the wavelength range of the far-red light included in the light to be irradiated on the eggplants of the shady spots becomes relatively higher than the spectral radiance of the wavelength range of the red light included in the light to be irradiated on the eggplants of the shady spots. Then, a fraction of the spectral radiance of the wavelength range of the far-red light included in the light to be irradiated on the eggplants of the shady spots is roughly the same as a fraction by which the spectral radiance of the wavelength range of the far-red light included in the light of the spots other than the shady spots becomes relatively higher than the spectral radiance of the wavelength range of the red light included in the light of the spots other than the shady spots.

In that case, the state of the light of the shady spots increases as much as the spectral radiance of the wavelength range of the red light based on the light source, compared to the condition in which the light source is not installed.

The spectral radiance of the wavelength range of the far-red light is higher than the spectral radiance of the wavelength range of the red light.

That is, among the light to be irradiated on the eggplants of the shady spots, the ratio of $R_0/FR_0$ can become greater than the ratio of $R_1/FR_1$, and the value RFRaV obtained by subtracting the ratio of $R_1/FR_1$ from the ratio of $R_0/FR_0$ can become similar to RFRaV of the light to be irradiated on the eggplants of the spots other than the shady spots.

In detail, it is preferable to adjust the light to be irradiated on the eggplants of the shady spots so that RBaV and RFRaV of the light to be irradiated on the eggplants of the shady spots when the eggplants are cultivated in a dense state have the same effect as a lighting environment in which RBaV and RFRaV in the optimum state of light for the growth of the fruit vegetables are equal to or more than 0.319 and 0.098 respectively.

The light source is preferably an instrument employing an LED that has a low calorific value as well as low consumption energy, but it is not limited to such an instrument.

Next, specific examples of cultivating the crops using the pest control method or the intensive cultivation method of the present invention will be described.

(Description of Light)

First, prior to describing the specific examples of cultivating the crops using the pest control method or the intensive cultivation method, a description will be given of light (blue light B or B, red light R, and far-red light FR) which is important to the cultivation method.

The blue light B or B has a wavelength range of blue light of a forcible reaction of photomorphogenesis in the broad sense, and is defined and interpreted herein as the spectral radiance of 420 to 470 nm representing the wavelength range of blue light of the forcible reaction of photomorphogenesis to examine a lighting environment in the narrow sense. The red light R or R has a wavelength range of a red light effect of photomorphogenesis in the broad sense, and is defined as the spectral radiance of 615 to 680 nm for the reason similar to that of the blue light B in the narrow sense. The far-red light FR or FR has a wavelength range of a far-red light effect of photomorphogenesis in the broad sense, and is defined and interpreted as the spectral radiance of 700 to 750 nm for the reason similar to that of the blue light B in the narrow sense.

In the present invention, focusing on the fact that, during the photomorphogenesis, a balance of the reaction under strong light, the red light effect of the photomorphogenesis, or the far-red light effect of the photomorphogenesis is deeply related to the physiology of plants, a light balance of this photomorphogenesis serves as a criterion of determination of the cultivation method.

That is, in the present invention, R, B, and FR are defined as the red light, the blue light, and the far-red light, and the balances thereof, i.e. a ratio of R/B and a ratio of R/FR are set as ratios of light, and are adopted as criteria for interpreting the problem to be solved by the present invention.

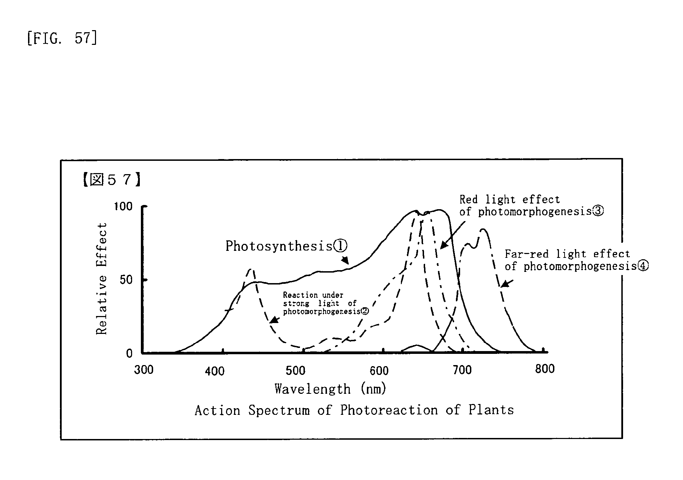

With regard to the respective wavelength ranges of light, R, B, and FR are set to 615 to 680 nm, 420 to 470 nm, and 700 to 750 nm with reference to FIG. 57 (hereinafter referred to as red light R or R, blue light B or B, and far-red light FR or FR, respectively).

That is, the blue light B ranges from 420 to 470 nm, the red light R ranges from 615 to 680 nm, and the far-red light FR ranges from 700 to 750 nm (hereinafter referred to as "pattern 1").

However, these wavelength ranges may be freely set in principle. The purpose herein is as a guideline for knowing how an inclination of the photomorphogenesis of the lighting environment of a cultivation stage is changed in comparison with a bare field.

Accordingly, once the wavelength ranges are decided, they serve as the criteria, and they should not be arbitrarily changed.

That is, since the ratio of light (the ratio of R/B, or the ratio of R/FR) as described above is a method for clearly understanding the inclination of the photomorphogenesis, i.e. means for knowing how the photomorphogenesis will turn out, the respective wavelength ranges of light are merely to select ranges in which respective peak wavelengths of the blue light B, the red light R, and the far-red light FR and wavelengths having a strong function are included.

However, if these wavelength ranges are set, the peak wavelengths and the wavelengths having a strong function are included. As such, a change in the function of the photomorphogenesis can be understood well by the ratio of light.

Further, another method by which the change of the function of the photomorphogenesis can be understood well is a method of setting B to 380 to 470 nm, R to 580 to 689 nm, and FR to 690 to 770 nm (hereinafter referred to as "Pattern 2"). In this case, as the wavelength range, the entire range from the peak wavelength to the foot may be designated.

Further, in another method, B is set to 410 to 450 nm, R to 635 to 670 nm, and FR to 700 to 740 nm (hereinafter referred to as "Pattern 3").

That is, a method of designating only vicinities of the peak wavelengths of R, B and FR may be adopted. Even in this case, due to regularity as well as a balance characteristic, the method is good (see FIG. 57).

R is designated as a peak wavelength, and B is designated as one side of the foot. Thus, even a regularity-free method or a badly balanced method, in which FR is designated as the entire range from the one-side foot including the peak to the other-side foot, despite not being an optimal method, may be adopted as long as it is possible to know the change in the ratio of light.

As described above, it is important to know the ratio of light in the present invention.

Although the wavelength ranges of B, R and FR are set in order to know such a ratio of light, this is free in principle. However, with regard to the setting, the entire range of the reaction under strong light of the photomorphogenesis should not be adopted. This is because, as understood with reference to FIG. 57, this range overlaps with the range of the red light effect of the photomorphogenesis, and furthermore the peak wavelength is present in the overlapping range.

Further, if the vicinity of the peak wavelength is set to B, B and R overlap, and thus the ratio of R/B is insignificant.

Although the setting is done by causing such a tiny portion as not to be insignificant when B and R overlap to be added to B, this may be adopted if the ratio of R/B can be used as a guideline when compared with the bare field.

As described above, it does not matter in principle how the wavelength ranges of B, R and FR are set. However, the blue light B, the red light R, and the far-red light FR are interpreted herein as 420 to 470 nm, 615 to 680 nm, and 700 to 750 nm, respectively.

However, although R is set to 615 to 680 nm, this does not necessarily mean that the wavelength within the range should be used. For example, even when artificial lighting having a mixed wavelength of a peak of 770 nm of the far-red light FR and a peak of 590 nm of the red light R, both of which are beyond the setting range, is used, the lighting environment thereof is good if the ratio of R/B is greater, and the ratio of R/FR is smaller, compared to the bare field.

Here, regardless of Pattern 1, Pattern 2, or Pattern 3, another pattern for the wavelength ranges of R, B and FR in which a change in the photomorphogenesis reaction balanced in another reasonable way can be understood well. Even if another pattern includes only a tiny portion of the range where R and B overlap, it may be adopted if the ratio of R/B is useful.

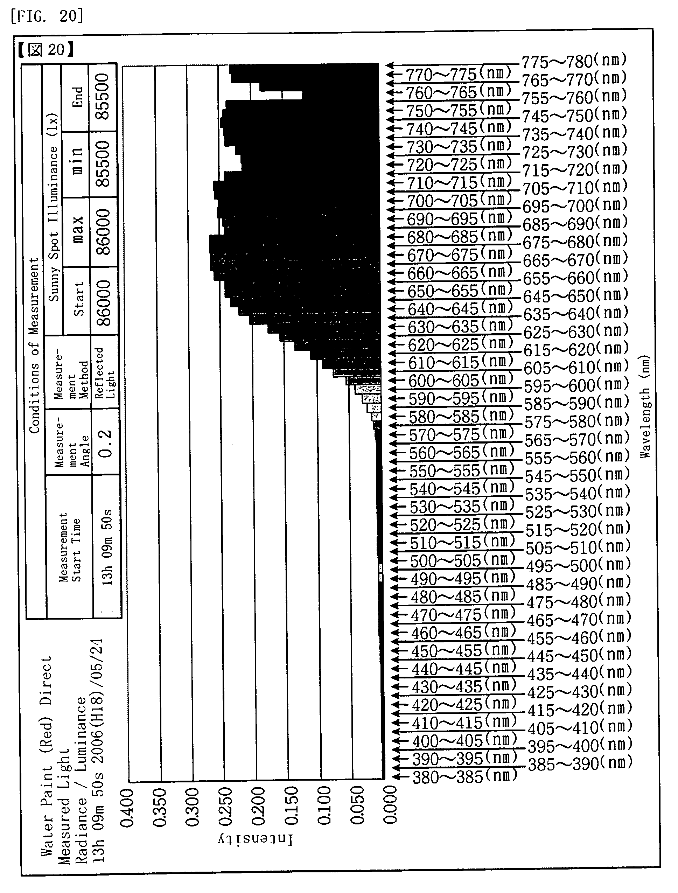

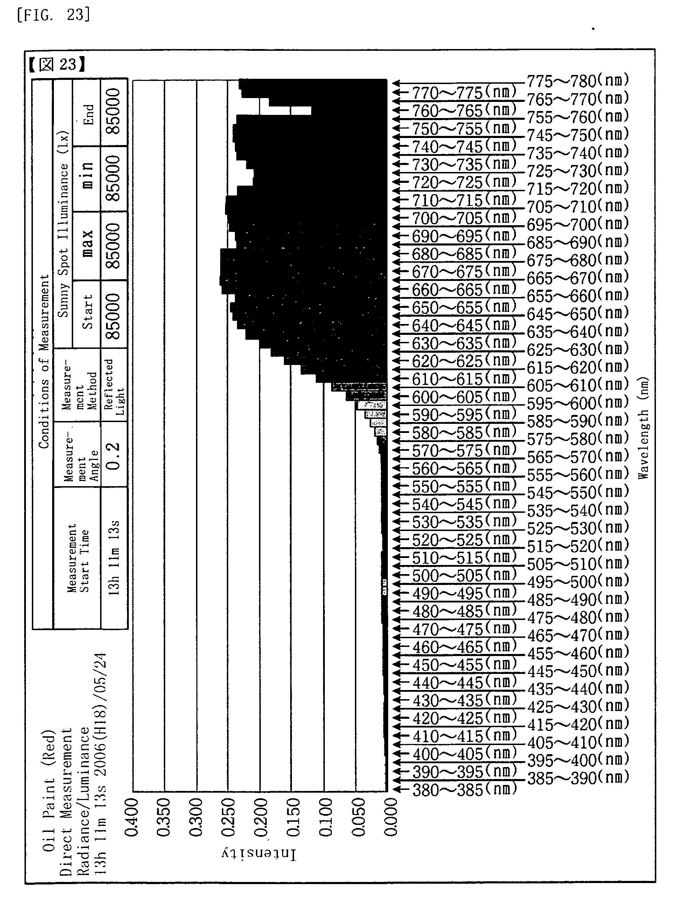

This is based on the fact that the reflective plate used in the test shown below is covered with a red water paint (see FIG. 20), and a paint applied inside the house in red is an oil point (see FIG. 23).

As can be seen from the respective figures, the water paint has a peak wavelength of 635 to 780 nm, and contains a large quantity of wavelength components of 605 to 635 nm.

The oil paint has a peak wavelength of 630 to 780 nm, and contains a large quantity of wavelength components of 605 to 630 nm.

That is, if the far-red light FR is set as a wavelength of 700 to 750 nm when the red light R is set to a wavelength of 615 to 680 nm, these wavelengths are irrelevant to the wavelength range used in the reflective plate, the net, or the artificial lighting. In connection with this, the setup wavelengths of R and FR are selected by the curves of the red light effect and the far-red light effect in the photomorphogenesis of FIG. 57.

That is, the respective peak wavelengths of the functions of the red light effect and the far-red light effect and the wavelength ranges of the strong function are set to the setup wavelengths of R and FR, and thus the wavelength used in the reflective plate, the net, or the artificial lighting is selected and set from the wavelength range having the functions of the red light effect and the far-red light effect of FIG. 57.

That is, the set wavelengths of R and FR are to set the respective peak wavelengths and the wavelength ranges having the strong function in order to adjust the lighting environment. For the wavelength of vinyl, a reflective plate, or a net, or the artificial lighting for producing the lighting environment, any wavelength may be used without being limited to the set wavelengths of R and FR as long as it falls within the range of the curve of the red light effect and the curve of the far-red light effect in FIG. 57, because the function is present.

A difference between the peak wavelength and wavelengths other than the peak wavelength is that the peak wavelength has the strongest function of achieving the purpose, and the functions of the other wavelengths become weak in proportion to a distance from the peak wavelength. That is, this means that the functions are weak but not absent. In other words, assuming that the purpose is achieved when the peak wavelength corresponds to brightness of 100 lux, it is impossible to achieve the purpose if the brightness is not created such that 200 lux, 300 lux, 500 lux, 1000 lux, and 5000 lux are in proportion to the distance from the peak wavelength. Consequently, this does not mean that the purpose cannot be achieved regardless of the increase in brightness.

As will be described below, the wavelength range of red coloring the vinyl, the reflective plate, or the net used in each test is not matched with the range of the setup wavelengths of R and FR.

As understood with reference to FIGS. 20 and 23, such a wavelength range of red is beyond the setup wavelength of R and the setup wavelength of FR, and any wavelength falls within the range of the curve of the red light effect and the curve of the far-red light effect in FIG. 57.

That is, the present invention involves tests in which the lighting environment is made using the function wavelengths, not the set wavelengths of R and FR.

In conclusion, designating specific wavelength ranges to B, R, and FR involves checking how the balances of the reaction under strong light B of the photomorphogenesis, the red light effect R of the photomorphogenesis, and the far-red light effect FR of the photomorphogenesis turn out, and comparing the checked balances with those of the bare field in order to check how the balances have changed. Hereinafter, the ratio of R/B and the ratio of R/FR are collectively referred to as "the ratio of light."

These ranges are different from the range of the peak wavelength of the photosynthesis, and the function wavelength ranges of the photomorphogenesis. By focusing on the balance of the light of this photomorphogenesis, it is possible to cultivate the plants without pesticide on the basis of the ratio of light. In this respect, the cultivation of vegetables in the viewpoint not according to the related art is made possible.

(Details of Ratio of Light)

The reasons and grounds for setting B, R and FR to 420 to 470 nm, 615 to 680 nm, and the 700 to 750 nm as the criteria of the ratio of light will be described later.

The strength of the function of the photomorphogenesis is changed depending on a state of the balance of the spectrum of the visible light ranging from 380 nm to 780 nm. The purpose of this is to evaluate such a change as the ratio of light.

As understood with reference to the action spectrum of the photoreaction of the plants of FIG. 57, the reaction under strong light of the photomorphogenesis includes a peak wavelength and a wavelength having a strong function in the blue wavelength range of 420 to 470 nm. Thus, the red light effect of the photomorphogenesis, and the peak wavelength and the wavelength having the strong function of two respective functions of the red wavelength portion of the reaction under strong light of the photomorphogenesis are included in the red wavelength range of 615 to 680 nm. Then, for the far-red light effect of the photomorphogenesis, the peak wavelength and the wavelength having the strong function are included in the far-red light wavelength range of 700 to 750 nm.

The reaction under strong light is associated with R and B, and thus is evaluated as the ratio of R/B.

Further, the red light effect and the far-red light effect are associated with R and FR, and thus are evaluated as the ratio of R/FR. Then, it is possible to understand a change in the spectrum balance of the visible light of the sunlight which ranges from 380 nm to 780 nm as a change in the function of the photomorphogenesis reaction.

This ratio of light is not limited to a cultivation method using sunlight for growth including a cultivation house or a sunlight combined plant factory in addition to open-air cultivation, and is used to distinguish the photomorphogenesis function of the spectrum of the sunlight.

In the present invention, B refers to a range of 420 to 470 nm as the wavelength range of the blue light, excluding the red light of the reaction under strong light of the photomorphogenesis.

In the present invention, as understood with reference to FIG. 57, R designates a range of 615 to 680 nm as the range of the peak wavelength of the red light effect of the photomorphogenesis.

Further, the ratio of light of the present invention is a method of distinguishing the sunlight spectrum, which is characterized by distinguishing the sunlight according to the ratio of light that does not individually treat the ratio of R/B and the ratio of R/FR, but has relation to both of the ratio of R/B and the ratio of R/FR.

Further, in the present invention, as a method of changing the ratio of light of the sun, i.e. the spectrum balance of the photomorphogenesis, there is a method of changing natural light of the sun while using the physical properties of light.

The physical properties of light to be used are **characterized in that** the ratio of R/B becomes great, and the ratio of R/FR becomes small by the reflection or transmission of light in the cases of passing light through gaps of a material, reflecting light on a material, transmitting light into a material, and striking light against a material.

That is, on the basis of the property that the light has attenuation depending on the wavelength when reflected or transmitted, plants are cultivated by transmitting and/or reflecting the sunlight using a light transmissive material and/or a reflective material.

However, if a material, for instance cellophane (trade name), having the physical property that the wavelength range of the blue light of the reaction under strong light of the photomorphogenesis is not transmitted, i.e. cut, is used as the light transmissive material, the whole light of the sun should be neither transmitted by the cellophane nor irradiated on the plants.

In this manner, no material that cuts, or hardly transmits, a specific wavelength can be used as the light transmissive material. In this case, any material that allows direct light of the sun to be irradiated on the plants, is outside of the limitations of the light transmissive material. In the present invention, since this criterion is the sunlight of the entire bare field, it is significant to which extent to change the spectrum of the sunlight compared to the bare field. Thus, the lighting environment, in which the greater the changed absolute value of the spectrum becomes, the greater a difference from the open-air cultivation as the bare field, i.e. the criterion, becomes, is produced.

As the lighting environment as a condition for the cultivation is changed in this way, the resistance to the pests or diseases becomes strong.

These become conspicuous as the ratio of R/B is greater than the bare field, i.e. the criterion, and as the ratio of R/FR becomes smaller. It is preferable to set a proper ratio of light to each plant.

In this manner, the method of transmitting and/or reflecting the sunlight to change the ratio of light does not require an electricity cost or installation cost, because it does not change the ratio of R/B and the ratio of R/FR using a light source such as an LED that emits a specific wavelength.

However, since the ratio of light approaches that of the bare field in proportion to the distance from the reflective plate, it is necessary to properly increase the reflective plate or the transmissive plate.

Further, as the reflective plate or the transmissive plate is increased, a problem in which the sunlight is screened and thus the illuminance is reduced occurs.

The plants have an intensity of light when an intrinsic photosynthetic rate is saturated (hereinafter simply referred to as "photosynthetic rate saturation light intensity"), i.e. a saturation point of light, for each species. As such, a decrease in yield or a change in taste caused by a decrease in illuminance must be prevented. It goes without saying that this problem becomes severe in the winter when there is low sunlight illuminance.

A method of solving this problem is to use the reflection and/or the transmission along with the irradiation of artificial lighting.

The artificial lighting to be used has a parabolic spectrum using a specific wavelength as a peak wavelength, as in an LED or an organic electroluminescence (EL), and thus a cold cathode light source (e.g. field emission lamp (FEL)), but it uses lighting having a plurality of peaks by combining them. A wavelength of light of the lighting is a wavelength included in the red light range of the photomorphogenesis, and a wavelength included in the far-red light range of the photomorphogenesis.

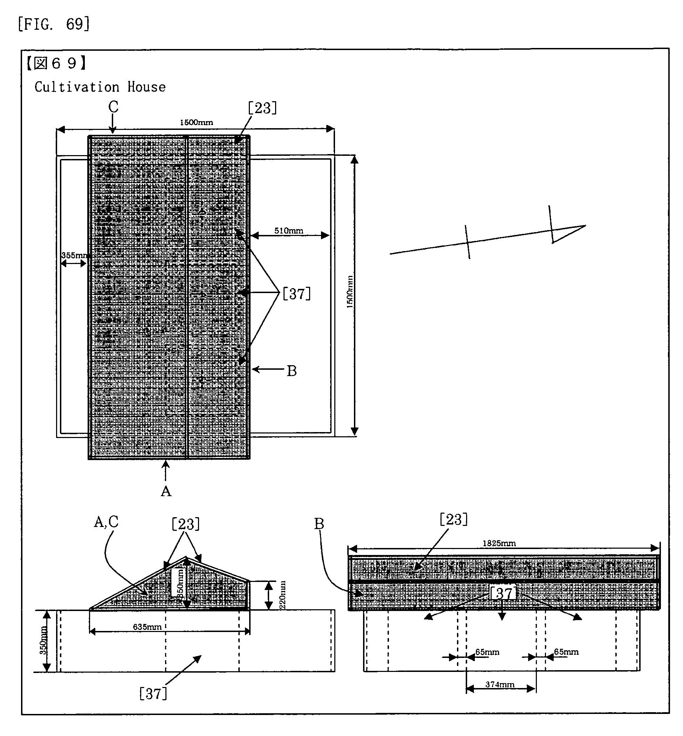

Further, the artificial lighting was designed as in FIG. 69, so as to prevent the direct light of the sun from being introduced. Nevertheless, insects were accompanied. In this regard, the cause thereof was specified based on the following Test 6 (Embodiment 5), and a combined use of the artificial lighting of white light was successful in preventing the pests.

(Description of Illuminance)

In the present invention, when the plants are cultivated in the lighting environment where the ratio of R/B is made greater than the bare field, and the ratio of R/FR is made smaller than the bare field, a problem in which the ratio of light approaches that of the bare field in proportion to a distance from a reflective plate occurs.
On the other hand, another problem in which the transmitted light undergoes an increase in the absolute value of variation of the ratio of light when the ratio of light of the bare field is used as a criterion by increasing a thickness of the light transmissive material and by enhancing the density of a color, but a decrease in the illuminance occurs.
The conditions under which this problem occurs will be described below.

(Relationship between Light Transmissive Material and Illuminance)

[Condition 1 for reducing illuminance: Material]

As the transmittance of a material becomes low, the illuminance when the light is transmitted becomes low. Due to this physical property of the light, the aforementioned problem occurs.
Further, since a material such as cellophane hardly transmits the light having a wavelength of 420 to 470 nm that is the wavelength of the blue light B, it is necessary to be careful according to a material.
When the plants are cultivated in this spectral light, they grow into deformed plants, because the photomorphogenesis is not performed normally.

[Condition 2 for reducing illuminance: Thickness of light transmissive material]

If materials are the same, for example, even in the case of colorless transparent light transmissive materials, the thick material does not transmit the light, and thus the illuminance is reduced.
Accordingly, the variation of the ratio of light is increased. However, a problem in which the reduction of the illuminance becomes great also occurs.

[Condition 3 for reducing illuminance: Density of color]

If the color is limited to its density, the illuminance of the entire visible light of the sun having a wavelength of 380 to 780 nm is reduced in proportion as even the color of a wavelength increases in its density.
However, in connection with a function of increasing the ratio of R/B, as the density of a color of the blue light range of the reaction under strong light of the photomorphogenesis increases, the ratio of R/B is difficult to increase. When the density exceeds a certain extent, the ratio of R/B is reduced.
Any factor of the material, the thickness, the color density of the light transmissive material can cause a problem with the reduction of the illuminance.

(Relationship between Reflective Plate and Illuminance)

Even when the variation of the ratio of light is attempted to be increased by appropriately increasing the reflective plate, a portion that becomes a shadow of the reflective plate blocks the sunlight, and thus the illuminance is reduced. When this problem with the reduction of the illuminance is not solved even by combination of reflection and transmission, this gives rise to a problem in which the reduction in yield or the degradation in taste is incurred because the plants have an intrinsic photosynthetic rate saturation light intensity for each species. This problem frequently occurs in the winter when the illuminance of sunlight is low.

(Description of Artificial Lighting)

The case described above may properly use the artificial lighting in combination with the reflection and transmission of the sunlight. This artificial lighting has a wavelength range that includes a peak wavelength in both the red light range of the photomorphogenesis and the far-red light range of the photomorphogenesis, and is **characterized in that** the spectral radiance of the red light is lower than the spectral radiance of the far-red light.

It does not matter whether other wavelengths are present or not. However, when this artificial lighting is irradiated, the artificial lighting should have a function of changing the ratio of R/B of the irradiated area to be greater than the bare field and simultaneously change the ratio of R/FR to be smaller than the bare field.

That is, this function becomes strong as the wavelengths other than the red light R and the far-red light FR are lessened. Particularly, the light of the blue light range of the reaction under strong light of the photomorphogenesis little none.

The artificial lighting may use a method of irradiating the light of the wavelength range of the red light of the photomorphogenesis and the different light of the wavelength range of the far-red light of the photomorphogenesis at the same time, mixing them in an irradiation space, and enveloping the plants with the mixed light.

(Additional Specific Cases of Invention)

Hereinafter, the present invention will be described in greater detail.

As described above, the ratio of light is important in the present invention. To calculate this ratio of light, it is necessary to measure the light.

For example, the light may be measured using a radiance meter. However, a measured value of the radiance meter under the sunlight is not reliable as a quantitative value, and thus should be treated as a qualitative value. The reason is given below.

1. The Earth undergoes fluctuation in the air due to water vapor or dust. For this reason, measured values within several minutes of a very clear day can be regarded as being very approximate to a quantitative value. However, when a time difference of several tens of minutes or more occurs even on a very clear day, the fluctuation of the air and an angle and inclination of the sun described in the following paragraph 2 are changed, and thus the measured values are the quantitative values. However, when the measured values are compared with individual measured values, they cannot be treated as the quantitative values.

A very clear day refers to, for example, a first day after a typhoon in the summer. The second day is clear to sunny.

The sunlight of the sunny or slightly cloudy weather continues to change. The sunlight is rapidly changed in proportion to an amount of clouds covered. With this change, the ratio of light is also changed. As such, even if it is asserted that the ratio of R/B is at least 0.210 greater than that of the bare field of any minute and hour of any year, month and date, the sunlight that is the same as the sunlight of the bare field is not reproduced indefinitely. This is proven by measured data as described below.

Here, to discuss an influence clouds have on the lighting environment of the sun, the clouds producing an influence on weather are generally classified into aerial cirrus, that leads to slightly cloudy weather, and the remaining clouds other than the cirrus. The remaining clouds include cumuli, which are lower stratum clouds, stratocumuli (floating clouds or fleecy clouds belonging to cumuli), and altocumuli such as cumulocirrus appearing in a middle stratum. In addition, there are altostrati that are rain-bearing clouds of a front. Cumuli are developed into cumulonimbi.

Either the cumuli or the stratocumuli lead to very clear weather if even faint clouds such as cirrus are not present between the clouds, or clear weather even if only faint clouds are present. In this case, although the clouds occupy, for instance, 60% of the whole sky, the remaining 40% is regarded as being clear. However, if the clouds gather together on the orbit of the sun, a clear time is shortened even if a proportion of the exemplified clouds amounts to 60%. In contrast, if the clouds do not stay on the orbit of the sun, the clear time is prolonged.

When the clouds cover the orbit of the sun, the sunlight gets dark below 40,000 to 50,000 lux with only faint clouds. In the case of the cumulus or the stratocumulus, the illuminance is reduced to 7,000 to 9,000 lux. However, if the clouds are removed from the orbit of the sun and thus even faint clouds such as cirrus are dissipated, there is a **characteristic in that** brightness corresponding to the clear weather is recovered. Next, as for the case of slightly cloudy weather (sunny weather in which faint clouds are less than 80%), if the faint clouds are less, the slightly cloudy weather has an amount of sunlight that is strong enough to form a clear shadow. However, as a proportion of the faint clouds approaches 80%, the slightly cloudy weather is lowered as in cloudy weather.

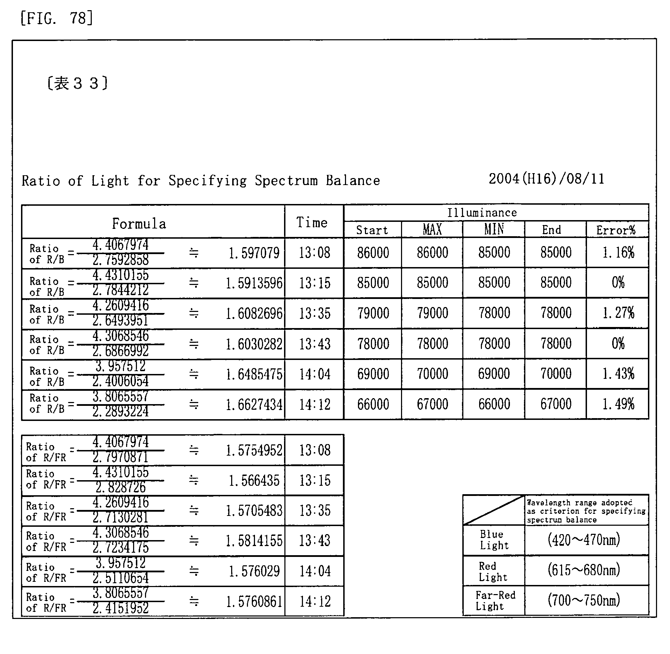

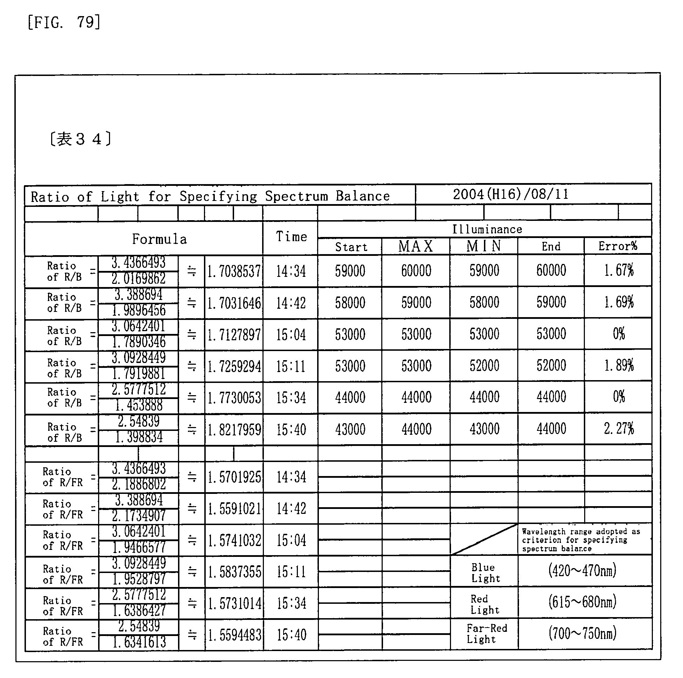

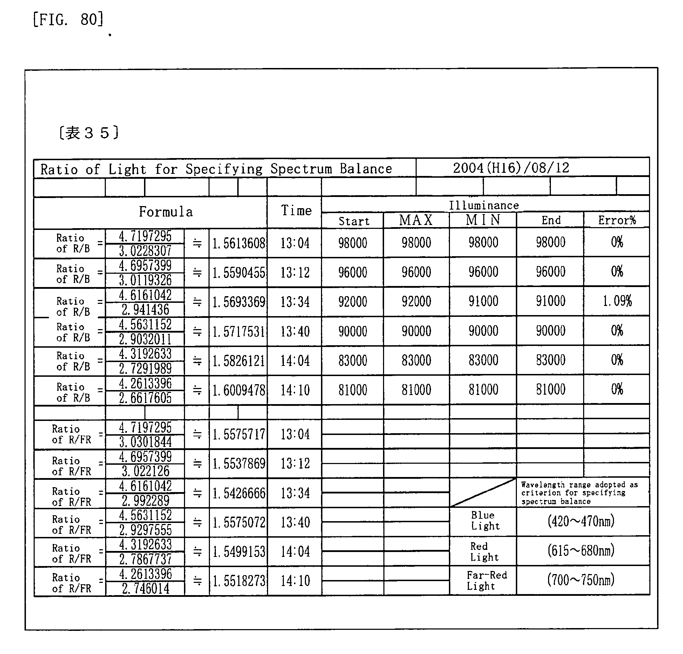

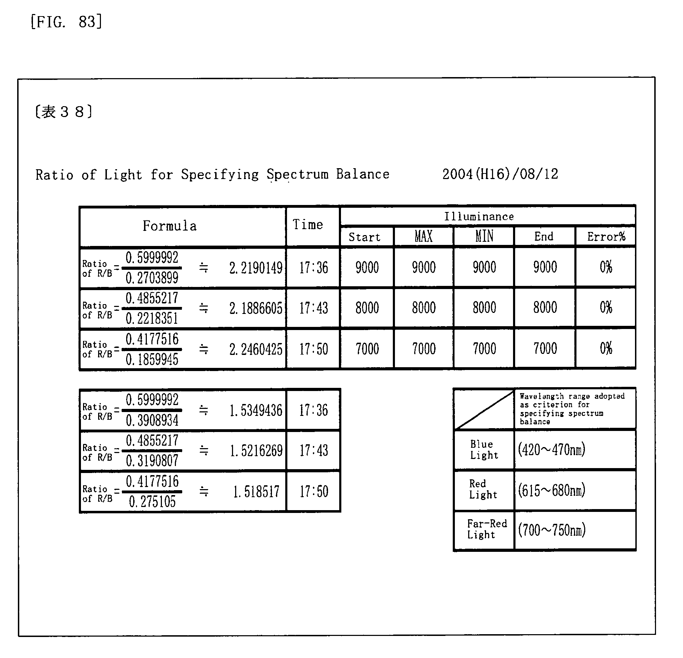

Next, to verify which influence the clouds have on the ratio of light, the ratio of light was calculated on August 11 and 12, 2004 (H16), and is shown in FIG. 78 (Table 33) to FIG. 79 (Table 34), and FIG. 80 (Table 35) to FIG. 83 (Table 38). In comparison with the illuminance of the same time on August 11 and 12, the illuminance of August 11 was found to be lower than that of August 12 by 10,000 and several thousands lux. This was reduced by 10% due to the faint clouds regardless of the same time, and furthermore both the 11-th day and the 12-th day were very clear.

The following are partially extracted from the Tables

- Comparison between illuminance at 13:08 on 8/11 and illuminance at 13:04 on 8/12

$$\{1-(85,500 \div 98,000)\} \times 100 \cong 11.2\%$$

- Comparison between illuminance at 13:35 on 8/11 and illuminance at 13:34 on 8/12

$$\{1-(78,500 \div 91,500)\} \times 100 \cong 14.2\%$$

- Comparison between illuminance at 14:04 on 8/11 and illuminance at 14:04 on 8/12

$$\{1-(69,500 \div 83,000)\} \times 100 \cong 16.3\%$$

- Comparison between illuminance at 15:04 on 8/11 and illuminance at 15:04 on 8/12

$$\{1-(53,000 \div 64,000)\} \times 100 \cong 17.2\%$$

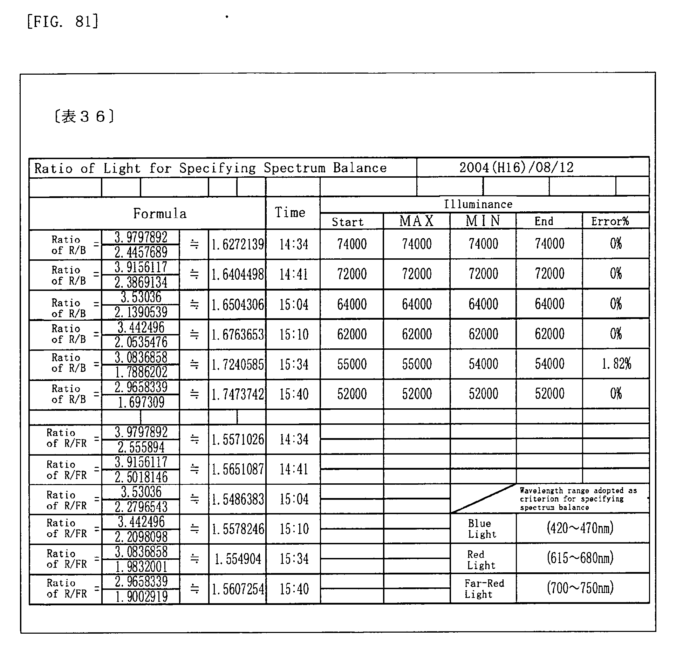

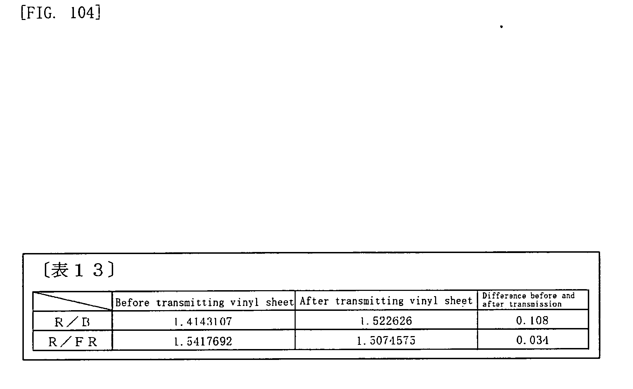

According to FIG. 78 (Table 33) and FIG. 79 (Table 34), and FIG. 80 (Table 35) to FIG. 83 (Table 38), it is found that the influence of the clouds on the ratio of light shows an increase in the ratio of R/B.
Since this causes the phenomenon in which a sunset glow looks red, that is, the sunlight in the evening obliquely passes through the earth's atmosphere, the sunlight collides with clouds or dust in the air in the evening more frequently than before and after noon, and thus a short-wavelength range is attenuated. However, the color of a long-wavelength range, i.e. the red color, is subjected to low attenuation when the sunlight collides with clouds or dust in the air, compared to the blue color whose wavelength is short, because the energy is also increased by a difference between the wavelength of the red color and the wavelength of the blue color.
For this reason, the sunset glow looks red. This is a generally known fact. When looking at FIG. 80 (Table 35) to FIG. 83 (Table 38) for the ratio of light on August 12, the ratio of R/B becomes great with the elapse of time from 13:04 to the evening or the sunset. That is, it is understood that the attenuation of B causes the sunset glow to be expressed in the ratio of light without change.
Next, the ratio of light on the 11th, which was darker than August 12 by 10,000 and several thousands lux at the same time is calculated, and then compared with that of the 12th. Thereby, it is proved how much the clouds influence the ratio of light.
In comparison of FIG. 78 (Table 33) to FIG. 79 (Table 34), FIG. 80 (Table 35), and FIG. 81 (Table 36), it is definitely shown that the clouds increase the ratio of R/B. Further, according to FIG. 78 (Table 33) to FIG. 79 (Table 34) and FIG. 80 (Table 35) to FIG. 83 (Table 38), it is shown that, with the elapse of time, the ratio of light is changed. This is data in the case of the very clear weather on which the influence of the clouds is smallest, and thus it is found that the ratio of light is still more drastically changed.
Thus, when several lighting environments are compared using this ratio of light, this may be a qualitative value, which becomes insignificant.
However, the value is calibrated as when obtaining FIG. 104 (Table 13) (which will be described below) of measured values of the ratios of light before and after the transmission of a vinyl sheet. Further, if a measurement time interval is short even in the case of the measured values before the calibration, the measurement time interval is 6 minutes in the case of FIG. 104 (Table 13) (which will be described below). However, in the case of this interval, when the measured values are compared with each other, it is interpreted that they may be treated as the quantitative values.
In this case, as described in the following paragraph 2 <Measurement of Luminance, Illuminance, and Ratio of Light>, strict maintenance should be performed so as to prevent the conditions of measurement from being changed whenever measured.
That is, when a positional relation between SR-2, the white plate, and the sun that is a light source is used, and when any type of reflective plate or transmissive plate is used for the relation, the measurement conditions must be restored to the completely same conditions. When they cannot be restored, an error is generated.

(Measurement of Luminance, Illuminance, and Ratio of Light)

2. A luminance refers to a brilliance of an object viewed in a certain direction.

Luminance of 1 candela per 1 $m^2$ is called "1 nit". The illuminance indicates how much light per unit area arrives, whereas the luminance indicates brightness in a certain direction as a result of the arrival of the light.

Since the illuminance is a unit set on the basis of the discernment of a human being and the luminance is a unit of energy of light, there is no proportional relation therebetween.

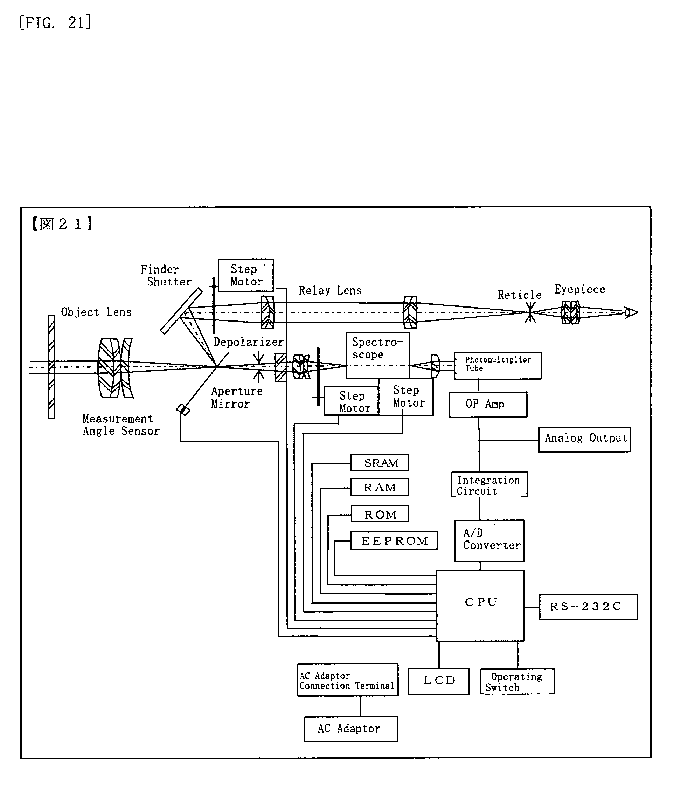

A structure of a radiance meter is shown in FIG. 21 as a block diagram.

This structure is adapted to introduce light through an optical lens, and calculate spectral radiance of the light in a spectroscope and a central processing unit (CPU) in a switching mode of 1 mm, 5 mm, and 10 mm that are arbitrary sampling intervals. When this is inquired from a manufacturer, it is found that a spectroradiometer indicates what is detected itself as spectral radiance.

Since the light is introduced through the optical lens, the light will be what is detected itself.

However, since the target is light, it is changed by a trivial matter.

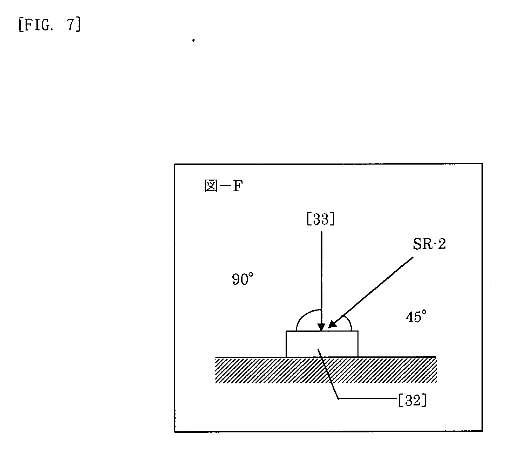

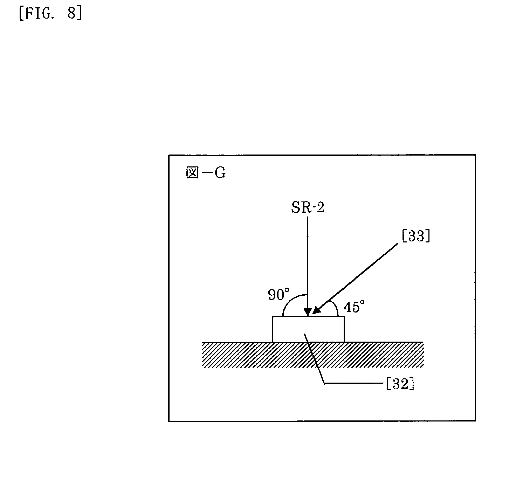

Accordingly, when the light is measured by the radiance meter, it is decided that the measurement conditions should not become the measurement conditions of FIG. 7 or 8.

A measurement method of FIG. 104 (which will be described below), in which the ratio of light before and after the light transmits a vinyl is measured, was carried out as shown in FIG. 7 (wherein details will be described below). The sequence is as follows.

<Sequence of measurement method of FIG. 104>

A mobile home, in which a vinyl was attached to a wooden box having a size of 2 m long x 2.5 m wide x 2 m high was prepared, and a photometer (SR-2) and a white plate were set as in FIG. 7.

However, a light source is not 90°, because the light source is the sun.

After they were set as in FIG. 7, they were kept so as not to be displaced until the whole measurement was terminated. The first measurement was made with the wooden box house covered completely with the SR-2 and the white plate set as in FIG. 7. The second measurement was made with the SR-2 and the white plate exposed outside the wooden box house by moving the wooden box house. In this state, after 3 minutes, the measurement was made.

The other measurements were made in the state set as in FIG. 8.

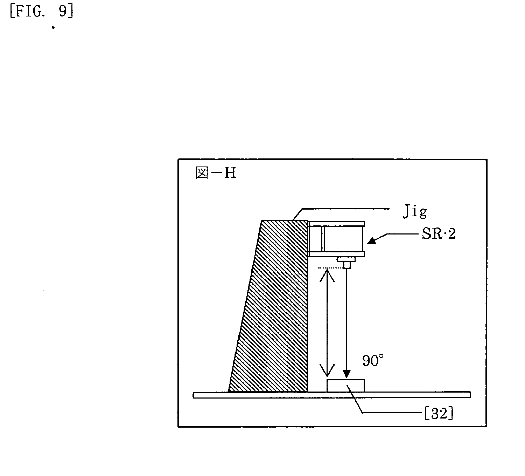

A measurement jig shown in FIG. 9 was prepared. The white plate and the SR-2 were adapted so as not to have a different positional relation whenever the measurement was made.

However, an angle of the sunlight with respect to the white plate is changed with the elapse of time.

Accordingly, since what is detected itself is indicated as the spectral radiance, it is impossible to deny a possibility of having different appearances when the inclination of the sun is great and small.

As understood with reference to the paragraph "(Measurement Time Difference)" below, as the measurement time of 6 minutes elapsed, the error was no more than 0.02%.

Taking into consideration that a measuring instrument has a measurement precision of the luminance within plus or minus 2.5%, the measured values for a short time before and after 6 minutes may be treated as quantitative values when compared with each other.

Thus, regarding to what extent the reliability is ensured when the error in the measurement time occurs to a certain extent, the following Preliminary Experiment 1 relevant to the error in the measurement time was conducted.

<Preliminary Experiment 1: Measurement experiment relevant to measurement time difference>

A. Assumptions: The following 1 to 3 are given as natural laws of physics that are already apparent.

1. The light is changed in spectrum balance by reflection or transmission.
2. As the reflection increases, or as the light transmissive material becomes thick, the variation of the spectrum balance becomes great.
3. In proportion to a change in the measurement conditions, the measurement precision becomes low.

B. Measurement conditions: The measurement is made according to the assumptions when the weather is surely selected from clear weather or very clear weather.

Thus, only two conditions of the inclination of the sun depending on the elapse of time and the difference of the measurement target are changed using the jig shown in FIG. 9, and the measurement conditions other than these two conditions are not changed.

C. Measurement target: The cultivation houses A to E below are adopted as measurement targets.

Among them, the red house refers to a typical weatherproof cultivation house, in which outsides of all members and pots in the cultivation house excluding a vinyl are painted in red with oil paint.

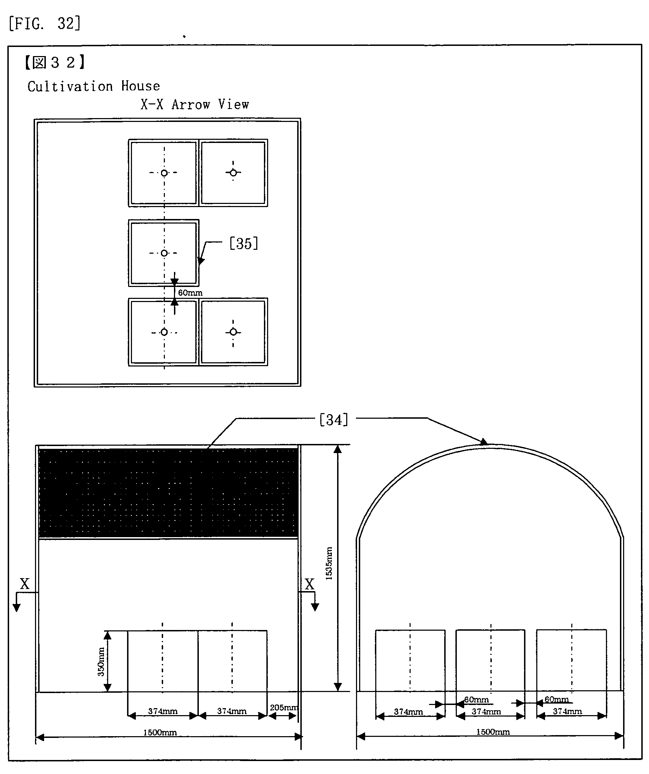

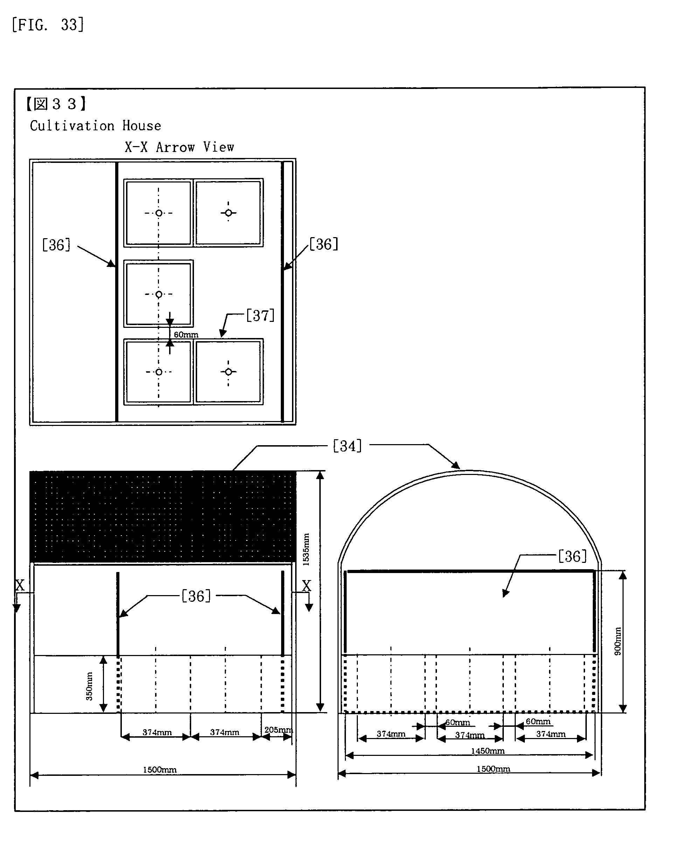

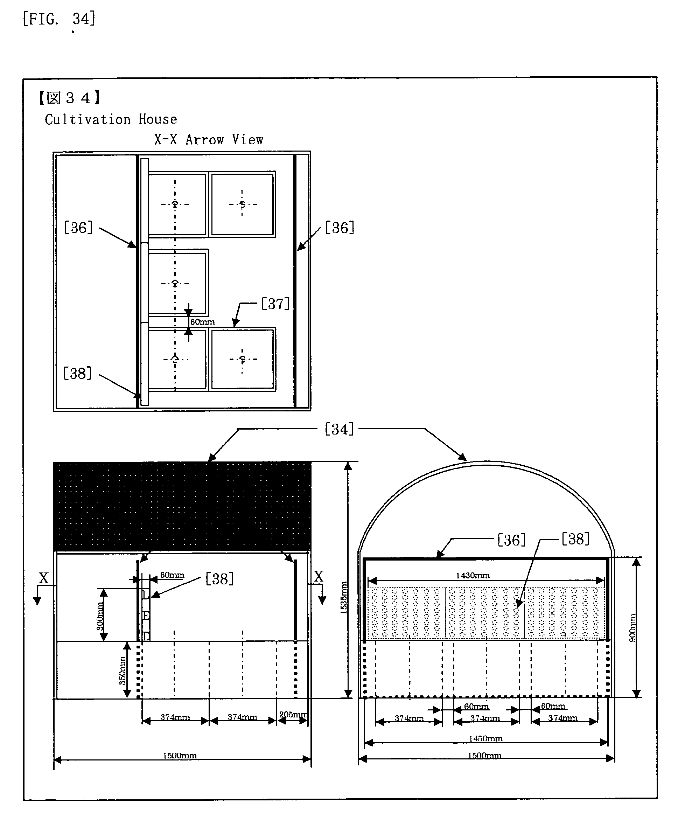

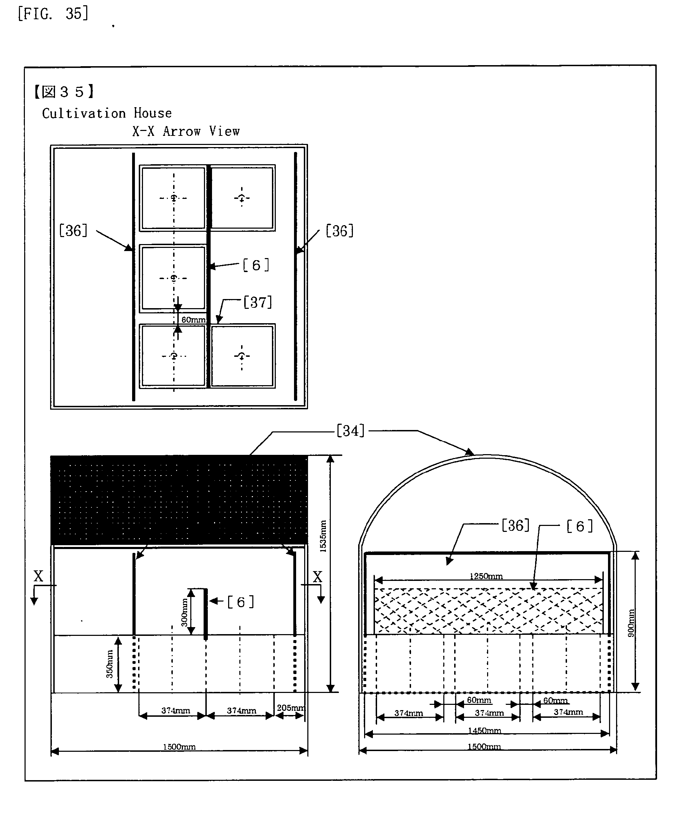

a. Cultivation house A: To install a typical weatherproof house so that a circumference thereof is surrounded with the red house (see FIG. 32).
b. Cultivation house B: To attach a red reflective plate to the red house (see FIG. 33).
c. Cultivation house C: To attach a red reflective plate and a blue LED to the red house (see FIG. 34).
d. Cultivation house D: To attach a red reflective plate and a blue net to the red house (see FIG. 35).
e. Cultivation house E: To install a typical weatherproof house on a place where it is far away from the red house (see FIG. 32).

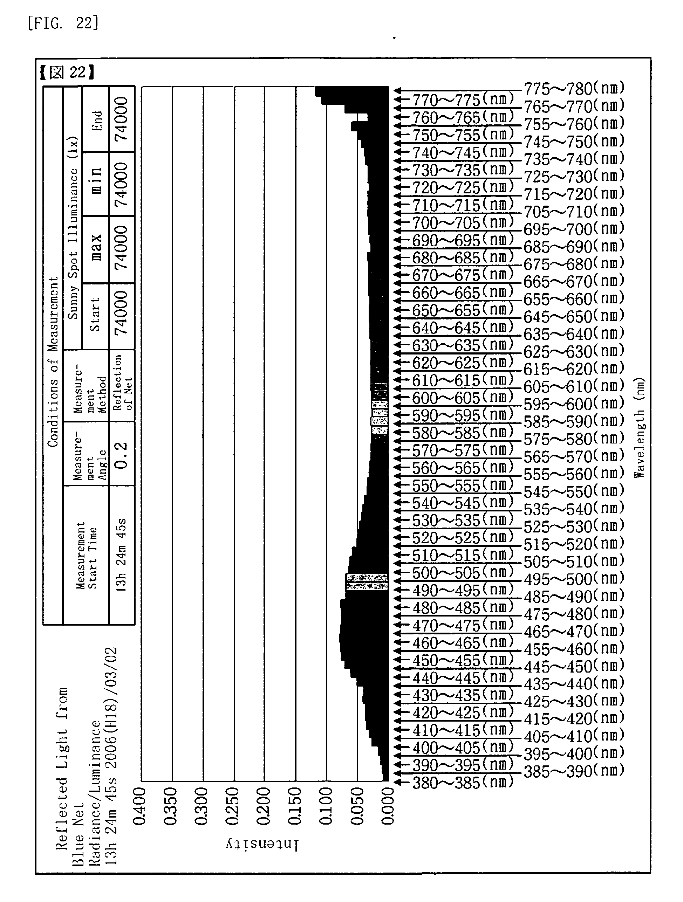

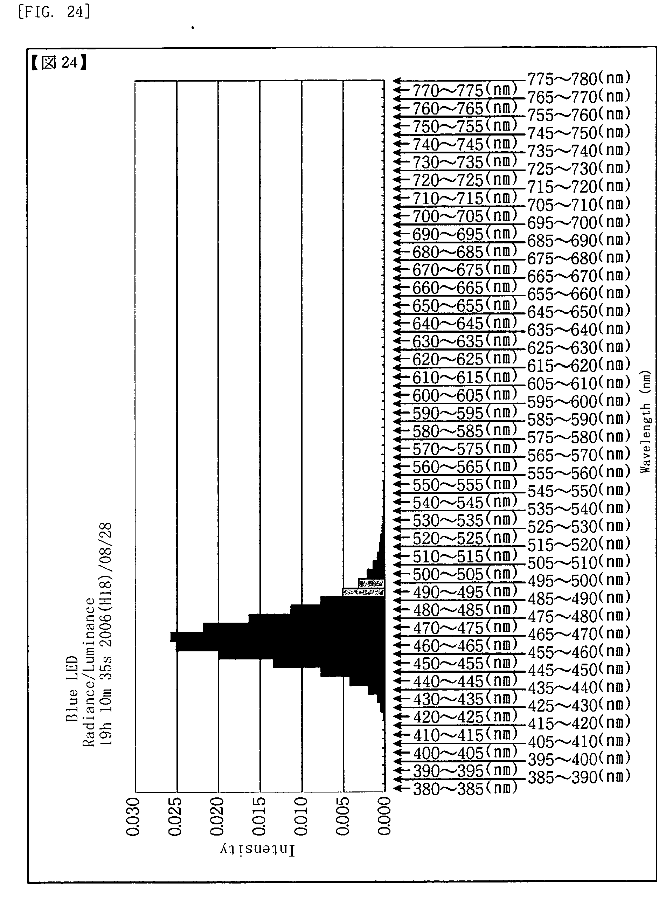

D. Spectrum of material used: The oil paint that is used for red painting, other than the vinyl, in the red house is composed of a spectrum of the color shown in FIG. 23, and the red reflective plates of the cultivation houses B to D are reflective plates that are painted with the water paint (red spray), and are each composed of a spectrum of the color shown in FIG. 20.
Thus, the blue LED of the cultivation house C is composed of a spectrum of the color shown in FIG. 24, and the blue net of the cultivation house D is composed of a spectrum of the color shown in FIG. 22.

E. When the measurement target is measured, a place where the jig of FIG. 9 is installed is an empty portion, at which the middle row and the second or right-hand column in three rows and two columns intersect each other in FIG. 32, 33, 34 or 35 and which is surrounded with pots installed in an angled C shape, and has the same height as a surface of each pot, whose height is 350 mm from the floor.

F. Measurement date is September 19, 2006 (H18) for the cultivation houses A to D, and August 24, 2006 (H18) for the cultivation house E.

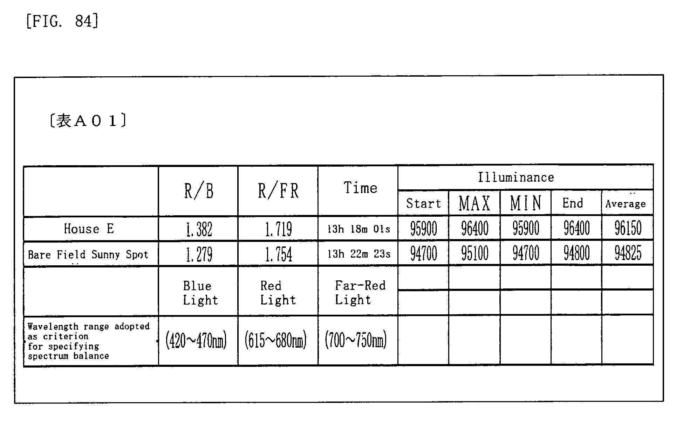

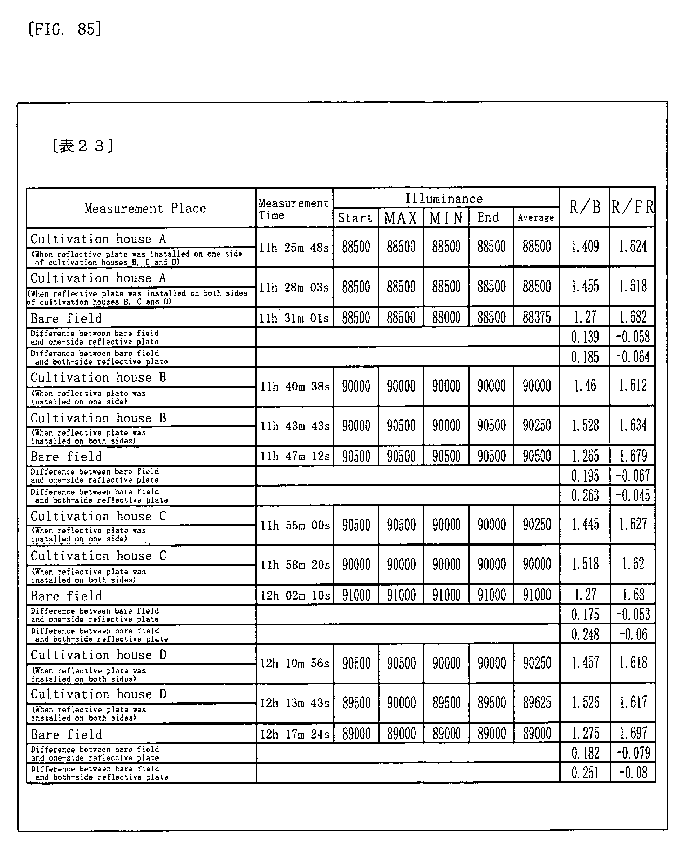

G. Measured results are shown in FIG. 85 and FIG. 84.

(Discussion: Quantitative and qualitative understanding)

According to a list of measured values when the houses A to D were measured on September 19 (Tuesday), 2006 (H18), because the number of reflective plates is two, it does not follow that the ratio of light doubles. As for the ratio of R/FR of the house B, one reflective plate has a greater variation than two reflective plates.
As such, whether there is one reflective plate or two reflective plates, the respective variations are various.
Since what is detected itself is indicated when detected in a certain direction, it is easily supposed that a detected direction of light is changed trivially such as by an installation method or an angle when the reflective plate is raised or lowered.
In this way, the quantitative understanding may be in issue.

However, the variation in the ratio of light in the houses A to D shows a tendency of the ratio of R/B to become greater than that of the bare field and the ratio of R/FR to become less than that of the bare field.
Thus, the variation in the ratio of light becomes greater on the side of the two reflective plates than on the side of the single reflective plate as a whole.
Since these are consistent with the natural laws of physics, they cannot be used quantitatively, but they can be used if a difference in the tendency is understood to a certain extent by qualitative comparison.
The following three conditions are given as conditions required when use is made as qualitative data in this way.

<Conditions required when use is made as qualitative data for comparison between data>

1. When measured, weather is essentially clear or very clear.
2. The jig as shown in FIG. 9 is used.
3. When a measurement error occurs, a measurement time difference within which the error is acceptable ranges from about 0.5 hours to about 1.5 hours.

That is, without the comparison between data, the ratio of R/B and the ratio of R/FR, both of which are measured under the conditions above, are quantitative values.
Thus, as described below, since the measurement time of the measuring instrument is about 35 seconds, if the measurement is made within 7 minutes and 45 seconds, the measured values measured within 7 minutes and 45 seconds are compared with each other as quantitative values. The measurement error was 0.02%.
However, during measurement, the measuring instrument requires a condition that the measuring instrument undergoes no micromotion. However, taking into consideration that the measurement precision of the measuring instrument is within plus or minus 2.5%, the error of 0.02% is very high precision.
Accordingly, if the measured values are measured within 7 minutes and 45 seconds, they can be sufficiently used as the quantitative values. That is, the measured values are not limited to 0.319 that is a difference between the ratio of R/B and that of a bare field measured under this condition on March 10 and 0.319 that is a difference between the ratio of R/B and that of a bare field measured under this condition on August 10, and can be compared as data approximate to the quantitative values.

Particularly, since the variation measured in the cultivation houses C and D using the blue LED or the blue net is less than that of the cultivation house B using neither the LED nor the blue net, the ratio of R/B in which a difference in magnitude of wavelength energy is great is evident in the qualitative tendency, unlike the ratio of R/FR in which the difference in magnitude of wavelength energy is small.

The reason for showing that these are valid is based on the fact that the measured value is small, because the denominator of R/B in the cultivation houses C and D having light of the artificial lighting of the blue light B or the blue net is greater than in the cultivation house B having neither the light of the lighting nor the reflected light.

Further, the aforementioned reason is based on the fact that the measured value is great, because the variation in the typical cultivation house A is greater than in the cultivation house E, and the numerator of R/B in the cultivation house A whose circumference is surrounded with the red house and the reflective plate is greater than in the cultivation house E whose circumference is not surrounded with the red house and the reflective plate.

Further, the aforementioned reason is based on the fact that the variation in the cultivation house A is greater than in the cultivation houses B, C and D.

That is, in the aforementioned measurement, the magnitudes of the variations of the respective cultivation houses are compared.

The magnitudes of the variations are enumerated in that order.

First, the cultivation house B using neither the blue net nor the blue LED has the greatest variation.

Next are the cultivation houses C and D using the blue member.

Further, next is the typical cultivation house A surrounded by the red house, and thus the typical cultivation house E spaced distant from the red color has the minimum variation.

This may be regarded as the measured results that are consistent with the natural laws of physics. In this way, the foregoing are considered to be sufficiently reliable as the qualitative data of the extent for understanding the tendency

A relationship between the illuminance and the time in the bare field when the weather is clear or very clear on January, March, May, June, August, October, and November was actually measured to provide data. Since there is no data for the month to which the winter solstice having the shortest sunshine duration throughout the year belongs, the data for November is used as a criterion.

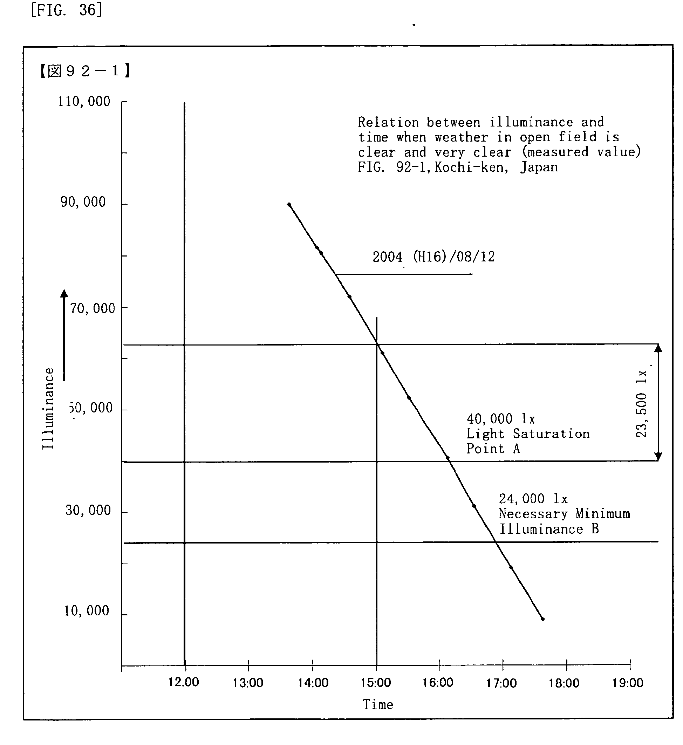

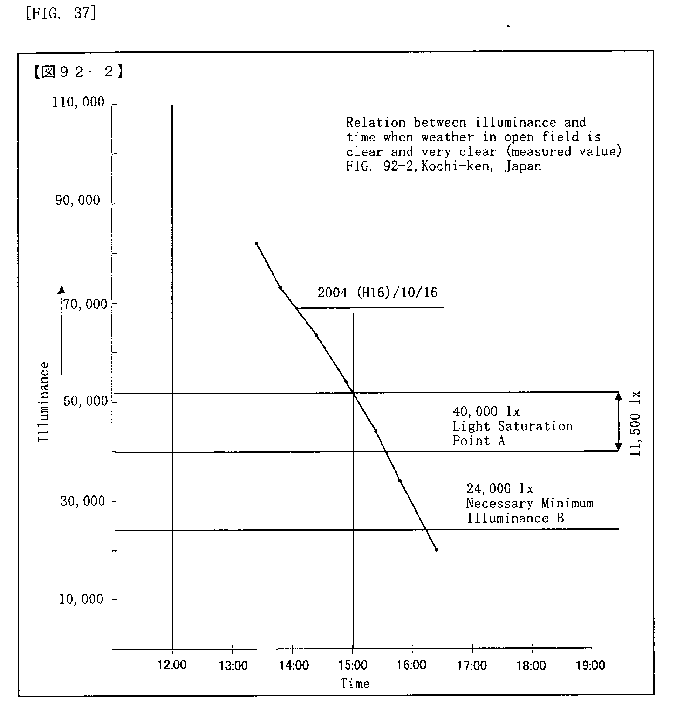

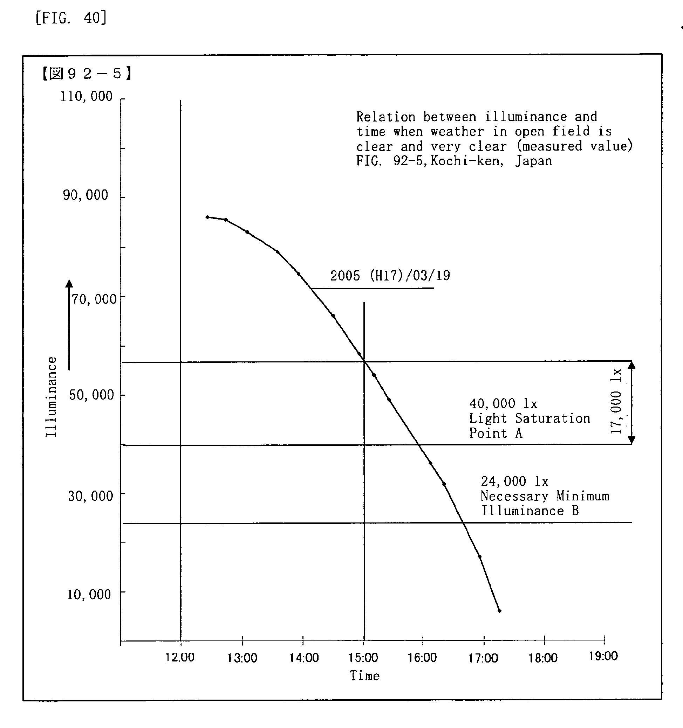

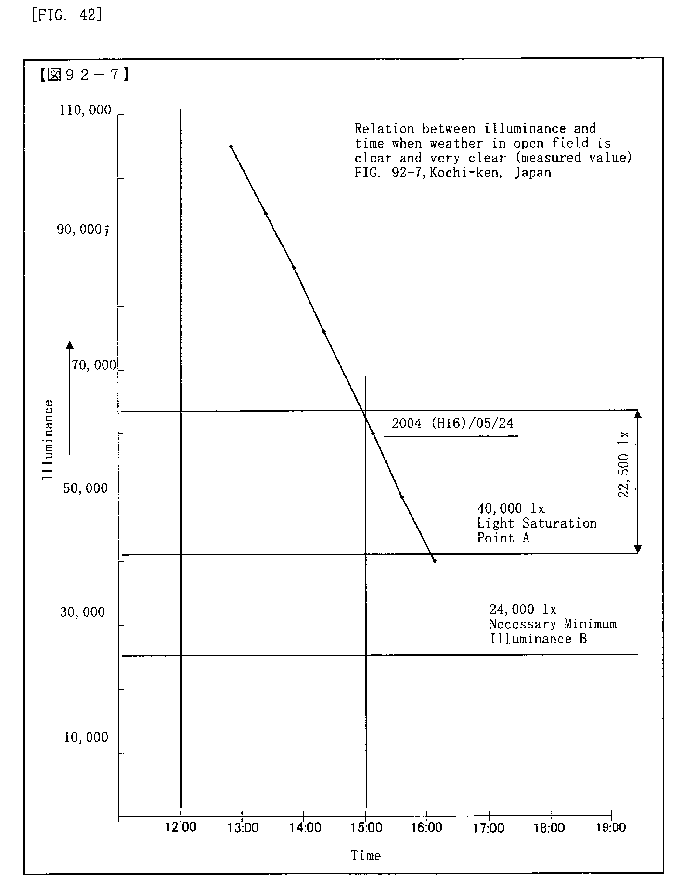

Graphs as in FIGS. 36 to 42 can be established using an illuminometer on a very clear or clear day before and after the winter solstice of December.

(Description of Photosynthetic Rate Saturation and Intensity of Light)

Next, a photosynthetic rate saturation light intensity of agricultural crops to be cultivated is investigated.

This photosynthetic rate saturation light intensity refers to an intensity of light at which a photosynthetic rate becomes maximum, or an intensity of light of the light saturation point.

Hereinafter, the photosynthetic rate saturation light intensity is simply referred to as a "light saturation point (A)."

The data of FIGS. 36 to 42 was recorded with a light saturation point (A) and a necessary minimum illuminance (B) taking eggplants as agricultural crops for cultivation by way of example.

The sun of the winter solstice was darkest. The eggplants can be cultivated in a vinyl house in the darkness of the winter solstice in Kochi prefecture, Japan. Thus, the transmission or the reflection can be used in Kochi prefecture until the ratio of light is changed to reach the darkness of the winter solstice on months other than the winter solstice. Since other prefectures in Japan or other countries are different in latitude and longitude, daily brightness is different.

Accordingly, it is essential to acquire data that is measured once or more each month from January to December in FIGS. 36 to 42. Particularly, the data of the winter solstice is important, and thus needs to be measured above all.

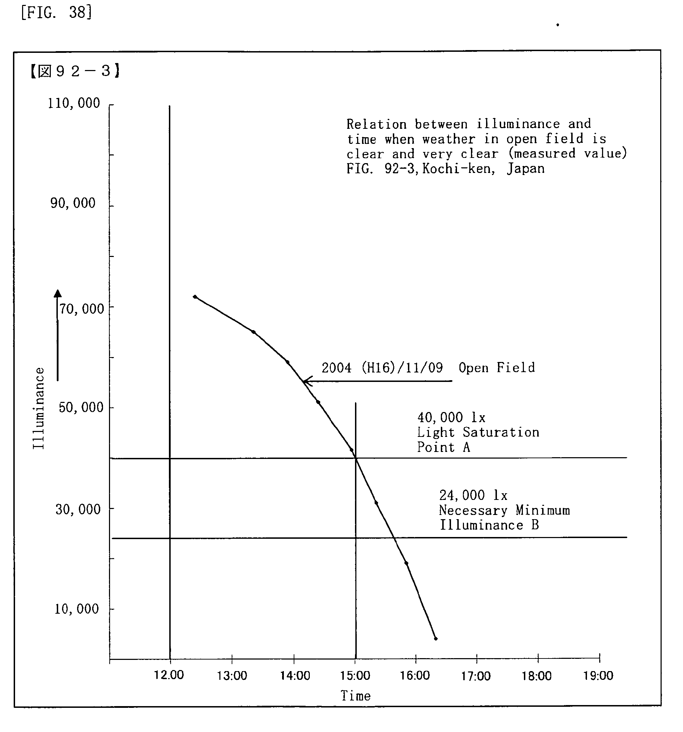

For example, if the data on November 9, FIG. 38, is adopted as the data of the winter solstice that is darkest throughout the year, the illuminance reaches the light saturation point at 3:00 PM in FIG. 38 in the case of Kochi prefecture (hereinafter, the data of FIG. 38 will be described as that of the winter solstice or before and after the winter solstice in Kochi prefecture, Japan).

That is, if the light saturation point is kept to 3:00 PM of the day, the data is good. In countries or districts where the illuminance above the light saturation point is not obtained by about 3:00 PM of the winter solstice, an adverse effect is exerted on a yield. In this case, it is checked in which month the light saturation point is obtained by about 3:00 PM, and that month is used as a reference month.

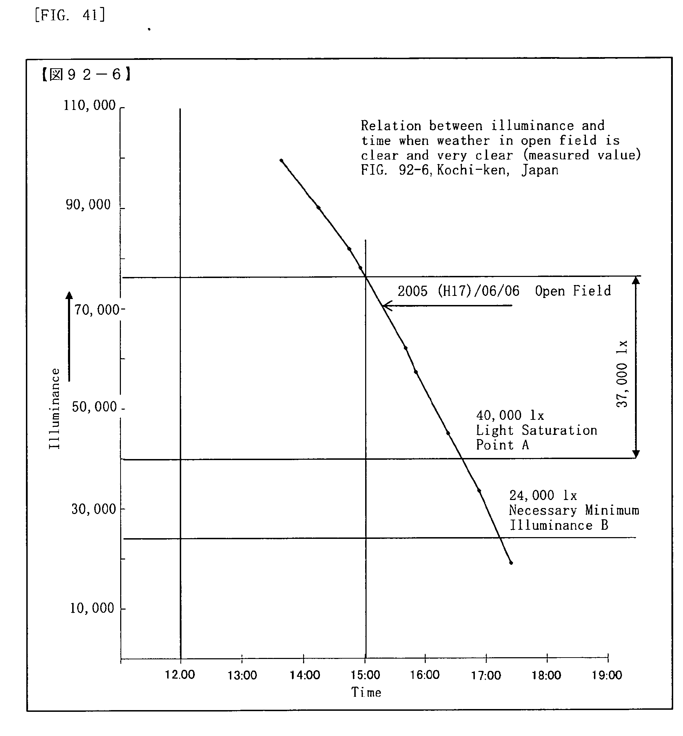

Accordingly, in the case of the data of FIG. 41 in the vicinity of the summer solstice that is brightest throughout the year, since the illuminance at 3:00 PM is 80,000 lux or less, it may be dark by about 40,000 lux or less.

Thus, a method of changing the ratio of light by transmitting a vinyl sheet may be employed.

Although the transmission functions to change the ratio of light more than the reflection, it has a disadvantage in reducing the sunlight illuminance more than the reflection.

Accordingly, before and after the summer solstice when the sunlight is very bright in this way, a method of transmitting a light transmissive material which has a strong function of changing the ratio of light may be employed.

Here, it should be noted that the light transmissive material, which is capable of completely cutting off the blue (B) during transmission like cellophane or making transmission very difficult, is strictly prohibited in use.

Before and after the winter solstice, it is effective not only to apply a red color to structures other than the vinyl of the house color, but also to use the reflective plate to an essential extent, or use a net, such as a bird-proof net having a large mesh, colored in red.

Furthermore, like the cultivation house A of Preliminary Experiment 1, it is effective to surround the surroundings of the house with a building colored in red. Hereinafter, this is referred to as a basic installation.

However, when the variation of the ratio of light is insufficient, with regard to the mixed light in which the light of the wavelength range of the red light effect of the photomorphogenesis and the light of the wavelength range of the far-red light effect of the photomorphogenesis are mixed, the artificial lighting for the mixed light in which the light of the wavelength range of the red light effect of the photomorphogenesis has lower spectral radiance than the light of the wavelength range of the far-red light effect of the photomorphogenesis may be applied (Hereinafter, this is referred to as artificial lighting of R and FR.).

(Ratio of Light Based on Each Kind of Crop)

(Ratio of Light of Fruit Vegetables)

The variation of the ratio of light at which the pesticide-free cultivation becomes possible is different depending on an agricultural crop.

In the case of eggplants, cucumbers, and tomatoes, if as in a qualitative value according to Experiment 1 (Embodiment 1) and Experiment 4 (Embodiment 3) as described below, the ratio of R/B is at least 0.319 more than that of the bare field, and the ratio of R/FR is at least 0.098 less than that of the bare field (hereafter, the ratio of R/B and the ratio of R/FR are referred to as a ratio of light of eggplants), it is found that the pesticide-free cultivation is possible.

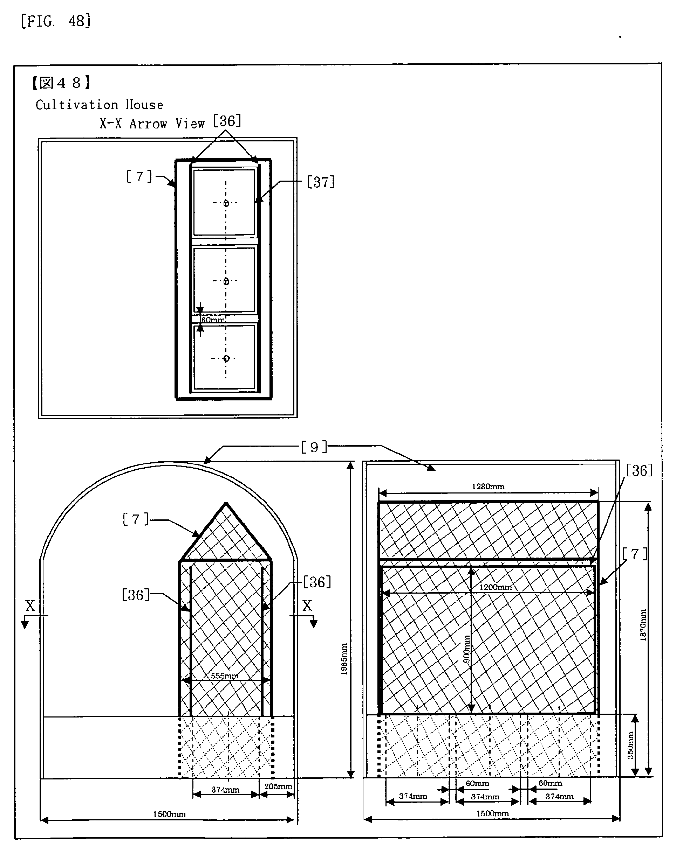

This is the ratio of light when the red net and the red reflective plate are installed in the vinyl house (see FIG. 48).

(Ratio of Light of Leaf Vegetables)

In a separate preliminary experiment, which is not mentioned herein, it was identified that, in the house G in which napa cabbage or cabbage were cultivated without pesticides in Experiment 6 (Embodiment 5) described below, the ratio of R/B was at least 0.367 more than that of the bare field, and the ratio of R/FR was at least 0.149 less than that of the bare field.

Hereinafter, this is referred to as the ratio of light of the house G.

According to Experiment 1 (Embodiment 1), Experiment 4 (Embodiment 3), Experiment 5 (Embodiment 4), Experiment 7 (Embodiment 6), and Experiment 8 (Embodiment 7) which will be described below, if a difference from that of the bare field is more than the ratio of light of the eggplants, it is found that all of the eggplants, cucumbers, and tomatoes can be cultivated without pesticides.

<Pesticide-Free Cultivation Method of Eggplants>

Hereinafter, a method of cultivating eggplants without pesticides in Kochi, Japan will be described.

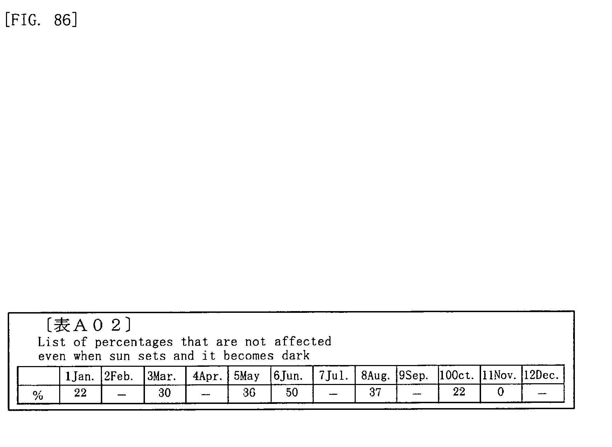

Percentages that are not affected even when sunlight becomes dark are calculated and filled into a list based on FIGS. 36 to 42. This list is shown in FIG. 86.

Due to a difference depending on a country or a district, FIG. 86 and the monthly graph as in FIGS. 36 to 42 are essentially drawn.

First, as a sunlight transmittance measuring step, things used in the basic installation are prepared to the utmost. In this state, a decreasing rate of the illuminance of sunlight and a ratio of light are measured (hereinafter referred to as an "illuminance decreasing rate of the basic installation").

Next, among fruit vegetables to be cultivated, in this case, the light saturation point of eggplants is recorded, and thus the monthly graph as in FIGS. 36 to 42 is made out.

(Relationship between Variation of Ratio of Light and Illuminance).

Next, as a step of intersecting time, a time when a line of the measured values in FIG. 38 for a clear or very clear day intersects with that of the light saturation point is specified. It is found that that time is about 3:00 PM.

If the illuminance equal to or more than the light saturation point is obtained by about 3:00 PM, there is no problem. If not, it is checked in which month the light saturation point is obtained by about 3:00 PM, and that month is used as a reference month. In this case, the reason for adopting 3:00 PM as a criterion is based on the fact that, when the illuminance of a bare field when the weather of the winter solstice or before and after the winter solstice is clear or very clear in Kochi, Japan is 40,000 lux at 3:00 PM (see FIG. 38, since this is not the data of the winter solstice, the cultivation is possible even when it is actually slightly darker than this state), the eggplants can be cultivated in a vinyl house.

Next, as a cultivation step based on a change in the ratio of light, fruit vegetables are cultivated without pesticides by changing the ratio of light. In this case, when the measured value of the illuminance at about 3:00 PM in each month is greater than the light saturation point, a difference between the measured illuminance and the illuminance of the light saturation point refers to illuminance that is not affected even when the sunlight is reflected or transmitted to become dark to change the ratio of light.

When the fruit vegetables are cultivated without pesticides by changing the ratio of light, since the light saturation point is high, unlike that of the leaf vegetables, cultivability of the fruit vegetables by changing the ratio of light by reflection and transmission is practical for only half a year, and the artificial lighting of R and FR is required for the remaining half. That is, the ratio-of-light change cultivation step may be divided into a period of reflection and transmission means of the sunlight and a period of an artificial lighting combination means that combines the artificial lighting with the reflection and transmission of the sunlight.

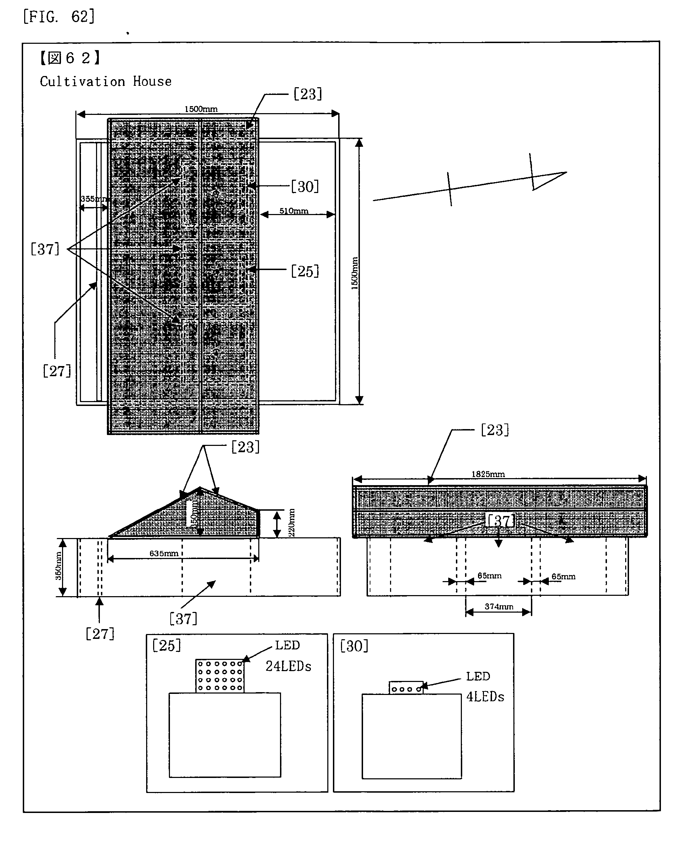

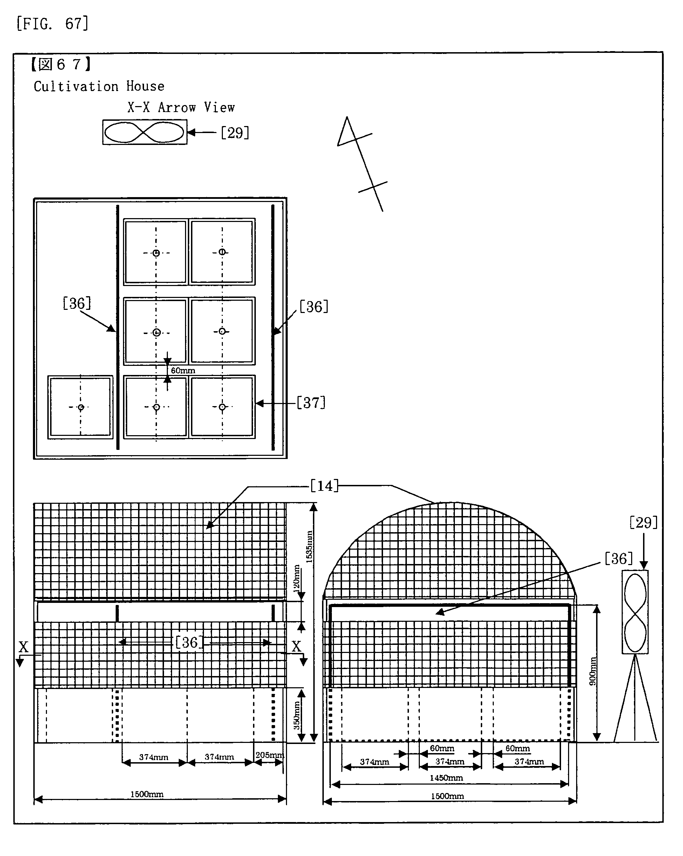

In the following embodiment, a cultivation house 4 (see FIG. 48) of Cultivation Experiment 4 (Embodiment 3) in which cucumbers are cultivated without pesticides, a cultivation house G-B (house in which LEDs of FIG. 62 are removed, and fluorescent lamps of white light (manufacturer: Hitachi. Ltd, Model: linear tube 10 W) are installed to be irradiated from the outside of the house) of Cultivation Experiment(6) (Embodiment 5) in which vegetables vulnerable to pests are cultivated without pesticides, and a cultivation house B (see FIG. 67) of Cultivation Experiment 6 (Embodiment 5) in which typical vegetables are cultivated without pesticides may be illustrated.

In the cultivation of crops in the crop cultivation house of the aforementioned embodiment, the crops could be cultivated without pesticides.

Accordingly, a method of actually building these cultivation houses, and building a cultivation house approximating the ratio of light of the corresponding cultivation house is basically provided (which will be described below).

On the other hand, there is a percentage from which the illuminance should not be lowered.

The case of the eggplants corresponds to FIG. 86, and the percentage is changed each month. With regard to a boundary between the period of reflection and transmission means and the period of an artificial lighting combination means, two methods given below are taken into consideration, because the ratio of light is qualitative.

<Specific Method of Artificial Lighting Combination Means>

The artificial lighting combination means to which the artificial lighting of the red light R and the far-red light FR are applied includes two methods below.

First, the first method will be described.

The lighting environment of the cultivation house is set to the ratio of light of the eggplants in the period of reflection and transmission means (the setting method will be described below), and the illuminance is arbitrarily measured at about 3:00 PM when the weather is clear, very clear, or sunny each month during cultivation.

When the illuminance is insufficient, the shortage of the illuminance is relieved by removing the installation for reflection or transmission, or replacing with a separate installation for reflection or transmission.

Thereby, the shortage of the illuminance is relieved. However, since the variation of the ratio of light is reduced, it is necessary to apply the artificial lighting of R and FR. This work is repeated monthly in a similar way.

Furthermore, for a particular installation, the ratio of light becomes a proper value when the brightness of the artificial lighting of R and FR reach a certain number of lux. Thus, there is a need to measure and set this beforehand.

Next, the second method will be described.

The aforementioned work can improve efficiency and prevent working errors depending on simplicity.

Thus, the second method described below is simpler.

A relationship between the decrease in illuminance and the change in the ratio of light, both of which are caused by reflection or transmission, is that although the ratio of light is changed by the reflection or the transmission, it still gets dark. That is, as the reflection becomes much, and as the light transmissive material becomes thick, the ratio of light is changed, and the brightness is gradually reduced. In the description below, it is proved that the transmittance and the ratio of light are in an inversely proportional relation.

Although the transmittance and the ratio of light are in an inversely proportional relation, when the conditions are inconsistent, a rate of the inverse proportion is inconsistent.

In Preliminary Experiment 2 described below, it is proved that the inversely proportional ratio is also changed when the color of the reflective plate is changed, and that the inversely proportional rate is also changed by a distance from the reflective plate or dimensions, a shape, etc. of the reflective plate. This is similarly applied to the light transmissive material. Even when a combination of the reflective plate, the net, and the light transmissive material is changed, the inversely proportional ratio is changed.

(Description of Conditions for Changing Ratio of Light)

A variety of conditions for changing the ratio of light are exemplified below.

[Method of Adjusting Spectrum of Light]

The ratio of light is changed by reflecting or transmitting the sunlight. As a method of adjusting a spectrum of light, several methods are given below for reference in addition to the basic installation.
Among these methods, the preferable adjusting method is based on means for changing the ratio of the red light R/the blue light B so as to become greater than that of the bare field, and changing the ratio of the red light R/the far-red light FR so as to become less than that of the bare field using the reflective material and/or the light transmissive material rather than the artificial lighting.

(Method of Transmitting Multi-Ply Vinyl)

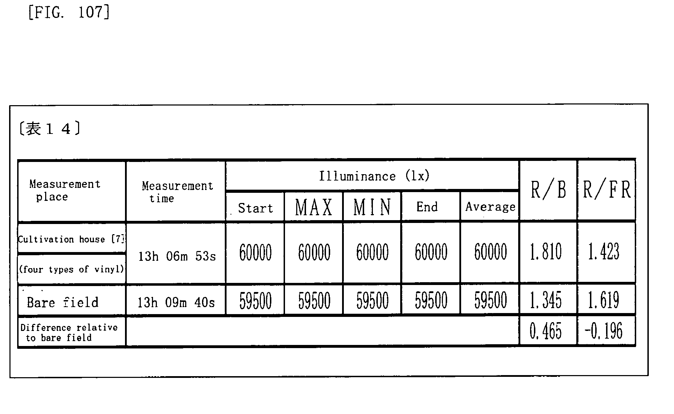

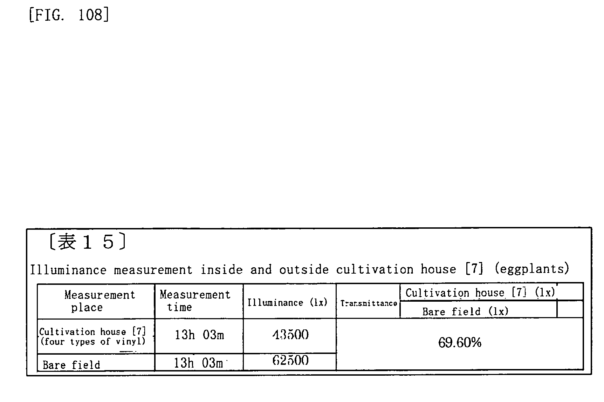

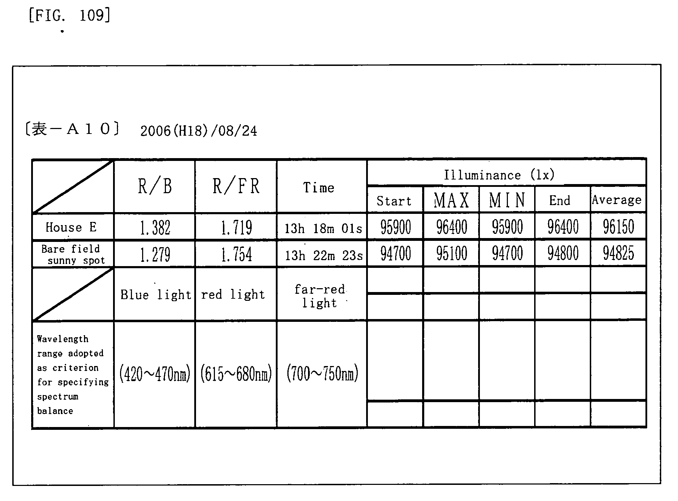

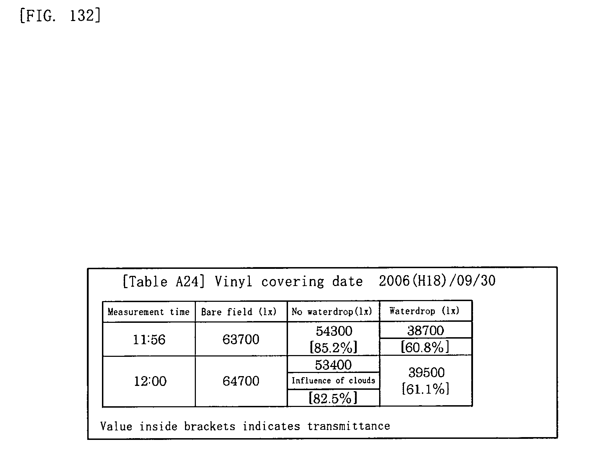

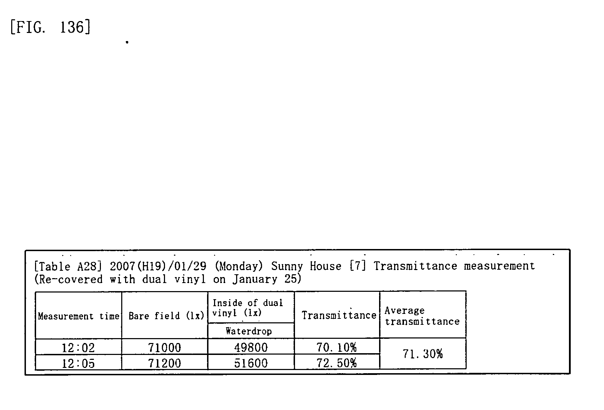

In the case of a new single-ply vinyl, the ratio of R/B is 0.103 greater than that of the bare field. The ratio of R/B was measured on August 24, 2006 (H18), for which refer to FIG. 109.
Accordingly, when the vinyl is replaced with a triple-ply vinyl, it is predicted that the ratio of R/B is more than about 0.309. In FIGS. 132 to 136, the vinyl is superposed in two layers. In FIG. 108, the vinyl is superposed in four layers. Although it is not clear whether water droplets are present, the double-ply vinyl to which the water droplets are attached has a transmittance of 60.8% to 80.7%, whereas the double-ply vinyl to which no water droplets are attached has a transmittance of 85.2% to 94.9%. The quadruple-ply vinyl of FIG. 108 has a transmittance of 69.6%. In this case, the ratio of light with reference to FIG. 107 is set so that the ratio of R/B is 0.465 greater than that of the bare field.

(Method of Attaching Red Net and Red Reflective Plate in Vinyl House)

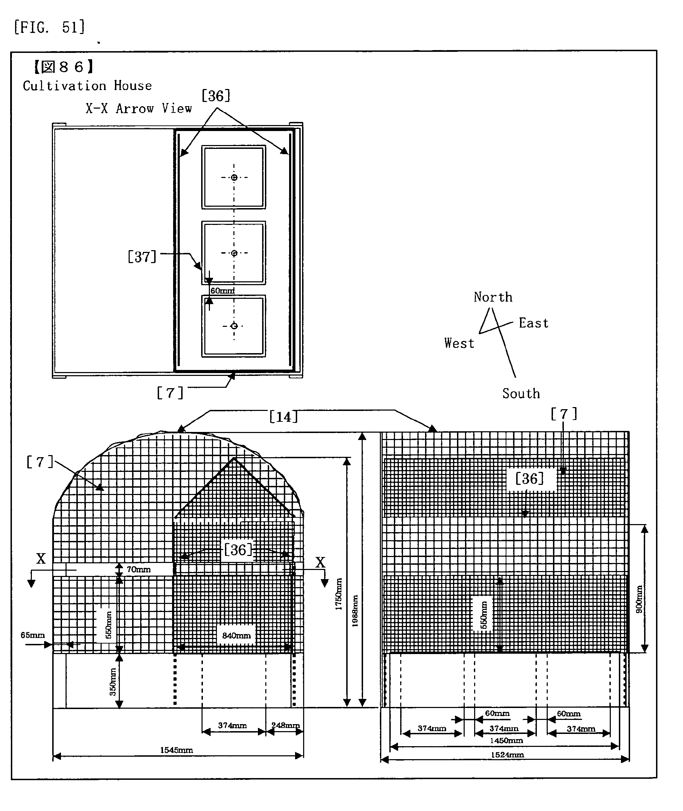

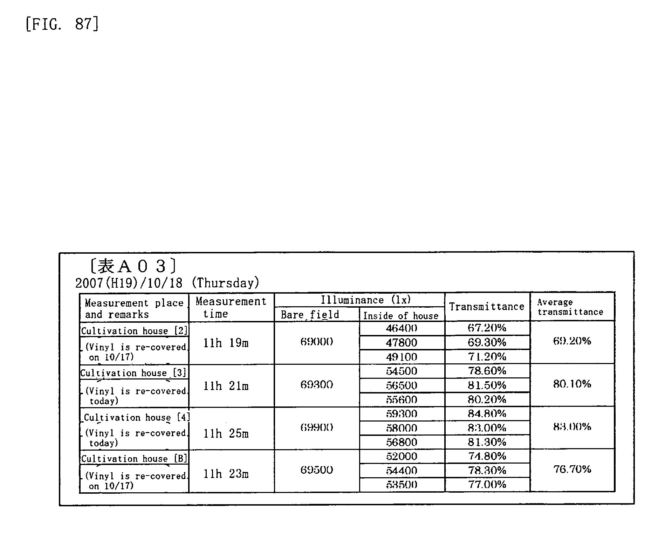

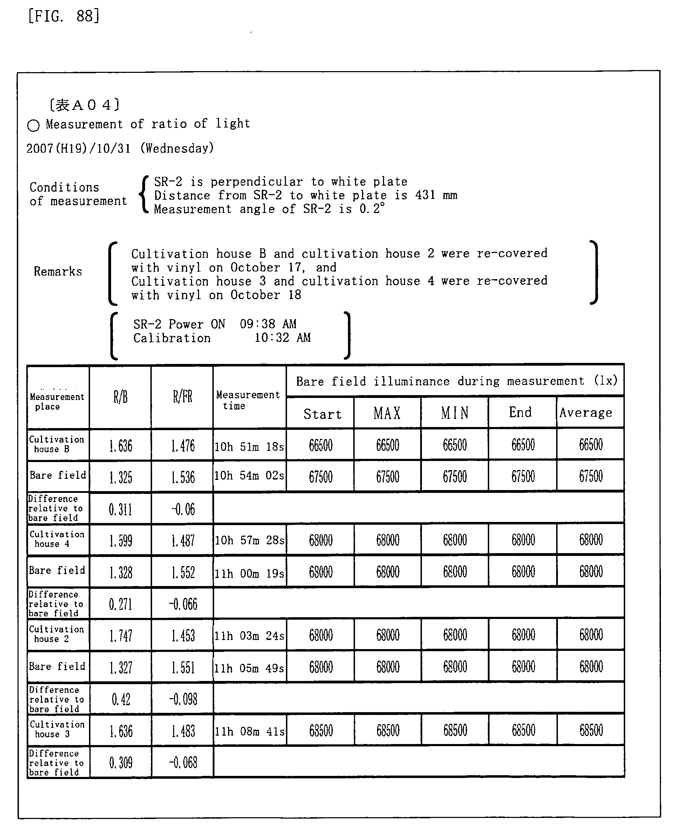

Even when the red net and the red reflective plate are installed in the vinyl house (see FIG. 51), referring to FIGS. 87 and 88 (house 2), the transmittance is 69.2%, and the ratio of light is set so that the ratio of R/B is 0.420 greater than that of the bare field.

(Method of Combining Transmitted Light of Thin Pink Vinyl with Reflected Light of Red Reflective Plate)

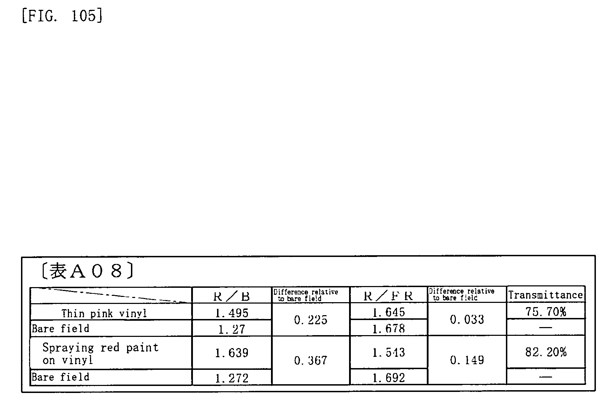

Referring to FIG. 105, the thin pink vinyl is set so that a difference between the ratio of R/B thereof and that of the bare field is 0.225, and that the transmittance thereof is 75.7%.
When this vinyl and the red reflective plate are combined, the reflective plate has a function of increasing the ratio of R/B by about 0.09 to about 0.08 compared to that of the bare field. Thus, since the sunlight illuminance inside the house is hardly reduced, the ratio of R/B can be expected to be about 0.315 to about 0.305 greater than that of the bare field when the transmittance ranges from about 70% to about 73%.

(Method of Applying Water Paint and Oil Paint)

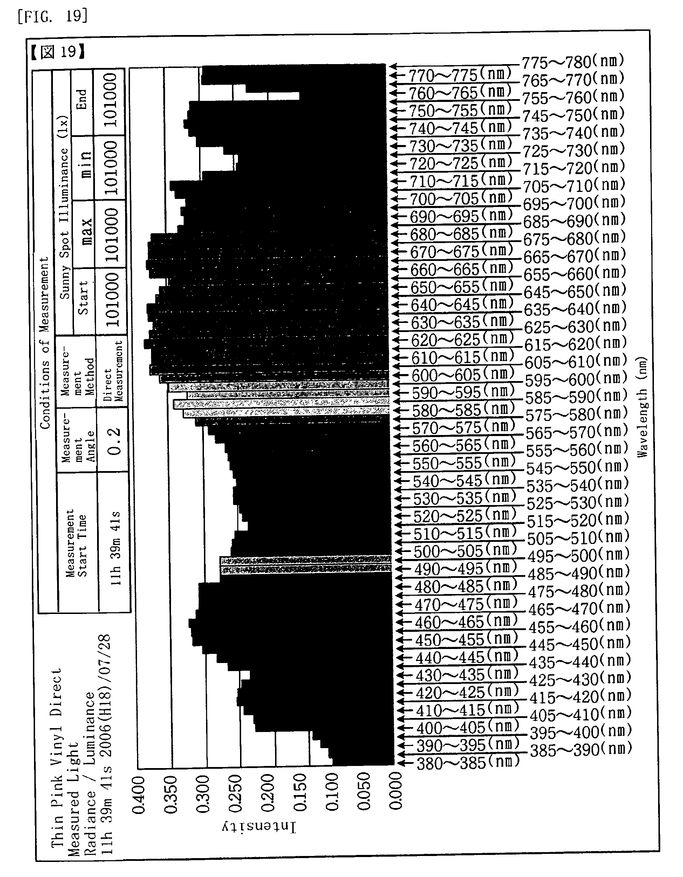

Since a spectrum of the color of the thin pink vinyl includes much blue color B as in FIG. 19, a function of changing the ratio of light is weak.
If a color of water paint or oil paint of FIG. 20 or 23 is used for this color, the function will be further improved. As described above, such other methods are available. Accordingly, if the sunlight is darkened by about 30% by means of reflection or transmission, the ratio of light can be sufficiently used as the ratio of light for the eggplants.
In the second method, when the lighting environment of the cultivation house is set to the ratio of light for the eggplants in the period of reflection and transmission means (the setting method will be described below), the conditions of the reflection or transmission, the ratio of light, and the illuminance decreasing rate are actually measured at that time (hereinafter referred to as "illuminance decreasing rate, etc. of that time"). This is because, when the ratio of light for the eggplants is made again the next year, it is convenient to know the proven illuminance decreasing rate, etc. of that time.
It is unnecessary to replace the installation when the illuminance is measured each month and is insufficient like the first method. Further, when many types of installations are combined, it is unnecessary to set the illuminance of the artificial lighting in advance.

On the other hand, in the second method, since the "illuminance decreasing rate, etc. of that time" is previously known, it is known, by the list of the percentages that are not affected even when the sun sets and it gets dark (see FIG. 86), around which month the artificial lighting will be needed. Accordingly, if the artificial lighting is needed in that month, the illuminance before or after 3:00 PM is essentially measured on a very clear, clear, or sunny day. When the measured illuminance is insufficient, artificial lightings of R and FR are applied.

In this case, all but the basic installation is removed within the equipped reflection and transmission arrangement. Thus, since the illuminance decreasing rate, etc. of the aforementioned basic installation, and the illuminance at about 3:00 PM of the winter solstice in FIG. 86 are known, the illuminance of the time when the basic installation is equipped at the winter solstice is calculated, and supplementary light is irradiated for a difference between the calculated illuminance and the illuminance of the light saturation point of the eggplants.

Then, it is checked whether this is equal to or greater than the ratio of light for the eggplants using the radiance meter. As a result, if the ratio of light is insufficient, irradiation illuminance of the artificial lighting of R and FR is increased (hereinafter, the irradiation illuminance of the artificial lighting of R and FR which is decided here is referred to as "decided illuminance").

The aforementioned work must be done at about 3:00 AM in very clear weather or fine weather equivalent to this.

The cultivation is continuously carried out in this state. However, it is known in approximately which month the artificial lighting of R and FR will not be required according to FIG. 86, the illuminance decreasing rate of the basic installation at the winter solstice, and the illuminance decreasing rate, etc. of that time.

When it becomes that month and is very clear, clear or sunny, the illuminance at about 3:00 PM is essentially measured. When the measured illuminance is higher than the illuminance of the light saturation point by an illuminance decreasing rate corresponding to the illuminance decreasing rate, etc. of that time, the applied artificial lighting of R and FR is removed, and the reflection or transmission arrangement is installed so as to be approximate to the illuminance decreasing rate, etc. of that time.

Then, it is checked whether this is equal to the ratio of light for the eggplants using the radiance meter. As a result, if the ratio of light is insufficient, the reflection or transmission arrangement is activated. The cultivation is continuously carried out in this state, and if a month in which the artificial lighting is required again arrives, the aforementioned work is done. This is repeated.

<Cultivation Method of Leaf Vegetables>

A cultivation method of leaf vegetables such as napa cabbage, lettuce, and cabbage, which are known to be vulnerable to pests, will be described.

A vinyl (hereinafter simply referred to as a "red vinyl"), to which red paint similar to a house G of Experiment 6 (Embodiment 5) described below was applied until transmittance amounts to about 50% to about 55%, is covered so that the sunlight is not introduced.

For the vinyl, a red vinyl having a concentration at which the transmittance ranges from about 50% to about 55% may be purchased. When not available, the red vinyl may be made to order by a manufacturer.

Simultaneously, any artificial lighting of white light may be used before and after sunrise and sunset. As such, the artificial lighting of white light is switched on so as to reflect the color of the red vinyl from the inside, or transmit the red vinyl from the outside.

The meaning of this switch-on is that, in the typical cultivation environment, it abruptly gets bright in the morning when it gradually gets bright due to the sunrise, and that in the typical cultivation environment, it abruptly gets dark in the evening when it gradually gets dark due to the sunset.

Accordingly, as the artificial lighting to be used, an artificial lighting that has the same ratio of light as the red vinyl or an artificial lighting that, in the ratio of light of the red vinyl, changes the ratio of R/B to be greater than that of the bare field and changes the ratio of R/FR to be less than that of the bare field may be used. How to cause the ratio of light to approximate that of the red vinyl will be described below.

Further, in the event of slightly cloudy weather or cloudy weather in which it is possible to directly look at the sun even during the day, the lighting must be switched on.

Of course, in the event of cloudy weather in which the sun is not visible due to clouds, or when it snows or rains, the lighting is switched on (hereinafter, this is referred to as "the lighting is switched on").

In this manner, the pesticide-free cultivation method for vegetables that are vulnerable to pests includes a method in which the red vinyl is covered to prevent sunlight from being introduced, and the lighting is switched on.

The leaf vegetables can be cultivated under very low illuminance, compared to the fruit vegetables. As such, the leaf vegetables can be cultivated even by the vinyl having a low transmittance in the whole year in Kochi, Japan.

For example, in terms of a necessary minimum illuminance, head lettuce and leaf lettuce require 18,000 lux, Japanese parsley, Japanese mustard spinach, and leaf leeks require 15,000 lux, and crown daisies and *Angelica keiskei* (Ashitaba) require 12,000 lux. As such, in FIGS. 36 to 42, the illuminance is 40,000 lux even with the red vinyl having a transmittance of 50% at 3:00 PM on June 6, 2004 (H16), and 40,000 lux at 3:00 PM on September 9, and thus 20,000 lux at a transmittance of 50%. As described above, it is possible to secure sufficient illuminance.

<Cultivation Method of Ordinary Leaf Vegetables or Root Vegetables>

Next, a cultivation method of ordinary leaf vegetables or root vegetables will be described.
In this case, a basic installation is installed for cultivation.
For the ratio of light when the basic installation is equipped, the basic installation is combined for cultivation like a house B (see FIG. 67) of Experiment 6 (Embodiment 5).
An electric fan of FIG. 67 is used only when cultivation plants are susceptible to heat to be dried up or withered,
In countries or districts where the illuminance is insufficient with the red vinyl having a transmittance of 50%, a facility for compensating for light to increase the illuminance may be installed. A method of establishing the ratio of light approximating the ratio of light of FIG. 67 will be described below.

<Cultivation Method of Fruit Vegetables Other Than Eggplants>

Next, a cultivation method of fruit vegetables other than eggplants will be described. The cultivation method is basically carried out according to the example of the eggplants.

(Group Classification According to Light Saturation Point)

The light saturation points of main fruit vegetables are 70,000 lux for tomatoes and 80,000 lux for watermelons. Further, the light saturation points are 55,000 lux for cucumbers and melons, 30,000 lux for bell peppers and chili peppers, and 20,000 to 30,000 lux for strawberries. Bitter melons and summer squash have necessary minimum illuminance of 30,000 lux, and oranges have a light saturation point of 40,000 to 50,000 lux, and a minimum necessary illuminance of 35,000 lux. Grapes become good in color and also rich in a content of sugar as rays of light increases. The eggplants have a light saturation point of 40,000 lux. and a necessary minimum illuminance of 24,000 lux. These vegetables are generally classified into four groups: a group having a very high light saturation point and a group having a very low light saturation point, and a group weak against pests and a group strong against pests.
First, for the group that is weak against pests and has a high light saturation point, such a basic installation as not to reduce the illuminance of sunlight if possible is selected. The shortage of the variation in the ratio of light is made up for by the artificial lighting of R and FR.
Next, in the group having a very high light saturation point, the illuminance is 110,000 lux at 1:00 PM on a clear day around the summer solstice, and is 80,000 lux at 3:00 PM. As such, for grapes or watermelons, it is difficult to use a reflective plate for the basic installation. In this case, the basic installation that can be used for the time being should be equipped, and the artificial lighting of R and FR should be irradiated.
For the group that is weak against pests and has a low light saturation point, using the cultivation method equal to that of napa cabbage or cabbage is taken into consideration.
However, this method cannot be used when the sunlight illuminance is lowered to be insufficient. In this case, the group is cultivated according to the cultivation method of the eggplants, but the variation in the ratio of light becomes insufficient. Accordingly, with use of the artificial lighting of R and FR, the ratio of light for the eggplants is changed into the ratio of light for the house G.
Whether a group that is not the group vulnerable to pests is the group having a very high light saturation point or the group having a low light saturation point, the ratio of light is set to the ratio of light for the eggplants, and thereby the cultivation installation is established. In this case, a group that is more vulnerable to pests or diseases than the eggplants is naturally invaded by pests or affected with diseases. As such, it is necessary to carefully patrol and observe the group every day.

(Ways in which Pests or Diseases Occur and Countermeasures thereof)

When leaf vegetables, root vegetables, or fruit vegetables are invaded by pests or affected with diseases, there is no possibility of the pests or diseases prevailing in group in the crops of the entire farm at the same time. The pests or diseases are partially generated from some of the crops, and propagated from this. The propagating rate is various. However, if the crops are carefully patrolled and observed every day, the pests or diseases can be discovered in an early stage. If eggplants are invaded by the pests or affected with the diseases, it may be said that the ratio of light for the eggplants is insufficient. For this reason, the artificial lighting of R and FR is irradiated.
It is possible to avoid damage caused by the pests by a combined use of the artificial lighting. This is proved by a cultivation experiment for the eggplants in connection with Experiment 8 (Embodiment 7).

That is, LEDs of red light R were irradiated, but wormholes were caused. However, when the LEDs were switched off, the progress of the wormholes was immediately stopped. See cultivation records of the eggplants of Experiment 8 (Embodiment 7) on June 22 and 29, and July 1.

Once the crops such as napa cabbage or cabbage that are very vulnerable to pests are invaded by the pests, the progress of the wormholes is not stopped no matter how the ratio of light is set.

See Experiment 6 (Embodiment 5).

For the groups other than the group that is very vulnerable to the pests, the artificial lighting of the red light R and the far-red light FR is irradiated so that the ratio of R/B is still greater than that of the bare field, and the ratio of R/FR is still less than that of the bare field. Then, the progress of the wormholes is stopped. The progress of the diseases is also stopped.

This is also proved by the cultivation experiment for the eggplants in connection with Experiment 8 (Embodiment 7).

In Experiment 8 (Embodiment 7), LEDs of red light R were switched on, and the eggplants were invaded by pests after a week. However, if the LEDs were switched off, the progress of the wormholes was stopped. See the description of Experiment 8 (Embodiment 7) on June 22, 2007 to July 1.

Accordingly, when plants other than the eggplants, the cucumbers and tomatoes are cultivated for the first time, it is safe to previously prepare the artificial lighting of the red light R and the far-red light FR until it is proved that the ratio of light at which the other plants withstand the pests or the diseases is made.

When the artificial lighting is switched on, the ratio of light may be set to that for the house G. In this case, it is safe to properly increase an absolute value of the variation of the ratio of light by plus alpha.

(Method of Preparing House Having Ratio of Light of House G)

Subsequently, a method of preparing the ratio of light for the eggplants and the ratio of light of the house G having a transmittance of about 50% in Experiment 6 (Embodiment 5) described below, the house B (see FIG. 67) in Experiment 6 (Embodiment 5) described below, and a house having a ratio of light approximating the respective ratios will be described.

Hereinafter, a method of preparing the house approximating, among the respective ratios of light, the ratio of light for the house G will be described.

In the method based on the reflection and transmission means, when red paint (see FIG. 20) is sprayed onto vinyl, of which an installation of the house G is formed with a thickness of 0.05 mm and whose material is a polyethylene material, until it reaches a concentration corresponding to a transmittance of about 50%, the ratio of light for the house G is the ratio of light of the sunlight transmitting this red vinyl (hereinafter referred to as "the ratio of light for the house G").

Further, the ratio of light for the eggplants refers to that when a red net and a red reflective plate are installed in a vinyl house formed of a polyethylene material having a thickness of 0.05 mm.

The red net is a net that is made by applying red oil paint (see FIG. 23) to a commercially available golf net. The ratio of light of FIG. 67 for the house (B) of Experiment 6 (Embodiment 5) described below is one when red reflective plates are installed in the house covered with the net where red oil paint (see FIG. 23) is applied to the commercially available golf net, and particularly on the surrounding and ceiling of the vinyl house formed of a polyethylene material having a thickness of 0.05 mm as shown in FIG. 67.

While the description has been made on the basis of each house having the aforementioned installation, the ratio of light is different whenever it is measured, be it any time in the morning, noon, and evening any day of the year. However, in the measurement of FIG. 104, the ratio of light before and after transmitting the vinyl was measured three times, and a measurement interval was three minutes. That is, if the three measurements required six minutes (actually, since the measurement time was 35 seconds, it was about eight minutes), the ratio of light can be treated as a nearly quantitative value. This has already been interpreted (its details will be described below).

A method of preparing the house approximating the ratio of light for the house G based on the artificial lighting of the red light R and the far-red light FR will be described.

In the house G, the bare field, and the house where the artificial lighting of the red light R and the far-red light FR is irradiated, if the time interval between the three measurements is about three minutes, a total of interval times is six minutes since the measurement is done three times. The measurement interval of FIG. 104 is 3 minutes, and since the measurement is done 3 times, a total of interval times is 6 minutes. The fact that the ratio of light approximates the quantitative value is interpreted and proved.

Accordingly, if the three measurements are continuously made, and the interval time between the measurements is 3 to 4 minutes, the ratio of light is practically treated as the quantitative value to a certain extent.

Accordingly, the illuminance of the artificial lighting of the red light R and the far-red light FR or the number of artificial lightings, the distance from the plants or the mixed ratio of the red light R and the far-red light FR, etc. are changed. Whenever they are changed, the three measurements are repeated. In this way, the house for the installation of the house G is prepared as a criterion, and the measurements are repeated. Thereby, all installations of red light R and the far-red light FR for approximating the ratio of light of the house G are decided. However, this operation needs to be performed in a time zone of clear weather.

Next, for the purpose of the verification for preparing the house having the approximating ratio of light and for reference, the measurement experiment was carried out based on the installation having the ratio of light for the eggplants and the installation of FIG. 67 in which the leaf vegetables are cultivated in Experiment 6 (Embodiment 5) described below.

While nothing other than the two installations was used, houses that can be imagined to include a summer house that can be expected to greatly change the ratio of light and a winter house that has a high transmittance and a great ratio of light were prepared, and these four houses were measured and compared.

a. In terms of the ratio of light for the eggplants, cultivation house 4 (see FIG. 48 in Experiment 4 (Embodiment 3) below).
b. House B in Experiment 6 (Embodiment 5) below, and cultivation house B (see FIG. 67) in terms of the ratio of light.
c. In terms of the ratio of light of the summer house in which the ratio of light is greatly changed, cultivation house 2.
d. In terms of the winter house having a high transmittance and a great change in the ratio of light, cultivation house 3.

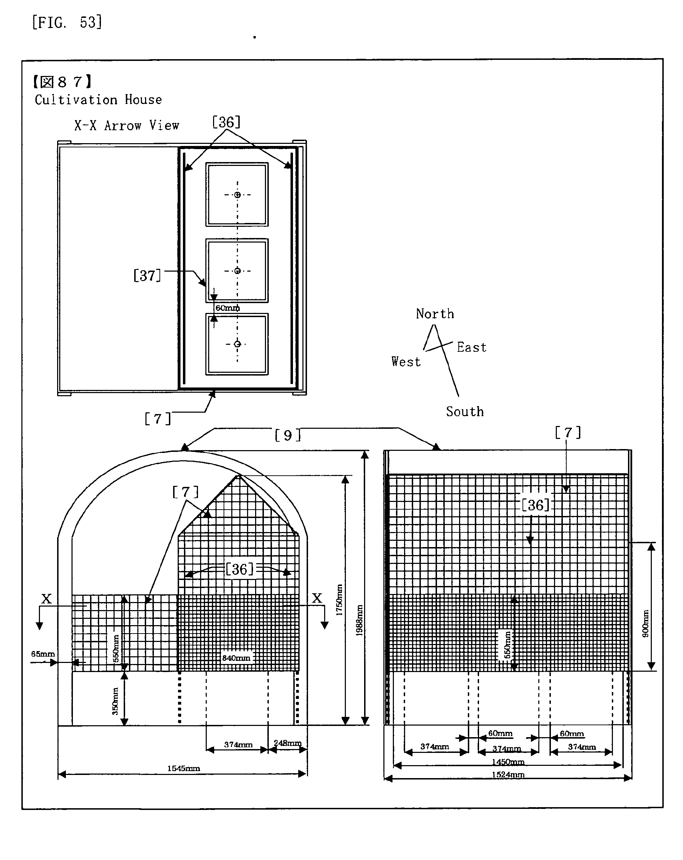

The house 2 is an installation where an interval between internal nets is increased to improve ventilation, where the surroundings and ceiling of the vinyl house are covered with the nets, and where the red reflective plates are installed (see FIG. 51). The house 3 is to remove the ceiling nets from the installation of the house 2 so as to allow a large amount of sunlight to be introduced (see FIG. 53).

The sunlight is attenuated by reflection or transmission. As a result, the ratio of light is changed. Accordingly, if the ratio of light is greatly changed, the transmittance is also greatly reduced. When the ratio of light is not greatly changed, the transmittance is not greatly reduced. That is, the transmittance and the ratio of light are in an inversely proportional relation.

It is proved by checking this relation that it is possible to measure the transmittance to roughly guess a change in the ratio of light. It is verified by the aforementioned short-time continuous measurement whether, by using the measured value as the quantitative value and comparing it with the measured value of the criterion house, the measured value can approximate the ratio of light as a criterion in a method for an installation different from this method.

The transmittance was measured on October 18, 2007 (H19). The results are shown in FIG. 87.

(Measurement of Illuminance and Transmittance in Each Cultivation House)

The ratio of light was measured on October 31 (Wednesday), 2007 (H19). The conditions for measurement were as follows: SR-2 was perpendicular to a white plate, a distance between SR-2 and the white plate was 431 mm, and a measurement angle of SR-2 was 0.2°. SR-2 was powered on at 9:38 AM, and calibration was performed at 10:32 AM. A cultivation house B and a cultivation house 2 were subjected to vinyl replacement on October 17, and a cultivation house 3 and a cultivation house 4 were subjected to vinyl replacement on October 18. The results are shown in FIG. 88.

(Measurement of Ratio of Light in Each Cultivation House)

For measurement of the ratio of light, a required time from the start to the end of measurement is at least 17 minutes, whereas it is at most eight minutes in FIG. 104.

However, since the comparison criterion is the ratio of light for the eggplants, the comparison is made by arrangement as follows. The house B (start at 10 h 51 m 18 s) and the house 4 (end at 11 h 00 m 19 s), and thus the required time is at least about 11 minutes; the house 4 (start at 10 h 57 m 28 s) and the house 2 (11 h 05 m 49 s), and thus the required time is at least about 10 minutes; and the house 4(start at 10 h 57 m 28 s) and the house 3 (start at 11 h 08 m 41 s), and thus required time is at least about 13 minutes.

Taking into account that FIG. 104 was 8 minutes, which was a very good measurement precision, even when the time required for measurement is slightly increased in this way, the difference relative to 8 minutes is only 2 minutes to 5 minutes. Taking this into consideration, even when the precision is slightly lowered, the value is considered to be treated as a sufficient quantitative value.

(Relationship between Difference in Transmittance and Variation in Ratio of R/B)

When the ratio of light is compared based on the house 4, the ratio of R/B of the house B is 0.04 greater than that of the house 4, and the ratio of R/B of the house 2 is 0.149 greater than that of the house 4, and the ratio of R/B of the house 3 is 0.038 greater than that of the house 4.

Accordingly, the sequence of the installation that greatly changes the ratio of R/B is the house 2, the house B, the house 3, and the house 4.

Next, when ranked in a descending sequence by the transmittance, the first is the house 4, and the following are the house 3, the house B, and the house 2.

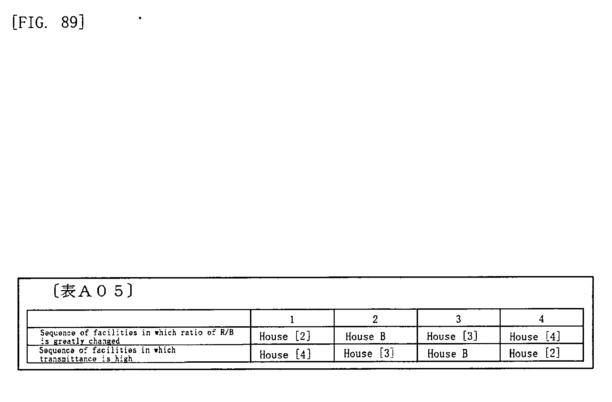

Thereby, as the transmittance becomes high, the variation of the ratio of R/B becomes small. That is, it is found that the transmittance and the variation of the ratio of R/B are in an inversely proportional relation. This is shown in FIG. 89.

The method of causing the ratio of light to approximate the ratio of light as a criterion, i.e. the selection and decision of an installation approximating the ratio of light of the criterion, is possible by the measurement as described above.

As shown in FIG. 89, the ratio of R/B is accurately inversely proportional, but the ratio of R/FR is random.

This is because the wavelength ranges of B, R and FR are 420 to 470 nm (B), 615 to 680 nm (R), and 700 to 750 nm (FR), respectively.

That is, since the wavelength range of B is separated from that of R, and the energy of the wavelength of B is greatly different from that of R, the attenuation caused by the transmission has a great difference. As such, the ratio of R/B is greatly changed.

However, the wavelength ranges of R and FR are adjacent to each other, because R and FR have the same red color. That is, since with respect to the energy of the wavelength, a difference between R and FR does not reach the difference between R and B, and R and FR are dispersed. However, when the transmittance has a great difference, it is inversely proportional. Accordingly, the variation of the ratio of light and the transmittance is inversely proportional.

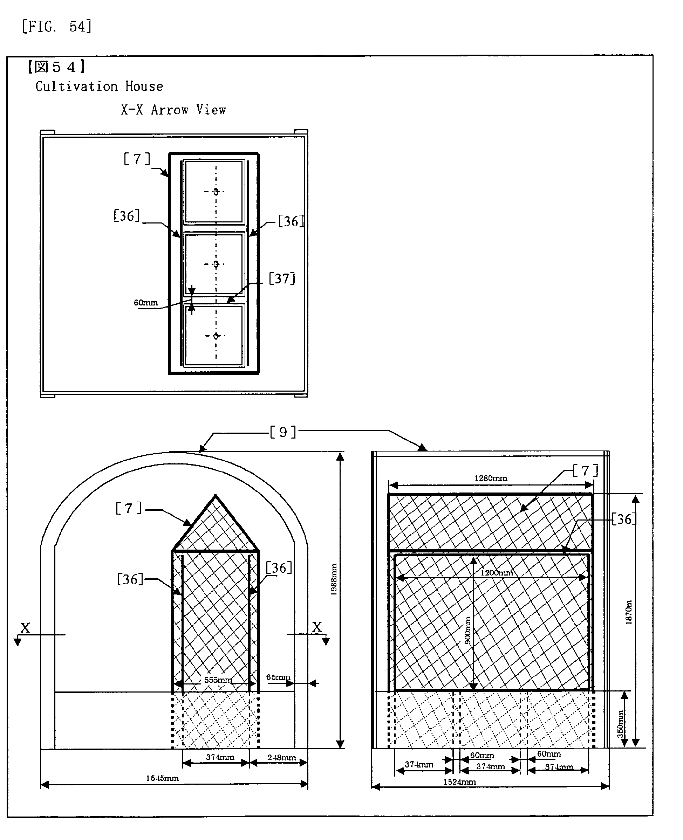

According to the verification results, the ratio of light for the eggplants is not limited to the installation of FIG. 54, when the transmittance is 70%, it can be set to the ratio of light for the eggplants by the other method or installation as described above.

Referring to the house 2, the house B, and the house 3 of FIG. 87, FIG. 88, and FIG. 89, such a possibility is suggested even when the transmittance is equal to or more than 70%.

<Cautions of Transmittance>

A numeral figure indicated as the transmittance on a catalog of a manufacturer is a measured value under the measurement conditions.

However, in fact, it may be safely said that the same conditions when measured by the manufacturer are not present in an agricultural cultivation field.

The transmittance of the vinyl is reduced in proportion to the elapse of time by ultraviolet ray of the sun. According to a state of water droplets generated on a surface of the vinyl, i.e., when the water droplets are many, little, large, small, and fine, the vinyl is sensitive to a change such as when the weather is cloudy.

Accordingly, since the vinyl is changed to an acceptable extent despite a difference whenever measured, when the ratio of light is guessed by the transmittance, both including the criterion house should be measured and compared each time.

As described above, the present invention is based on the use of a technique that uses both of the ratio of R/B and the ratio of R/FR to distinguish the spectrum of the sunlight.

Hereinafter, such a technique will be described briefly.

The sunlight spectrum of the Earth is roughly classified into three types: [1] sunlight of a bare field, [2] sunlight of a sunny spot of sunlight filtering through foliage, and [3] a shady spot of sunlight filtering through foliage and a shady spot of a person, an animal, a cloud, or a building.

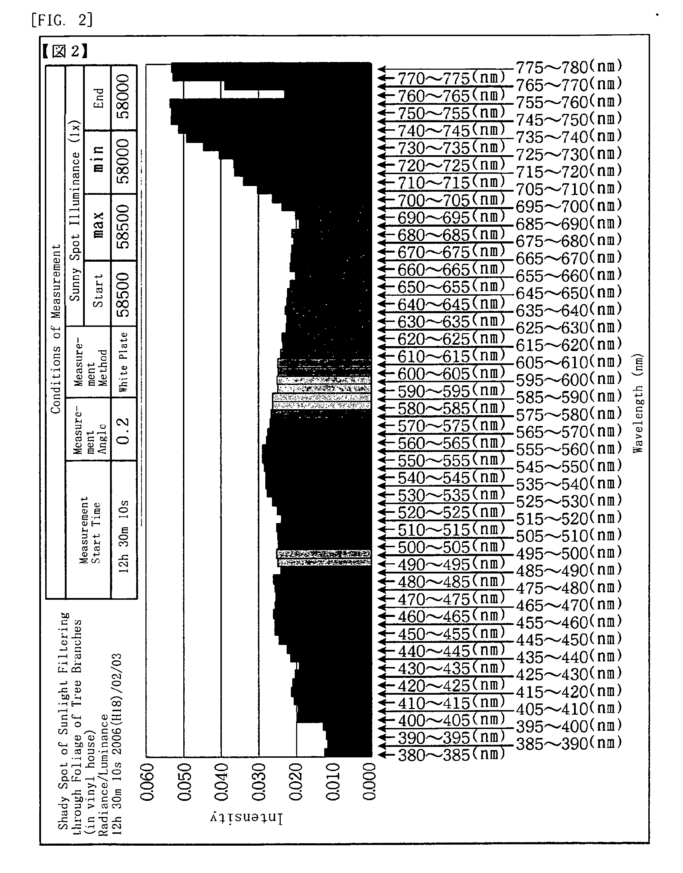

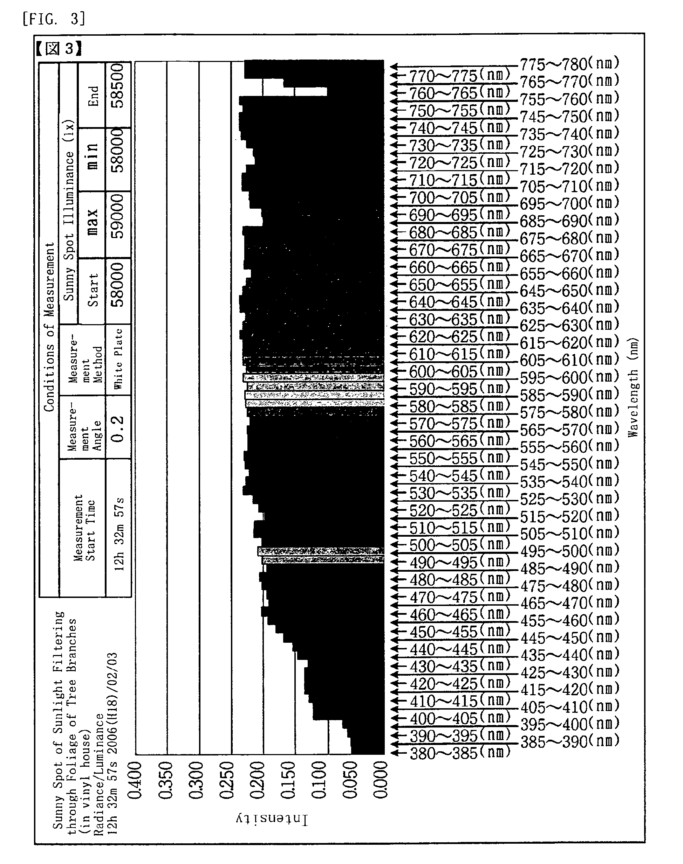

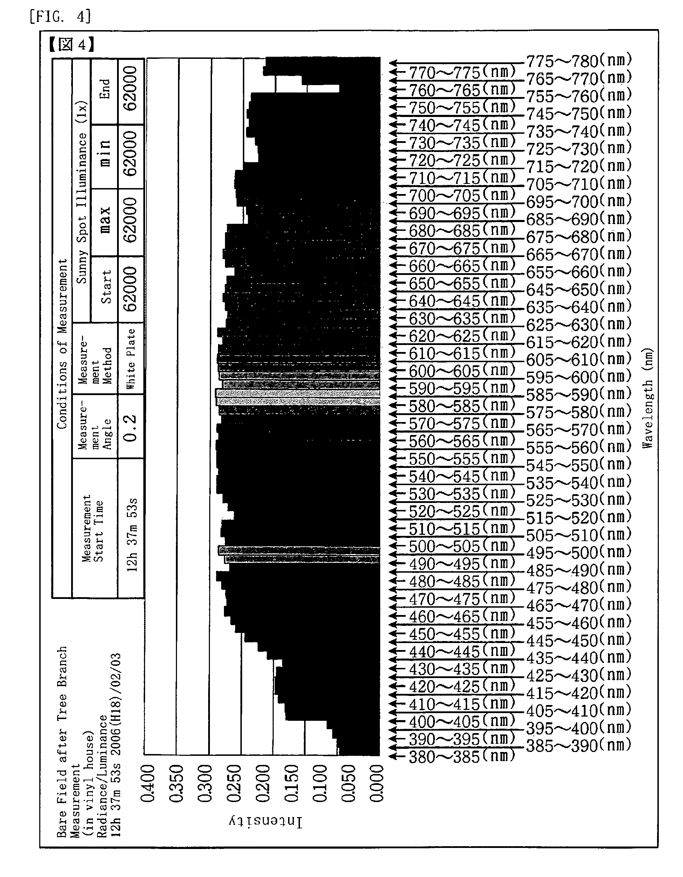

For the spectrum of the sunlight, [1] makes reference to FIG. 4, [2] makes reference to FIG. 3, and [3] makes reference to FIG. 2.

The respective ratios of light are **characterized in that**, when compared based on [1], [2] has a greater ratio of R/B than [1], and a lower ratio of R/FR than [1].

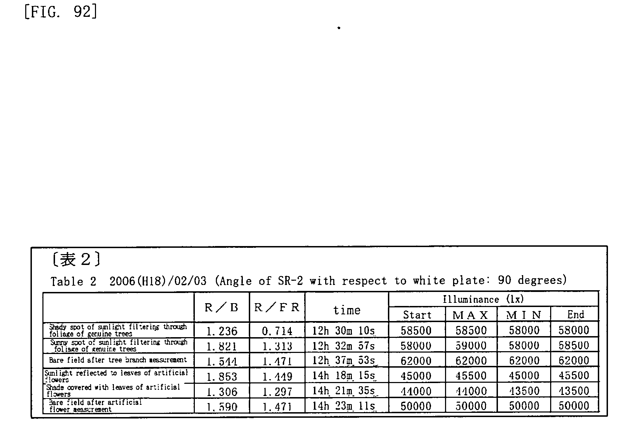

[3] has lower ratios of R/B and R/FR than [1], and has an extremely lower ratio of R/FR than [2] (see FIG. 92).

(Description of Relationship between Ratio of Light (Ratio of R/B, Ratio of R/FR) and Plant Species)

A relation between the ratios of light, i.e., between the ratio of R/B and the ratio of R/FR, which are important in the present invention, will be described below.

A relation between the sunlight roughly classified as described above and the plants will be described below.

A. $C_3$ plants are vivid under the sunlight spectrum of [2], and can be cultivated without pesticides against pests.

The fact that, since plants are adapted to respective environments in a plant community in such a manner that the plants adapted to an inner area of the plant community are exposed to a low illuminance of the light saturation point, and the plants adapted to the vicinity of an inlet area of the plant community are exposed to a high illuminance of the light saturation point, the $C_3$ plants have different light saturation points according to a type may be considered the reason for this. This is proved by the fact that the plants were successful in the pesticide-free cultivation under the sunlight of the sunny spot of sunlight filtering through foliage in each experiment disclosed herein.

B. Even the same $C_3$ plants, the plants having a low photosynthetic rate saturation light intensity (light saturation point) rather than the plants having a high light saturation point are set so that it is necessary to make the ratio of R/B greater than that of the bare field and the ratio of R/FR less than that of the bare field in order to achieve the pesticide-free cultivation as a trend.

C. $C_3$ plants and $C_4$ plants are different in a physiological mechanism of photosynthesis.

This is because the $C_4$ plants are adapted to the sunlight of [1] above, and the $C_3$ plants are adapted to the sunlight of [2] above. The $C_4$ plants have a higher light saturation point than the $C_3$ plants.

Next, description will be made regarding the fact that semi-shade plants and shade plants may be cultivated at the ratio of light of the sunlight spectrum of [3].
It is well known that wasabi of the semi-shade plants grows naturally in an environment in which sunny and shady spots of the sunlight filtering through foliage of the natural world are mixed. It is also well known that Korean ginseng of the shade plants grows naturally in shady spots.
Accordingly, the semi-shade plants become vivid in a lighting environment where the lighting environment of FIG. 2 is mixed with that of FIG. 3, and the shade plants become vivid in the lighting environment of FIG. 2.

The description above is to disclose the relation between [1], [2], and [3], into which a type of the photomorphogenesis reaction that is a fundamental reaction of the plants and the sunlight is classified, and the plants.

Although it may be said that, as the value of R/B becomes high, or as the value of R/FR becomes low, the plants show a tendency toward growing well, it is not known that it produces an effect of controlling pests.
Next, the insistence on effects obtained by a full control type plant factory is well known. This does not take into consideration changing the sunlight spectrum.
Even though a possibility of application is hinted, the disclosed current information is the mixed light of R and B. A technique for using the mixed light of R and FR in order to adjust the spectrum balance of the R, B, and FR of the sunlight is not apparent.
Such a purpose is to provide a pest control method. Therefore, the present invention is not to easily change the sunlight spectrum using LEDs or fluorescent lamps.
The physical properties of light are used. That is, the sunlight spectrum is changed by reflection or transmission of the sunlight, so that this is advantageous from the viewpoint of a low cost together with a facility cost and a running cost.

Further, it is verified that if not the degree to which the value of R/B increases or the degree to which the value of R/FR decreases, when R/FR is reduced too much, an adverse effect is produced, and when B of R/B is completely cut, deformity occurs.

The cultivation experiment was performed on pots on which LEDs are installed in the rooftop bare field in Experiment 6 (Embodiment 5) as described below. The LED emitted red light R. As a result, there was no pest control effect.
Further, for the cultivation of tomatoes of a house 13 in Experiment 7 (Embodiment 6) as described below, fluorescent lamps of red light R were irradiated. However, these tomatoes also had smaller flowers than those of an unirradiated house, and became lifeless.
Furthermore, for the cultivation of eggplants of a house A in Experiment 8 (Embodiment 7), LEDs of red light R were switched on, and wormholes were generated around a week. When the LEDs were switched off, the progress of the wormholes stopped. It was discovered that, even when only the red light R was irradiated in this way, the pest control effect was not obtained.

That is, in the present invention, it is important when R/B is increased and when R/FR is reduced, and it is found that when R/B and R/FR are independently increased or reduced, there is no effect on the pest control effect.

In the present invention, it is important that, when R/B is increased and when R/FR is reduced, their magnitudes are discussed according to any criterion, and what the ground of the discussion is. How much R/B should be increased and how much R/FR should be reduced, and their effective ranges are ambiguous.

To elucidate this, first, it was made clear that the pattern of the sunlight spectrum in the natural world was classified into three types: "bare field," "sunny spot of sunlight filtering through foliage," and "shady spot of sunlight filtering through foliage." By adopting these as factors of the photomorphogenesis reaction, the guideline called the ratio of light was made, and the sunlight spectrum was classified.
The "bare field" makes reference to FIG. 4. Further, the "sunny spot of sunlight filtering through foliage" makes reference to FIG. 3, and the "shady spot of sunlight filtering through foliage" makes reference to FIG. 2, and includes a shady spot of a mountain or an object.

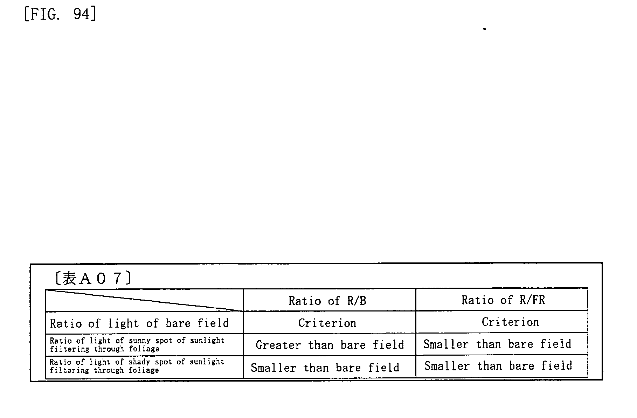

As understood with reference to FIGS. 92 and 94, if the bare field is used as a criterion, the sunny spot of sunlight filtering through foliage is to change R/B so as to be increased, and R/FR so as to be reduced.
Both of R/B and R/FR of the shady spot become less than those of the bare field.
That is, in the case of the variation of the ratio of light, when the bare field is used as a criterion, as it proceeds from the inlet area toward the inner area of the plant community, R/B of the "sunny spot of sunlight filtering through foliage" is further increased, and its R/FR is further reduced.
R/FR of the "shady spot of sunlight filtering through foliage" is still further reduced, and its R/B becomes less than that of the bare field. In this way, with use of the fact that there is a difference to a certain extent, the guideline is adopted.

With regard to these three types of patterns, in Experiment 5 (Embodiment 4) below, a portion between the eggplants becomes a shady spot under the leaves in which the sunlight is blocked by leaves of the eggplants.
In the experiment, since the eggplants were planted at intervals of 35 cm, the neighboring leaves overlapped and came into contact, so that the sunlight was hardly introduced. As understood by comparing 700 to 800 nm of FIG. 2 and that of FIG. 3, since the side of FIG. 2 is very great, R/FR becomes very small.
Since this portion was the shady spot, and thus R/B was also small, the red light R was irradiated. Thereby, R/B was increased, and the state where R/FR was very small was improved by the smallness of the sunny spot of the sunlight filtering through foliage. That is, the state was changed by the spectrum of the sunny spot of sunlight filtering through foliage.

As a result, referring to 7-2: Eggplants in Experiment 5 (Embodiment 4) below, the eggplants became vivid, and flowers and fruits seemed to be born.
According to Experiment 5 (Embodiment 4) below, it was found that, in the shady spot, R/FR was small, but the control of the pests was impossible.
Furthermore, it was found that, when the spectrum of the sunny spot of sunlight filtering through foliage was changed, the control of the pests was possible.
On the basis of the foregoing, it was found that the ratio of light having the pest control effect was the spectrum of the "sunny spot of sunlight filtering through foliage."

With regard to an effective range of this effect, a group of Japanese mustard spinach or bok choy and a group of napa cabbage or cabbage in Experiment 6 (Embodiment 5) below are different in the ratio of light capable of controlling the pests. This indicates that there are plants that are sufficient (in controlling the pests) with the ratio of light of the inlet area of the plant community and plants where the pests cannot be controlled excluding the inner area.
Accordingly, the ratio of light for controlling the pests should be selected as in the embodiment.


($C_3$ Plants and Ratio of Light)


In this way, $C_3$ plants had a most proper area, i.e. a proper ratio of light, in the plant community according to a type. This was also made clear by the experiments.
If the $C_3$ plants are considered to have a difference in the photosynthetic rate saturation light intensity, and in the illuminance of sunlight on the inlet and inner areas of the plant community depending on respective types, it is suggested that the $C_3$ plants have the most proper area in the plant community according to a type.
The shade plants of the $C_3$ plants grow naturally at a shady spot, and the semi-shade plants of the $C_3$ plants grow naturally at a spot where the sunny and shady spots of sunlight filtering through foliage are mixed.
Wild species of agricultural crops of the $C_3$ plants excluding the shade and semi-shade plants grow naturally at the sunny spot of sunlight filtering through foliage. Varieties obtained by human beings cultivating these wild species of agricultural crops in the bare field and repeating improvement of the species are the agricultural crops of the $C_3$ plants excluding the shade and semi-shade plants.
Accordingly, a lighting environment where the pesticide-free cultivation for the agricultural crops of the $C_3$ plants excluding the shade and semi-shade plants is possible is the spectrum of the ratio of light of the sunny spot of sunlight filtering through foliage, neither the shady spot nor the bare field.

This is apparent from the fact that, if Korean ginseng of the shade plants is withered when planted in the bare field, wasabi of the semi-shade plants is also withered when planted in the bare field.
When the $C_3$ plants other than the shade and semi-shade plants are planted from the sunny spot of sunlight filtering through foliage to the bare field, this provides a cause that the $C_3$ plants are affected by diseases or eaten by pests.
That is, to prevent the withering or the pests, it is good that the plants return to areas of the respective lighting environments in the plant community regarded as their homes.


<Preliminary Experiment 2>


As a method of changing the ratio of R/B to be greater than that of the bare field and the ratio of R/FR to be less than that of the bare field, the physical properties of light are used.

By reflection on an object, the ratio of R/B will be increased, and the ratio of R/FR will be reduced. To prove this, Preliminary Experiment 2 below was performed.

The ratios of light measured at the sunny spot and the bare field under the following conditions using a radiance meter (hereinafter referred to as "SR-2") are calculated.

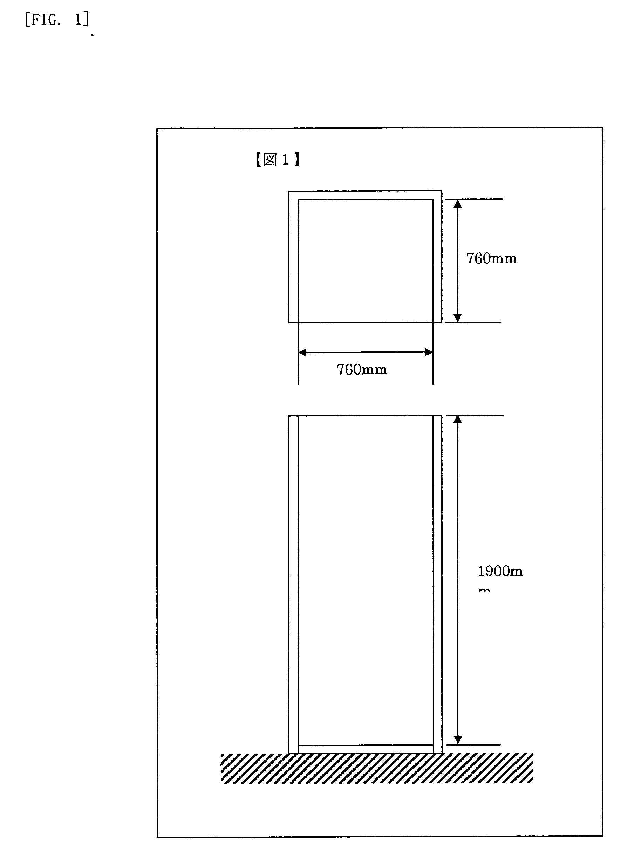

1. The installation shown in FIG. 1 is made of veneer boards, and the ratio of light of a sunny spot in the installation and the ratio of light of a bare field are found.

2. Some of genuine flowering plants and branches of genuine trees which are thickly covered with leaves are collected to make sunlight filtering through foliage, and then the ratio of light of a shady spot under the leaves of the sunlight filtering through foliage and the ratio of light of a bare field are found.

3. Some of artificial flowers and branches of artificial trees which are covered with leaves are collected to make sunlight filtering through foliage, and then the ratio of light of a shady spot under the leaves of the sunlight filtering through foliage and the ratio of light of a bare field are found.

4. Two pieces of construction paper reflecting blue light B having a wavelength range of 420 nm to 470 nm are arranged nearly parallel to a direction in which the sunlight travels. The ratio of light of a sunny spot of a portion that is sandwiched by the two pieces of construction paper and the ratio of light of a bare field are found.

The leaf of the plant and the leaf of the artificial flower are green, and the veneer board is beige. Neither of these colors is a color of a wavelength included in any one of red light R, blue light B, and far-red light FR. That is, when the sunlight is applied to and reflected on these objects, R, B, and FR are not increased. As such, it shows a result that the ratio of light obtained by measurement is attenuated by the reflection.

When the sunlight is applied to and reflected on one sheet of construction paper reflecting the blue light B, it shows a result that the attenuation of wavelength energy of a blue light B wavelength caused by the application and reflection, and the increment of the wavelength energy of the blue light B wavelength by the reflection from the construction paper reflecting the blue light B are offset mutually.

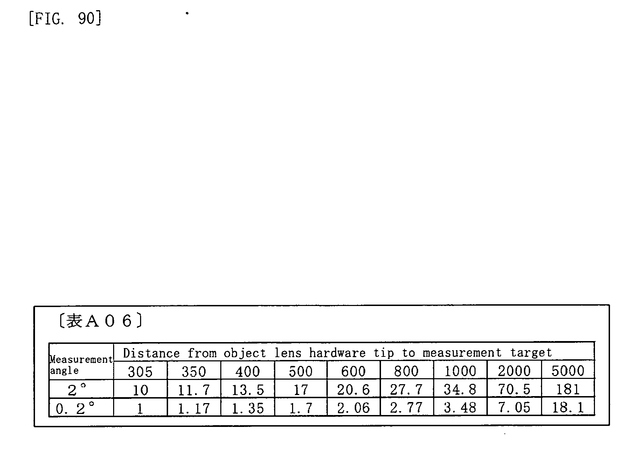

As the radiance meter, "SR-2" (available from TOPKON Co. Ltd.) was used. A measurement angle of a cathode ray tube of a television was set to be 2 degrees, and the measurement angles other than this angle were set to be 0.2 degrees. A relationship between a measurement distance and a measurement diameter (units: mm) is as in FIG. 90. The numerical values of FIG. 90 are design criteria, and may be somewhat different from actual diameters.

As for the precision of the radiance meter, a luminance relative to standard light A is within plus or minus 2.5%, and chromaticity is within minus 0.002. A precision correction range is 1 to 2,000 $cd/m^2$ when the measurement angle is $2°$, and 100 to 200,000 $cd/m^2$ when the measurement angle is $0.2°$. However, a wavelength relative to a specific emission line of mercury is plus or minus 0.3 nm. A response speed is: a measurement time: about 35 seconds (local measurement, the measurement angle of $2°$, and exceeding the standard light A of 5 $cd/m^2$).

(Measurement Conditions of Radiance)

As in FIG. 7, the measurement is made when the white plate is perpendicular to the light source, and when SR-2 (radiance meter) has an angle of 45 degrees with respect to the white plate. Alternatively, as in FIG. 8, the measurement is made when SR-2 has an angle of 90 degrees with respect to the white plate, and receives light from the light source at 45 degrees.

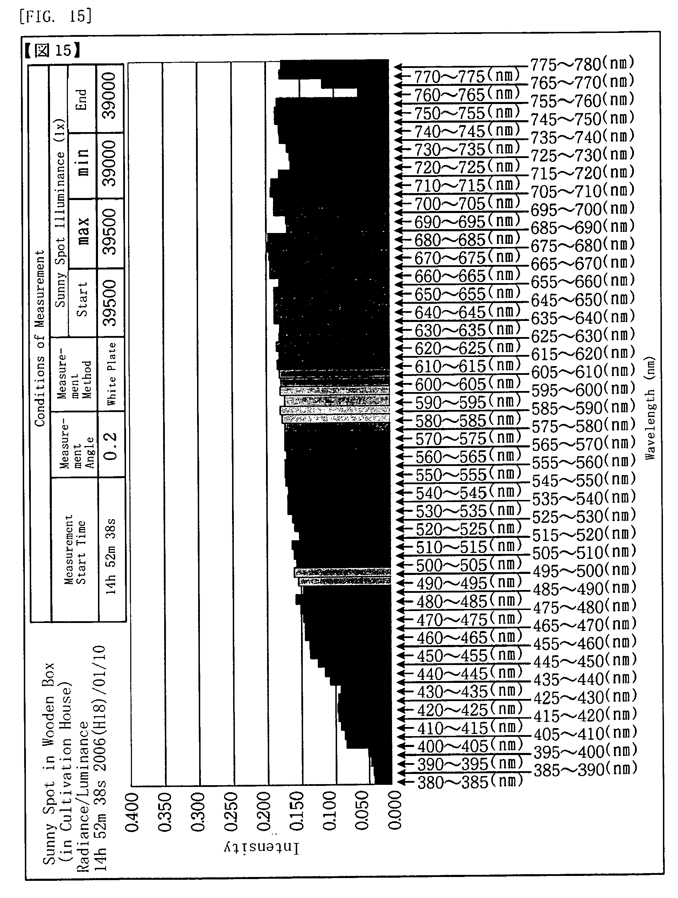

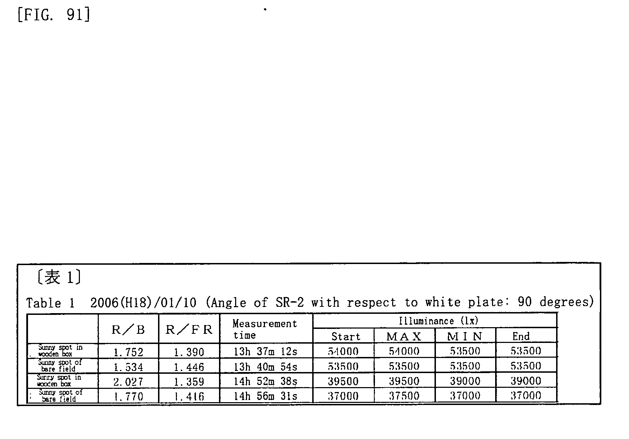

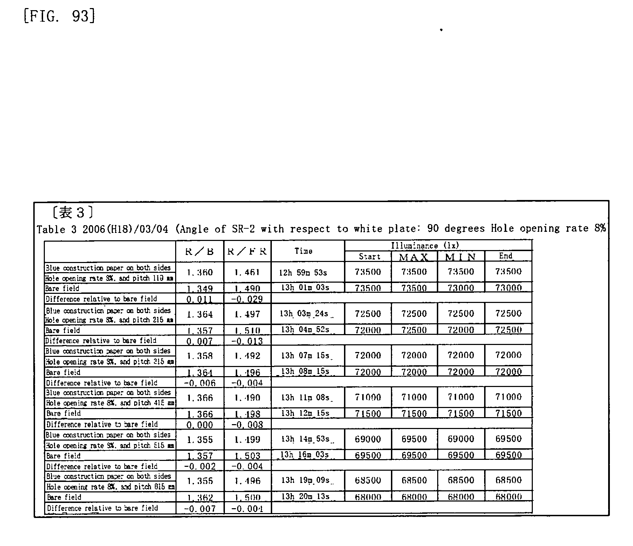

The measurement results of the aforementioned item 1 on January 10, 2006 (H18) (the angle of SR-2 with respect to the white plate: 90 degrees) are shown in FIG. 91. A spectrum of sunlight in a wooden box is referred to in FIG. 15. Further, the measurement results of the aforementioned items 2 and 3 on March 4, 2006 (H18) (the angle of SR-2 with respect to the white plate: 90 degrees) and a hole opening rate of 8% are shown in FIG. 93.

With regard to FIG. 92, sunlight filtering through foliage of tree branches cannot be compared with sunlight filtering through foliage of artificial flowers, but is referred to as a "shady spot of sunlight filtering through foliage" made by the tree branches, a "sunny spot," and a "bare field."

It is possible to recognize three types of classification of the whole light spectrum of the sunlight which exists on the earth, and to compare the ratios of light thereof. Further, similarly, for a "shady spot of sunlight filtering through foliage" made by the artificial flowers, a "sunny spot," and a "bare field," the ratios of light can also be compared.

Considering the results of the measurement experiment, in the ratios of light of the aforementioned items 1, 2 and 3, the sunlight is attenuated by reflection, the ratio of R/B is changed to be increased, and the ratio of R/FR is changed to be reduced. In the construction paper reflecting the blue light B, it is shown that the amount of attenuation by collision and an amount of increasing the blue light B are nearly the same. For the ratio of R/FR, since there is no relation with an increase in the blue light, the ratio of R/FR is reduced because of great attenuation of the red light R.

If the sunlight is classified based on the ratio of light, it can be roughly classified as in FIG. 94 by FIGS. 91 and 92 of the experiment.

This suggests that the $C_3$ plants prefer the lighting environment of the sunny spot of sunlight filtering through foliage, that the $C_4$ plants prefer the lighting environment of the bare field, and that the shade plants prefer the lighting environment of the shady spot under the leaves.

This has validity from the fact that the semi-shade plants such as wasabi prefer the lighting environment in which the sunlight filtering through foliage is present, but the shades of the leaves of trees are rich.

For the $C_3$ plants which have weak photosynthetic rate saturation light intensity in comparison with the $C_4$ plants, the sunlight filtering through foliage capable of securing their own photosynthetic rate saturation light intensity will be an optimum lighting environment.

Thus, in Experiment 10 (Embodiment 9) below, a cultivation house was made of red vinyl, and brightness in the house secured its own photosynthetic light saturation light intensity. In this state, comparison was made.

As a result, a yield of the eggplants becomes 1.44 times and it is proved.

In Experiment 9 (Embodiment 8) below, the similar results were obtained.

The spectra measured in the experiments above were added in FIGS. 2, 3 and 4.

Comparing the respective spectra, the far-red light FR occupying the spectrum of the shady spot of sunlight filtering through foliage which the semi-shade plants and the shade plants prefer is incomparably greater than a fraction occupying the spectrum of the sunny spot of sunlight filtering through foliage which the $C_3$ plants other than the semi-shade plants and the shade plants prefer.

This suggests that, for the semi-shade plants and the shade plants, both of the ratio of R/B and the ratio of R/FR should be changed to be less than those of the bare field, and that the ratio of R/FR is a more important factor than the ratio of R/B.

On the other hand, in the case of the sunny spot of sunlight filtering through foliage which the $C_3$ plants other than the semi-shade plants and the shade plants prefer, an absolute value of the changed value of the ratio of R/FR in comparison with the bare field is extremely small, compared to the shady spot of sunlight filtering through foliage which the semi-shade plants and the shade plants prefer.

Accordingly, it is suggested that, in the $C_3$ plants other than the semi-shade plants and the shade plants, the ratio of R/B is a more important factor than the ratio of R/FR.

Here, there is a possibility of changing only the important factor of the ratio of R/B. That is, an idea that the pest control may be possible even by the method of irradiating only red LEDs (660 nm) under the sunlight is produced. Therefore, as additional experiments, three types of cultivation experiments of a method of changing at least only the ratio of R/B, a method of increasing both the ratio of R/B and ratio of R/FR, and a typical cultivation method were performed as Experiment 6 (Embodiment 5) below and Experiment 7 (Embodiment 6) below.

(Relationship between Pest Control and Ratio of R/B, and Ratio of R/FR)

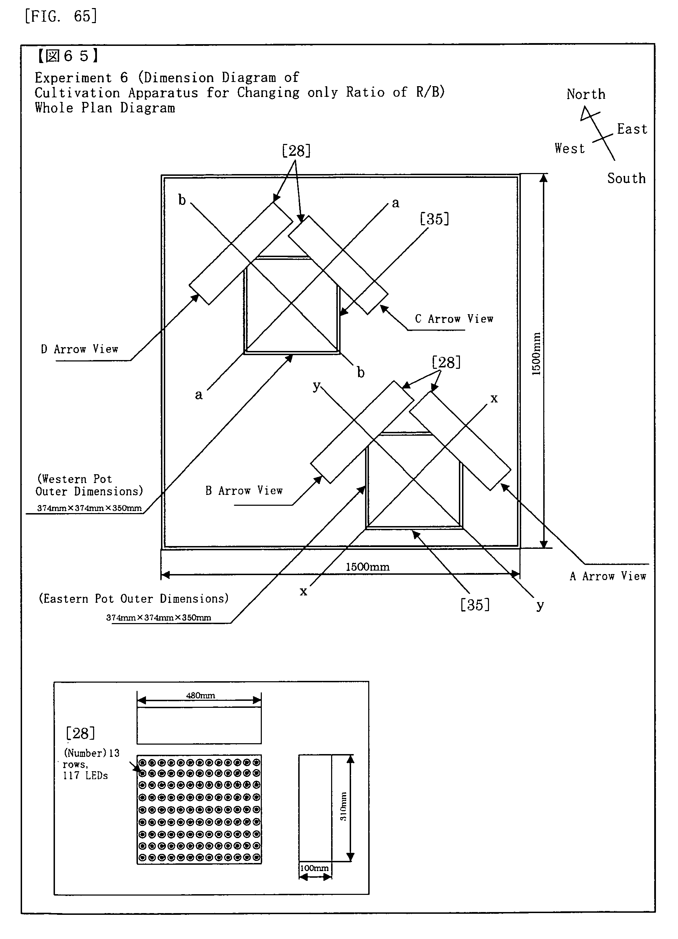

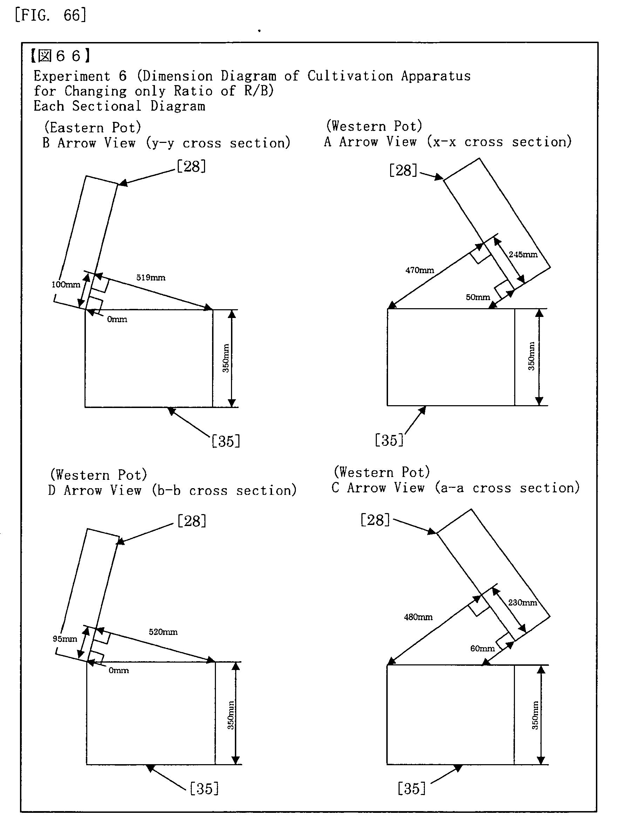

In Experiment 6 (Embodiment 5) below, a pot where an installation irradiating red light R of LEDs was installed showed a result that pest control was impossible due to invasion of pests (see FIGS. 65 and 66).

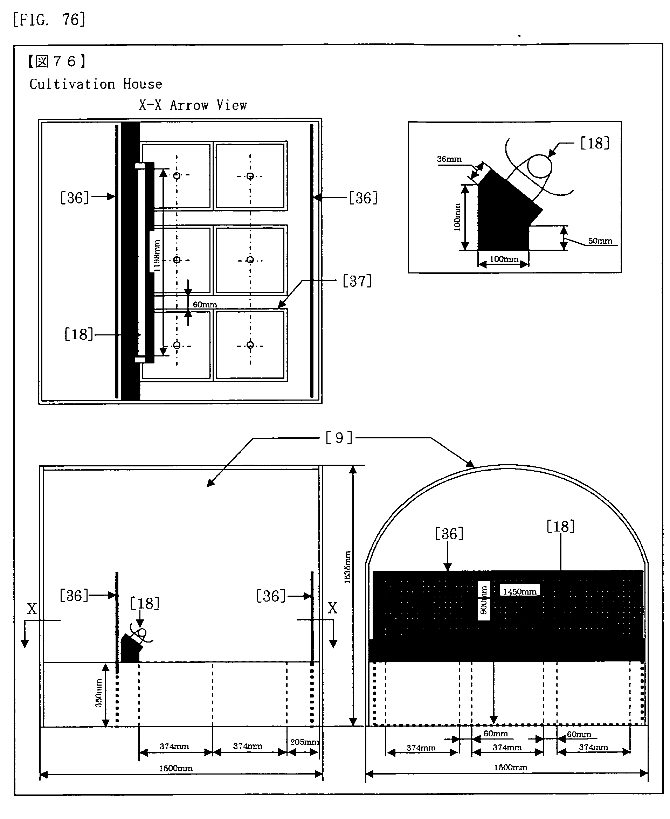

In Experiment 7 (Embodiment 6) below, a house where a fluorescent lamp of red light R of a house 13 was installed showed a result of cultivation that, as soon as the lamp was switched on, the number of flowers was abruptly reduced, and health was lost (see FIG. 76).

It was found from this that the method of making the R/B and R/FR greater than that of the bare field could not obtain good results.

A conclusion obtained from this was that, to control the pests, the ratio of R/B should be greater than that of the bare field, and the ratio of R/FR should be less than that of the bare field.

The veneer board of FIG. 1 completely blocks the sunlight.

Accordingly, only a time zone when the sunlight is introduced into an opening between the veneer boards is a growth time. Since all time zones other than this time zone give a shade by the veneer boards, the growth capability is extremely reduced. To prevent this defect, it is necessary to increase a pitch of the opening between the veneer boards as wide as possible, to reduce a height of each veneer board as low as possible, and to open a hole for introducing light into the veneer plate to increase a hole opening rate as wide as possible. Since the installation of FIG. 1 has an angled C shape, its efficiency is bad when used in agriculture.

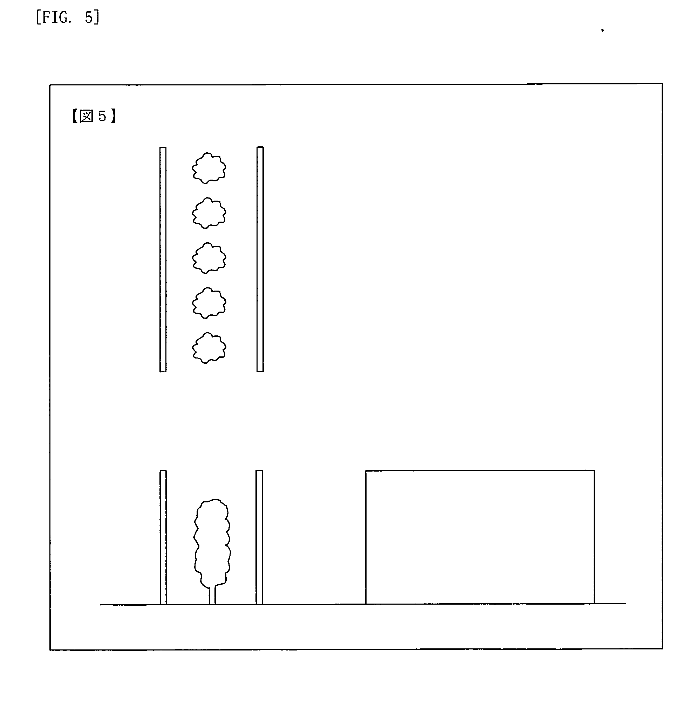

As a method of overcoming this problem, as shown in FIG. 5, the reflective plates may be disposed in a parallel two line shape so as to sandwich the cultivation plants between them.

The experiment was performed in order to know a function of changing the ratio of light such as the pitch of the opening, the height and size of the reflective plate, and the hole opening rate of the reflective plate.

For the measurement conditions, the measurement jig shown in FIG. 9 was used, and the reflective plates were installed nearly parallel to the sunlight in a parallel two line shape. A sunny spot and a bare field of a portion that was sandwiched by the reflective plates were measured.

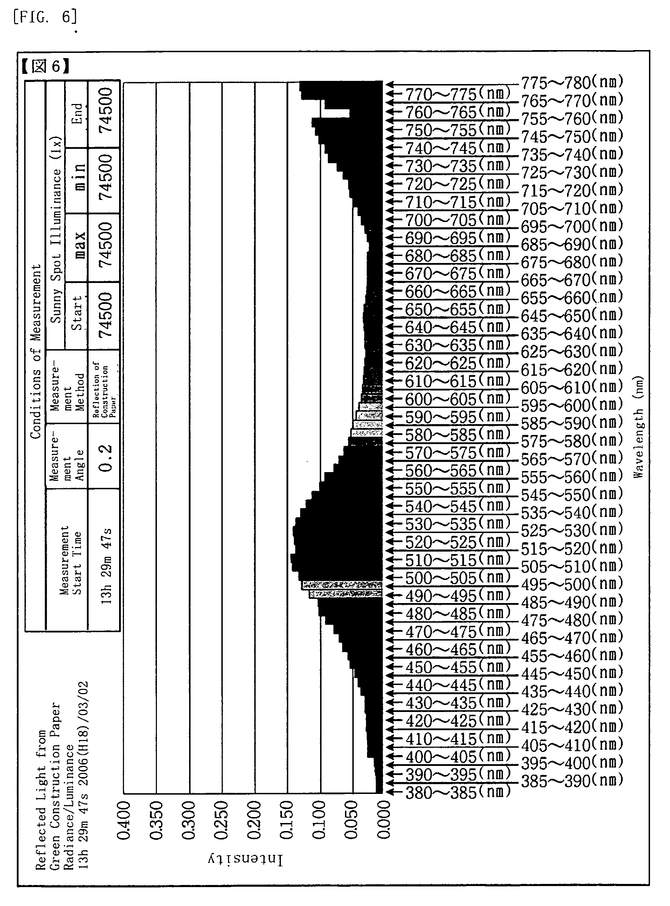

A color of each reflective plate is green having a peak in a wavelength range other than those of B, R, and FR. A spectrum of a color of the green construction paper used in the measurement experiment is shown in FIG. 6. A green peak wavelength ranges from 510 to 515 nm, and the range of the far-red light FR also has a peak lower than the green peak.

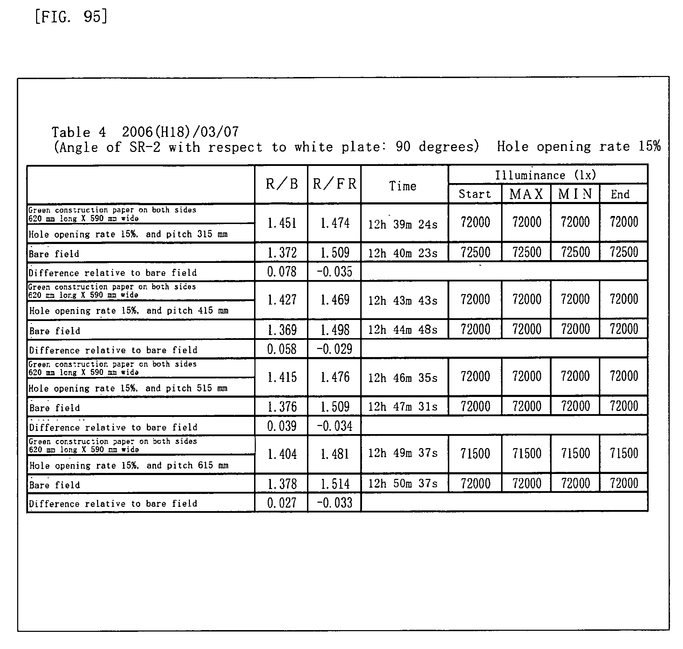

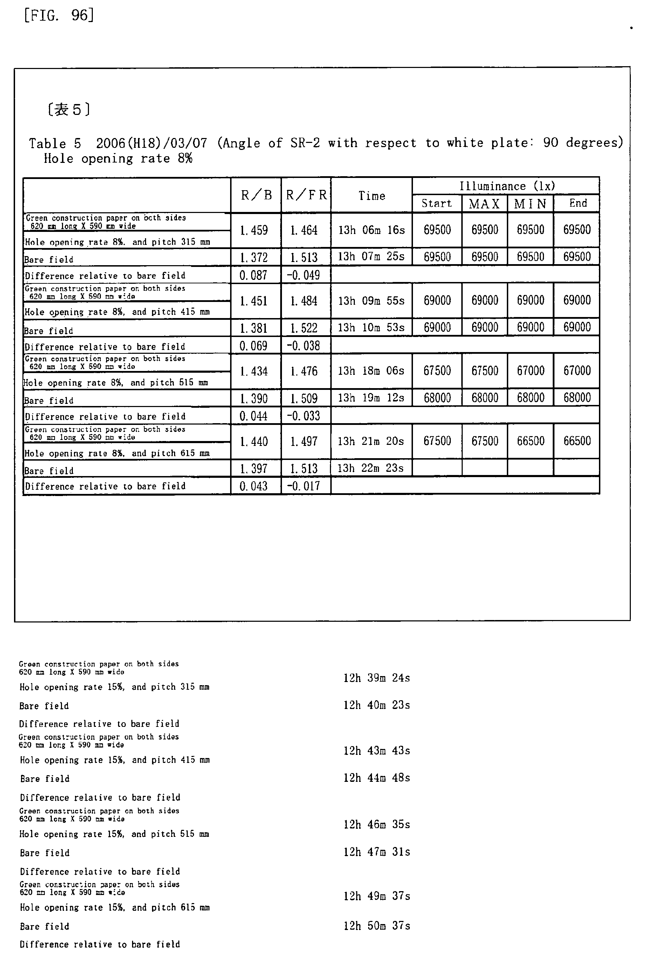

The results of changing the hole opening rate and pitch of the reflective plate to measure the ratio of R/B are shown in FIGS. 95 and 96. As a result of the experiment, the reflective plate having a low hole opening rate greatly changes the ratio of light. The reflective plate having a small pitch of the reflective plate greatly changes the ratio of light.

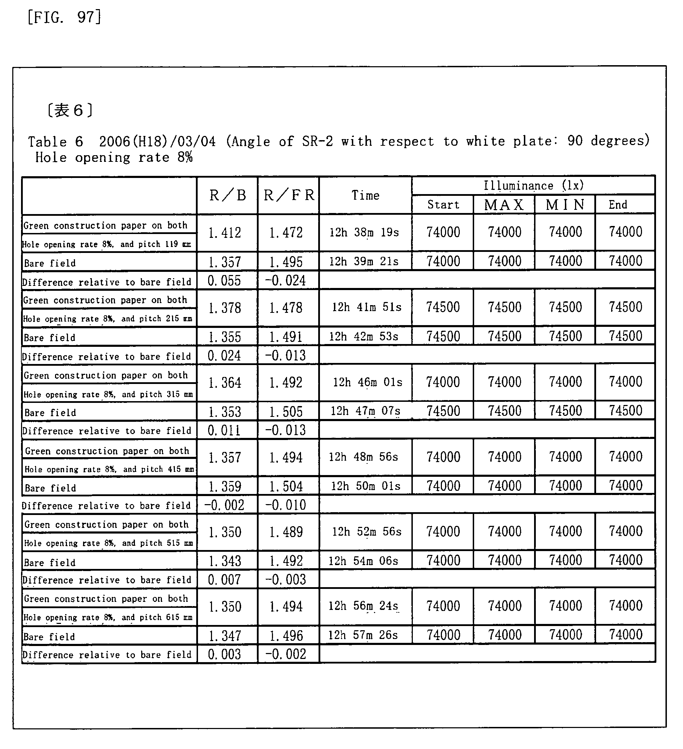

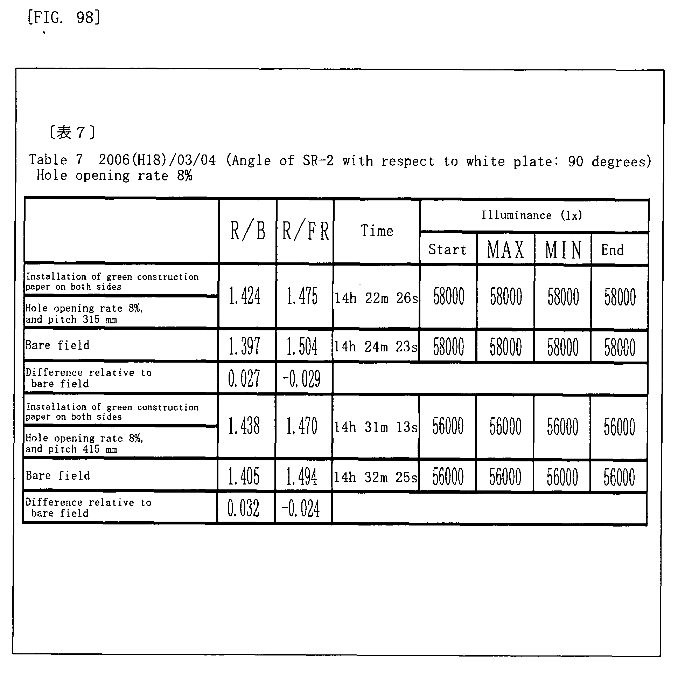

To know an influence of the height of the reflective plate, the results measured using the reflective plates having the same area are shown in FIGS. 97 and 98. The height is 295 nm in FIG. 97, and 620 nm in FIG. 98. As a result of experiment, the reflective plate having a great height greatly changes the ratio of light. To know an influence of the area of the reflective plate, FIGS. 96 and 98 for the results measured when the hole opening rate is 8% and when the height is 620 nm were compared. As a result, the reflective plate having a large area greatly changes the ratio of light.

When the aforementioned conclusions are summarized, the conditions for increasing the change of the ratio of light are given below.

1. It is good for the reflective plate to have a narrow pitch.
2. It is good for the reflective plate to have a low hole opening rate.
3. It is good for the reflective plate to have a great height.
4. It is good for the reflective plate to have a large area.

Comparing FIG. 96 and FIG. 91 in which the variation in ratio of light is most efficiently increased, while wood boxes were disposed at large pitches and had an aperture ratio of zero, since a height and an area of the reflective plate were very large, the variation in ratio of light was 5 to 6 times at a pitch of 615 mm. Even when compared with a pitch of 315 mm, the variation in ratio of light was 2.5 to 2.9 times.

As described above, in comparison with the reflective plate having a color other than B, R and FR, when the reflective plate had a color of B, R and FR, sunlight was shone onto and reflected by the reflective plate to vary the ratio of light, and when the reflective plate had blue light B, since the wavelength of B was reflected from the reflective plate, the ratio of R/B was offset.

In the case of the red light R, since the wavelength of R was reflected from the reflective plate, an absolute value of the variation in ratio of R/B was increased by the wavelength of the reflected R. In addition, even in the case of the far-red light FR, since the wavelength of FR was reflected from the reflective plate, an absolute value of the variation in ratio of R/FR was increased by the wavelength of the reflected FR.

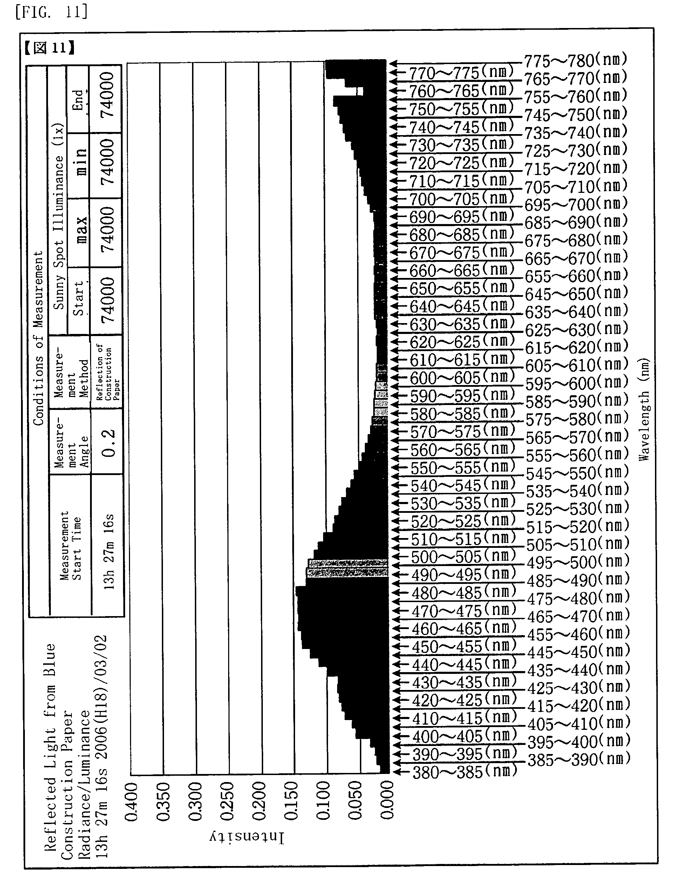

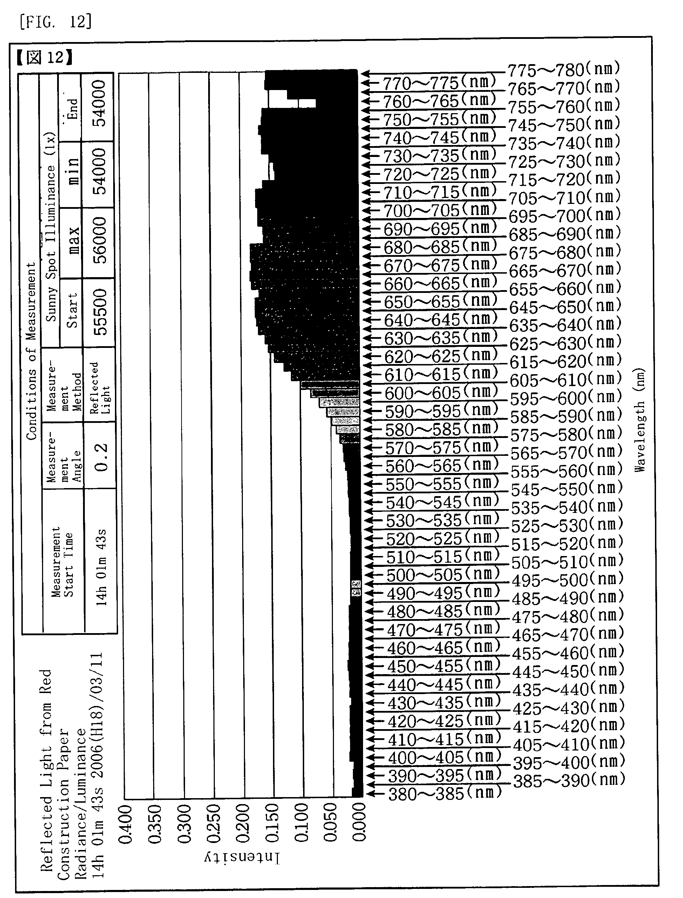

Spectra of colors of construction paper of B and R used in the measurement experiment are referred to in FIGS. 11 and 12.

A peak wavelength of the blue of B was 480 to 485 nm, and the wavelength of the far-red light had a peak wavelength lower than that of the blue.

Since the peak wavelength of the red of R was 665 to 670 nm and had the peak wavelength of the far-red light having a force substantially equal to the red, it should be recognized that the colors of the construction paper were two colors of the red wavelength R and the far-red light FR.

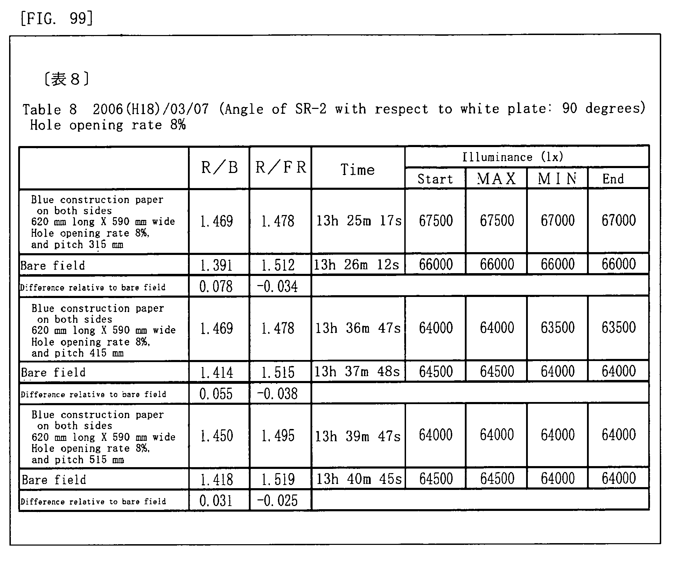

The measurement experiment using the blue construction paper having the spectrum shown in FIG. 11 is referred to in FIG. 99.

Consequently, as described above, since the two colors were offset by each other, a function of varying the ratio of R/B was low.

Accordingly, the color should not be used as the color of the reflective plate.

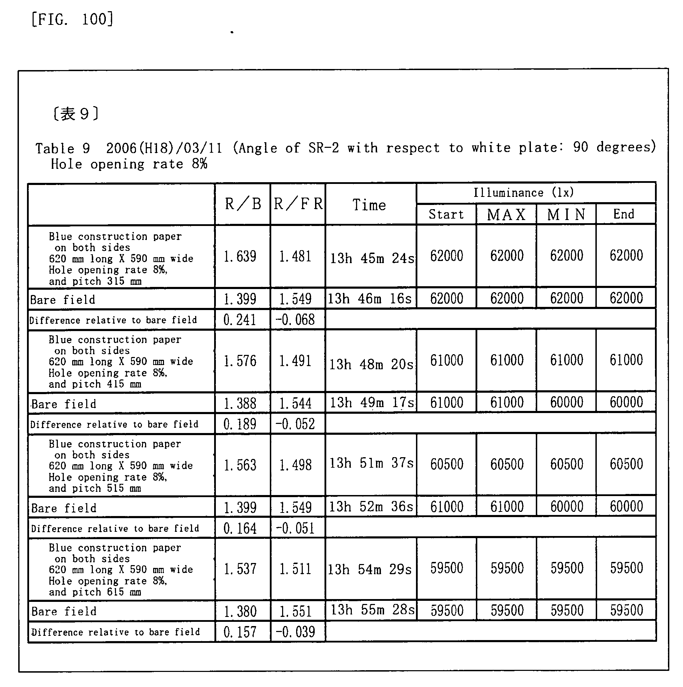

Results of the measurement experiment using the red construction paper of the spectrum shown in FIG. 12 are referred to in FIG. 100.

In addition, in order to compare functions of increasing the ratio of R/B, FIG. 1 shows an angled C shape, and FIG. 5 shows a parallel two line shape, which is to be changed into the angled C shape by installing the red construction paper when the pitch is 415 mm.

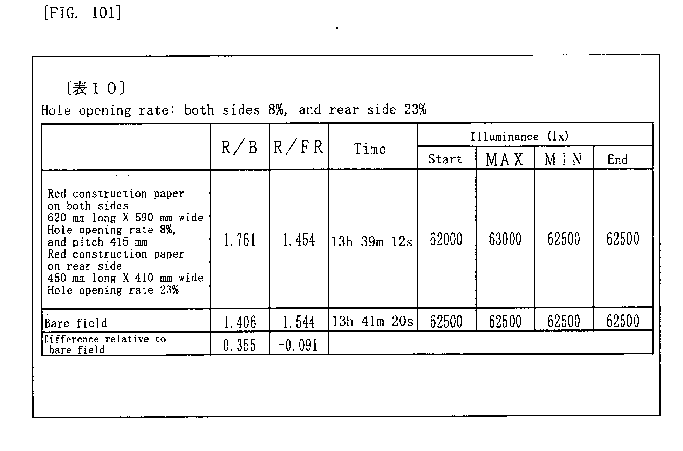

The experiment results in this state are referred to in FIG. 101. Conclusions are described as follows.

5. The blue light B should not be used as the color of the reflective plate.
6. The color having the wavelength range of both of the red light R and the far-red light FR is used in the reflective plate, and has the largest function of varying the ratio of light.
7. In comparison with the reflective plate having the parallel two line shape, the angled C-shaped reflective plate having a large reflecting surface has a large function of varying the ratio of light.

FIG. 95 shows results of (an angle of SR-2 with respect to a white plate: 90°) an aperture ratio of 15% on March 7, 2006, and FIG. 96 shows results of (an angle of SR-2 with respect to the white plate: 90°) an aperture ratio of 8%, a height of 295 mm and a length of 620 mm (a reflective plate dimension) on March 7, 2006.

In addition, FIG. 97 shows results of (an angle of SR-2 with respect to the white plate: 90°) an aperture ratio of 8%, a height of 620 mm and a length of 295 mm (a reflective plate dimension) on March 4, 2006.

Further, FIG. 98 shows results of (an angle of SR-2 with respect to the white plate: 90°) an aperture ratio of 8% on March 4, 2006, and FIG. 99 shows results of (an angle of SR-2 with respect to the white plate: 90°) an aperture ratio of 8% on March 7, 2006.

Furthermore, FIG. 100 shows results of (an angle of SR-2 with respect to the white plate: 90°) an aperture ratio of 8% on March 11, 2006.

In addition, FIG. 101 shows results of (an angle of SR-2 with respect to the white plate: 90°) an aperture ratio of 8% at both sides and 23% at the rear side, on March 11, 2006.

The cultivation place sandwiched by the construction paper became a sunny spot when a progress direction of sunlight was parallel to surfaces of the construction paper. However, when not in parallel, the shady spot was increased as the direction was offset, and when sunlight was perpendicular to the construction paper, the shady spot was maximally increased. The bad rearing caused when the cultivation place became a shady spot.

The problem could be solved by replacing the net with the reflective plate.

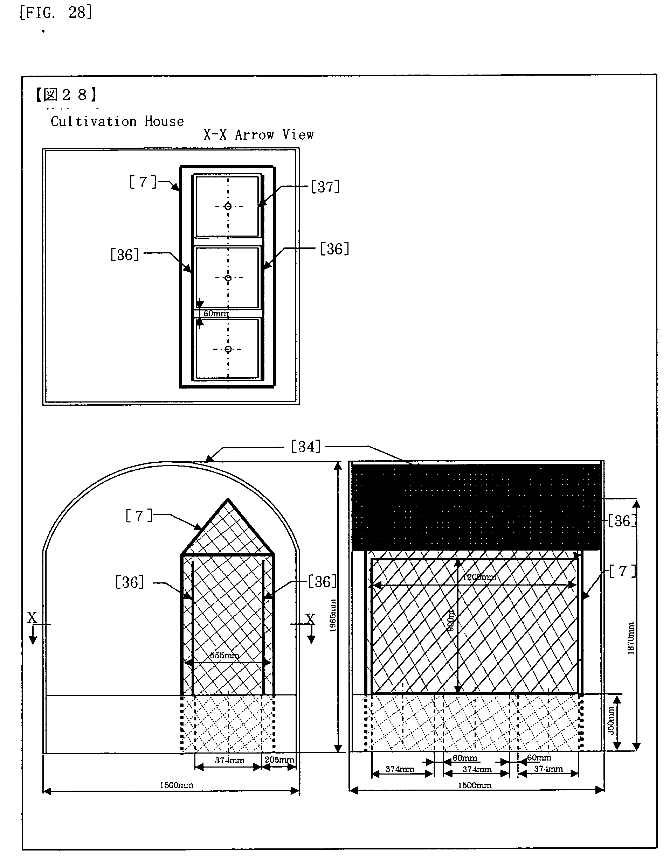

Here, in the following Experiment 1 (First Embodiment), as the cultivation house 5 (FIG. 28) was constructed by installing the red reflective plate and the red net in the typical weatherproof house, the vinyl, the red reflective plate and the red net were combined to obtain an effect that the ratio of R/B was increased to be 0.319 larger than the bare field.

As light is reflected by a material, wavelength energy of the light is attenuated.

At this time, since the attenuation level was B>R>FR, the ratio of R/B is increased and simultaneously the ratio of R/FR is reduced.

Such a physical phenomenon is similar when light passes through a light transmissive material. In order to verify the phenomenon, the following experiment was performed.

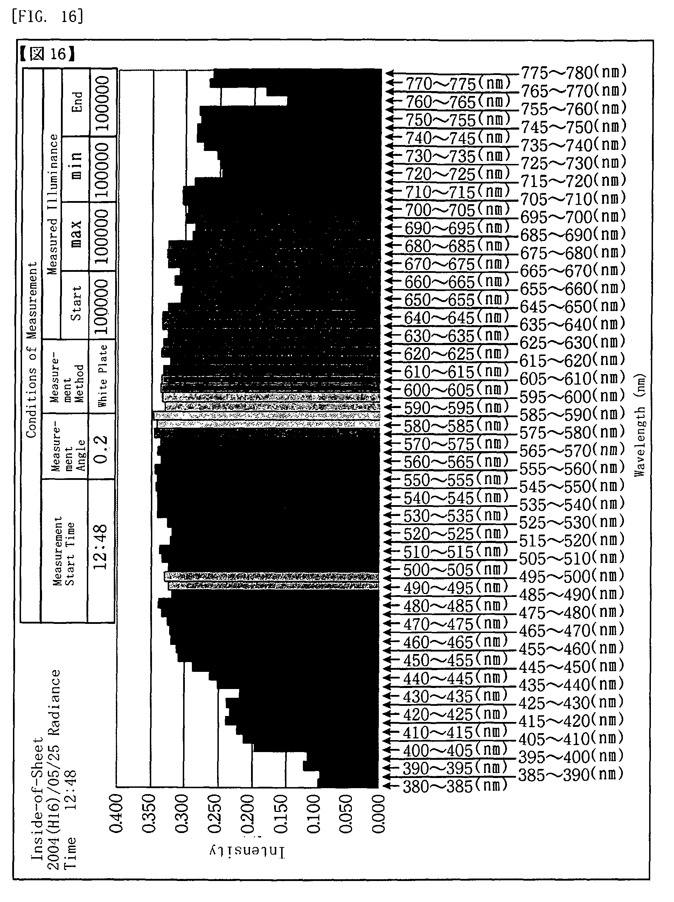

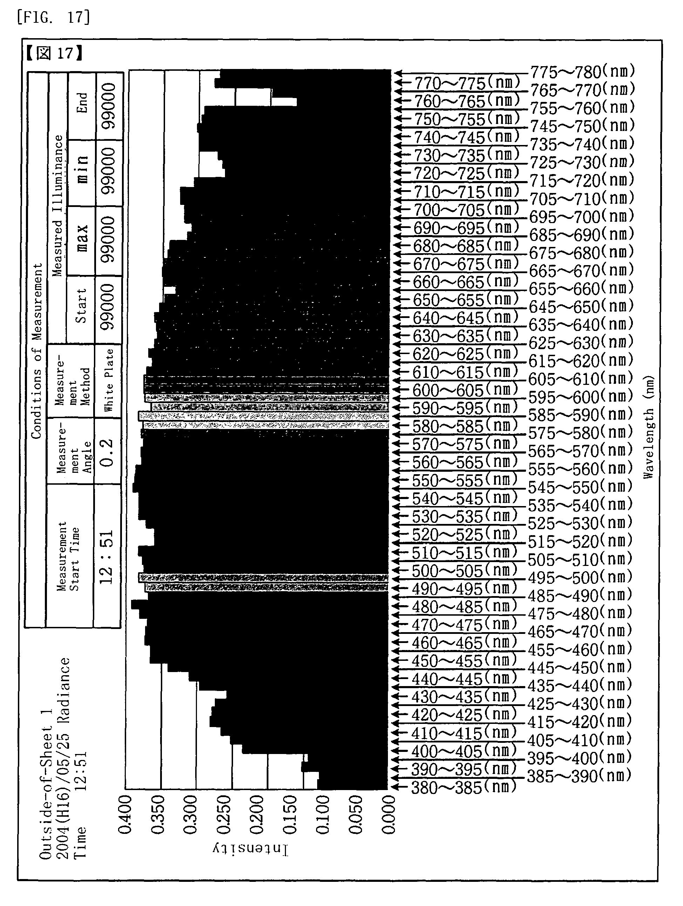

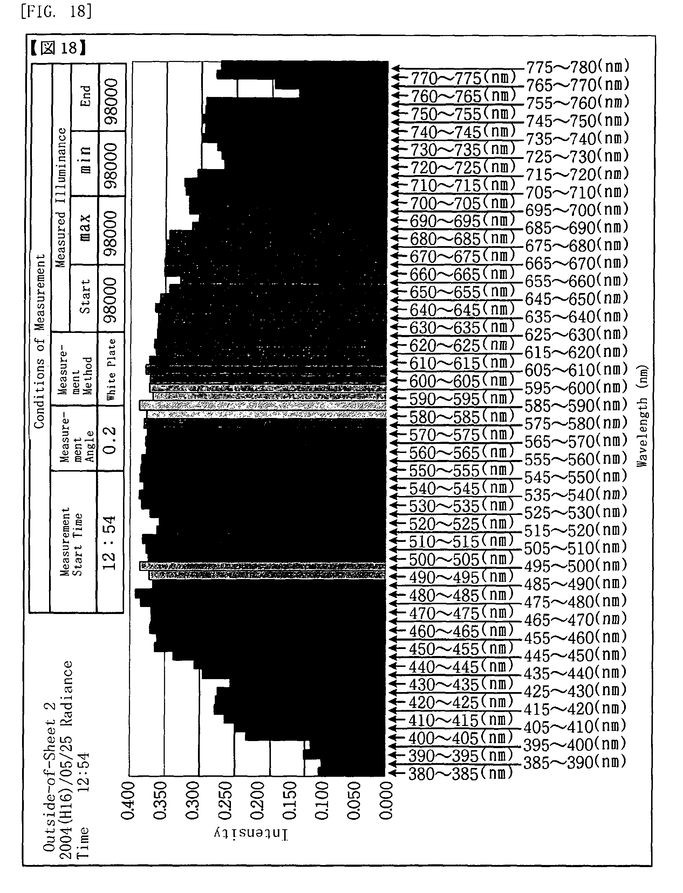

Attachment Data: Measurement conditions of FIGS. 16, 17 and 18 were recorded under experiment conditions in which a radiance meter (SR-2: made by TOPCON) was used, sunlight visible beams passed through the vinyl in the house of a vinyl sheet (when the house was standing, with a length of 2 m, a width of 2.5 m and a height of 2 m) were measured (the inside of the sheet: FIG. 16), after 3 minutes, sunlight was measured at the outside of the vinyl sheet (the outside of the sheet 1: FIG. 17), and after 3 minutes again, at the same place outside the vinyl sheet, measurement was performed (the outside of the sheet 2: FIG. 18).

While not described, the SR-2 was fixed with three legs with no movement during three measurements, and the white plate and the SR-2 were disposed at the same angle to perform the measurement. In addition, the vinyl having a thickness of 0.05 mm was used. As a result, in the radiance, transmittance was [(the inside of the sheet)/(the outside of the sheet 1)+{ (the outside of the sheet 1)-(the outside of the sheet 2)}]x100=[(116.71)/(130.64)+{(130.64)-(130.62)}] $\times$ 100=89.32%.

(Measurement Time Difference)

The measurement day was a very sunny day, and the illuminance was stable during the measurement time of 35 seconds (FIGS. 16 to 18). That is, a decrease in brightness of sunlight generated due to a time difference of 3 minutes was calibrated by adding a difference between the outside of the sheet 1 and the outside of the sheet 2 of the above equation to the outside of the sheet 1. Calibration accuracy was measured under the condition that, when a decrease in brightness for 3 minutes from the outside of the sheet 1 to the outside of the sheet 2 is equal to that for 3 minutes from the inside of the sheet to the outside of the sheet 1, the calibration accuracy is 100%.

As can be seen from Measurement Conditions of FIGS. 16, 17 and 18, in reality, both of a decrease in brightness between the inside of the sheet and the outside of the sheet 1 and a decrease in brightness between the outside of the sheet 1 and the outside of the sheet 2 were 1,000 lux.

That is, the inside of the sheet was measured at 12:48 and the illuminance during the measurement was 100,000 lux, the outside of the sheet 1 was measured at 12:51 and the illuminance during the measurement was 99,000 lux, and the outside of the sheet 2 was measured at 12:54 and the illuminance during the measurement was 98,000 lux.

As the time elapsed, the sun descended, and as the illuminance was reduced, a measurement error was 1-{ (99,000÷100,000) $\times$ 100} =0.01%, and a measurement error of the ratio of light was 0.01%.

In addition, an error due to a lapse of 6 minutes was 1-1(98,000÷100,000) $\times$ 100} =0.02%.

While an angle of the sun after descending for 6 minutes was not calculated with regard to the above error, even though the measurement error occurring due to fine variation in angle was added to the error, considering that there was no movement during three measurement operations of FIG. 7 of the measurement method, sunlight was not precisely perpendicular to a white plate as shown in FIG. 7, and brightness measurement accuracy of a measurement device was within a range of $\pm$ 2.5% (eggplants), even though the error was not calibrated according to the above equation, measurement values measured with a small time difference of about 6 minutes were considered to be treatable as constant quantitative values.

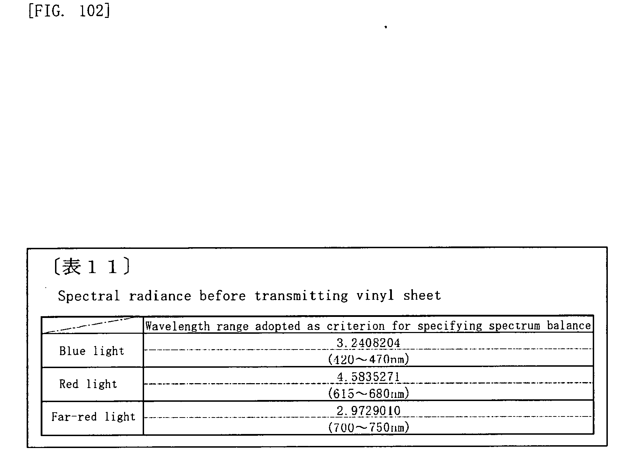

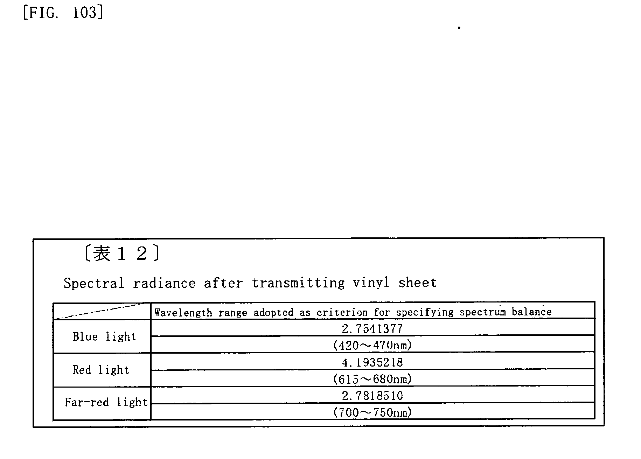

Variations in ratio of light before and after sunlight passed the vinyl sheet are referred to in Lookup Tables of FIGS. 102, 103 and 104.
Since the measurement time differences between the inside of the sheet, the outside of the sheet 1 and the outside of the sheet 2 were each 3 minutes, the following equation was obtained by adding a difference between the outside of the sheet 1 and the outside of the sheet 2 to the outside of the sheet 1.

Sunlight spectrum of the outside of the sheet corresponding to the measurement time of the inside of the sheet = (spectrum of the outside of the sheet 1) + {(spectrum of the outside of the sheet 1)-(spectrum of the outside of the sheet 2)}.

The spectrum obtained from the equation was the sunlight before passing through the vinyl sheet, and the measurement value of the inside of the sheet was the sunlight after passing through the vinyl sheet. The sunlight spectrum of the outside of the sheet corresponding to the measurement time of the inside of the sheet was calculated using the equation to calculate the ratio of light.

The ratios of light before and after the sunlight passed through the vinyl are referred to in FIG. 104.

When the sunlight passed through the vinyl, the ratio of R/B after the pass was increased larger than before the pass, and the ratio of R/FR was reduced smaller than before the pass. This was a physical phenomenon in which transmittance is reduced because a level of attenuation is increased in reverse proportion to a wavelength.

As the sunlight passed through the vinyl sheet, the ratio of R/B was varied to be 0.108 larger than before the pass and the ratio of R/FR was varied to be 0.034 smaller than before the pass.
According to the experiment results, it was verified that, as the sunlight passed through the light transmissive material, the same physical phenomenon as when sunlight is reflected by a material occurred to vary the ratio of light.

(Influence on Ratio of Light by Light Transmissive Material)

The experiment was performed to check what difference occurred in functions of variation in ratio of light due to factors such as a material, a thickness and a color density of the light transmissive material.

With regard to the color, according to the following experiment in which sunlight was reflected by a material, it was verified that a color having both of the red light R of a wavelength range from 615 to 680 nm and the far-red light FR of a wavelength range of 700 to 750 nm had a function of maximally varying the ratio of light.
An influence on the ratio of light of the color was the same in both of reflection and transmission of light.
That is, reflection of color means that the light is colored to the color to transmit therethrough.
Here, in order to check the above phenomenon, ratios of light were measured at thin pink vinyl and transparent vinyl on which red paint was sprayed, respectively. A color spectrum of the thin pink vinyl is referred to in FIG. 19.

FIG. 19 shows the spectrum including a plurality of peaks. The largest peak was within a wide range of 605 to 685 nm, and two second peaks were the far-red light FR of a range from 710 to 715 nm and the blue light B of a range from 460 to 465 nm. That is, the spectrum includes spectra of all visual beams of a range of 380 to 780 nm.

The spectrum of the color that the red paint was sprayed to the transparent vinyl is referred to in FIG. 20. The spectrum includes a plurality of peaks but had little wavelength of a range of 600 to 380 nm. The red had peaks at ranges of 660 to 685 nm, 695 to 715 nm, 735 to 760 nm, and 770 to 780 nm. The measurement results are referred to in FIG. 105 (Table A08).

Since the color including a large amount of B of the ratio of R/B has a function of reducing the ratio of R/B, while the red paint having little B was sprayed, the color had a larger function of increasing the ratio of R/B than the pink color having a large amount of B.

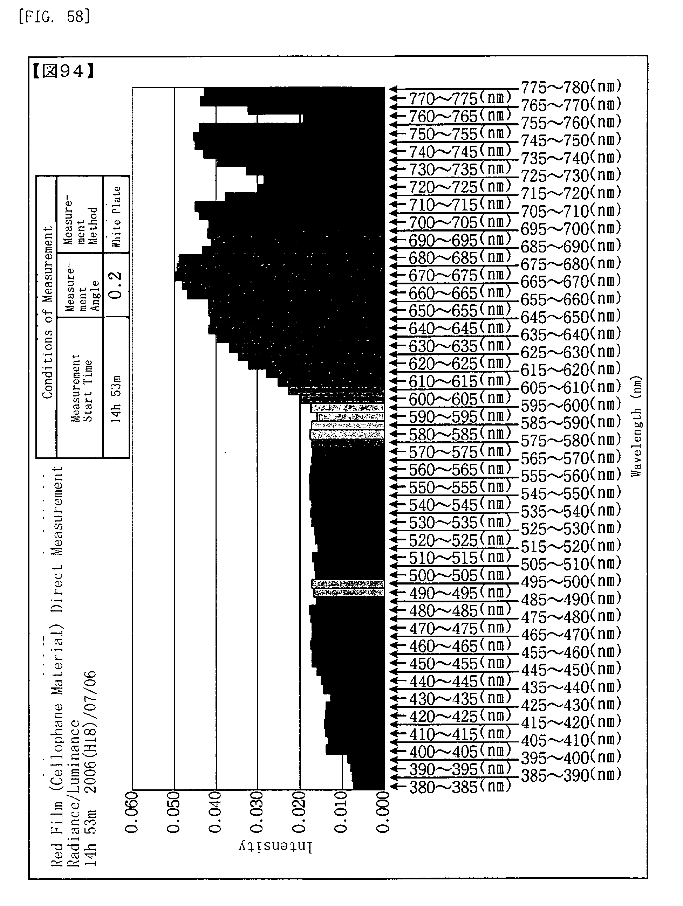

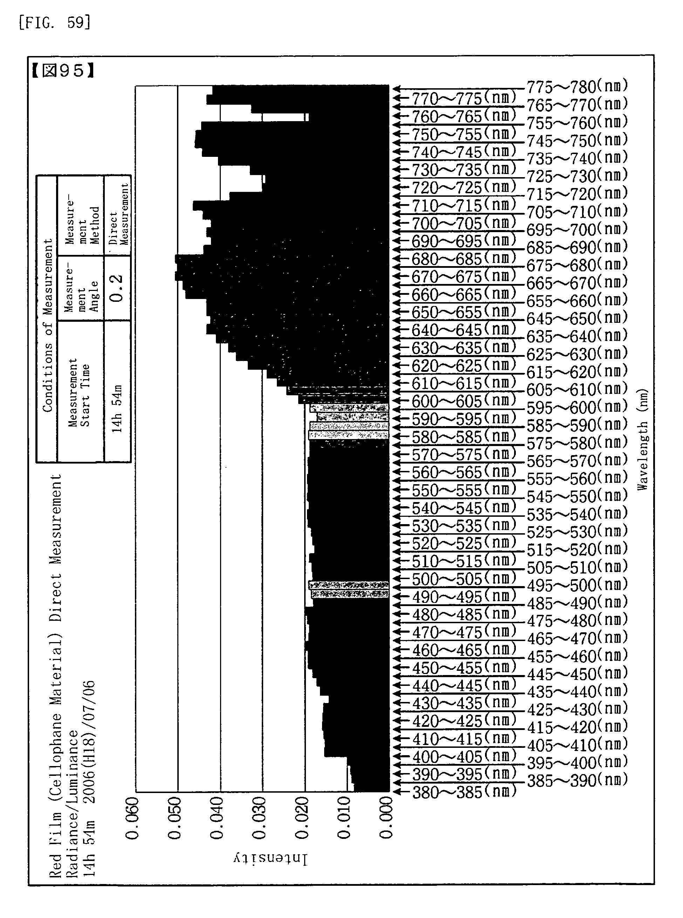

Next, the ratio of light of the red film, which is a commercially available product, was measured.
The red film formed of cellophane had the spectrum of red referring to measurement values measured at 14:53, and measurement values measured at 14:54 on July 6, 2006 (see FIGS. 58 and 59). While the spectrum had several peaks within regions of the red light R and the far-red light FR, the spectrum also included green light and blue light, which are a half or less of R or FR.

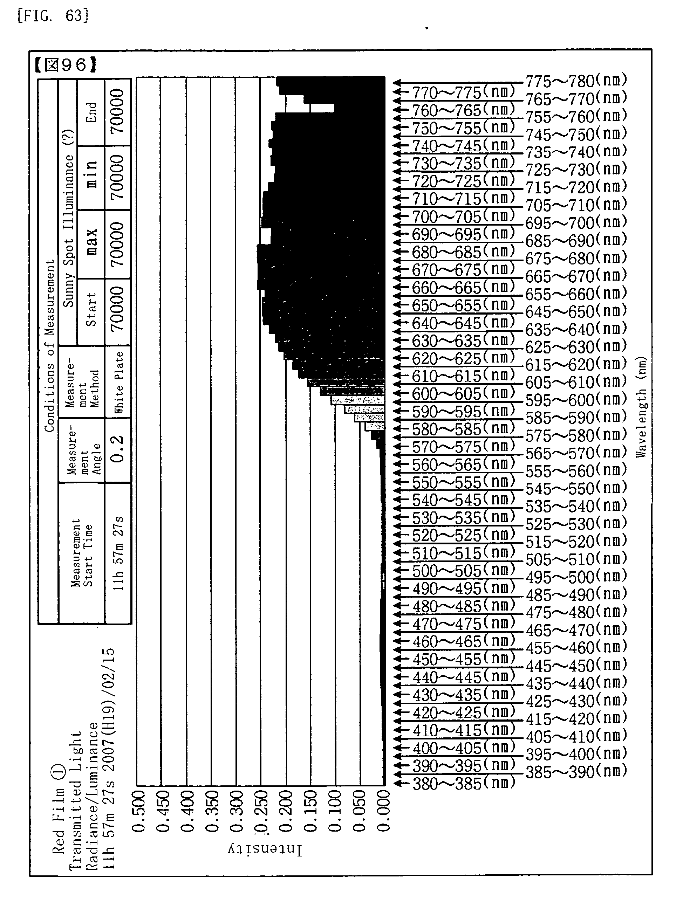

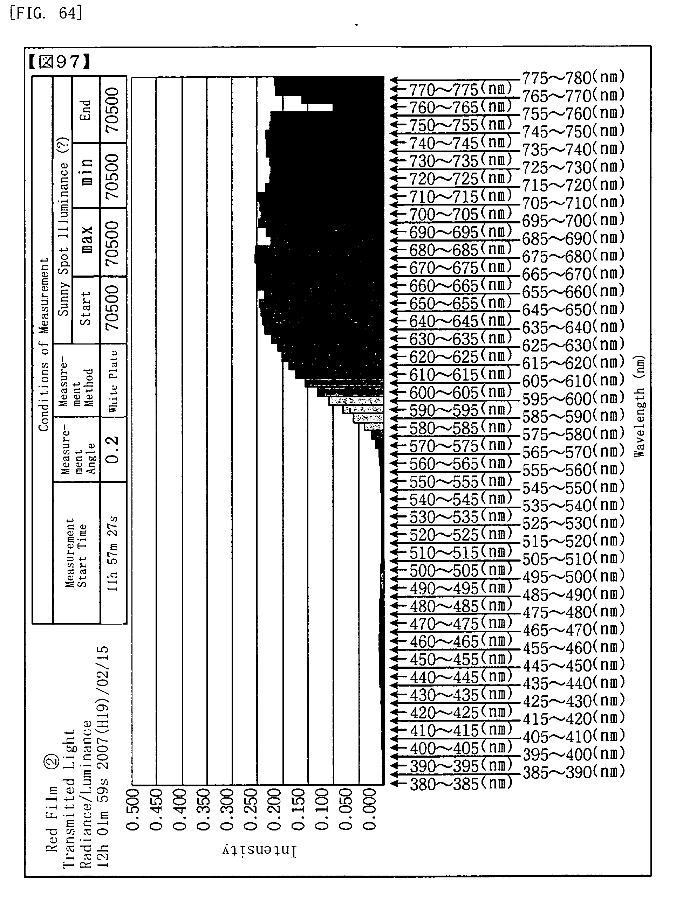

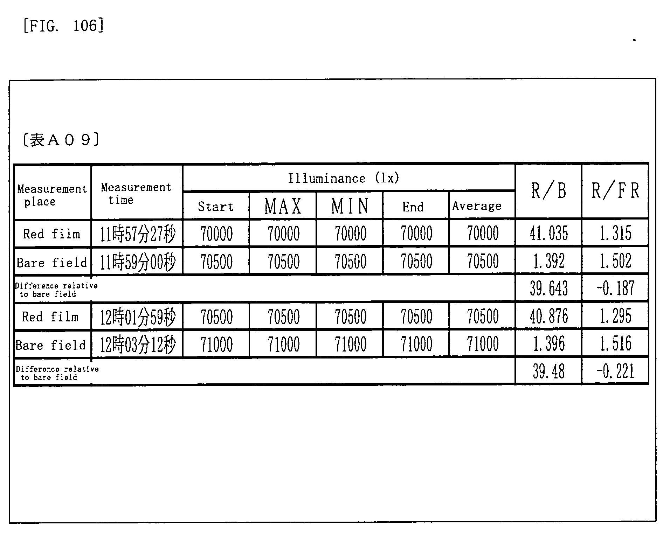

The SR-2 and the white plate were entirely surrounded by the red film, and sunlight transmitted through the red film was measured.
The measurement results are referred to in FIG. 106 (Table A09). The spectrum of the transmitted light was measured at 11:57:27 and 12:01:59 on February 15, 2007 (see FIGS. 63 and 64). The spectrum of the transmitted light had included little wavelength around 570 nm or less. This is a property of a cellophane material. It is well known that, when the blue light is almost cut, the photomorphogenesis cannot be normally performed, causing malformation of plants.

<Conclusions>

8. While illuminance of the transmitted sunlight was lower than that of the reflected sunlight, a function of varying the ratio of light was increased.

9. The color used in the light transmissive material had wavelengths of the color reflecting light of the wavelength range of the red light effect of the photomorphogenesis and the color reflecting light of the wavelength range of the far-red light effect of the photomorphogenesis, and wavelengths of the other colors, (the less, the better). In particular, it is preferable to exclude the blue light of a reaction under strong light of the photomorphogenesis.

In order to investigate how a thickness of the vinyl is related to the function of varying the ratio of light, the following experiment was performed.

According to the above experiment, it was known that one sheet of vinyl having a thickness of 0.05 mm made the ratio of R/B about 0.103 to 0.108 larger than the bare field.

Here, four sheets of vinyl having the same thickness were installed at the house, and the ratio of light was measured. The measurement results are referred to in FIG. 107 (Table 14) and FIG. 108 (Table 15).

< 2006, November 20 (Monday)>: Cultivation House 7 (eggplants) lighting environment measurement (Third Embodiment)

Measurement Conditions: In the cultivation house 7, sunlight passed through fourfold vinyl was measured.
SR-2 Power ON 10:40
Calibration 11:43/12:38

Cultivation House 7 (Eggplants): Illuminance Measurement of Inside and Outside

<Conclusions>

10. When the thickness of the light transmissive material was increased, the function of varying the ratio of light was also improved.
However, as the thickness was increased, the transmittance was reduced.

11. It was preferable that the function of varying the ratio of light was improved while maintaining a high transmittance by thinning colors of the R and FR, rather than increasing the thickness.

Referring to FIG. 107 (Table 14) and FIG. 108 (Table 15), sunlight illuminance in the winter was 70,000 lux or less around 1:00 P.M. Moreover, it was a value measured on a sunny day.
Accordingly, in plants that must have high photosynthetic rate saturation light intensity, for example, since the eggplants had 40,000 lux and the tomatoes had 70,000 lux, not only the light transmissive material but also the reflective plate became difficult to use.
Moreover, in reality, increasing the thickness of the light transmissive material could not be considered. In this case, the ratio of light was varied using the artificial lighting. In addition, both of the artificial lighting and the reflective plate may be used.

In order to vary the ratio of light, i.e., the spectrum with the artificial lighting, it was necessary to use light having a certain wavelength range.
The blue light is light of a wavelength range of the blue light of the reaction under strong light of the photomorphogenesis, the red light is light of a wavelength range of the red light effect of the photomorphogenesis, and the far-red light is light of a wavelength range of the far-red light effect of the photomorphogenesis.
Comparing the peak wavelength having the strongest function and the wavelength of the weak function, since the peak wavelength could be used to perform the function according to the purposes at a low illuminance, electric charges could be reduced.
That is, when there was no light source of the peak wavelength, the wavelength of the function adjacent to the peak may be used with reference to FIG. 57. The reason for this is that there is no light source of the entire wavelength, and in reality, there is only a light source of a certain wavelength.
For example, a light emitting diode (LED) had only blue with a peak of 470 nm. In addition, since emitted light was different according to a type of a fluorescent material, a large amount of fluorescence within the visible beam of 380 to 780 nm had not been found yet.

Light emitting devices that can selectively emit light through emission of the light emitting material include a fluorescent lamp, a Braun tube for a television, an LED, an organic EL, a cold cathode light source, and so on, and other various light sources are being developed.
Such light sources had characteristics of emitting light of a parabolic spectrum of a certain wavelength, which was a peak wavelength.

Hereinafter, embodiments will be described in detail.

**First Embodiment**

Cultivation experiments were conducted in accordance with an embodiment of the present invention and a comparative example.

For each of the cultivation experiments, $C_3$ plants excluding shade plants and semi-shade plants were cultivated in an environment including a lighting environment in which a ratio of light of sunlight was changed to be equal to a ratio of light of a sunny spot of sunlight filtering through foliage.

The purpose was to check whether the $C_3$ plants are protected from pests and diseases in such a cultivation environment without pesticides and whether fruits thereof have improved flavor.

Cultivation Experiment 1: Pesticide-Free Cultivation 1. Purpose of Experiment

The cultivation environment was configured such that a ratio of R/B in a cultivation house was larger than in a bare field and, at the same time, a ratio of R/FR in the cultivation house was smaller than in the bare field. It was checked whether eggplants were protected from pests and diseases in such a cultivation environment via pesticide-free cultivation and further whether fruits thereof had improved flavor.

2. Place of Experiment: Shinonome-cho, Kochi, Kochi
3. Period of Experiment: June 16, 2006(H18) to September 26, 2006

4. Cultivation Conditions

4-1: Facility for Cultivation House

A cultivation house in which all other than vinyl and outer sides of pots were painted in red (hereinafter referred to as "red house").

a. Cultivation house 1: A typical weatherproof house was installed far away from the red house.
b. Cultivation house 2: Red reflective plates and blue LEDs were attached to the red house.
c. Cultivation house 3: Red reflective plates and blue nets were attached to the red house.
d. Cultivation house 5: Red reflective plates and nets painted in red were attached to a typical weatherproof house.
e. Cultivation house 6: Red reflective plates were attached to a typical weatherproof house.

4-2: Spectrum of material used to set the same lighting environment (spectrum, ratio of light, etc.) in cultivation house as in 4-3

a. Spectrum of color of a blue net (see FIG. 22).
b. Spectrum of color of a reflective plate to which water paint (red spray) was applied (see FIG. 20).
c. Spectrum of color of oil paint used to make the inside of the cultivation house red (see FIG. 23).
d. Spectrum of a blue LED (see FIG. 24).

4-3: Lighting Environment inside Each Cultivation House

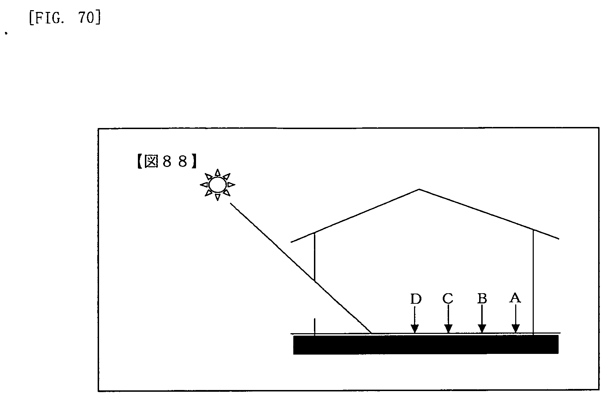

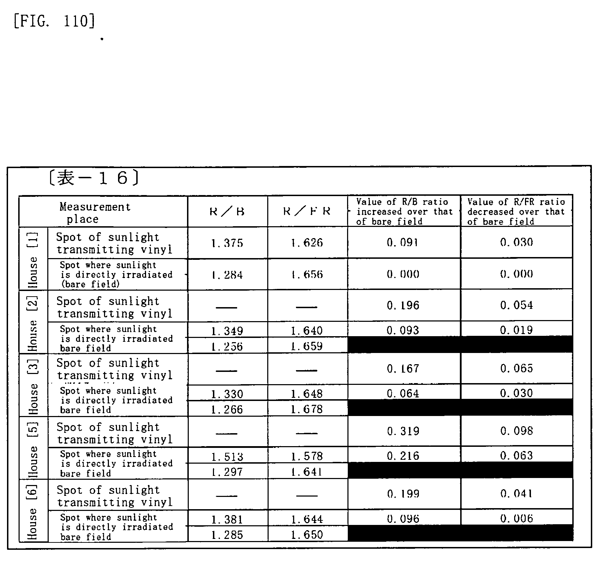

Measurements of the ratios of light of the cultivation houses 1, 2, 3, 5 and 6 are shown in FIG. 110 (Table 16). Among the measurements, the measurement of the house 1 indicates the ratio of light when vinyl transmits sunlight, but may be a ratio of light of sunlight transmitted by the vinyl in a situation in which sunlight is introduced into the house as in FIG. 70.

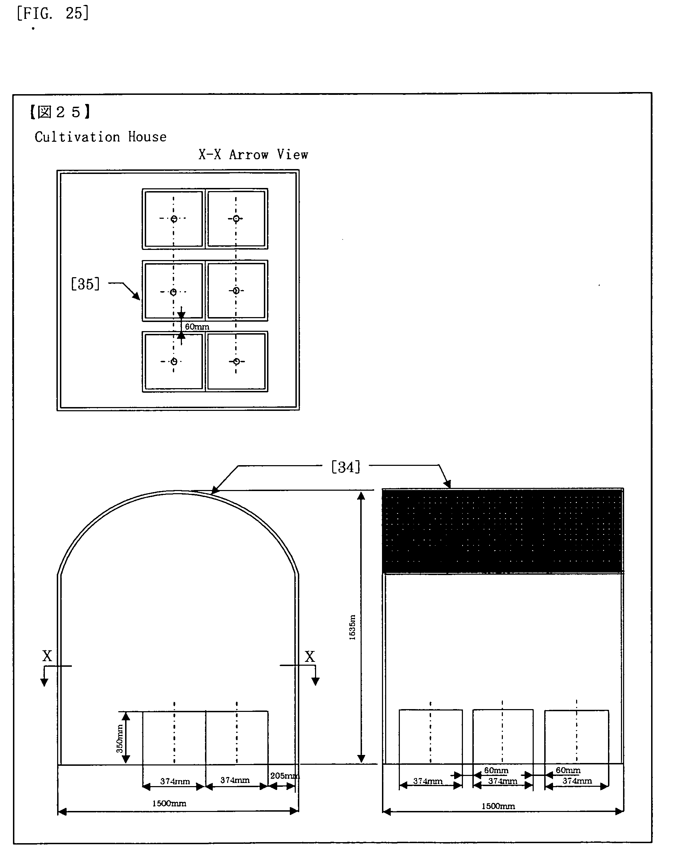

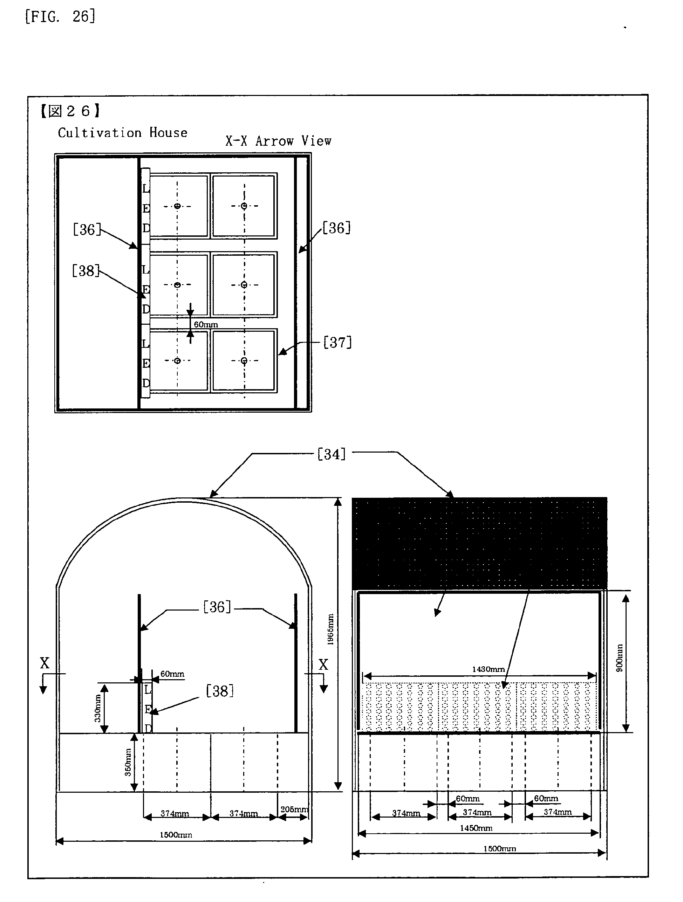

The measurements of the houses 2, 3, 5, and 6 correspond to situations in which the vinyl does not transmit sunlight. This is because the house 1 had a height of 1535 mm referring to FIG. 25, while all of the houses 2, 3, 5, and 6 had a height of 1965 mm referring to FIGS. 26, 27, 28, and 29. Accordingly, since the beds of the latter houses had a height difference of 430 mm, it was difficult for sunlight to penetrate in the house 1. Therefore, with the vinyl of the house 1 transmitting sunlight, a ratio of R/B may increase by 0.091.

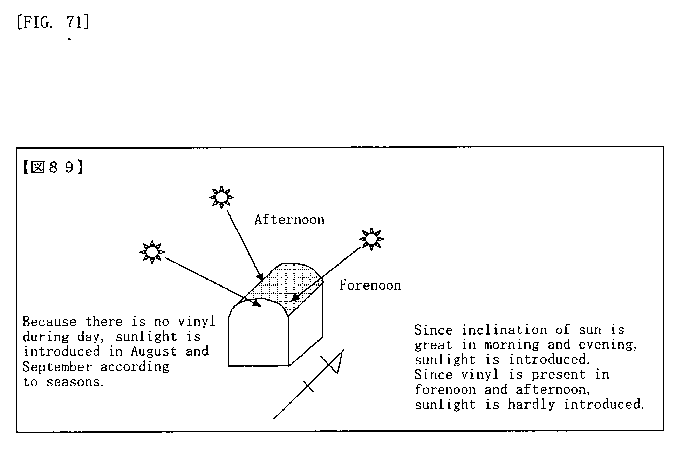

Accordingly, 0.091 may be considered to have been added to ratios of light in the houses 2, 3, 5, and 6. However, from Preliminary Experiment 1 in FIG. 109 (Table A10) (measured on August, 24) measured about a month before this experiment (on September 20), it was seen that the entirety of the house was full with sunlight transmitted by the vinyl because the sun was located at a high position without inclination (See FIG. 71). In this case, the ratio of light in the house E (See FIG. 32) was 0.103.

In addition, the ratio of light in an experiment (FIG. 104) (Table 13) at a place completely encompassed by the vinyl was 0.108. A value of R/B ratio increased over that of the bare field in the house 1 was 0.091 because, as shown in FIG. 70, even the same shady spot became bright as it approached a sunny spot (bare field).

That is, the shady spot A was darkest, and shady spots B, C, and D become bright with the approach to the sunny spot (bare field). This means that the shady spot A had a greatest difference in the ratio of light from the sunny spot (bare field) and the shady spots B, C, and D were reduced in difference with the approach to the sunny spot (bare field). Therefore, Cultivation Experiment 1 conducted from mid-July to late September it employed a sum of the ratio of light in the houses 2, 3, 5, and 6 and 0.103 until early September, and employed the measured value for the pot at a place in which sunlight was not transmitted by the weatherproof vinyl and a sum of the measured value and 0.103 for the pot at a place in which sunlight was transmitted by the weatherproof vinyl in late September. Moreover, the cultivation house 1 was a weatherproof house rather than the red house and did not use a red net or a red reflective plate.

Accordingly, for the pot at the place in which sunlight was not transmitted by the vinyl, the ratio of light in the bare field may be employed. The ratios of light found until early September in accordance with the above method are set forth in FIG. 110 (Table 16).

4-4: Experiment Installation

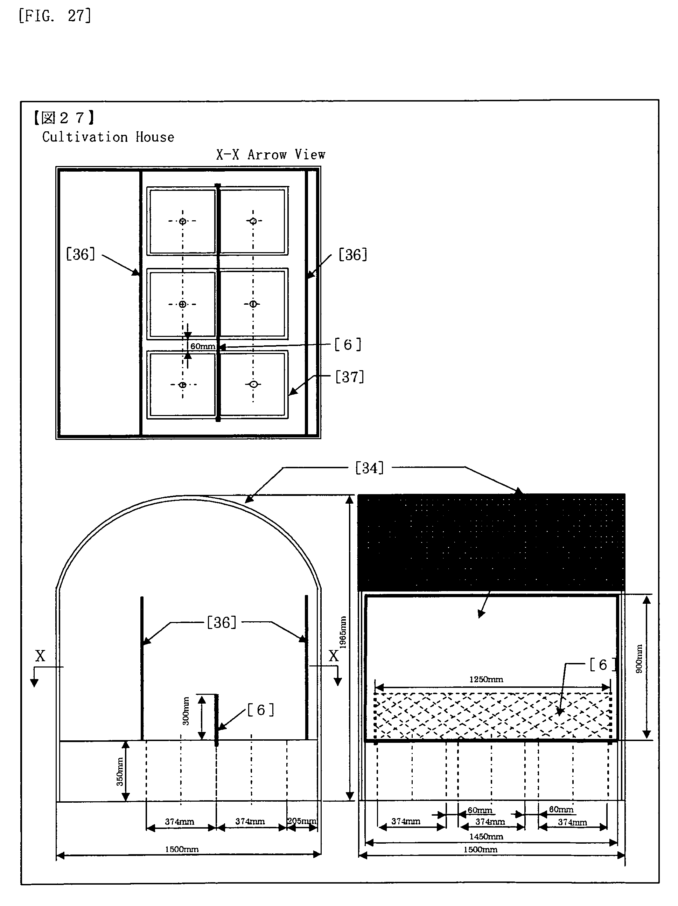

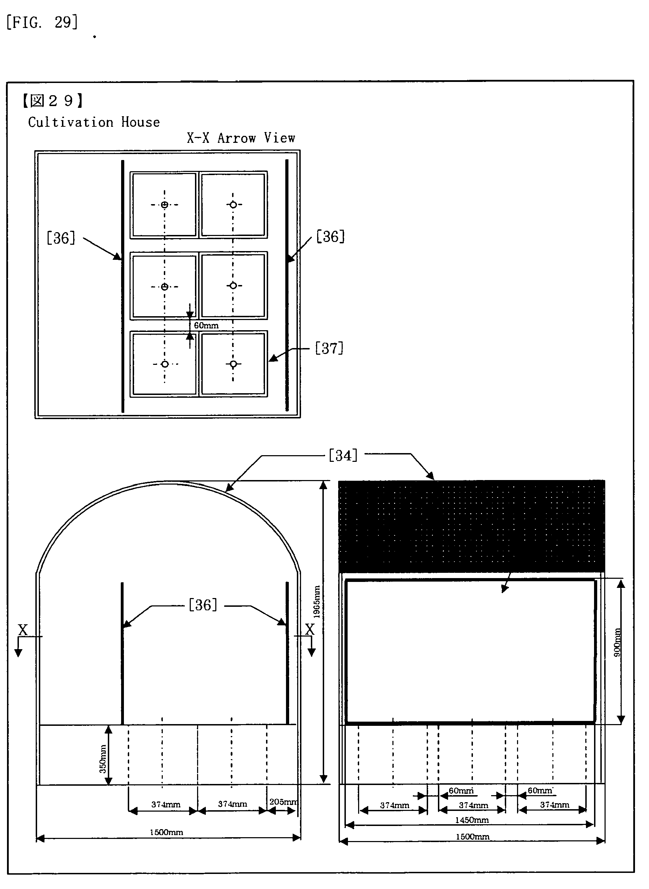

- a. Cultivation house 1: refer to FIG. 25
- b. Cultivation house 2: refer to FIG. 26
- c. Cultivation house 3: refer to FIG. 27
- d. Cultivation house 5: refer to FIG. 28
- e. Cultivation house 6: refer to FIG. 29

5. Cultivation Method

5-1: Eggplant (Senryo No. 2, Kuroyou, Binan, Mizunotakumi)

Operation Sequence

- 8:25 AM: Temperature measurement, watering of water eggplants (4 liters), the day shift raised the reflective plate on the west when it was raining.
- 10:10 AM: Temperature measurement.
- 1:00 PM: The reflective plate was transferred from the west to the east, temperature and humidity were measured, a number of flowers was checked and added to tomato tone, watering (2 liters), only water eggplants (4 liters) (the day before a holiday, the watering amount was twice that of the previous day).
- 3:00 PM: temperature measurement
- Before and after sunset: Watering (each 2 liters), only water eggplants (4 liters) (the day before a holiday, the watering amount was twice that of the previous day), the reflective plate was lowered on the east (timing data recorded) (LEDs were turned off the day before a holiday, turned on on Mondays or 8:25 AM on holidays, and turned on from sunrise to sunset during the week using a timer control).
- 1:00 AM: Temperature measurement.
- 4:00 AM: Temperature measurement, the night worker raised the reflective plate on the west when it was not raining, the night worker never raised the reflective plate on the west when it was raining (the day before a holiday, the reflective plate was not lifted and the reflective plate on the west was raised Monday or at 8:25 AM on holidays)

In the above operation details, raising and lowering of the reflective plate on the east and west and the timing was performed such that, before noon, the reflective plate to the west side of the pot was raised to reflect light of the sun at the east side toward the pot, whereas, after noon, the reflective plate to the east of the pot was raised to reflect light of the sun at the west toward the pot.

This method will be applied to not only this experiment 1 but also the following experiments. Details about this operation manner of the reflective plate may be omitted from the following experiments.

6. Experiment Progress

- June 16 (Friday): Cultivation began.
- July 4 (Tuesday): The timer on the LED in the cultivation house 2 was turned on at 5:15 AM and then turned off at 7:00 PM.
- August 14 (Monday): Exterminated by wormholes in the typical weatherproof house 1.
- August 17 (Thursday): The timer on the LED in the cultivation house 2 was turned off at 5:30 PM.
- August 18 (Friday): The timer on the LED in the cultivation house 2 was turned on at 6:30 AM.
- August 25 (Friday): Exterminated by wormholes in the house 3, which is the red house including red reflective plates and a blue net.
- August 8 (Friday): Exterminated by wormholes in the house 2, which is the red house including red reflective plates and blue LEDs.
- September 16 (Saturday): Exterminated by wormholes in the house 6, which is the typical weatherproof house including red reflective plates.
- September 25 (Monday) to 26 (Tuesday): Exterminated by wormholes in the house 5, which is the typical weatherproof house including red reflective plates and nets painted in red.

7. Considerations of Cultivation Experiment 1

The wormholes first occurred at the house having the blue net and next occurred at the house having the blue LED. The wormholes were more likely to occur near the blue net and blue LED and less likely to occur away from the blue net and blue LED.
This means that the wormhole began from a portion in which a ratio of R/B became smaller due to the reflection or irradiation of blue light.
From this, it can be seen that the prerequisite condition for pesticide-free cultivation is that the ratio of R/B be larger than in the bare field and the ratio of R/FR be smaller than in the bare field.
This is applied to all other cultivation experiments.
This was one of two fundamental accomplishments in all of these experiment results.
From the above experiment, it was discovered that the cultivation houses 2, 3, 5, and 6 including the red reflective plate were superior to the house 1 which was the typical weatherproof house in terms of the repelling of the pests, and further, the cultivation houses including the red reflective plates together with the blue net or blue LED were inferior to the cultivation houses including only the red reflective plates without the blue net or blue LED in terms of the prevention of destruction by pests.
If this is interpreted in connection with the ratio of R/B, more strictly, the value of the R/B ratio increased over that of the bare field at the place in which sunlight was transmitted by the vinyl, and the values of the R/B ratio increased over that of the bare field in the cultivation houses 1, 2, 3, 5, and 6 were 0.091, 0.196, 0.167, 0.319, and 0.199 respectively.
Further, the superiority levels in terms of the prevention of destruction by pests had the order of the cultivation houses 5, 6, 2, 3, and 1. Furthermore, the ratio of R/B, more strictly, the value of the R/B ratio increased over that of the bare field, and the ratio of R/FR, more strictly, the value of the R/FR ratio decreased over that of the bare field at the place in which sunlight transmitted the vinyl were as follows (in the cultivation houses 1, 2, and 3, the measurements were conducted on September 20, and in the cultivation houses 5, and 6, the measurements were conducted on September 21):
| House 1: | R/B:0.091 | R/FR:0.030 | (refer to FIG. 25) |
| House 3: | R/B:0.167 | R/FR:0.054 | (refer to FIG. 27) |
| House 2: | R/B:0.196 | R/FR:0.065 | (refer to FIG. 26) |
| House 6: | R/B:0.199 | R/FR:0.041 | (refer to FIG. 29) |
| House 5: | R/B:0.319 | R/FR:0.098 | (refer to FIG. 28) |

From these measurements, it was concluded as the results of the experiment that, in the lighting environment in which the ratio of R/B was larger than in the bare field and the ratio of R/FR was smaller than in the bare field, the time for which the pests were deterred from the cultivation house was extended.
The plants cultivated from July 16 were eaten by pests from August to September for the following reason. From June to July, the sun was high, and thus sunlight was transmitted by the vinyl and collided with the plants. From August to September, the sun was inclined, and thus a border between the place in which sunlight was transmitted by the vinyl and the place in which sunlight was not transmitted by the vinyl became increasingly adjacent to the bare field in which sunlight is not transmitted by the vinyl but collided with the plants.

In other words, the border is close to sunlight of the bare field. In this border, as described above, both the ratio of R/B and the ratio of R/FR were approximate to those of the bare field, that is, the difference between them became smaller. Three conditions when sunlight completely and directly collides with that place may be considered.

Thus, when the cultivation houses are arranged in a sequence in which a function of repelling the pests is weak, and then the sunlight directly collides with the plants, the ratio of R/B and ratio of R/FR are given together, as follows.

The plants in the cultivation house 1 were exterminated by wormholes when sunlight was transmitted by the vinyl and collided with the plants (R/B: 0.091, R/FR: 0.030).

|  |  |  |
|---|---|---|
| House 3: | R/B: 0.064, | R/FR: 0.030 |
| House 2: | R/B: 0.093, | R/FR: 0.019 |
| House 6: | R/B: 0.096, | R/FR: 0.006 |
| House 5: | R/B: 0.216, | R/FR: 0.063 |

That is, the order of the superiority levels of the cultivation houses in terms of the repelling of pests when sunlight directly collided with the plants in the houses was the same as when sunlight was transmitted by the vinyl and collided with the plants.

Even in case of the cultivation house 5 having the highest level in terms of the prevention of destruction by pests, when the sun was inclined and thus the border between the place in which sunlight was transmitted by the vinyl and the place in which sunlight was not transmitted by the vinyl was located in the house, that is, from September 25 to 26, the plants in the cultivation house 5 were totally destroyed by wormholes. The value of the R/B ratio increased over that of the bare field in the house 5 in which sunlight directly collided with the plants in the house was 0.216.

From the comparison of the cultivation house 5 with the other cultivation houses 3, 2, and 6, it is confirmed that a change rate of the ratio of light at the cultivation house 5 may be large due to such a difference. From this, regarding the cultivation houses 3, 2, and 6, when the sun was inclined and thus the borders between the place in which sunlight was transmitted by the vinyl and the place in which sunlight was not transmitted by the vinyl were located in the respective houses, the plants in the respective cultivation houses were totally destroyed wormholes.

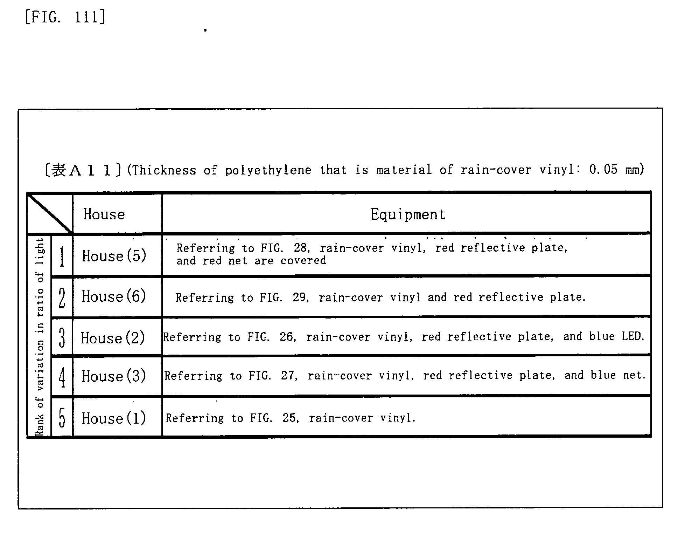

The order of the change rates of the ratio of light for the cultivation houses 1, 2, 3, 5, and 6, and the state comparison between the apparatuses for reflecting and/or transmitting sunlight and the artificial lighting equipment are described below in FIG. 111 (Table A11).

All of the cultivation houses may have the rain-blocking function vinyl. Thus, the house including the red device to reflect and/or transmit sunlight at the maximum level had the largest change rate of the ratio of light. The houses including the blue LED and/or the blue net to reduce the change rate of the ratio of the light were inferior in terms of the prevention of destruction by pests to the house not including the blue LED and/or the blue net. However, the houses including the blue LED and/or the blue net for reducing a variation in the ratio of light were superior in terms of the prevention of destruction by pests than the houses not including the red reflective plate.

In conclusion, the lighting environment in which the pests may be less likely to approach to the eggplants needs to employ the installation to reflect and/or transmit sunlight such as the installation using the spectrum of red as shown in FIG. 20 and FIG. 23 and thus the installation as shown in FIG. 28 capable of controlling the pests or any installation to change a ratio of light to an extent larger than by the aforementioned installation is needed.

8. Conclusions of Cultivation Experiment 1

From the pesticide-free cultivation of Experiment 1, first, it is confirmed that the eggplants cultivated in the typical weatherproof houses were eaten and totally destroyed by the pests on August 14 after about two months from the cultivation start day on July 16.

However, the plants in the houses in which the ratio of light of sunlight was changed had not been destroyed by pests at that time. Accordingly, in accordance with the present invention, it may be concluded that the pests may be deterred from the plants by changing the ratio of light of sunlight. However, with regard to why the pests ate the plants in the conventional house, this is, as described above, because sunlight was not transmitted by the vinyl and instead directly entered the house.

That is, the change rate of the ratio of light when sunlight was directly transmitted by the vinyl was approximate to that in the bare field. When the blue net and/or blue LED was used in the house to reduce the ratio of R/B, the change rate of the ratio of R/B was even larger.

On the other hand, the change rate of the ratio of light was larger in the house including both the red reflective plate and red net than in the house including only the red reflective plate. The house in which the ratio of light was changed at a larger rate compared to the bare field repelled the pests for the longest time.

Accordingly, the lighting environment in which the pests are less likely to approach the eggplants employs the installation to reflect and/or transmit sunlight such as the installation using the spectrum of red as shown in FIG. 20 and FIG. 23 and thus the installation as shown in FIG. 28 is capable of controlling the pests.

**Second Embodiment**

This cultivation experiment of eggplants was performed in a cultivation house closed by a light transmissive material, in which carbon dioxide was extremely insufficient in the daytime, oxygen was extremely insufficient at nighttime, and a maximum daytime temperature was 40 °C or more. However, a proper temperature for pollination and insemination of the eggplants is 20 to 25 °C, and a proper temperature for a development period of fruits is 22 to 26 °C (Fundamentals of Vegetable Cultivation, published by Rural Culture Association and written by Suzuki Yosio et al.). Accordingly, this experiment is **characterized in that** the cultivation was performed under environments in which there was at least a day per week when the eggplants would have been withered if the eggplants were being cultivated on the bare field.

In general, under severe environments in which the house is closed by a light transmissive material and in a suffocation state of oxygen or carbon dioxide, and a daytime temperature is 40 °C or more, plants cannot be cultivated.

However, the plants were grown under the lighting environment of Experiment 1, which was verified, in which the plants remained very healthy with no pests or diseases even in such an environment. That is, as a ratio of R/B of a ratio of light of a sunlight spectrum was set to be higher than that of the bare field and a ratio of R/FR was set to be smaller than that of the bare field, the plants could be cultivated under such severe conditions.

The eggplants were cultivated under the severe conditions, which do not occur in the natural world, and ripened fruits were tasted to identify their tastes.

Cultivation Experiment 2: Harshness Removal Cultivation Method

1. Purposes of Experiment

This experiment is provided to specify cultivation conditions in which the eggplants with no bitter taste or acrid taste can be cultivated.

2. Place of Experiment

Shinonome-cho, Kochi, Kochi

3. Period of Experiment

July 3, 2006 to September 19, 2006

4. Cultivation Conditions

The plants were cultivated under cultivation conditions in which 6 factors including variation in ratio of light, no variation, closing and opening of the house, a high temperature, and a normal temperature were combined, harvested and tasted. After tasting, the cultivation conditions were varied, and simultaneously, at this time, the fruits having a size of about a thumb or more were harvested. That is, the fruits grown under the above-mentioned cultivation conditions were harvested. The eggplants were cultivated as described above, and then tasted. After being tasted, the fruits having a size of about a thumb or more were harvested again, and the cultivation conditions were changed. Such processes were repeated to perform the experiment.

4-1: Equipment of Cultivation House

A cultivation house constructed by spraying red paint on the entire house and the outside of the pot, except for vinyl, (hereinafter referred to as a red house)

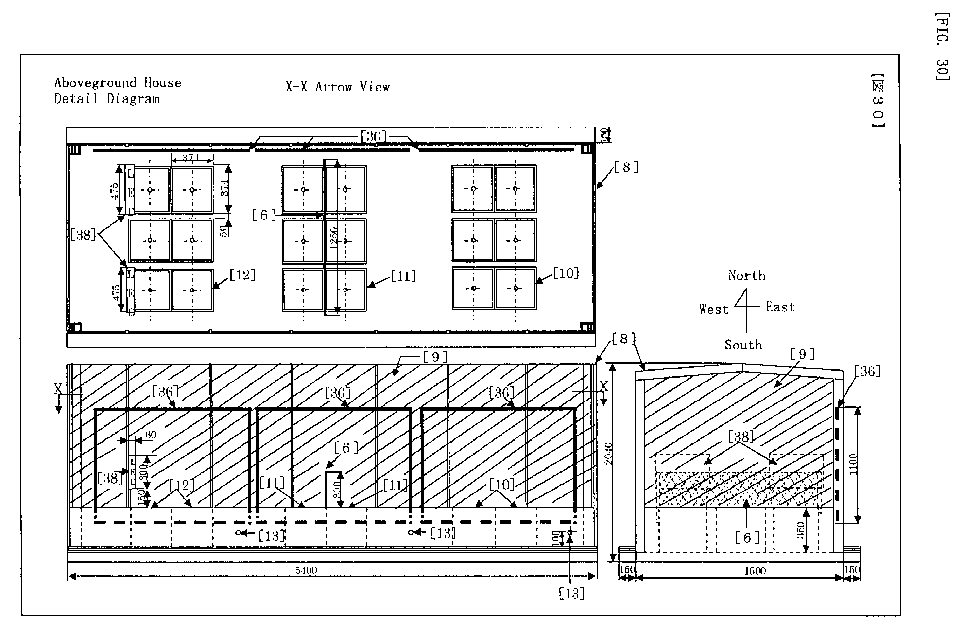

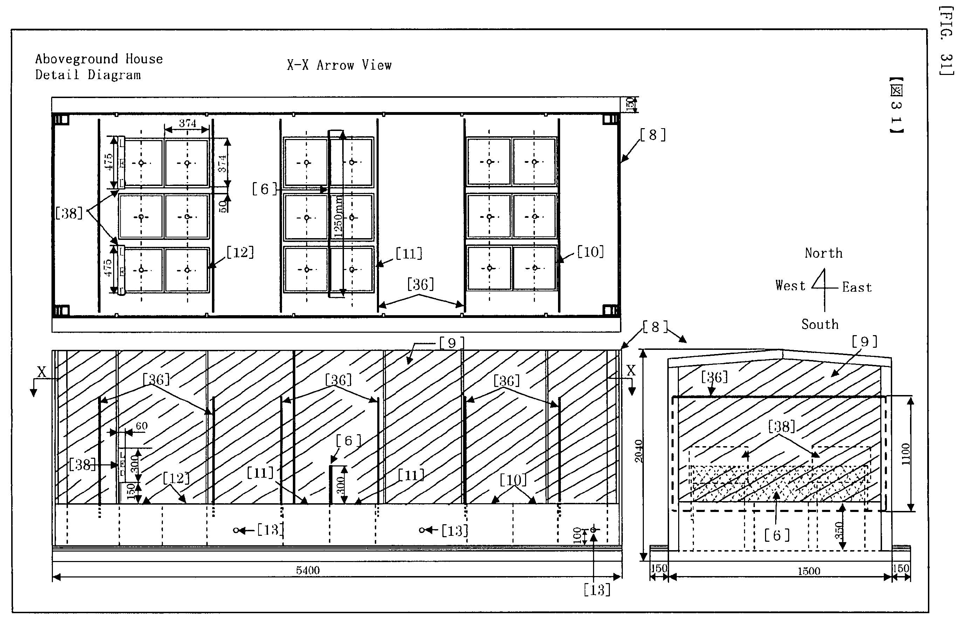

Aboveground House: In a state in which the red house was closed with vinyl, the pot of a west side in the house was equipped with a red reflective plate and a blue LED, the pot of a center portion was equipped with a red reflective plate and a blue net, and the pot of an east side was equipped with a red reflective plate. See FIGS. 30 and 31.

4-2: Spectrum of a material used to set the lighting environment (spectrum, ratio of light, etc.) of the cultivation house to Article 4-3

a. Spectrum of color of blue net (See FIG. 22)
b. Spectrum of color of reflective plate, water paint (red spray) was used (see FIG. 20).
c. Spectrum of color of oil paint used to make the inside of the cultivation house red (see FIG. 23).
d. Spectrum of blue LED (see FIG. 24)

4-3: Lighting Environment of Cultivation House

October 13 (Friday), 2006 (aboveground house): Cultivation House Lighting Environment Measurement

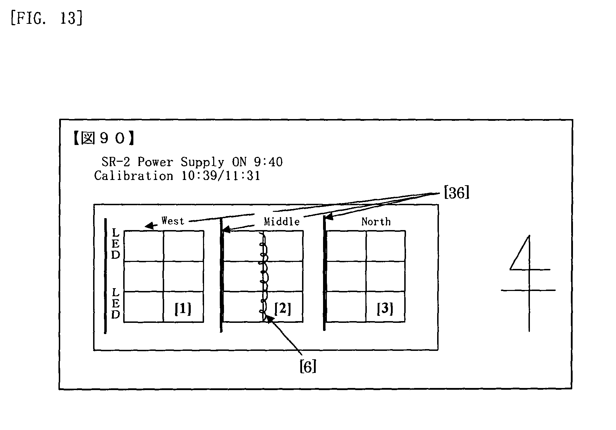

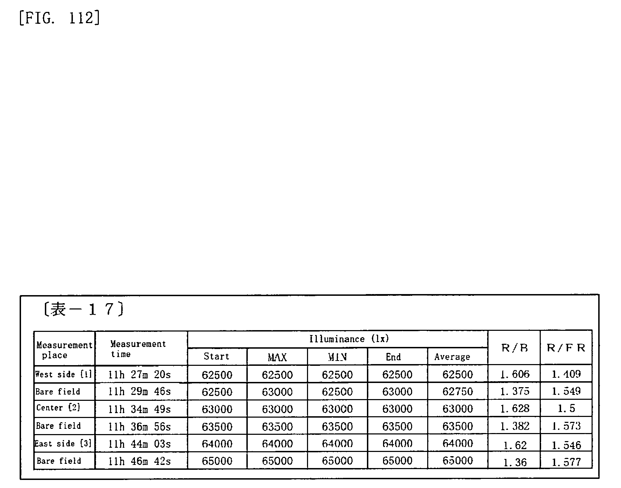

Measurement Conditions: In a state in which the reflective plate was stood at one side (a west side, because it was before noon) and sunlight passed through the vinyl, positions [1], [2] and [3] of FIG. 13 were measured. The measurement results are referred to in FIG. 112. The houses of FIG. 31 and FIG. 13 were covered with the vinyl, when the houses were used in a closed state, operation sequences (A) and (C) were performed, and when the houses were used in an open state, an operation sequence (B) was performed.

SR-2 Power ON: 9:40, Calibration: 10:39/11:31

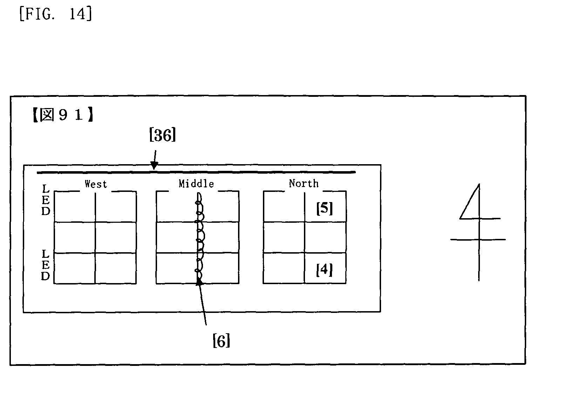

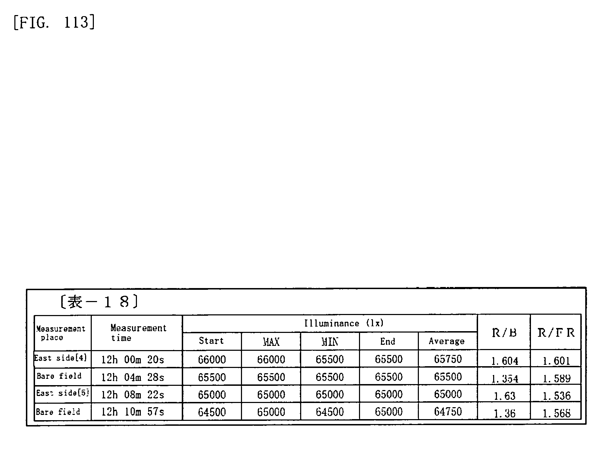

Measurement Conditions: In a state in which all of the reflective plates were stood at a north side and sunlight passed through vinyl, positions [4] and [5] of FIG. 14 were measured. The measurement results are referred to in FIG. 113. FIG. 30 and FIG. 14 show a closed state in which the house was covered with vinyl. The operation sequence (C) was performed.

5. Cultivation Method

5-1: Eggplants: Senryo No. 2, Kuroyou, Binan, and Mizunotakumi

Operation Sequence (A): The reflective plate was attached as shown in FIGS. 31 and 13.

- 8:25 A.M.: The temperature in the house was measured.
- 10:10 A.M.: The temperature in the house was measured.
- 1:00 P.M.: The reflective plate was changed from the west side to the each side.
- The temperature and humidity were measured. Watering of 4 liters was performed (a previous day of a holiday was two times). The number of flowers was checked and Tomato-tone was attached thereto. Just after the completion of operation, the house was closed.
- 3:00 P.M.: The temperature in the house was measured.
- Before and after sunset: The reflective plate was changed from the east side to the west side. (On a day before a holiday, both sides were lowered and the LED was simultaneously turned OFF. On Monday or a holiday, the house was opened at 8:25 A.M., the west side was raised and the LED was simultaneously turned ON.) Watering of 4 liters was performed (twice on a day before a holiday). Just after the completion of operation, the house was closed.
- 1:00 A.M.: The temperature in the house was measured.
- 4:00 A.M.: The temperature in the house was measured.
- In this operation sequence, since the closed house was opened twice a day, a closed effect was reduced. Accordingly, from next time, as described in the operation sequence (C), the house was opened only once in the morning, not at noon when the temperature was highest.

Operation Sequence (B): The reflective plate was attached as shown in FIG. 31.

- 8:25 A.M.: The temperature in the house was measured.
- 10:10 A.M.: The temperature in the house was measured. The house was kept open (from 10:10 A.M. to 3:00 P.M., the house was kept open not to increase a temperature). Watering of 4 liters was performed.
- 1:00 P.M.: The reflective plate was changed from the west side to the east side. The temperature and humidity were measured. Watering of 4 liters was performed (twice on a day before a holiday). The number of flowers was checked and Tomato-tone was attached thereto.

- 3:00 P.M.: The temperature in the house was measured. Watering of 4 liters was performed. The house was closed.
- Before and after sunset: The reflective plate was changed from the east side to the west side. (On a day before a holiday, both sides were lowered and the LED was simultaneously turned OFF. On Monday or a holiday, the house was opened at 8:25 A.M., the west side was raised and the LED was simultaneously turned ON). Watering of 4 liters was performed (twice on a day before a holiday).
- 1:00 A.M.: The temperature in the house was measured.
- 4:00 A.M.: The temperature in the house was measured.

Operation Sequence (C): The reflective plate was attached as shown in FIGS. 30 and 14.

- 8:25 A.M.: The temperature was measured, and watering of 4 liters was performed to the eggplants. Just after the completion of the watering, the house was closed.
- 10:10 A.M.: The temperature was measured.
- 1:00 P.M.: The temperature and humidity were measured.
- 3:00 P.M.: The temperature was measured.
- Before and after sunset: (On a day before a holiday, the LED was turned OFF. On Monday or a holiday, the LED was turned ON at 8:25 A.M.)
- 1:00 A.M.: The temperature was measured.
- 4:00 A.M.: The temperature was measured.

In the above-mentioned operation sequences (A) and (B), raising and lowering of the reflective plates at the east and west sides and the operation time were provided to reflect sunlight from the sun at the east side by raising and attaching only the western reflective plate of the pot.
On the other hand, in the afternoon, only the eastern reflective plate of the pot was raised and attached to reflect sunlight.

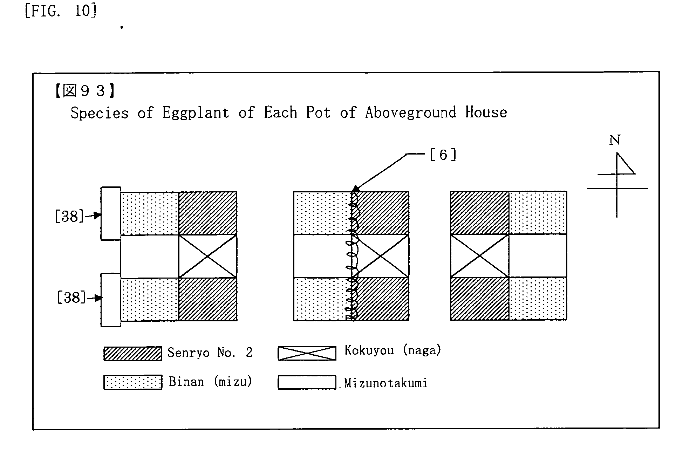

5-2: Seeds of the eggplants of the pots of the aboveground house were disposed on the pots as shown in FIG. 10, respectively.

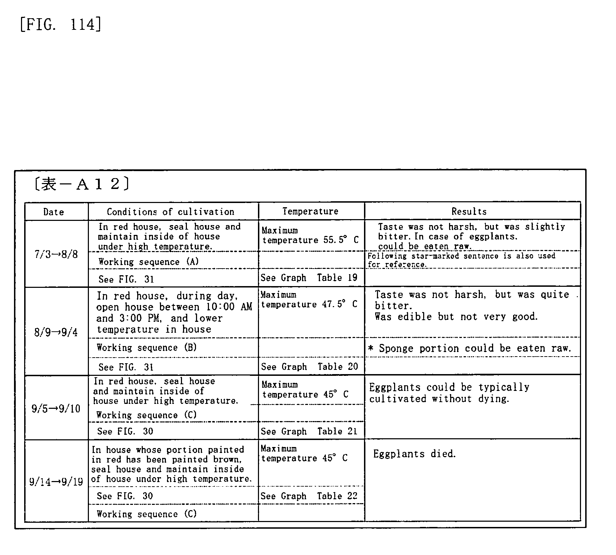

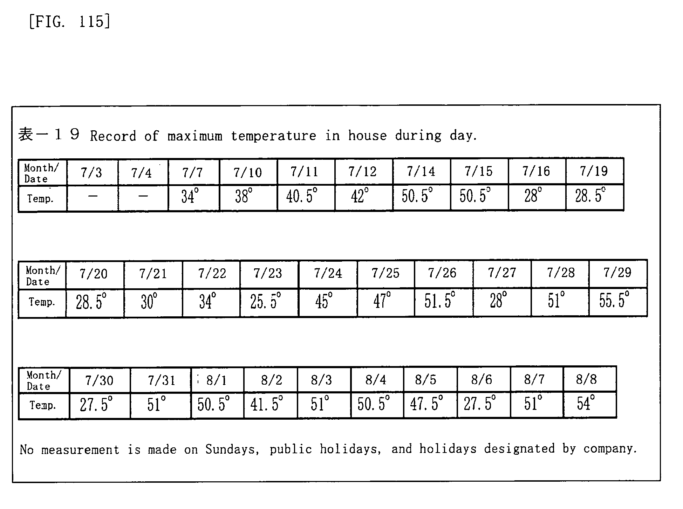

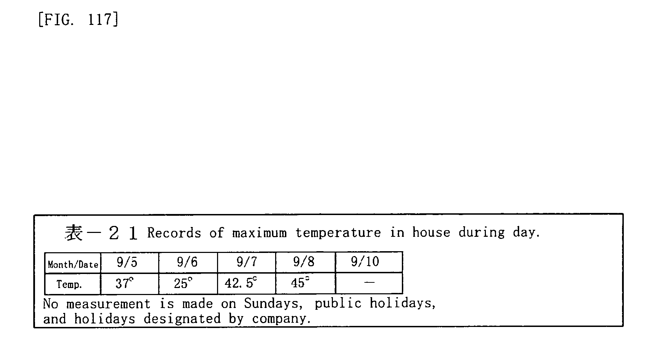

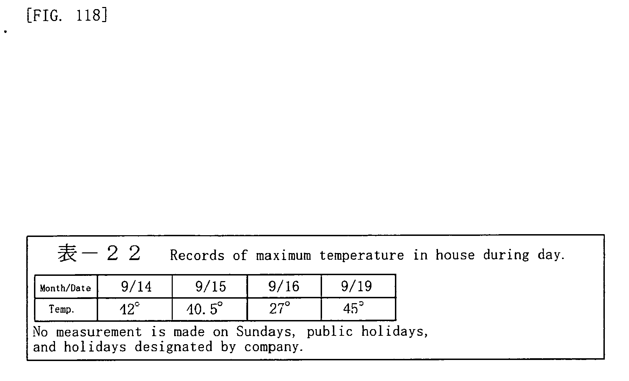

Cultivation records including dates, cultivation conditions, temperature, and results are referred to in FIG. 114.
While the eggplants could be ordinarily cultivated with no withering, when the vinyl was open at a temperature of 50 °C or more, the temperature was abruptly changed and leaves were temporarily withered. About a half of a day was needed for the leaves to become healthy.
Records of maximum daytime temperatures in the house are referred to in FIG. 115 to FIG. 118.
In addition, in FIG. 115 to FIG. 118, no measurement was performed on Sunday/festival/company-designated holiday.

6. Experiment Results

Combinations of factors including red, brown, closed, open, a high temperature, and a normal temperature were as follows.

1. Red-Closed-High Temperature: The house arrived at a high temperature of 40 °C or more as long as the house was closed. Particularly, in the summer, the temperature was sometimes raised to 50 °C or more.
2. Red-Open-High Temperature: When the house was closed in the summer, while not sealed, the temperature was increased to the same level as Article 1.
3. Red-Closed-Normal Temperature: Even when the house was closed in the winter in the conditions of Articles 1 and 2, the temperature was not increased to 40 °C or more with no heating device such as stove.
4. Red-Open-Normal Temperature: Even though the ratio of light was varied, the normal temperature was maintained in the open state, and it was the same as the conventional cultivation.
5. Brown-Closed-High Temperature
6. Brown-Open-High Temperature
7. Brown-Closed-Normal Temperature
8. Brown-Open-Normal Temperature

Since the season of the experiment of Article 3 was summer, it was impossible to maintain the normal temperature in the closed state.
Accordingly, the experiment was omitted. In Article 4, even when the ratio of light was varied, it was the same as the conventional cultivation having the combination of the open and normal temperature.

Accordingly, the experiment was omitted. In articles 5 to 8, the brown had no variation in ratio of light. Accordingly, since the conditions were the same as the conventional cultivation method, the experiments of Articles 6 to 8 were omitted.

In Cultivation Experiment 2, the eggplants cultivated under the environments of the Articles 1, 2 and 5 were tasted to identify whether a bitter taste or an acrid taste remained. However, since the eggplants under the environment of Article 5 were withered, no fruit was obtained. In the taste of the eggplants of Articles 1 and 2, since the eggplants of Article 1 had a slight bitter taste but no acrid taste, the eggplants could be eaten raw. The eggplants of Article 2 had no acrid taste but a strong bitter taste. While the eggplants could be eaten, they did not taste good.

In Cultivation Experiment 2, from July 3 to August 8, the red house was closed to arrive at the high temperature. The temperature was maximally increased to 55.5 °C, and was increased to 50 °C or more when it was a sunny day (see Graph in FIG. 115 (Table-19)). While the eggplants were not withered and could be ordinarily cultivated, when the vinyl was opened at a temperature of 50 °C or more, the temperature was abruptly varied and leaves were temporarily withered. A half of a day was needed for the eggplants to become healthy.

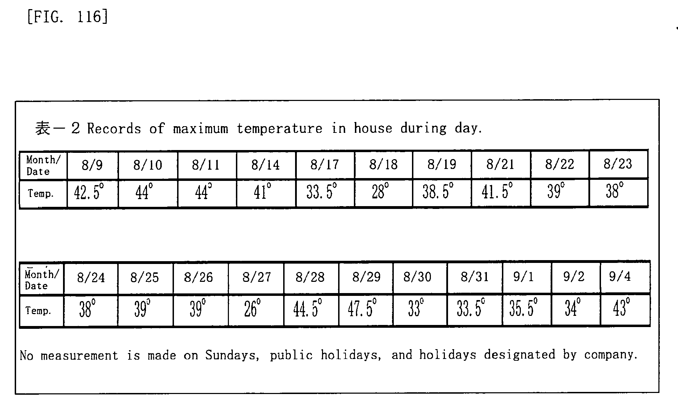

From August 9 to September 4, between 10:00 A.M. and 3:00 P.M., the house was kept open to lower the temperature. However, the temperature was maximally increased to 47.5 °C and was increased to 40 °C or more on sunny days (see Graph in FIG. 116 (Table-20)). In addition, on September 14, the red painted portion was painted with brown paint, and the house was closed to increase the temperature. The maximum temperature was 45 °C (see Graph in FIG. 18 (Table-22)). On September 19, the eggplants were withered. Since the operation sequence (A) was performed from July 3 to August 8, the eggplants were withered on sunny days and recovered in the evening. Due to the above-mentioned operation, the eggplants were becoming quite unhealthy. For this reason, at the time the red was replaced with the brown, the eggplants were withered.

This is because, while the ratio of R/B of the ratio of light was set to be larger than that of the bare field and the ratio of R/FR was set to be lower than that of the bare field, when the red was replaced with the brown, the ratio of light became equal to that of the bare field.

That is, the eggplants were not withered and dried even under the severe dual environments of the high temperature and the closed state, because the ratio of R/B of the environment was larger than that of the sunlight spectrum of the bare field and the ratio of R/FR was smaller than that of the sunlight spectrum.

This was one of two fundamental accomplishments in all of the experiment results of the present invention. First, the ratio of R/B larger and the ratio of R/FR smaller than that of the bare field were essential conditions of the pesticide-free cultivation. Second, since the eggplants became healthy according to the above-mentioned cultivation, the eggplants could endure all day under the environment of the suffocation and the high temperature of 40 °C or more, and thus, the eggplants were recovered.

In Cultivation Experiment 2, simultaneously with varying the ratio of light, as the house was closed to be in the suffocation state and increased to the high temperature of 40 °C or more, the eggplants having no bitter taste or no acrid taste could be cultivated. Since the nutrition elements were varied, in order to identify the variation, elements of Senryo No. 2 and Mizunotakumi cultivated through Cultivation Experiments 1 and 2 were analyzed.

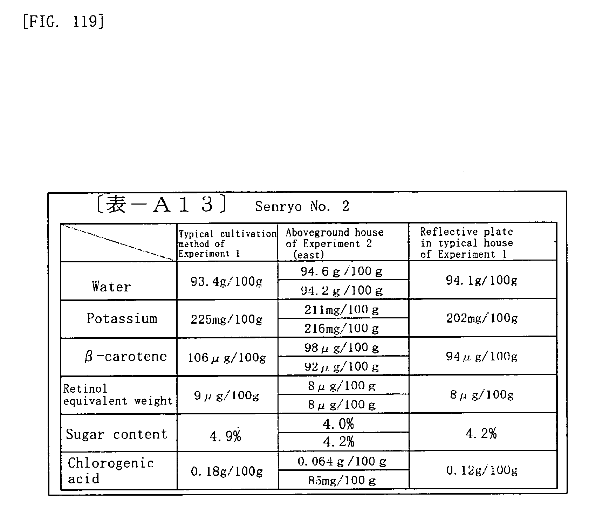

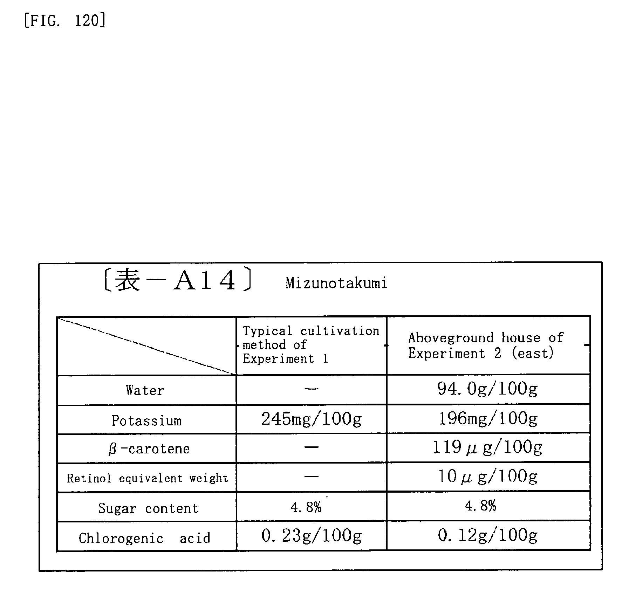

The results of the element analysis are referred to in FIG. 119 (Table A13) and FIG. 120 (Table A14). (Nutrition elements were provided according to analysis results of Certificate of Analysis Test of Japan Foods Center (Juridical Foundation)). It was found that, while the house was not closed and did not arrive at the high temperature, when the ratio of light could be merely varied, the nutrition elements were varied with no variation in taste.

**Third Embodiment**

Cultivation Experiment 4: Pesticide-free Cultivation Method

1. Purposes of Experiment 4

As the ratio of R/B in the cultivation house was set to be higher than that of the bare field and the ratio of R/FR in the cultivation house was set to be lower than that of the bare field, it was determined whether fruits/vegetables could be protected from pests or diseases with no pesticide. In addition, the cultivation method of improving tastes of the eggplants was accomplished.

2. Place of Experiment

Shinonome-cho, Kochi, Kochi

3. Period of Experiment

September 30, 2006 to December 22, 2006

4. Cultivation Conditions

4.1 Facility for Cultivation House and Species of Cultivated Crop Plants

The house of the experiment was a conventional vinyl house having sides and ceiling surrounded with vinyl, rather than a weatherproof house through which sunlight directly enters. The house constructed by painting the entire house, except for the vinyl, and the outside of the pot, was referred to as a red house.

> a. Eggplant Cultivation Houses 5, 6 and 7 (A species was Ryoma, and a rootstock was Solanum melongena (Tonashimu: trade name))

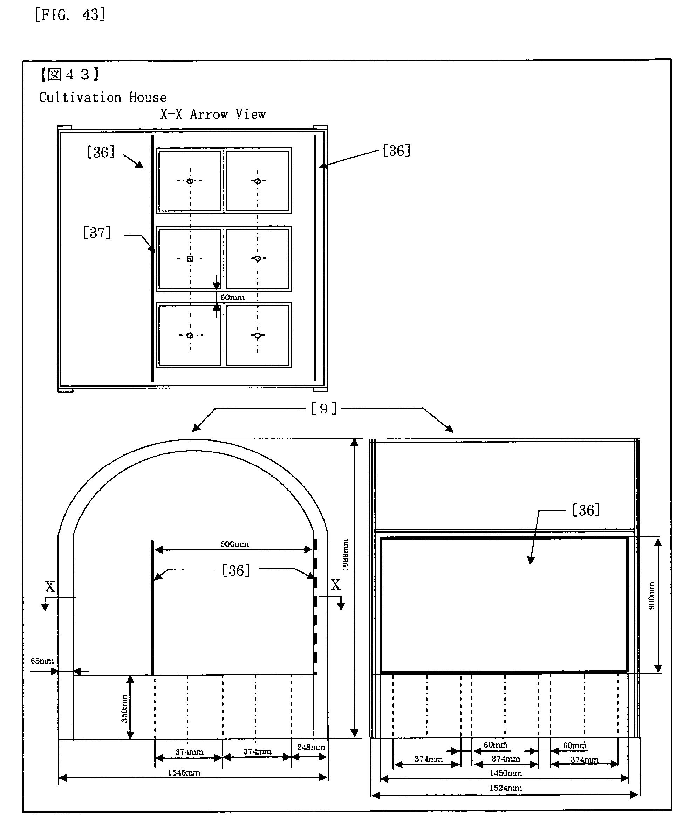

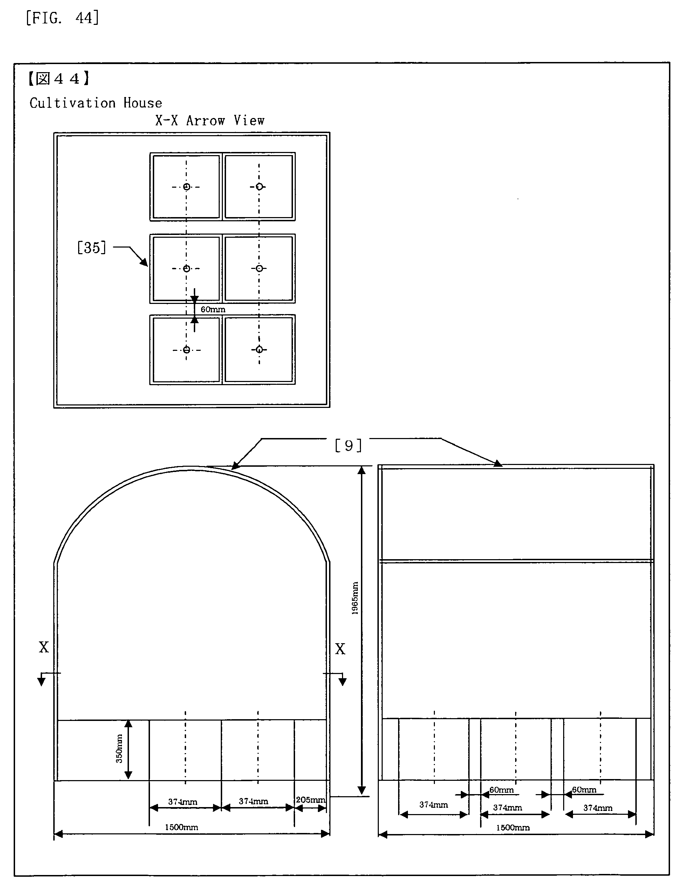

> - House 5: In the cultivation experiment, a red reflective plate was installed at the red house having the same pattern as the equipment of the cultivation house (FIG. 30) of Cultivation Experiment 2. See FIG. 43.
> - Houses 6 and 7: A conventional house with no paint. See FIG. 44.

> b. Cucumber Cultivation Houses 1, 4 and 9 (A species was Fresco-100, and a rootstock was Super-Unryu: trade name)
> c. Tomato Cultivation Houses 2, 3 and 8 (A species was Momotaro Fight, and a rootstock was Support: trade name)

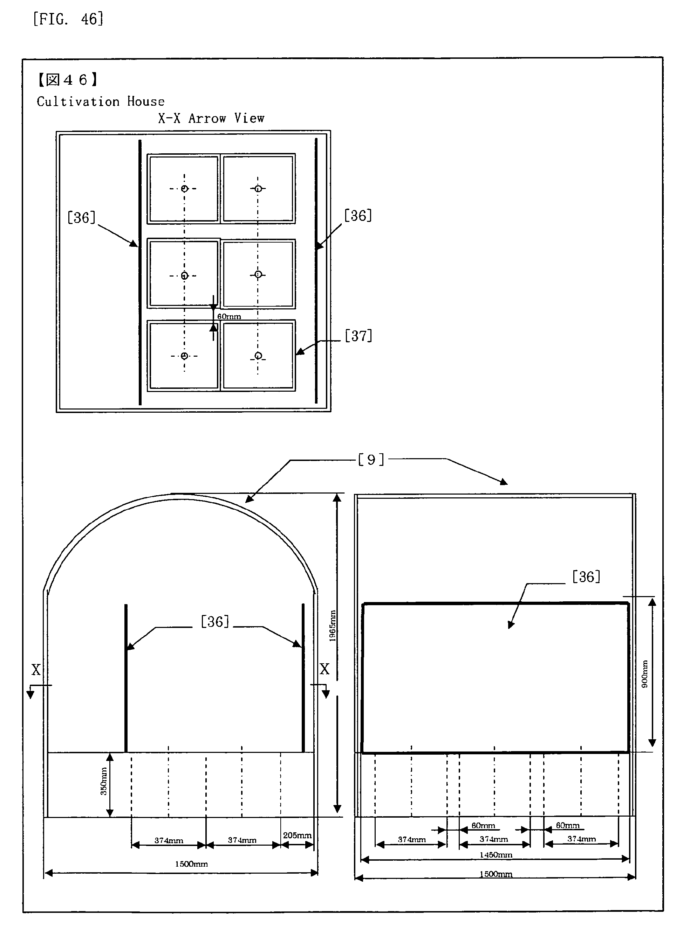

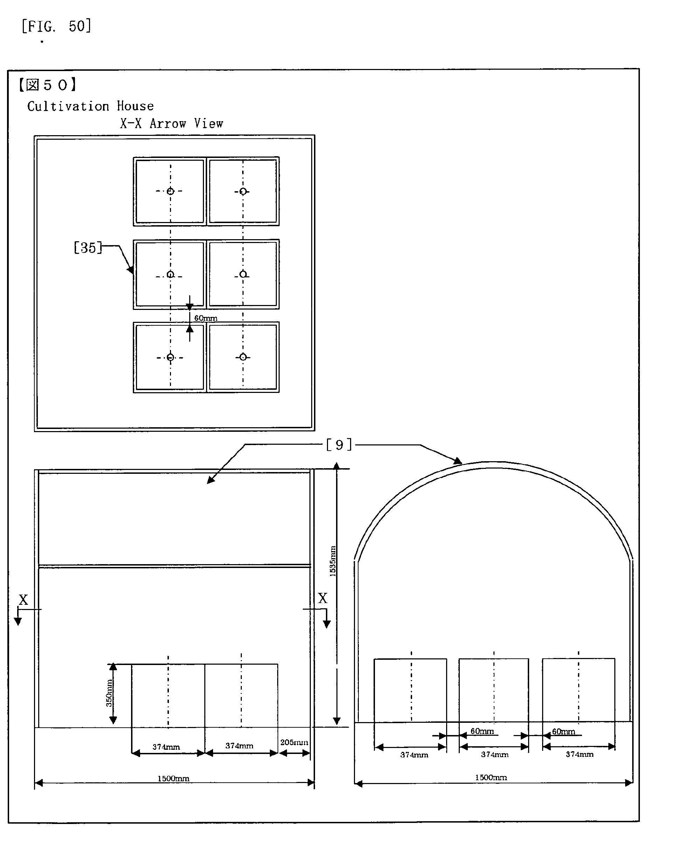

> - Houses 1 and 2: A red reflective plate was attached to a conventional vinyl house. See FIG. 46.
> - Houses 3 and 4: A conventional vinyl house was equipped with a red reflective plate and a red net. See FIG. 48.
> - Houses 8 and 9: A conventional vinyl house was installed at a position far away from the red house or the red reflective plate. See FIG. 50.

4-2: Lighting Environment in Cultivation House

> a. Cultivation houses 8, 9, 6 and 7 were the same as the cultivation house 1 of Experiment 1.
> b. Cultivation houses 1 and 2 were the same as the cultivation house 6 of Experiment 1 (a difference in ratio of R/B between the house and the bare field was substantially equal to 0.199).
> c. Cultivation houses 3 and 4 were the same as the cultivation house 5 of Experiment 1 (a difference in ratio of R/B between the house and the bare field was substantially equal to 0.319).
> d. A cultivation house 5 was similar to the cultivation house 3 of FIG. 13 of Experiment 2 (a difference in ratio of R/B between the house and the bare field was substantially equal to 0.260).

5. Cultivation Method

5-1: Watering

> a. In the cultivation houses 1, 4, 5, 6 and 9 (eggplants, cucumbers), watering of 2 liters was performed to each pot at 10:10 A.M., and watering of 2 liters was performed to each pot at 5:00 P.M., in a state in which the house was kept open to perform the cultivation. When the house was kept closed, it was the same as the cultivation house 7.
> b. Cultivation house 7 (eggplants) 8:30 A.M.: 4 liters (just after watering, the house was closed).
> c. Cultivation houses 2, 3 and 8 (tomatoes) 5:00 P.M.: 2 liters (once a week: a day before a holiday)
> d. In the houses other than the cultivation houses 2, 3 and 8, watering of each pot was performed twice on days before and after a holiday.

5-2: Measurement Operation

A temperature in the house, humidity in the house, and a temperature in soil of each pot were measured at 8: 30, 10:10, 13:00 and 15:00.

6. Cultivation Records

6-1: Cultivation Records of Eggplants

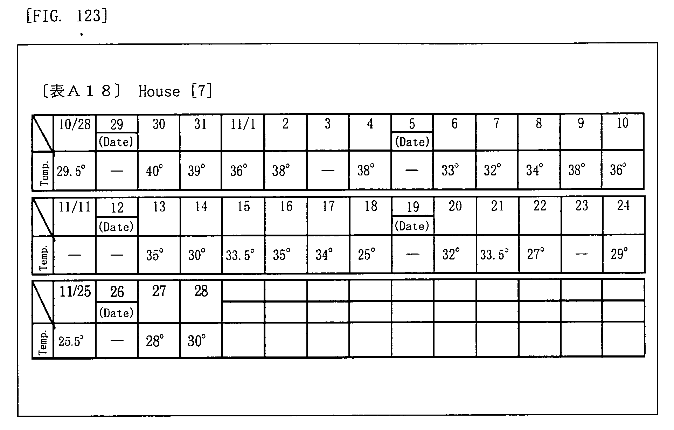

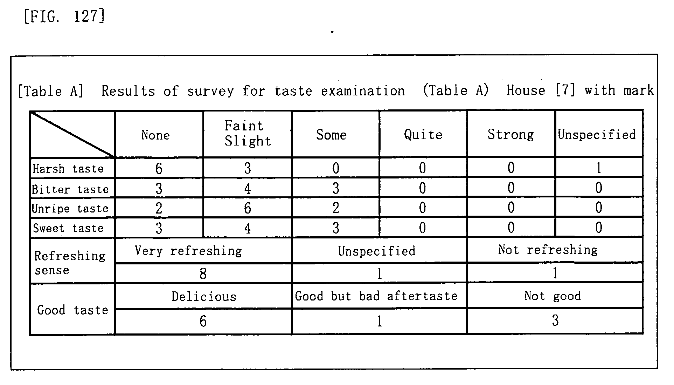

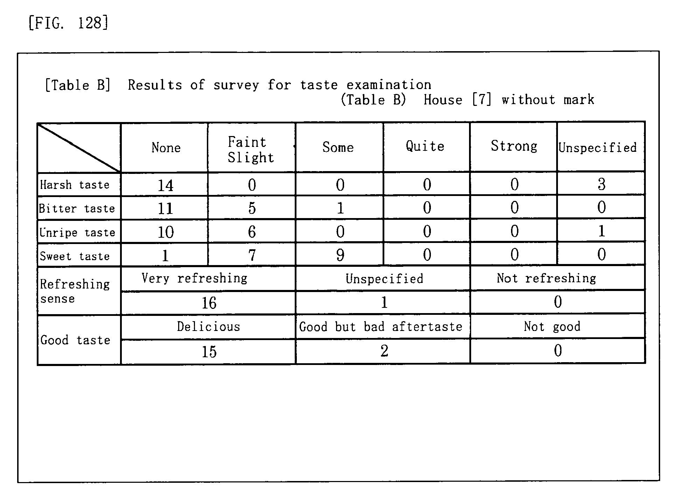

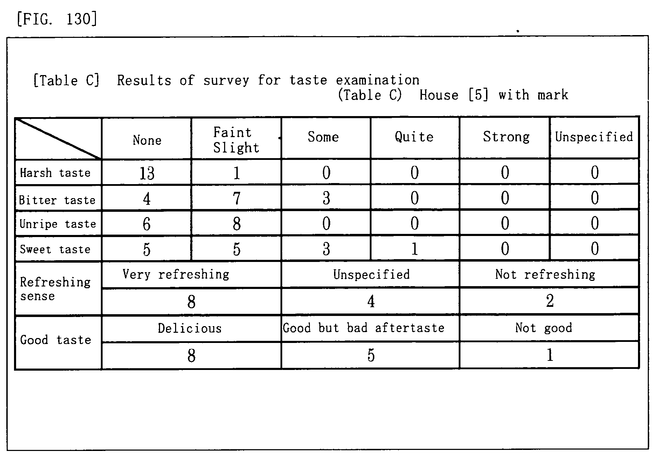

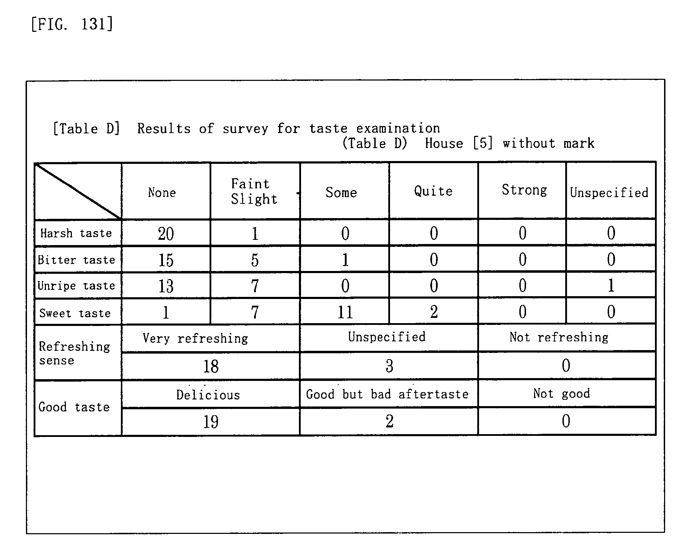

- House 5: The vinyl of the red house was vertically hung to be fixed thereto such that the vinyl could not be blown by wind. When the weather became clear in this state, the temperature in the house was raised to more than 40 °C. The red house was kept open to reach the high temperature.
- House 6: In the same state as the house 5, the conventional house was kept open to reach the high temperature.
- House 7: The conventional house was kept closed and the inside of the house reached the high temperature.
- October 16, the eggplants of the house 6 were eaten by pests, and the situation worsened each day. On October 24, fruits were harvested and tasted, and then drawn out. 6 eggplants were exterminated.
- The eggplants of the house 5 were harvested and tasted on two days of October 23 and 24.
- Since the tasting of the house 5 was finished on October 24, all of the eggplants of the house 5 having a size of a thumb end or more were harvested and the house 5 was kept closed. (The red house was kept closed to make the cultivation condition of the high temperature.)
- Since the eggplants of the house 7 were harvested and tasted on October 30, all of the eggplants of the house 7 having a size of a thumb end or more were harvested and the vinyl sheet of the house 7 was replaced with the fourfold vinyl. The ratio of light of the fourfold vinyl is referred to in FIG. 107 (Table 14). (The house was covered with the fourfold vinyl to make the cultivation condition of the high temperature.)
- November 4, the eggplants of the house 5 were harvested and tasted.
- November 7, all of the eggplants of the house 5 having a size of a thumb end or more were harvested and the vinyl was opened to maintain the normal temperature in the house. (The red house was kept open to make the cultivation conditions of the normal temperature.)
- November 28, the eggplants of the house 7 were harvested and tasted. (The house was covered with the fourfold vinyl to make the cultivation conditions of the high temperature. When the eggplants were tasted, the eggplants had no acrid taste and a weak bitter taste with an unripe taste. While the eggplants could be eaten raw, they did not taste good. In addition, measurement results of the temperature in the house from October 30 to November 28 are referred to in FIG. 123 (Table A18). It was found that, even when the house was covered with the fourfold vinyl, under the cultivation conditions in which the temperature in the house was less than 40 °C, while the eggplants could be eaten raw, they did not taste good.
- November 28 (Thursday): All of the eggplants of the cultivation house 7 having a size of a thumb end or more were harvested. (11 pieces) Fabric tape was used to mark 7 eggplants having a size of less than the thumb end. The house was kept closed in this state, and the house was heated by a stove for 24 hours to maintain the temperature in the house at 40 °C or more.
- December 4 to 6, the eggplants of the house 5 were harvested and tasted. The eggplants cultivated in the open house at the normal temperature from the cultivation conditions of the red house had harshness, which was not removed.
- December 6: The eggplants of the house 7 were harvested and tasted. While the unripe taste remained, the harshness was removed.
- December 7 (Thursday): Since the planned experiment of the eggplants of the cultivation house 5 was finished, all eggplants (14 pieces) having a size of the thumb end or more were harvested, and the red house was kept closed to make the high temperature condition to start the cultivation. Fabric tape was used to mark eggplants having a size of less than the thumb end (12 pieces).
- December 11: The eggplants of the house 7 were harvested and tasted. Eggplants both with fabric tape and without fabric tape were tasted.
- December 14: The eggplants of the house 7 were harvested and tasted to obtain questionnaires (FIG. 127 (Table A): marked, FIG. 128 (Table B): unmarked).
- December 15: The eggplants of the house 7 were pulled out to terminate the cultivation.
- December 20: The eggplants of the house 5 were harvested and tasted to obtain questionnaires. Eggplants both with fabric tape and without fabric tape were tasted to obtain questionnaires (FIG. 130 (Table C): marked, FIG. 131 (Table D): unmarked).
- December 22: The eggplants of the house 5 were pulled out to terminate the cultivation.

6-2 Cultivation Records of Cucumbers

- October 19: The cucumbers of the house 9 were eaten by pests.
- October 27: No cucumber of the houses 1 and 4 was eaten by pests.
- November 2: The cucumbers of the houses 1 and 9 had no powdery mildew.
- November 7: The stems, branches or leaves of the cucumbers were cut off to be ventilated well, preventing easy adhesion of the powdery mildew.
- November 15: The powdery mildew also adhered to new buds of the cucumbers of the house 9.
- November 16: Lower leaves or branches of the cucumbers of the house 9 were starting to wither. However, the houses 1 and 4 had no withering.
- November 20: It was found that a large amount of pests were adhered to rear side of the leaves of the cucumbers of the house 9 having the powdery mildew. The pests adhered to the rear side of the leaves seemed to suck sap of the cucumbers, rather than eating the leaves to make holes. For this reason, the cucumbers of the house 9 became extremely unhealthy and were withered. However, the houses 1 and 4 were in health with no pests.
- November 21: The cucumbers of the houses 1, 4 and 9 were pulled out to terminate the cultivation.

6-3 Cultivation Records of Tomatoes

- December 8 (Friday): After noon, all leaves of the tomatoes, except for those in the cultivation house 3, were withered again. This phenomenon had begun 3 to 4 weeks prior. The withering began before watering, which was determined to be performed once on Saturday. That is, the withering began from about Thursday. The ratio of light of the cultivation house 3 was varied to be larger than that of the houses 2 and 8 as well as the bare field. The cultivation houses 2 and 8 became unhealthy and lower leaves of the stems were yellowed and withered or dried. This phenomenon was worst in the cultivation house 8, and leaves near the stems were also discolored. Lower leaves of the stems of the cultivation house 2 were also discolored. The cultivation house 3 remained in health with no leaves withered or discolored.
- December 13 (Wednesday): Reviewing situations of the cultivation house 8, the plants in the pot in the middle of the east row were withering. Middle leaves of the stems were also withered with no discoloration.
- December 21 (Thursday): Reviewing situations of the tomatoes of the cultivation house 8, the leaves of the north side of the west row and the south side of the west row were in a parsley state, rather than increased in size. Upper leaves in the middle of the west row were also withered. The middle of the east row was also in a similar state. These two ports would remain on a shelf for one month. Leaves of the south side of the east row were also withered, damaged and yellowed in their middle areas. A withering speed was slightly increasing.
- Reviewing situations of the tomatoes of the cultivation house 3, the tomatoes were growing ordinarily with no withering, no discoloration and no drying.

7. Experiment Results of Cucumbers

Since the plants were cultivated with no pruning after planting, even though several stems were grown, leaves were densely grown and thus powdery mildew was easily adhering thereto. In addition, since no fertilization was performed except for once upon planting, nitrogen, phosphoric acid and potassium were unbalanced so that all of the houses 1, 4 and 9 had the powdery mildew. After finding white powder on November 2, the disease had progressed until now from November 2. The house 9 had the heaviest symptom, and the house 4 had the lightest symptom. The symptoms of the houses were represented as numbers out of ten scores (higher numbers denoting heavier symptoms). The house 9 was 10, the house 1 was 6, and the house 4 was 1.5.

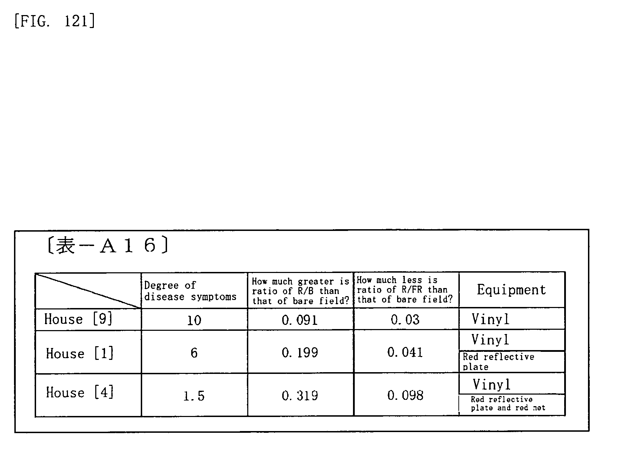

The houses had such differences through approximate estimation. Since the house 9 was the same as [1] of Experiment 1, the ratio of R/B was larger by 0.091 than that of the bare field, and the ratio of R/FR was smaller by 0.030 than that of the bare field. Similarly, the ratio of R/B of the house 1 was larger by 0.199 than that of the bare field, and the ratio of R/FR was smaller by 0.041 that that of the bare field. In addition, the ratio of R/B of the house 4 was larger by 0.319 than that of the bare field, and the ratio of R/FR was smaller by 0.098 than that of the bare field. See FIG. 121 (Table A16).

Since the ratio of R/B became larger than that of the bare field as the house was equipped with much equipment to vary the ratio of light, the pests could not easily adhere to the plants. This was verified by the fact that the house 1 had the powdery mildew. Since the northern vinyl of the house 1 was kept open, the morning sun directly entered through the northeast side for a certain period. For this reason, the pot of the north side had the heaviest symptoms, next was the pot of the middle, next was the pot of the south side, and the pot of the south side had the lightest symptom. This was because the ratio of light during the period was uneven in the house.

**[0421]** - November 7: The stems, branches or leaves were cut so that the powdery mildew could not easily occur. In addition, fertilization was performed to all of the pots at 40 g to improve fertilization balance. Even in this state, the experiment was further continued.

Two weeks later, on November 21, the experiment results were obtained. All of the houses 1, 4 and 9 had the powdery mildew. New bines grew out and new leaves also grew from all of the houses 1, 4 and 9. However, pests adhered to rear surfaces of the leaves having the powdery mildew, and small fruits were twisted and decayed. Such symptoms were presented as follows.

- Symptoms of Powdery Mildew: The house 9 was heaviest, next was the house 1, and the house 4 was lightest.
- Amount of new bines or leaves: The house 4 had the largest number, next was the house 1, and the house 9 had the smallest number.
- Symptom of pests: The house 9 had the heaviest, next was the house 1, and the house 4 had no damage.
- Amount of decayed fruits: The house 9 had the largest number (52 pieces or more), next was the house 1 (40 pieces), and the house 4 had the smallest number (13 pieces).

(With regard to the powdery mildew)

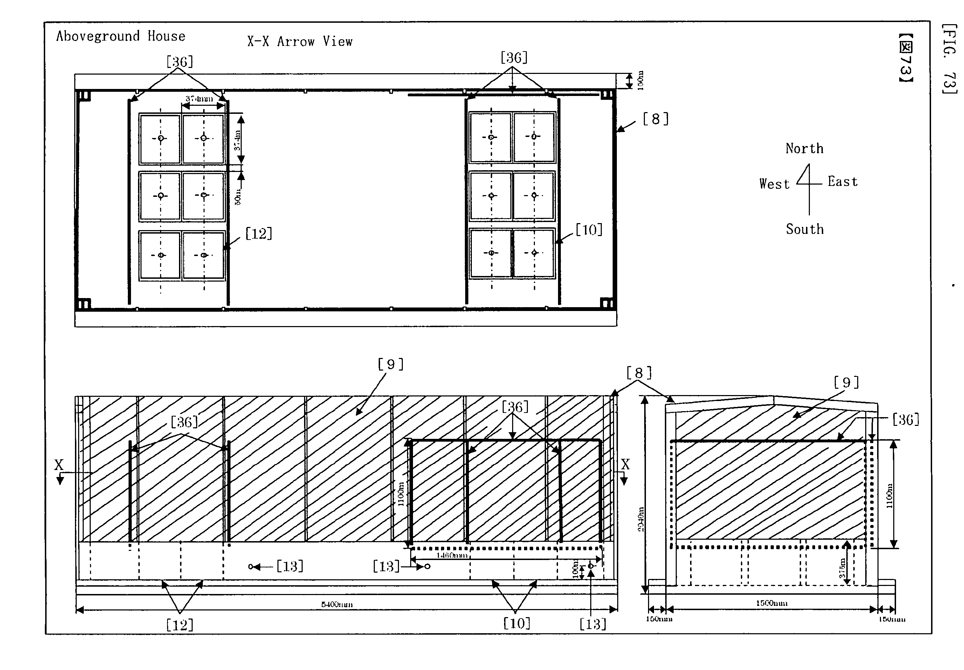

The powdery mildew was caused by imbalance of fertilizer elements and bad ventilation. While the fertilizer elements were in the same conditions, the net of the equipment of the house 4 caused the bad ventilation. As the red house of the FIG. 73 with no net was used, in Cultivation Experiment 7, in which the ventilation and the ratio of light were improved, the plants had no diseases.

Experiment Results (Tomatoes)

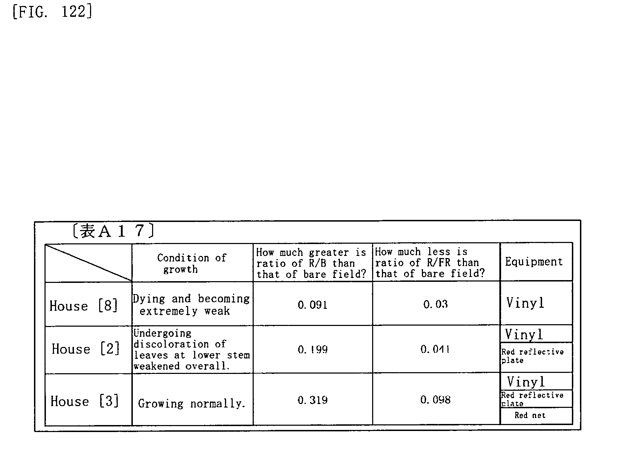

Reviewing cultivation conditions of the tomatoes, watering of 2 liters was performed once a week, and thus, the cultivation conditions became severe as the tomatoes grew and increased in size. As a result, in the tomatoes of the house 8, 2 of 6 pots withered on upper sides thereof. The other 4 pots were also weakened. Leaves under the stems of the house 2 were discolored and weakened as a whole. However, the weakening progress had stopped until now from the middle of December to remain unchanged. The plants of the house 3 were grown ordinarily with no withering, no discoloration and no drying. The house 8 had the worst rearing state. Relationship with the ratio of light is referred to in FIG. 122 (Table A17).

Even in the case of the tomatoes, similar to the cucumbers, since the house 3 was equipped with the vinyl, the red reflective plate and the red net, in order to increase the pest-proof effect, an increase in ratio of light was needed.

Experiment Results (Eggplants)

Experiments were performed under conditions of 3 types of the red house, the conventional house, and the fourfold vinyl house. Here, since the fourfold vinyl varied the ratio of light as shown in FIG. 107 (Table-14), the fourfold vinyl had the same function as the red house. In the cultivation conditions in which the acrid taste of the eggplants was removed and the bitter taste and the unripe taste were reduced, under the lighting environment in which the ratio of R/B was larger than that of the bare field and the ratio of R/FR was smaller than that of the bare field, the house was closed and the suffocation state was maintained almost all day long, and at least one day of a week was 40 °C or more.

Here, the eggplants cultivated under the cultivation conditions were tasted to obtain questionnaires, which are referred to in FIG. 127 (Table A), FIG. 128 (Table B), FIG. 130 (Table C), and FIG. 131 (Table D).

In the pesticide-free cultivation, the houses in the houses 5 and 6 were opened to increase the temperature to perform the cultivation at the high temperature. As a result, the plants of the house 6 of the conventional house began to be eaten by pests on October 16 and then were entirely eaten by pests to be exterminated on October 24. However, the house 5 at the side of the red house had no pest-eaten plants. After that, while the house was kept open to maintain the inside of the house at a normal temperature from November 7 to December 4, there were no pests or no disease.

8. Considerations

As the cultivation was performed under the environment in which the ratio of light was varied, variations occurring in the cucumbers, tomatoes and eggplants were as follows. The cucumbers did not easily succumb to the disease. This tendency became remarkable as the variation in ratio of light was increased. While the eggplants cultivated by the normal cultivation method were eaten by pests to be exterminated, the eggplants cultivated through the environment in which the ratio of light was varied had no pests.

It could be considered that the phenomenon was caused by the strengthened viability of the cucumbers, tomatoes, and eggplants. As described above, as the 2 fundamental accomplishments of all of the experiment results of the specification were provided, the variation in ratio of light became an essential condition of the pesticide-free cultivation, and as the ratio of light was varied, the plants became healthy. In addition, as the variation in ratio of light was increased, the plants became healthy and did not easily succumb to the disease, and the pests did not adhere to the plants.

When the cultivation conditions of the cultivation house were varied, the intention that the fabric tapes were previously used to mark to the eggplants having a size of the thumb end will be described below. The fabric tapes were provided to identify whether the fruits having no taste and an acrid taste were changed to the fruits in which the element of no taste was removed through the cultivation conditions after the results and that taste good even when eaten raw. That is, when the fruits with the mark and without the mark had the same taste, it was verified that elements of the fruits grown under the cultivation conditions were varied by varying the cultivation conditions. When the fruits with the mark and without the mark had different tastes, it was verified that the elements made once could not be changed even when the cultivation conditions were varied. From the experiment results, it was verified that the elements made once could not be changed when though the cultivation conditions were varied.

As can be seem from the following questionnaires, it was verified that, as the days having a maximum temperature of 40 °C or more in the house increased in number, the taste improved. The verified data were as follows. Cultivation temperatures are referred to in FIG. 123 (Table A18).

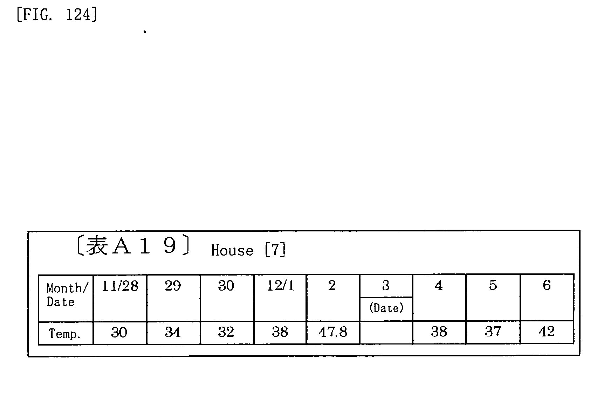

Reviewing the tastes of the eggplants, in a state on November 28, the eggplants had no acrid taste, an unripe taste and a weak bitter taste. While the eggplants could be eaten raw, they had a bad aftertaste. Seven eggplants having the tastes and a size of less than the thumb end were marked with the fabric tape, and cultivated under the cultivation conditions of FIG. 124 for 8 days from November 28 to December 6, and then, 3 of 7 were tasted on December 6.

In addition, FIG. 124 shows maximum daytime temperatures.

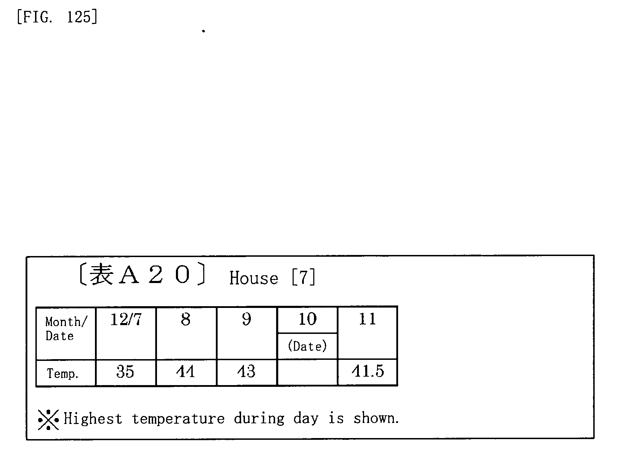

Two days had a temperature of 40 °C or more for the 9 days of FIG. 124. All of the other 7 days had a temperature of about 35°C. The fruits were grown to 5 to 6 times for 9 days, and the taste of the period from October 30 to November 28, i.e., the unripe taste, remained. Accordingly, the other 4 fruits with the fabric tape were cultivated until December 11 at the following temperatures and then tasted.
In addition, FIG. 125 shows maximum daytime temperatures.

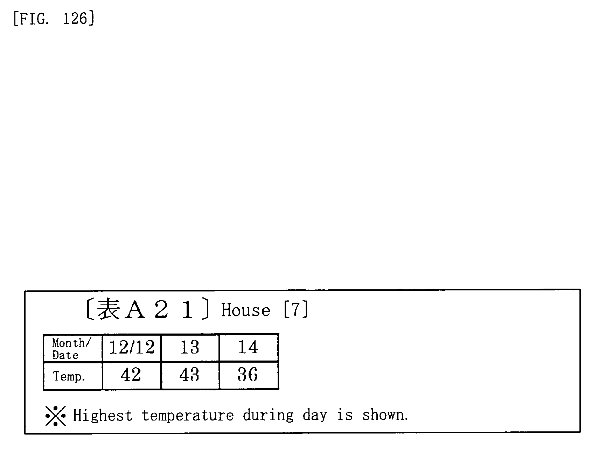

The eggplants still had the unripe taste. However, the unripe taste was reduced. Here, the other 3 eggplants with the fabric tape were cultivated until December 14 at the following temperatures of FIG. 126 and then tasted.
In addition, FIG. 126 shows maximum temperatures in a day.

While the eggplants still had the unripe taste of the period from October 30 to November 28, since the unripe taste was reduced, the questionnaires were collected. When the questionnaires were collected from 10 peoples, 3 peoples answered that the taste was not delicious, and one people answered that the taste was good but the aftertaste was bad, and thus, collection of the questionnaires was terminated.

FIG. 127 (Table A) shows that, as days of 40 °C or more increased, the unripe taste was reduced. While people may like or dislike different kinds of foods, even though Senshu eggplants were not stated as an example, peoples who like eggplants may eat the eggplants raw as long as without an acrid taste. In addition, the eggplants temporarily fruited but with flowers remaining on November 28, i.e., the eggplants with no fabric tape were harvested and tasted on December 14. Since the eggplants tasted good, questionnaires (FIG. 128 (Table B)) were collected from 17 people. As a result, two people answered that the taste was good but the aftertaste was bad, and most of the people answered that the taste was good. The questionnaires are referred to in FIG. 128 (Table B).

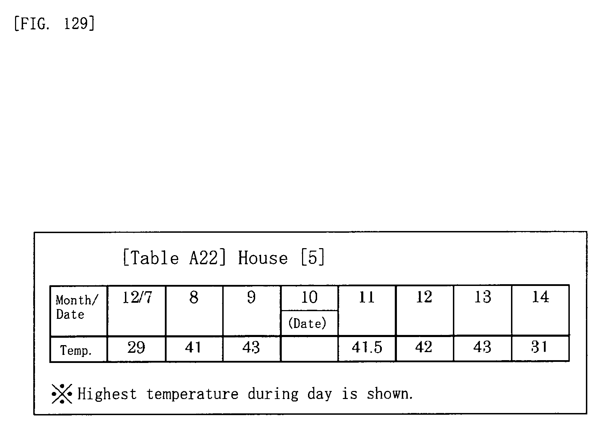

The eggplants cultivated under the conditions in which the red house was kept closed in the house 5 during the period from November 7 to December 6 at normal temperatures (November 7 to November 21, 30 °C to 35 °C; and November 22 to December 6, 25 °C to 27 °C) were tasted on December 4 and December 6. Two eggplants that fruited on November 23 (under the temperature environment of 25 °C to 27 °C) and one eggplant that fruited on November 25 (under the temperature environment of 25 °C to 27 °C) were tasted on December 6.
The eggplants had both an acrid taste and an unripe taste, and the skins also had a bitter taste so that the eggplants could not be eaten raw. These tastes were the same as the tastes tasted on December 4. 12 eggplants having a size of a thumb end or less were marked with fabric tape and then cultivated through the cultivation experiment for 7 days from December 7 to December 14 according to FIG. 129 (Table A22), and the eggplants with the mark and without the mark were tasted on December 14.
In addition, FIG. 129 shows maximum daytime temperatures.

Even in this case, while the eggplants with the fabric tape still had the unripe taste, questionnaires were collected from 14 people (see FIG. 130 (Table C)). As a result, as shown in FIG. 130 (Table C), 5 people answered that the taste was good but the aftertaste was bad, and one person answered that the taste was bad. Meanwhile, in the case of the eggplants with no fabric tape, questionnaires were collected from 21 people. As a result, as shown in FIG. 131 (Table D), two people answered that the taste was good but the aftertaste bad, and all of the others answered that the taste was good.

Based on FIG. 124 (Table A19), FIG. 125 (Table A20), FIG. 126 (Table A21), and FIG. 129 (Table A22), in the cultivation of the eggplants, the cultivation conditions for cultivating the eggplants under appropriate environments could be obtained. Reviewing the cultivation conditions, provided that the cultivation house in which the eggplants were cultivated was kept closed, carbon dioxide was insufficient for certain hours in the daytime and oxygen was insufficient for certain hours at nighttime, it was preferable that at least one day had a maximum temperature of 40 °C or more in a day.

9. Conclusions of Cultivation Experiment 4

1. In the cultivation experiment of the cucumbers using the houses 1, 4 and 9, it was verified that as the variation in ratio of light was increased, the cucumbers did not easily succumb to the disease.
2. In the cultivation experiment of the tomatoes using the houses 2, 3 and 8, it was verified that as the variation in ratio of light was increased, the viability to endure the severe environment increased.
3. In the cultivation experiment of the eggplants using the houses 5, 6 and 7, it was identified that the cultivation method of improving the tastes of the eggplants must simultaneously satisfy the following 3 conditions.

3-1. The ratio of R/B was increased to be higher than that of the bare field and the ratio of R/FR was reduced to be smaller than that of the bare field.
3-2. The cultivation temperature was managed such that a maximum temperature in a day was 40 °C or more.
3-3. It was preferable that the cultivation house was kept closed, and the house was open for a short time.

4. In the cultivation temperature to improve the tastes of the eggplants, as the number of days having a maximum temperature of 40 °C or more was increased, the taste became good.
5. In the cultivation temperature to improve the tastes of the eggplants, at least one day having a maximum temperature of 40 °C or more in a day for a week was needed.
6. The fruits that ripened when the cultivation was performed under the cultivation conditions according to Articles 3 to 5 tasted good. The taste of the fruits that did not taste good, which fruited when the cultivation conditions failed to satisfy Article 6, could not to be improved.

**Fourth Embodiment**

Cultivation Experiment 5

Pesticide-Free Cultivation Method and Harshness Removal Cultivation Method

1. Purposes of Experiment

This experiment is provided to estimate what volume of eggplants can be produced when a harshness removal cultivation method of eggplants is put into practical use. In addition, the experiment is provided to find a method of improving productivity. Further, when cucumbers are cultivated through the harshness removal cultivation method of eggplants, the experiment is provided to check how taste varies. Furthermore, the experiment is provided to verify disease resistance of pesticide-free cultivation.

2. Place of Experiment

Shinonome-cho, Kochi, Kochi

3. Period of Experiment

December 20, 2006(H18) to April 3, 2007(H19)

4. Cultivation Conditions

4-1: Facility for Cultivation House

A house for the experiment was a typical vinyl house whose surroundings and ceiling were completely enclosed, not a weatherproof house into which sunlight is introduced.
Eggplants were cultivated in cultivation houses 1, 4, 5, 7 and 9, and cucumbers were cultivated in cultivation house 2, 3 and 8.

a. Houses 1 and 2: Red reflective plates were attached to typical vinyl houses (see FIG. 43).

b. Houses 3 and 4: Red reflective plates and red nets were attached to typical vinyl houses (see FIG. 54).

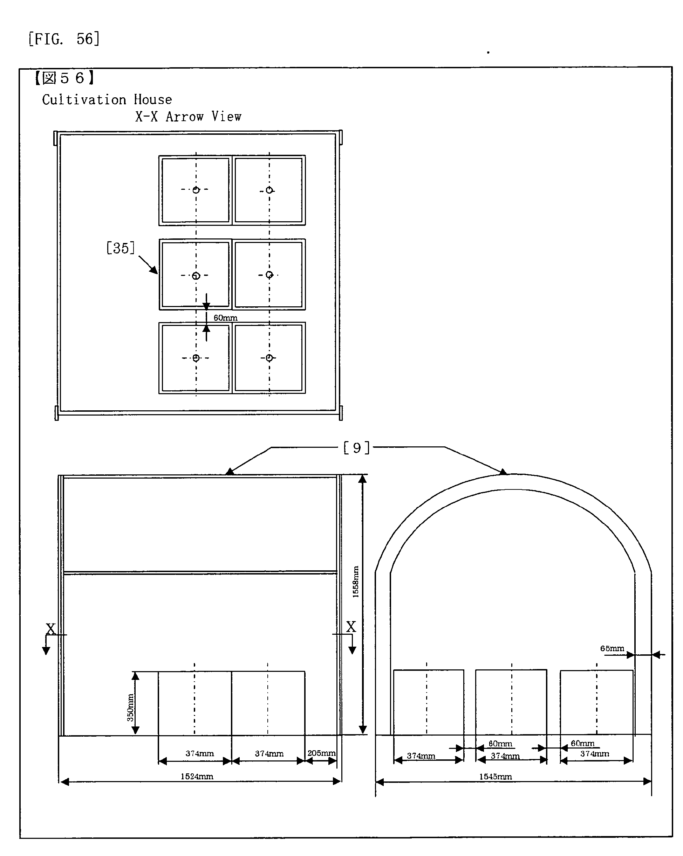

c. Houses 8 and 9: Typical vinyl houses were installed at positions far from the red houses or the red reflective plates (see FIG. 56).

d. House 5: A red reflective plate was attached to the cultivation house of Cultivation Experiment 2, or the same patterned red house as the equipment of FIG. 31.

e. House 7: Vinyl of a typical vinyl house was overlapped several times and a red reflective plate was attached to the house. The number of vinyl sheets was fourfold (from October 30, 2006(H18)) to twofold (January 23, 2007 (H19)), twofold (January 23) to threefold (January 24, 2007(H19)), and threefold (January 24) to twofold (January 25, 2007(H19)).

4-2: Lighting Environment

a. The cultivation houses 8 and 9 were the same as the cultivation house 1 of Experiment 1.

b. The cultivation houses 1 and 2 were the same as the cultivation house 6 of Experiment 1 (a difference in the ratio of R/B between a bare field and the houses was 0.199).

c. The cultivation houses 3 and 4 were the same as the cultivation house 5 of Experiment 1 (a difference in the ratio of R/B between the bare field and the houses was 0. 319).

d. In the ratios of light for fourfold, threefold and twofold vinyl of the cultivation house 7, one-fold vinyl was increased in the ratio of R/B by 0.108 and reduced in the ratio of R/FR by 0.034 in comparison with the bare field. See FIG. 104 (Table 13). Fourfold vinyl was increased in the ratio of R/B by 0.465 and reduced in the ratio of R/FR by 0.196 in comparison with the bare field. See FIG. 107 (Table 14).

e. The cultivation house 5 was the same as the cultivation house of Experiment 2 (3 of FIG. 13) (a difference in the ratio of R/B between the bare field and the house was 0.260).

4-3: Measurement Operation

Measurement Times: 8:30, 10:10, 13:00 and 15:00

Measurement Positions: A temperature was measured in the house, humidity was measured in the house, and a soil temperature was measured in each pot.

4-4: Operation Sequence

- 8:25 AM: Temperature and humidity measurement.
- 10:10 AM: Temperature and humidity measurement.
- 1:00 PM: A western reflective plate was lowered and an eastern reflective plate was raised. Temperature and humidity were measured. Watering of 2 liters each was performed.
- 3:10 PM: Temperature and humidity measurement.
- 6:00 PM (clear day), 4:30 to 5:00 (rainy day or cloudy day): The eastern reflective plate was lowered and the western reflective plate was raised.

In a growing process, plants were grown in a natural state, with no trimming and pruning.

5. Cultivation Plants

A species of cucumbers was ZQ-7, and a rootstock was Art Kazuki.
A species of the eggplants was Chikuyo, and a rootstock was Karehen.

6. Records of Cultivation

6-1: Cucumbers

Cultivation of cucumbers was started with the house 2 closed, the house 3 open to the red net by the red reflective plate, and the house 8 is a typical vinyl house for a conventional cultivation method.

January 9, 2007(H19), closed and open conditions of the houses 2 and 3 were switched. Because the house 3 with the red net and the red reflective plate had larger variation in ratio of light than that of the house 2 with the red reflective plate only, viability of the house 3 was stronger.

Since the aforementioned facts are verified by Experiments 1 to 4, the house 3 was closed to be in a high-temperature suffocation environment. In addition, the house 2 was opened, and the cultivation was performed through the conventional cultivation method.

- January 27, it was confirmed that the cucumbers in the house 8 had powdery mildew. A small amount of powdery mildew adhered to leaves near roots.
- February 6, the cucumbers of the house 2 were in a closed state from this day forth. Because the red net of the house 3 accommodating cucumbers blocked sunlight, transmittance was reduced to about 66%. For this reason, the illuminance becomes insufficient, and thus, flowers did not bloom. Accordingly, the house 2 in which flowers bloom was closed.
- February 15, the cucumbers of the house 2 were harvested and tasted. Since purposes of the experiment about taste were finished, the houses 2 and 3 were opened to return to the conventional cultivation method to perform a comparative experiment of pesticide-free cultivation.
- February 19, the powdery mildew of the house 8 was propagated from a lower portion to a middle portion of a stem.
- February 22, the cucumbers of the house 2 had a small amount of powdery mildew.
- February 23, the powdery mildew of the cucumbers of the house 8 was propagated to about 60% of the entire house 8.
- February 27, the powdery mildew of the cucumbers of the house 8 was further propagated to about 70% of the entire house 8. In the cucumbers of the house 2, a small amount of powdery mildew was propagated to lower leaves of the stem. The cucumbers of the house 3 were growing ordinarily.
- February 28, the powdery mildew of the cucumbers of the house 8 was propagated rapidly. The powdery mildew was propagated to 80 to 90%.
- March 3, the cucumbers of the houses 2, 3 and 8 were harvested and tasted from each house. After the harvest, all of the cucumbers were pulled up to finish the experiment of the cucumbers. Levels of the propagation of the powdery mildew, withering of leaves and decaying of fruits were worst in the house 8, poor in the house 2, and fine in the house 3. The symptoms of the house 8 were 10, the house 2, about 5 to 6, and the house 3 had no powdery mildew.

6-2: Eggplants

- December 20, the eggplants of the house 1 were in an open state, the eggplants of the house 4 were in an open state (net), and the eggplants of the house 5 were in a closed state at a target temperature of 40 °C or more. The house 5 is continued from Experiment 4, not Experiment 5. The eggplants of the house 7 were in a closed state at a temperature of 40 °C or more (fourfold of vinyl), the eggplants of the house 9 were in a typicaltypical house, and eggplants: Chikuyo×Karehen were planted in the houses 1, 4, 7 and 9.
- December 22, two eggplants were harvested from the eggplants of the house 5 and then drawn out after tasting, and Chikuyo×Karehen were planted in the eggplants of the house 5 in a closed state at a target temperature of 40 °C or more.
- January 16, the eggplants of the house 1 and the eggplants of the house 4 were in a closed state.
- January 17, the house 1 was closed with the red reflective plate (eggplants), the house 4 was closed with the red net and the red reflective plate (eggplants), the house 5 was closed with the red house and the red reflective plate (eggplants), the house 7 was closed with the fourfold of vinyl (eggplants), and the house 9 was a typical house (eggplants).

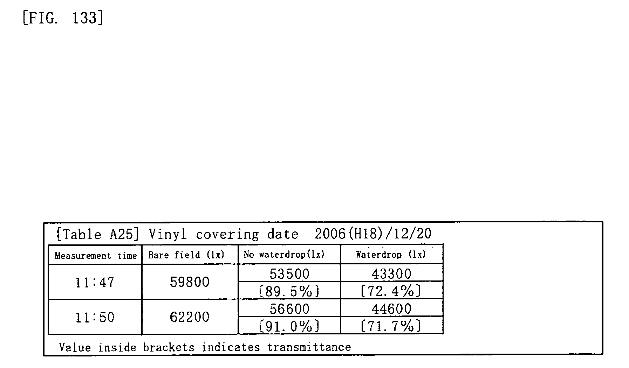

Transmittance measurement results of the fourfold of vinyl (vinyl tensioned day, October 30, 2006 (H18)) of the house 7 are referred to in FIG. 108 (Table 15).
- January 22, each eggplant of the house 1 made three flowers, two of which was half-bloomed, and black stains of the leaves gradually disappeared and thinned. Each eggplant of the house 4 made one flower, and each eggplant of the house 5 made two flowers, one of which was half-bloomed, and color of the leaves were generally thinned and color of the flowers was pink. In the eggplants of the house 7, color of leaves was not thick, and color of flowers was also pink. One flower of 1/20 was dropped, and two buds were dropped. However, the growing conditions were fast in the house, a plant length was long and a stem size was large.
One flower bloomed from the eggplants of the house 9, and color of grass was thickest.
- January 23, the vinyl of the eggplants of the houses 5 and 7 was replaced with a new one. The house 7 was covered with twofold of vinyl.
- January 23 (Tuesday), partly cloudy, transmittance measurement results of the houses 5 and 1 are referred to in FIG. 132 (Table A24) and FIG. 133 (Table A25).
- January 23, 2007 (H19) (Tuesday), partly cloudy, transmittance of the house 5 was measured.

- January 23 (Tuesday), 2007 (H19), transmittance of the house 1 was measured.

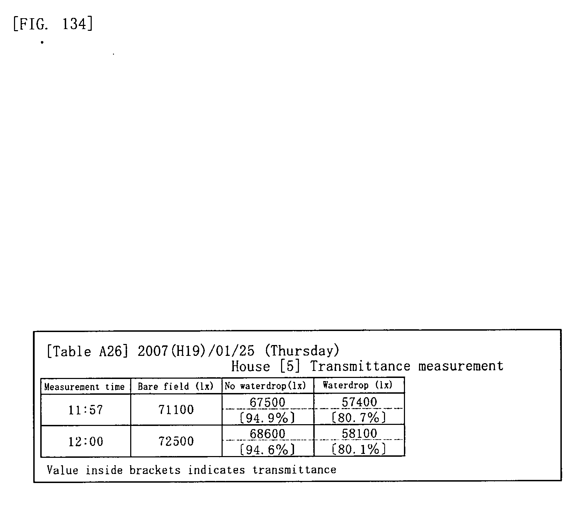

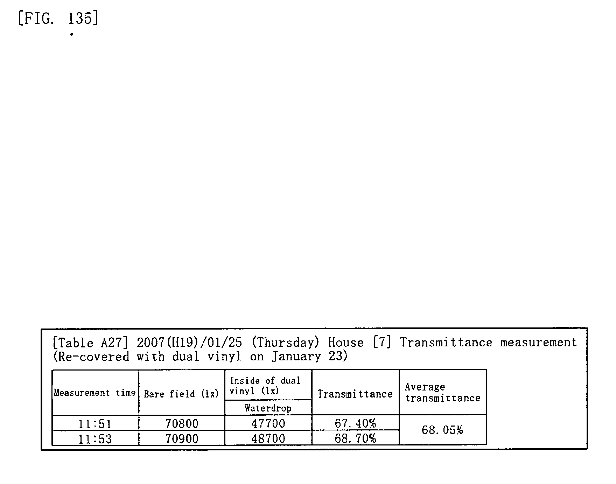

- January 24, 2007 (H19), the vinyl for the eggplants of the house 7 was changed from twofold to threefold.
- January 25, 2007 (H19), one flower was dropped from the eggplants of the house 7. Some leaves were browned. The vinyl for the eggplants of the house 7 was changed from threefold to twofold. Exemplary results of transmittance of the houses 5 and 7 are referred to in FIG. 134 and FIG. 135.

- February 28, black fungi were found from the eggplants of the house 7. Withered leaves were found.
- March 1, symptoms of the powdery mildew had slightly appeared on some leaves near roots of the eggplants of the house 9.
- March 5, around this day, flowers did not bloom from the eggplants of the houses 1, 4, 5 and 7.
- March 6, all of the eggplants harvested on this day had unevenness on their surfaces and bad gloss. These eggplants could not be sold. These eggplants were also found from the eggplants harvested in the previous time.
- March 7, the leaves of the eggplants of the house 7 were drooping, the withered leaves had increased, and spots of black fungi were also propagated.
Black fungi were found from the eggplants of the house 5, not more than the house 7, and lower leaves of stems were yellowed to be unhealthy.
- March 8, the eggplants harvested on this day could not be sold. The eggplants were generally unhealthy, which would seem to show limitations of the cultivation.

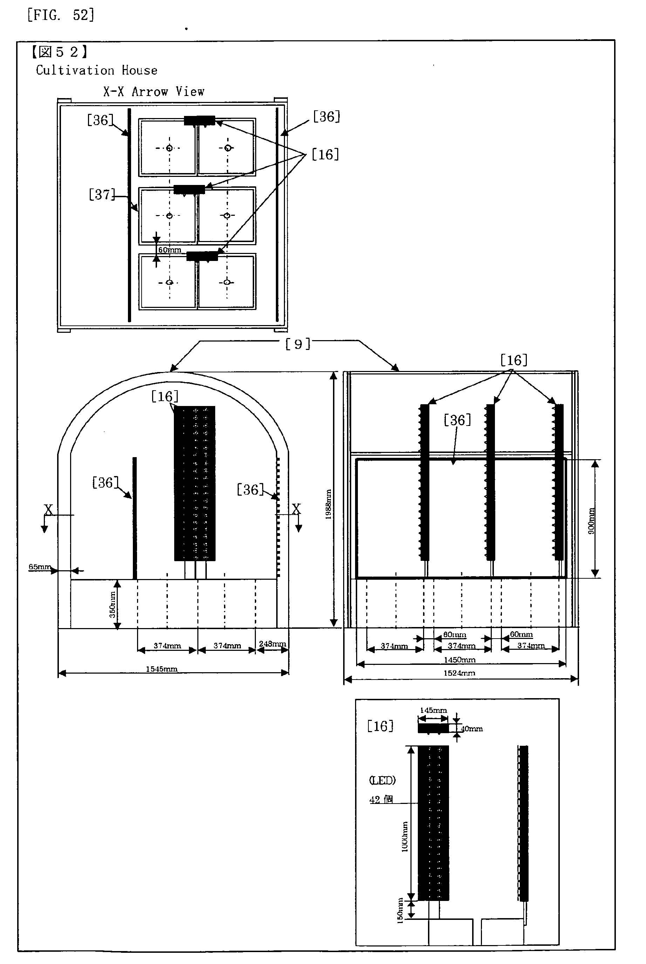

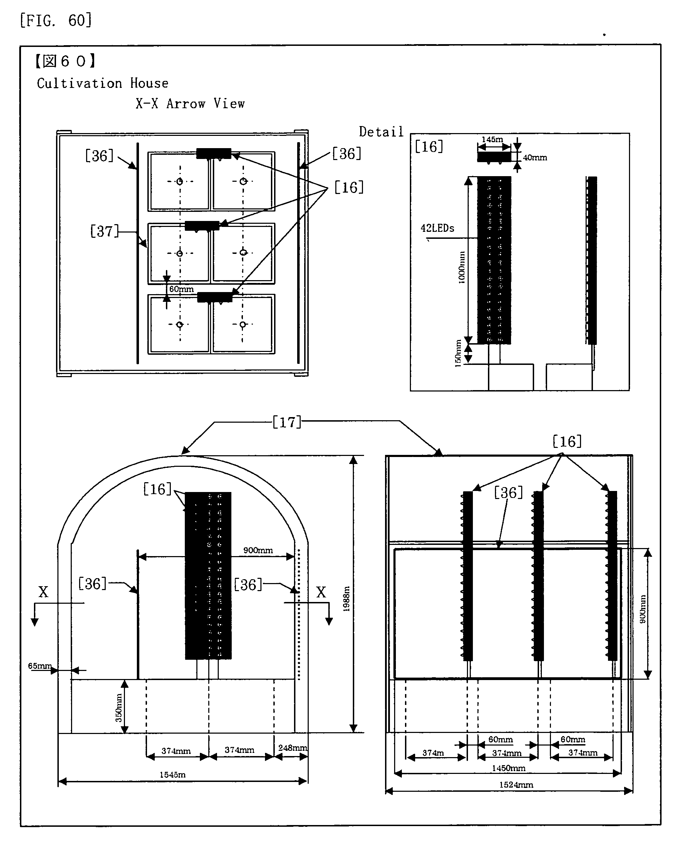

- March 9, red LEDs were installed above the eggplants of the houses 1, 5 and 7. Lighting-up time is 6:00 AM to 6:00 PM, the houses 1 and 5 are referred to in FIG. 52, and the house 7 is referred to in FIG. 60.
- March 12, two flowers bloomed from the eggplants of the house 1. It would seem that the eggplants were healthy because the red LEDs were lit up. The eggplants harvested on this day also had shapes, colors and gloss that could not be eaten.
- March 13, two flowers bloomed from the eggplants of the house 1.

Propagation of the fungi or powdery mildew to the eggplants of the house 5 and the eggplants of the house 7 had stopped. This was an effect of the red LED lighting.
No fungus or powdery mildew was generated from the house 1 and the eggplants of the house 4.

- March 15, this day was a sixth day after the LED was attached. While the eggplants recovered their health, the eggplants harvested on this day could not be sold.
- March 20, the eggplants recovered their health from the red LED, and flowers bloomed. The powdery mildew of the eggplants of the house 9 had propagated to the middle of the stem.

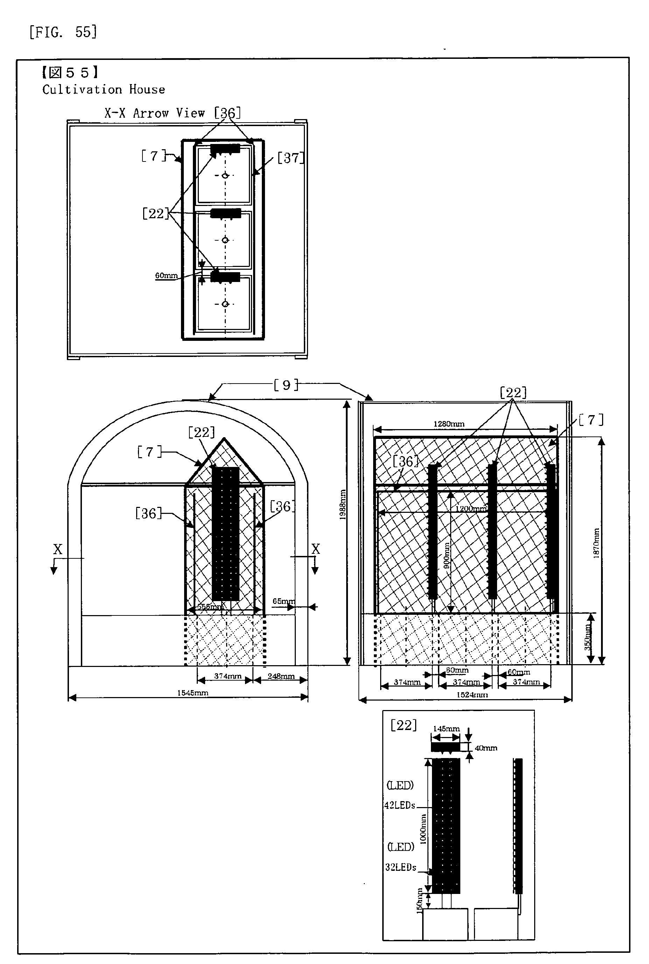

The red LED was also installed over the eggplants of the house 4 (see FIG. 55). The lighting-up time was the same as the other houses. The two LEDs were combined with red light R and far-red light FR.

- February 22, on this day, many flowers bloomed. There were many buds that seem to be on the verge of blooming. However, the harvested eggplants could still not be sold.
- March 26, the powdery mildew of the eggplants of the house 9 had propagated adjacent to upper portions of the stems. The eggplants harvested on this day were already finished fruiting before the LED was attached. There was no gloss and the surface was uneven. The eggplants could not be eaten.
- April 2, about 10 eggplants having an average diameter of 30 to 40 mm were ripened in the houses 1, 5 and 7, except the eggplants of the house 4. The surfaces of the eggplants had good gloss.
- April 3, two eggplants were harvested from the house 1. While the eggplants had no unevenness on the surfaces thereof, the eggplants had somewhat insufficient gloss. The taste was good.

March 9, the LED was attached. While the number or light intensity of LEDs was low, the eggplants became healthy after several days from the attachment as shown in the drawing. In addition, the flowers bloomed in all of the houses 1, 4, 5 and 7 every day from 10th day after the attachment to the day before. Propagation of the disease was stopped. However, since some flowers were dropped, the number of LEDs may need to be increased.

Here, after the experiment, three types of Cultivation Experiments 7 when a raised Shisui was used and the number of LEDs was changed, when only the red light R was irradiated and when both of the red light R and the far-red light FR were irradiated were performed to be compared with the aforementioned experiment and verified.

The number of fruits obtained by pulling all of the eggplants of the houses 1, 4, 5, 7 and 9 was counted. A total of 38 large and small eggplants of the houses 1, 4, 5 and 7 had ripened. All of the eggplants had good gloss and shape.

7. Experiment Results and Considerations

7-1: Cucumbers

The cucumbers cultivated under the high temperature closed suffocation conditions were tasted. Unripe taste disappeared. When the cucumbers were tasted with the eyes closed, it was impossible to know what food was being tasted. These cucumbers could not be sold. While the cultivation method does an experiment on only the eggplants and the cucumbers, it seems that the removal of taste causes the change of taste. Thereafter, tomatoes were cultivated through the cultivation method and then verified.

The cucumbers cultivated through the conventional cultivation method with the house open ordinarily had unripe taste.

With regard to the disease, the house 2 was closed for 12 days from December 28 to January 9, 2006 (H18) and then opened for 28 days from January 9 to February 6. In addition, the house 1 was closed for 9 days from February 6 to February 15 and then opened for 16 days from February 15 to March 3. Among 65 days of the entire cultivation days from December 28, 2006 (H18) to March 3, 2007 (H19), the closed days were 21 days. A closed period of the house 3 was 37 days from January 9 to February 15, 2007 (H19).

While pests could not easily adhere to the cucumbers when the house was closed, the environments became severe and the strength was weakened, and thus, the cucumbers easily caught diseases. Since the cucumbers became weak as the flowers were dropped, the cucumbers of the house 2 were infected by the powdery mildew on February 22, which was the seventh day after the house 2 was opened on February 15, the house 2 having smaller variation in ratio of light than that of the house 3. However, while the house 3 having the longest closed period was opened on the same day, February 15, in the house 2, there was no infection. This is evidence that viability is strengthened as variation in ratio of light is increased, a disease resistance is increased and the plants are not infected as the viability is increased.

7-2: Eggplants

In order to find reasons of unhealthy eggplants cultivated in a closed state, transmittance was measured to verify probability of insufficient illuminance caused by a decrease in transmittance of the vinyl. According to the measurement results, since a saturation point of light of the eggplants is 40,000 lux, about 38,000 lux of the house 7 measured on January 19 or about 39,000 lux or 39,500 lux of the house 5 measured on January 23 became problems. Moreover, since the illuminance was measured at measurement times of 11:45 to 12:00, it was obvious that the illuminance must be equal to or lower than a saturation point of light at about 2:00 to 3:00 PM. Of course, an area with no droplets and an area with droplets had a difference in transmittance. Further, the transmittance was sharply decreased at the area with droplets. Furthermore, levels of the decrease in transmittance were different.

The house 7 was equipped with new vinyl (twofold) on January 23. The house 5 was also equipped with new vinyl on the same day. However, since sunlight illuminance of January was low, sufficient illuminance could not be obtained.

In the cultivation under severe environments, the plants were dried up and withered as can be seen from results of Experiment 2 as long as the ratio of light did not vary. Since the ratio of light of Experiment 5 varied, the eggplants were not dried up or withered. However, as can be seen from the records, colors of leaves adjacent to a growing point started to change from dark blue to green. This is because the eggplants became unhealthy. Next, flowers bloomed to be dropped like flowers fruited with a hormonal agent. Further, buds with no blooming were dropped, leaves were drooped, and colors of flowers further thinned from pink. Then, the flowers did not bloom. The eggplants harvested around this time had no gloss and uneven and rough surfaces. Such eggplants could not be eaten. The cultivation had to be terminated. At this time, while the eggplants ordinarily cultivated in the typical house were infected by the powdery mildew, fruits were ripened by adhering flowers, and the diseases did not progress to a level of fruit decay.

Under the above situations, the red LEDs were installed in the houses 1, 4, 5 and 7 and then turned on. Specifications of the houses 1 and 5 are referred to in FIG. 52, and the houses 4 and 7 are referred to in FIGS. 55 and 60. From March 6 to March 10, no flowers bloomed. However, after the 10th day from lighting the LED, flowers bloomed every day in all of the houses 1, 4, 5 and 7. The disease progress also stopped. At the completion of the cultivation experiment, a total of 38 large and small eggplants were obtained from the houses 1, 4, 5 and 7. All of the eggplants had good gloss and good appearances. While there were no flowers and the fruits had had uneven tough surfaces and no gloss, after the LED was lit, the flowers bloomed and the fruits were recovered and ripened as shown in FIGS. 52, 55 and 60. Further, all of the eggplants had good fruits with gloss and good appearances. According to Tables, a total of 116 eggplants of six pots were harvested from the typical house 9 through the ordinary cultivation. A total of 75 eggplants of 6 pots were obtained from the house 1, a total of 20 eggplants of three pots were obtained from the house 4, a total of 52 eggplants of 6 pots were obtained from the house 5, and a total of 35 eggplants of six pots were obtained from the house 7. Since the houses were under the severe environments, productivity was very low in comparison with the typical house 9. However, it will be appreciated that the productivity was remarkably improved by lighting and irradiating the LEDs as shown in FIGS. 52, 55 and 60.

The powdery mildew was also propagated adjacent to upper portions of the stems of the eggplants of the house 9. Progress of the disease in the houses 5 and 7 was stopped.

In addition, the houses 1 and 4 had no disease. The houses 1 and 4 were opened for 27 days from December 20, 2006 (H18) to January 16, 2007 (H19) and then managed at a target temperature of 25 °C. For this reason, since the houses 1 and 4 were healthier than the houses 5 and 7 cultivated in a closed state from start to finish, the houses 1 and 4 were not infected. The house 7 had diseases more severe than the house 5 because the house 7 with fourfold of vinyl had transmittance of 54.75% from December 20 to January 23, in which an amount of sunlight was small, and had transmittance of 68.05% to 71.3% even after January 23 with twofold of vinyl, which had a remarkably small amount of sunlight in comparison with the house 5 with one-fold of vinyl. For this reason, it will be appreciated that, under the severe environments, the eggplants became unhealthy to be weakened.


8. Conclusion of Cultivation Experiment 5

[1] When the illuminance is equal to or above the light saturation point, the variation in the ratio of light increases in terms of an absolute value, the viability is strengthened to be healthy. Accordingly, a disease resistance is improved to make it difficult to infect the plants.

[2] Since the cultivation by the closed house was performed under the severe environments, a crop yield of the crops was low, and lifespan of the crops was also short. However, referring to FIGS. 52, 55 and 60, it will be appreciated that both of the crop yield and lifespan can be improved by irradiating the artificial lighting of red light R.

[3] While the cultivation by the closed house was performed under the severe environments, the plants were cultivated without doing anything by intention, i.e. without trimming or pruning, in the growing process in order to check the disease resistance. Accordingly, the plants were dense to deteriorate ventilation so that the plants became unhealthy to be infected by the fungi or powdery mildew. However, as shown in FIGS. 52, 55 and 60, the progress of the disease could be stopped by irradiating the artificial lighting of the red light R.

[4] Referring to FIGS. 52 and 60, only the red light R was used. However, referring to FIG. 55, two colors of the red light R and the far-red light FR were used. Sunlight in a shady spot has far-red light FR of 700 nm or more, which provides an adverse effect, as shown in FIG. 2. However, the LED of red light R has 8000 mcd, and the number of thereof is 42. Meanwhile, the LED of far-red light FR has 8 mcd, the number thereof is 32. That is, the brightness of the LED of far-red light FR is merely 1/1000 the LED of red light R, and the number thereof is also low. For this reason, since the force of a spectrum of a sunny spot of sunlight filtering through foliage of tree branches, i.e., the red light R is much stronger than the far-red light FR in the shady spot, the houses of FIG. 55 had the same effect as FIGS. 52 and 60.

**Fifth Embodiment**

Cultivation Experiment 6

1. Purposes of Experiment

1-1: In Experiment 6, a house of experiment conditions as described below was fabricated and then cultivation was performed.

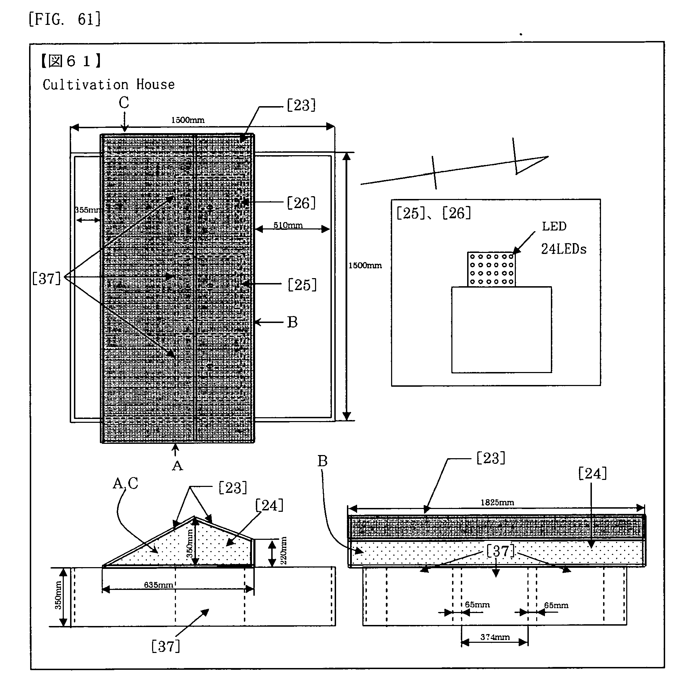

[1]: A house G had a structure having side surfaces with no vinyl and through which inclined sunlight directly entered in the morning and evening, and a ceiling roof with vinyl coated with red paint to have transmittance of about 36%. In addition, in cultivation conditions, no artificial lighting was used. This house is referred to as a house G-A, which is shown in FIG. 61.

[2]: Cultivation was performed under cultivation conditions in which the house G had a structure having sides with vinyl and through which inclined sunlight directly enters in the morning and evening, and a ceiling roof with vinyl coated with red paint to have transmittance of 50% to 55%, and no artificial lighting was used. This house is referred to as a house G-B, which is shown in FIG. 62.

[3]: Cultivation was performed under conditions that pots were disposed on a rooftop bare field, a ratio of R/B with respect to the pots was varied, and the artificial lighting of red light R having a wavelength range of 615 to 680 nm was irradiated. In Experiment 6, an LED having a peak wavelength of 644 nm and an arc-shaped spectrum was used. FIGS. 65 and 66 show a cultivation apparatus for varying only a ratio of R/B.

[4]: Pots were disposed on a rooftop bare field, and open-air cultivation was performed.

[5]: Pots were disposed on an aboveground bare field, and open-air cultivation was performed.

1-2: In Experiment 6, the cultivation under the lighting environment in which the "ratio of light" was varied again for verification and the cultivation on the bare field were simultaneously performed and then compared.

2. Place of Experiment

Shinonome-cho, Kochi, Kochi

3. Period of Experiment

March 26, 2007 (H19) to October 31, 2007 (H19)

4. Experiment Conditions

4-1: Facility of Cultivation Area

a. House G-A: A house in which vinyl was installed at only a ceiling portion thereof. Water paint (red) was sprayed to the vinyl such that concentration of the paint arrived at transmittance of about 36%.

Since side surfaces of the house had no vinyl, sunlight directly entered the house in the morning and evening. See FIG. 61.

b. House G-B: A house in which vinyl was installed at side surfaces and a ceiling portion thereof and sunlight could not directly enter. Water paint (red) was sprayed on the vinyl such that concentration of the paint arrived at transmittance of about 50%. See FIG. 62.

c. Pots on the rooftop bare field: The pots were disposed on the rooftop bare field far from the red such as a red reflective plate, and so on, to perform the cultivation.

d. Pots on the rooftop bare field with LED: The pots were disposed on the rooftop bare field with facility in which the LED of red light R was installed. See FIGS. 65 and 66.

e. Pots on the aboveground bare field: The pots were disposed at another place at which there was no red such as the red reflective plate, and so on, to perform the cultivation.

f. House B: The house B of FIG. 33 was renovated so as to completely surround the surroundings of the weatherproof vinyl with vinyl. The other portion of the house B was used as it was. However, the house B was renovated in the experiment as shown in FIG. 67.

4-2: Cultivation Conditions

- LED Lighting Time: The houses G-A and G-B are referred to in the cultivation records. The LED installed at the pots of the rooftop bare field was turned on at 5:00 AM and turned off at 7:00 PM.

In the pots on the rooftop bare field with the LED, to prevent malfunction of the LED when it rained at night or on holidays, the pots were surrounded by veneer boards not to be wetted or blown. The veneer boards were detached at 8:30 AM.

4-3: Measurement Operation

Measurement Times: 8:30, 10:10, 13:00 and 15:00

House G-A and G-B: A temperature outside the house, a temperature inside the house, a soil temperature of each pot.
Pots on the rooftop bare field: A soil temperature of each pot, air temperature.
Pots on the aboveground bare field: Air temperature.

5. Cultivation Plants

Napa cabbage: Disease resistance 60 days and cabbage: Kinkei No. 201 was cultivated by the facility in the cultivation area, rather than the house B of the aforementioned 4-1.
Japanese mustard spinach was seeded and cultivated in the pots of the house B and the rooftop bare field.

6. Cultivation Records

6-1. Japanese mustard spinach, cultivation period: May 12 to June 6, 2007 (H19)

- May 12, Japanese mustard spinach was seeded in the pots of the house B and the rooftop bare field.
- May 17, Japanese mustard spinach in the pots of the house B and the rooftop bare field sprouted.
- May 29, wormholes and pests such as aphids were found on Japanese mustard spinach in the rooftop bare field. Then, the wormholes were found on Japanese mustard spinach in the rooftop bare field and were weeded every day, and the wormholes were generally weeded out on June 6. Japanese mustard spinach of the house B was harvested on June 6 with no wormholes.

6-2. Napa cabbage/cabbage

- March 26, napa cabbage and cabbage were seeded in the pots in the house G-A, the house G-B and the rooftop bare field, the pots on the rooftop bare field with the LED (hereinafter referred to as the LED pots on the rooftop bare field), and five types of pots on the aboveground bare field.
- March 30, the LEDs of the houses G-A and G-B were not lit.

The napa cabbage sprouted in all of the pots.

[1] Cabbage on the Aboveground Bare Field

- March 31, the cabbage sprouted from all of the pots on this day and the day before.
- May 16, wormholes were found on the cabbage of the aboveground bare field.
- May 21, the wormholes in the cabbage of the aboveground bare field had increased in size. On a closer view, three pests were found on the back of a leaf. Since a result of the experiment of the cabbage of the aboveground bare field was induced, the experiment was finished. Using the terminated cabbage of the aboveground bare field, it was checked whether the pests had disappeared when the ratio of light is varied with the pests adhered to the leaves.

The pots of the cabbage of the aboveground bare field were renovated with the equipment of FIG. 62 to light the LEDs of red light R. Lighting time was 4:20 to 5:30 AM and 6:30 to 8:00 PM, and even on the daytime, the LED remained lit when the sun can be seen (hereinafter referred to as "the LED is lit").

- May 22, even though the renovated LED was lit, the wormholes were increasing in number.
- May 23, the wormholes were increasing in number in comparison with the day before. As a result of the experiment, it was determined that, once the pests had adhered to the types of cabbage that are vulnerable to pests and easily infected by pests, the pests would not disappear and remained healthy even when the ratio of light was varied.

[2] Cabbage of LED Pot on the Rooftop Bare Field

- May 21, wormholes were found in the cabbages of the LED pots on the rooftop bare field.
- May 23, pests were found in the cabbages of the LED pots on the rooftop bare field. As a result of the experiment, it was determined that irradiation of the artificial lighting of red light R had no insect-proof effect.

[3] Napa Cabbage of the Aboveground Bare Field

- May 22, wormholes were found in the napa cabbage of the aboveground bare field. Accordingly, pests adhered to both of the cabbage and the napa cabbage of the aboveground bare field.

[4] Cabbage of the Rooftop Bare Field

- May 22, pests adhered to the cabbage of the rooftop bare field.

[5] Cabbage of the House G-B

- May 22, since pests had adhered to the cabbage of the house G-B, the LED was lit.
  Since the cabbage and the napa cabbage were grown, the roofs of the house G-B and the house G-A were raised by 250 mm.
- May 23, wormholes of the cabbage of the house G-B were increased twofold even though the LED has been installed the day before. The total number of pests was 22.

May 22, it was determined that, in the cabbage of the aboveground bare field, the LED of red light R has no insect-proof effect, and May 23, it was determined that, in the cabbage of the LED pots of the rooftop bare field, the irradiation of the artificial lighting of red light R had no insect-proof effect. In addition, when the LED of red light R was also lit in the house G-B on May 22, the wormholes were increased twofold on the day after.
As a result of the experiment, it will be appreciated that irradiation of the artificial lighting of red light R has no insect-proof effect. Accordingly, the LED of the house G-B was removed and a fluorescent lamp of white light (the white fluorescent lamp is a fluorescent lamp with a bracket, made by Hitachi manufacturing company, type: straight pipe 10W (anti-moisture and anti-rain type)) was installed to irradiate light from the outside of the house to pass through the vinyl coated with red water paint. The irradiation time was the same as the LED (hereinafter referred to as "the artificial lighting of white light is irradiated").

- May 24, the number of wormholes of the cabbage of the house G-B was 22, which was the same as on the day before, and the size thereof had not varied.
- May 25, the number of wormholes of the cabbage of the house G-B was 22, which was the same as on the day before, and the size thereof had not varied. When this situation continued for several days, the worm would starve.
- May 26, cabbage of the house G-B: The number of wormholes was 22, which was the same as on the day before, but three wormholes were added on newly grown leaves, and thus the total number was 25.

As a result of the experiment, it will be appreciated that, by lighting the fluorescent lamp of white light, an increase in speed of the wormholes slowed. Accordingly, it will be appreciated that at least some effect is provided. However, since the wormholes were increased in number, the variation in ratio of light was further increased. The concentration of the red paint on the vinyl of the house was increased to from the transmittance of about 50% of the current state to about 30%.

- May 27, the number of wormholes of the house G-B had not varied from 25, which was the same as on the day before.
- May 28, cabbage of the house G-B: The number of wormholes was 26, and the 1 additional was a small hole of about 1 mm, which could not be seen unless it was observed on a closer view. Several aphids adhered to two leaves overlapping the leaf of the napa cabbage to which the aphids adhered.

As a result of the experiment, it will be appreciated that the LED of red light R has an adverse effect in the insect-proof effect, and the artificial lighting of white light has an effect, even though the effect is imperfect. In addition, it will be appreciated that, in the variation in ratio of light, a significant effect cannot be anticipated even when the concentration of the red paint becomes higher than that of the red paint of transmittance of about 50%. In any case, in the type vulnerable to pests and to which pests can easily adhere, it is too late when the pests have adhered.

[6] Napa Cabbage of the House G-A

- May 24, one blue pest having a length of 4 to 5 mm was found on the napa cabbage of the house G-A. Wormholes were also found.
- May 25, the number of wormholes of the napa cabbage of the house G-A was 30 or more.

[7] Napa Cabbage of the Rooftop Bare Field

- May 24, the napa cabbage of the rooftop bare field had no wormholes, but small pests such as greenflies adhered thereto were found.
- May 28, napa cabbage of the rooftop bare field: Two cabbage pests having lengths 12 mm and 11 mm were found. In addition, 10 black pests having lengths of 8 to 10 mm were found, each having 6 legs. Further, three rounded pests having lengths of about 3 mm were found. Many wormholes were found.

[8] Napa Cabbage of the Rooftop Bare Field with LED

- May 28, the wormholes were increasing day by day.
- May 29, the wormholes were joining with each other to increase in size. The pests were growing, four pests had a length of 30 mm, one pest had a length of 25 mm, and one pest had a length of 15 mm.

[9] Cabbage of the House G-A

- May 28, 7 wormholes were found, and worm-eaten leaves overlapped leaves having wormholes of the adjacent napa cabbage.
- May 31, 30 wormholes were found.

[10] Napa Cabbage of the House G-B

- May 28, a large amount of aphids adhered to large leaves in a south side and leaves in a north side were in a sticky and lumpy state. The aphids were scattered on the other leaves.

Experiment Result and Considerations

By cultivating the Japanese mustard spinach, the pesticide-free cultivation could be performed. As a result of the successful experiment, it will be appreciated that the cultivation method is also effective on leafy vegetables.
A result of the experiment of determining whether the experiment is effective on the leafy vegetables very vulnerable to pests using the napa cabbage and the cabbage will be described below.
In the house shown in FIGS. 61 and 62, it will be appreciated that, under the lighting environment in which the LED of red light R or the artificial lighting of white light was not lit, there was no insect-proof effect in the vegetables vulnerable to pests such as napa cabbage or cabbage and lettuce.
It will be appreciated that, in the house shown in FIGS. 61 and 62, lighting of the LED of red light R had an adverse effect in the insect-proof effect. This is because radiation of the red light R increases the ratio of R/B by light intensity of the irradiated light, also increasing the ratio of R/FR.
That is, it will be appreciated that the plants were adapted to the lighting environment in which the ratio of R/B was increased and the ratio of R/FR is simultaneously reduced in comparison with the bare field. Accordingly, irradiation of the red light R only, which increases the ratio of R/FR, has an adverse effect.
While both of the ratio of R/B and the ratio of R/FR are not simultaneously varied, the insect-proof effect could be obtained when only the ratio of R/B is increased larger than the bare field. In this regard, on May 21 and May 23, the pests adhered to the cabbage of the red LED of the rooftop bare field, on May 21, the LED of the cabbage of the aboveground bare field was lit, and the wormholes were increased in number on May 23, two days after May 21. The wormholes increased under the conditions in which the LED in the house G-B was lit in the same manner. As results of the three experiments, it will be appreciated that the insect-proof effect could be obtained only under the condition that both of the ratio of R/B and the ratio of R/FR are simultaneously varied.
As a result of the experiment, it will be appreciated that the LED of red light R had an adverse effect on the insect-proof effect, and the artificial lighting of white light had an imperfect effect.
In addition, it will be appreciated that, in the variation in ratio of light, a significant effect cannot be anticipated even when the concentration of the red paint becomes higher than that of the red paint of transmittance of about 50%. In any case, in the type vulnerable to pests and to which pests can easily adhere, it is too late if the pests have adhered.
According to the aforementioned results, in Experiment 6, the napa cabbage was seeded and grown in the bare field, and then planted in the houses G-A and G-B to perform the cultivation experiment. Since the pests had adhered during planting in the bare field, seedlings having no wormholes were planted. However, the pests flew to adhere to the plants, so that the plants were annihilated by the wormholes. Meanwhile, even though the wormholes were found on all of the plants, in the cabbage cultivated through a method of lighting the fluorescent lamp of the white light in the house G-B, a progress speed of the wormholes was very slow.

Conclusion 1 of Cultivation Experiment 6

1. It will be appreciated that, in the plants very vulnerable to pests, by only increasing the ratio of R/B and decreasing the ratio of R/FR in comparison with the bare field, there was no insect-proof effect.
2. It will be appreciated that, in order to provide an insect-proof effect or a disease resistance effect, the ratio of R/B must be increased and simultaneously the ratio of R/FR must be decreased in comparison with the bare field.
3. It will be appreciated that, in the plants very vulnerable to pests, activity of the pests is remarkably reduced by varying the ratio of light as in the aforementioned article 2 and simultaneously irradiating the artificial lighting of white light. However, it will be appreciated that the pests become healthy as the pests grew.

4. In the method of the aforementioned article 3 of the experiment, the cultivation was initiated in a state in which the pests were already present or probability of presence of the pests was very high. If the cultivation is initiated in a state in which there are no pests, incoming larvae, other than imagoes, may pass through the plants, rather than adhering thereto.

In order to check for presence of the probability, the cultivation was performed under the conditions in which two houses G-B having transmittance of about 50% were prepared, the fluorescent lamp of white light of one side was lit, and the fluorescent lamp of white light of the other side was not lit. In addition, the aboveground bare field was used, and the cultivation experiments of the napa cabbage, cabbage and lettuce were performed under the three conditions.

The experiments were performed in a sequence of the house G-B equipped with the fluorescent lamp of white light or equipped with no lamp, seeding and sprouting on each pot of the aboveground bare field, roguing, observation of adhesion of pests, annihilation of plants, or harvest.

- Cultivation Period: July 7 to October 17
- July 7: Seeding
- July 10: Two days of the day before and this day, all plants had sprouted.
- July 12: Roguing was started.
- August 6: Attachment of the fluorescent lamp to the house G-B: There were no wormholes in the napa cabbage, cabbage or lettuce. House G-B with no fluorescent lamp: There were no wormholes in the napa cabbage, cabbage or lettuce. There were no wormholes in the cabbage or lettuce of the aboveground bare field. Wormholes were found on two of northeast and southeast among three napa cabbage.
- August 8: Pests adhered to all three napa cabbages of the aboveground bare field.
- August 9: The napa cabbage of the aboveground bare field generally had more wormholes than the day before. The napa cabbage could not be sold. Drawn out and annihilated.
- August 14: Lettuce of the aboveground bare field: Pests ate one of seven lettuces. Pests ate two of eight leaves. Drawn out, 6 lettuces remained.
- August 17: House G-B with no fluorescent lamp: There were no wormholes in the napa cabbage, cabbage or lettuce. Cabbage of the aboveground bare field: Pests ate two of four cabbages. Two cabbages were drawn out, and two cabbages remained. Lettuce of the aboveground bare field: Pests ate two of six lettuces. Three lettuces including the two lettuces were being thinned out, and three lettuces remained.
- August 18: Pests ate one of two cabbages of the aboveground bare field. However, the cabbage was not drawn out but remained as it was. Napa cabbage of the house G-B with no fluorescent lamp: Pests ate napa cabbage at a west side of three napa cabbages in the pot. It was found that the other two napa cabbages were eaten by pests. Since the pests did not move, they may be pests' dung. The napa cabbage was not drawn out but remained even on this day. Napa cabbage of the house G-B with no fluorescent lamp: It was found that pests ate all of three napa cabbages.
- August 23: Pests ate all of two cabbages of the aboveground bare field. Pests also ate all of three lettuces.
- August 27: Napa cabbage of the house G-B with no fluorescent lamp: Pests ate all of three napa cabbages. Up to two days before, pests ate leaves but they could not be found before the leaves were turned over. However, on this day, since worm-eaten leaves were found at places that could be easily seen, it seemed that the pests were slowly eating the leaves.
- August 28: Two worm-eaten cabbages of the aboveground bare field had a large number of holes throughout the leaves. Several cabbage pests on the back of the leaves grew large. All were drawn out. All were annihilated.
- August 31: The napa cabbage, cabbage and lettuce of the house G-B with the fluorescent lamp had good appearances in comparison with the house with no fluorescent lamp or the aboveground bare field.
- September 4: napa cabbage of the house G-B with no fluorescent lamp: Wormholes were increased in all of three napa cabbages to a large number. All were drawn out and annihilated.
- September 5: House G-B with the fluorescent lamp: No worms ate the napa cabbage, cabbage or lettuce. House G-B with no fluorescent lamp: No worms ate the cabbage. One worm-eaten lettuce having large wormholes was found.
- September 8: New wormholes were found on the lettuce of the aboveground bare field. While appearances of the leaves were clean, there were many withered leaves when the leaves were turned over.
- September 10: House G-B with the fluorescent lamp: No worms ate the napa cabbage, cabbage or lettuce, and there were no withered leaves. The napa cabbage was harvested on this day.
- House G-B with no fluorescent lamp: No worms ate the cabbage. It was found that almost all of the leaves of the lettuce were eaten by pests. A group of black grains adhered to both sides of the leaf. The cabbage and lettuce had 5 to 6 leaves withered at lower portions thereof.
- September 11: Wormholes of the lettuce of the aboveground bare field were increasing. Since the lettuce could not be sold, two lettuces were drawn out and annihilated.
- September 12: The lettuce of the house G-B with the fluorescent lamp was growing rapidly, had no wormholes, and had little withered leaves in comparison with the lettuce of the house G-B with no fluorescent lamp. Two lettuces were harvested on this day. Worm-eaten leaves of the lettuce of the house G-B with no fluorescent lamp had withered for 1 to 2 days to be propagated to adjacent leaves. In recent times, small red pests were found here and there on the leaves. Almost all of lower leaves were withered, although not eaten by pests. The number of leaves was reducing. Since the lettuce could not be sold, the lettuce was drawn out and annihilated.

- September 13: The cabbage of the house G-B with no fluorescent lamp had one worm-eaten leaf. Since it is still ambiguous, variation from now on would be observed.
- September 18: It was found that the cabbage of house G-B with no fluorescent lamp was eaten by pests.
- September 21: Wormholes were found on large leaves to small leaves adjacent to a growth point of the cabbage of the house G-B with no fluorescent lamp. Cabbage pests were found on rear surfaces of the leaves.
- September 25: Cabbage of the house G-B with no fluorescent lamp: Almost all of the leaves were in shreds due to wormholes. The cabbage was drawn out and annihilated. While the cabbage of the house G-B with the fluorescent lamp still did not seed, the cabbage was still growing healthily.
- October 17: Cabbage of the house G-B with the fluorescent lamp: There was no worm-eaten cabbage, and the cabbage was harvested on this day.

5. The Japanese mustard spinach succeeded in pesticide-free cultivation. Accordingly, it was required to verify the effect by performing cultivations of several kinds of leafy vegetables, which may have a pest resistance like the Japanese mustard spinach.

Welsh onions, and Japanese parsley, and macrophyll were cultivated in the house B and the aboveground bare field to perform the experiments, respectively. The house B was a typical vinyl house whose surroundings were completely surrounded with vinyl, not a weatherproof house. However, during the experiment, the house B was renovated as shown in FIG. 67.

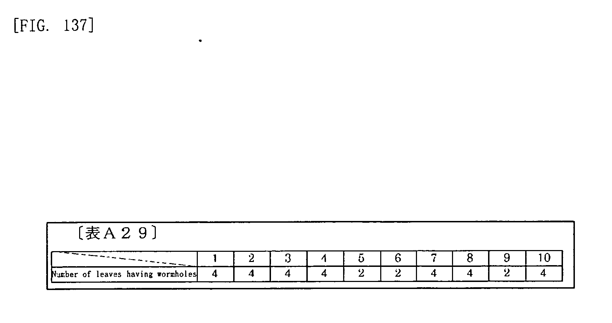

- Cultivation period: June 6 to August 20
- June 6: Seeding of the Welsh onions, Japanese parsley and macrophyll
- June 11: The macrophyll of the aboveground bare field sprouted.
- June 15: All of the pots of the aboveground bare field and the house B had completely spouted.
- July 17: Wormholes were found on the macrophyll of the aboveground bare field. Several small wormholes were formed in one leaf. Carefully observing, six true leaves were grown from one stem and two small leaves were grown from a growth point, wormholes were found on all of 10 macrophyll. See FIG. 137 (Table A29).

There were no wormholes generated on the macrophyll of the house B. Two lowermost main leaves were harvested from the macrophyll of the house B.

July 18: The house B in which the Welsh onions, Japanese parsley and macrophyll were cultivated as a typical vinyl house completely surrounded by vinyl and thus had a narrow space of 1.5 m x 1.5 m. Accordingly, by two problems of bad ventilation and an increase in temperature in the house, the vegetables became unhealthy to decrease pest resistance. In order to solve these problems, the house B was renovated as shown in FIG. 67, and the temperature in the house was controlled at a target temperature of 34 to 35 °C or less. Four pots were added to each of the house B and the aboveground bare field, and spinach, potherb mustard, garland chrysanthemum, and bok choy were seeded to perform the cultivation experiment. Accordingly, the cultivation conditions of the Welsh onions, Japanese parsley and macrophyll were also varied as shown in FIG. 67.

- Cultivation period: July 18 to October 31
- July 18: The spinach, potherb mustard, garland chrysanthemum, and bok choy were seeded.
- July 21: On this day, all of them had sprouted.
- July 23: The macrophyll of the house B was harvested and the experiment was finished.
- July 25: In Japanese parsley of the aboveground bare field, 4 worm-eaten Japanese parsleys were found among 16 Japanese parsleys. Three grasshoppers were found.
- July 30: 11 worm-eaten Japanese parsleys were found among 16 Japanese parsleys of the aboveground bare field. Roguing of the worm-eaten Japanese parsley was performed.
- July 31: 4 worm-eaten Japanese parsleys were found among 5 Japanese parsleys of the aboveground bare field. Roguing of the worm-eaten Japanese parsley was performed.
- August 1: Wormholes and two grasshoppers were found from one remaining Japanese parsley of the aboveground bare field. All of them were annihilated. 12 Japanese parsleys of the house B had no problem.
- August 2: Two grasshoppers were found form the spinach of the aboveground bare field. The grasshoppers were annihilated. 4 worm-eaten spinaches were found and thinned out among 18 spinaches. One worm-eaten bok choy was thinned out among 13 bok choy. None of the pots of the house B had any problems.

- August 3: Two worm-eaten garland chrysanthemums were found among the garland chrysanthemums of the aboveground bare field, 9 garland chrysanthemums including the two garland chrysanthemums were thinned out, and 20 garland chrysanthemums remained. Three worm-eaten spinaches were found, the three spinaches were thinned out, and 11 spinaches remained. One worm-eaten bok choy was found, two bok choy including the one bok choy were thinned out, and 10 bok choy remained.
- August 4: 12 Japanese parsleys of the house B were harvested. 2 worm-eaten garland chrysanthemums were found among 20 garland chrysanthemums of the aboveground bare field, and 18 garland chrysanthemums remained. 2 worm-eaten spinaches were found among 11 spinaches, and 9 spinaches remained.
- August 6: None of the vegetables of the house B had any problems and were growing healthy. 4 spinaches were thinned out from a dense area of the spinach. 6 worm-eaten garland chrysanthemums were thinned out from the garland chrysanthemums of the aboveground bare field, 12 garland chrysanthemums remained, and one grasshopper was annihilated. 3 worm-eaten bok choy were thinned out, 7 bok choy remained, and two grasshoppers were annihilated.
- August 7: 4 worm-eaten potherb mustards were found from 9 potherb mustards of the aboveground bare field, and 5 potherb mustards were remained. All of the potherb mustard of the house B was growing healthily.
- August 8: 2 worm-eaten garland chrysanthemums were found among 12 garland chrysanthemums of the aboveground bare field, and 10 garland chrysanthemums remained. 2 worm-eaten bok choy were found among 7 bok choy, and 5 bok choy remained.
- August 14: 2 worm-eaten bok choy were found among 5 bok choy of the aboveground bare field, and the remaining 3 bok choy would be harvested in the near future. There were no worm-eaten Welsh onions among 22 Welsh onions, which would be harvested. While pests ate all 5 potherb mustards, the most serious one was pulled out. 4 potherb mustards remained.
- August 17: Pests ate all 4 potherb mustards of the aboveground bare field, 3 serious potherb mustards were pulled out, and only one potherb mustard remained. One worm-eaten bok choy was found among 3 bok choy. The potherb mustard of the house B was harvested on this day.
- August 18: Since the number and size of wormholes had increased from the one potherb mustard of the aboveground bare field, the one potherb mustard was pulled out. All were annihilated.
- August 20: The bok choy and Welsh onions of the house B were harvested. The Welsh onions of the aboveground bare field were harvested.
- August 21: It was found that brown pests ate 2 bok choy of the aboveground bare field. Portions of both of 2 bok choy around the growth points were browned, and matters such as spider webs were found. Two bok choy were drawn out. All were annihilated. 4 worm-eaten garland chrysanthemums including the two garland chrysanthemums were thinned out among 10 garland chrysanthemums, and 6 garland chrysanthemums remained. The spinach was generally unhealthy due to continuous heat waves. Leaves of the garland chrysanthemums of the house B were also slightly burnt from their tips due to continuous heat waves.
- August 23: Front sides of leaves of the spinach of the aboveground bare field were generally yellowed and withered.
- August 30: While there were no worm-eaten garland chrysanthemums of the aboveground bare field, since the air temperature was high and hot, the leaves were burnt and withered one by one, and growth of the leaves stopped. Withered leaves of the spinach were increasing in number. While there were no worm-eaten garland chrysanthemums of the house B, the garland chrysanthemums of the house B were in the same state as the garland chrysanthemums of the aboveground bare field. While the spinach was still small in size in comparison with spinach in the market, the spinach had a very good appearance.
- September 4: Since the air temperature was somewhat decreased, the garland chrysanthemums of the aboveground bare field became healthy and were growing. The withered leaves of the spinach were generally deteriorated. However, several new buds sprouted from growth points. Since the temperature in the house was frequently about 37 to 39 °C, growth of the garland chrysanthemums of the house B was slow, and withered leaves increased in number, while no pests ate them. The spinach was fresh and healthy in comparison with the spinach of the aboveground bare field.
- September 6: While leaves adjacent to the roots of the garland chrysanthemum of the aboveground bare field were somewhat withered, the leaves were becoming healthy in comparison with the previous leaves. The spinach was half or less of the spinach of the house B. While two months had elapsed from the seeding, the longest leaf had a length of 9 to 10cm. The spinach of the house B had a good appearance. However, the leaves, even a little, of the garland chrysanthemums were being withered. If the temperature in the house was lowered to about 32 to 33 °C, the garland chrysanthemums would be withered.
- September 10: The withered leaves of the garland chrysanthemums of the aboveground bare field were dropped and new leaves grew. However, 3 of 6 garland chrysanthemums were eaten by pests. 2 garland chrysanthemums were drawn out. 4 garland chrysanthemums remained. While the spinach had no wormholes and a generally good appearance, the spinach was not fresh like the spinach of the house B. The garland chrysanthemums and the spinach of the house B had no wormholes. While there were garland chrysanthemums with withered leaves, garland chrysanthemums with few withered leaves also remained.

- September 12: 3 of 4 garland chrysanthemums of the aboveground bare field were eaten by pests. The most serious one was drawn out, and 3 garland chrysanthemums remained. Cabbage pests were found on rear surfaces of the drawn leaves.
- September 13: All 3 garland chrysanthemums of the aboveground bare field were eaten by pests. The most serious one was drawn out, and 2 garland chrysanthemums remained.
- September 14: 2 garland chrysanthemums of the aboveground bare field were also eaten by pests. A serious one was pulled out. One garland chrysanthemum remained. 6 of 9 spinaches were eaten by pests. The garland chrysanthemums and spinach of the house B had no wormholes. The garland chrysanthemums were delayed in growth due to heat waves. Gloss of the leaves of the spinach was also disappearing due to heat waves.
- September 15: 8 of 9 spinaches of the aboveground bare field were eaten by pests. The most serious one was drawn out, and 8 spinaches remained.
- September 18: The garland chrysanthemums and spinach of the house B were not eaten by pests. Leaves of the spinach were withered and drooping.
- September 16 and 17: Watering could not be made due to Sunday and a festival.
- September 19: Since the wormholes of the garland chrysanthemums of the aboveground bare field deteriorated, the one was drawn out and annihilated. The wormholes of all of 8 spinaches deteriorated and withered to be yellowed, and thus the spinach could not be sold. All was drawn out and annihilated. The garland chrysanthemums and spinach of the house B had no wormholes. However, the growth was delayed due to the heat, and the harvest would be made after 2 to 3 weeks, even though the harvest can generally be made around 60 days from the seeding. While the withered leaves of the garland chrysanthemums were dropped and new leaves grew, the appearances of the spinach was deteriorating.
- September 21: The garland chrysanthemums and spinach of the house B had no wormholes. However, in the spinach, while it was somewhat cooled in the morning and evening, it was still hot and the heat continued, and further, watering could not be performed due to Sunday and the festival. The day after, the spinach abruptly became unhealthy and seemed not to recover. Further, since the spinach could not be sold, the spinach was annihilated on this day. Conditions of the garland chrysanthemums would be further observed.
- October 31: The garland chrysanthemums of the house B were withered due to heat waves of August, new leaves growing from around the middle of September. The garland chrysanthemums were harvested on this day but were still small.

Conclusion 2 of Cultivation Experiment 6

According to the cultivation experiments of the napa cabbage, cabbage and lettuce, it was verified that, when the fluorescent lamp of white light described in Article 4 of Conclusion-1 was lit and cultivated according to the seeds, larvae of flying pests may pass through the plants, rather than adhering to the plants.
When the cultivation is performed to comply with the following two notices, there is no disease or adhesion of pests.
1. Even though plants are not directly exposed to sunlight, when sunlight directly enters the house, the ratio of light in the house approaches that of the bare field, and thus, pests adhere to the plants.
2. Dim time of sunrise and sunset should be removed. That is, the house is gradually brightened from the darkness at morning and gradually darkened from the brightness at evening.

By installing the fluorescent lamp of white light, the house is rapidly brightened from the darkness in the morning and rapidly darkened from the brightness in the evening.
The cultivation is performed without the ambiguous brightness such as gradual brightening or darkening. Since the ambiguous darkness or brightness may occur on a rainy day or a cloudy day, lighting of the fluorescent lamp of white light may be needed.
Hereinafter, results of the cultivation experiments of the Japanese mustard spinach, Welsh onions, Japanese parsley, macrophyll, spinach, potherb mustard, garland chrysanthemum and bok choy will be described.
While the pests did not adhere to the spinach, watering could not be performed during two days of Sunday and the festival when the midsummer and heat waves were continuing. For this reason, the cultivation could not be performed. Since the pests did not adhere to the Welsh onions of the bare field and the house B, the effect of the pesticide-free cultivation could not be verified. The effect of the pesticide-free cultivation could be verified in the Japanese mustard spinach, Japanese parsley, macrophyll, potherb mustard, garland chrysanthemum, and bok choy.

Accordingly, conclusions of Cultivation Experiment 6 will be described as follows.

A. It was verified that, as an absolute value of variation in ratio of light is increased, pest resistance is also increased.
B. It was verified that the variation in ratio of light for the pest resistance is different according to the types of vegetables.
C. It was verified that, in the vegetables vulnerable to the pests, since the ratio of R/B is much larger than that of the bare field, the ratio of R/FR should be further reduced than that of the bare field.

Sixth Embodiment

Cultivation Experiment 7

1. Purposes of Experiment

1-1: In the pesticide-free cultivation obtained by Experiment 1, in order to verify that the pests adhered to the plants because sunlight directly entered the house, the cultivation was performed using the house into which sunlight did not enter.
1-2: The following five types of lighting environments were provided using a cultivation method of varying tastes of eggplants, and it was determined which environment improved the health of the eggplants and increased a crop yield.
1. The cultivation was performed under the lighting environments in which the ratio of R/B was higher than that of the bare field and the ratio of R/FR was lower than that of the bare field (hereinafter referred to as a reference ratio of light).
2. Under the environments of the reference ratio of light, an LED of red R was irradiated to perform the cultivation.
3. Under the environments of the reference ratio of light, the number of LEDs of red R was increased 2.5 times in comparison with the aforementioned article 2. The cultivation was performed.
4. Under the environments of the reference ratio of light, in addition to the lighting environments of the aforementioned article 2, an LED of far-red light FR is irradiated to perform the cultivation.
5. The cultivation is ordinarily performed through a typical house.
1-3: The harshness removal cultivation method of varying tastes of the eggplants removed a harsh taste to remove an unripe taste. Accordingly, it was determined which taste disappeared when tomatoes were cultivated through the cultivation method.

2. Place of Experiment
Shinonome-cho, Kochi, Kochi
3. Period of Experiment
April 11, 2007 (H19) to July 27, 2007 (H19)
4. Cultivation Conditions
4-1: Facility for Cultivation House

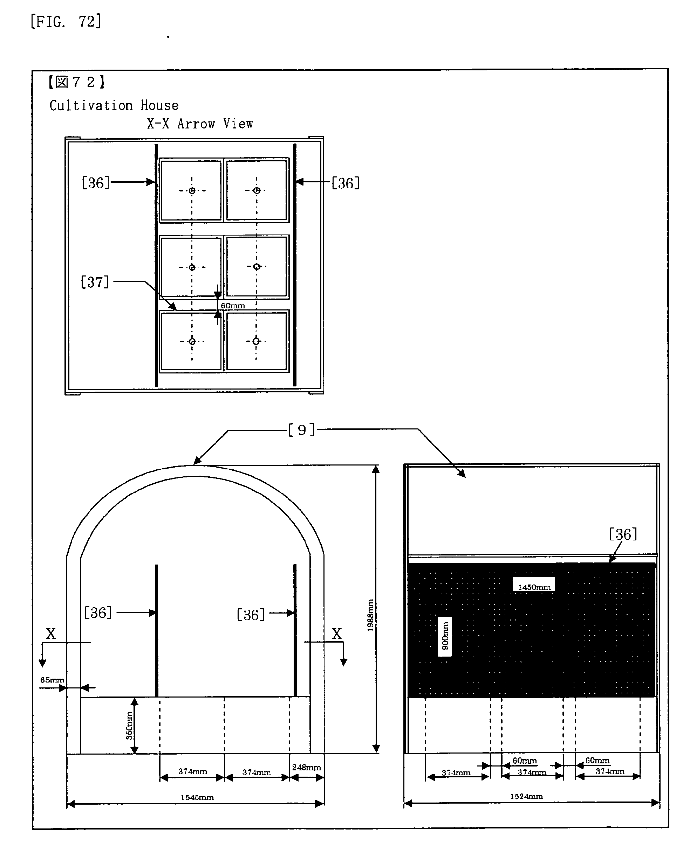

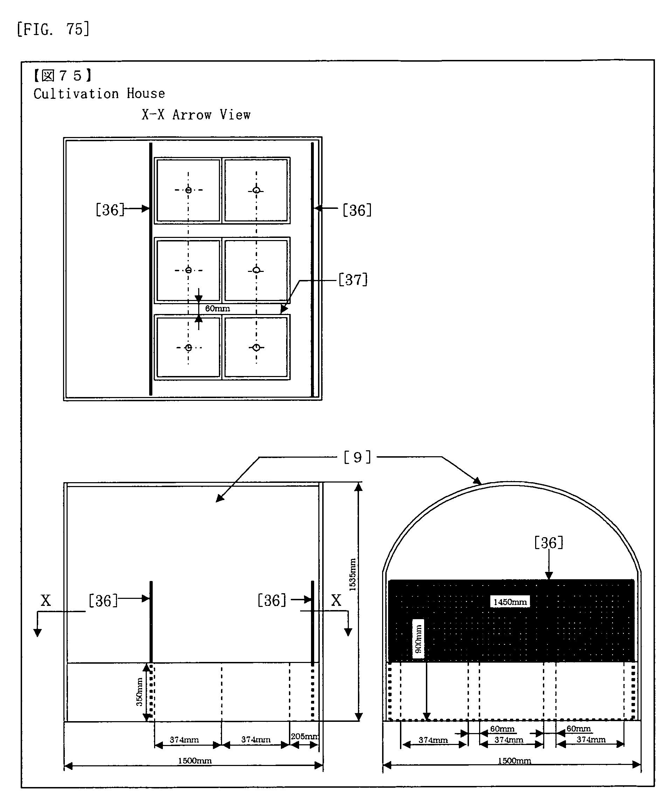

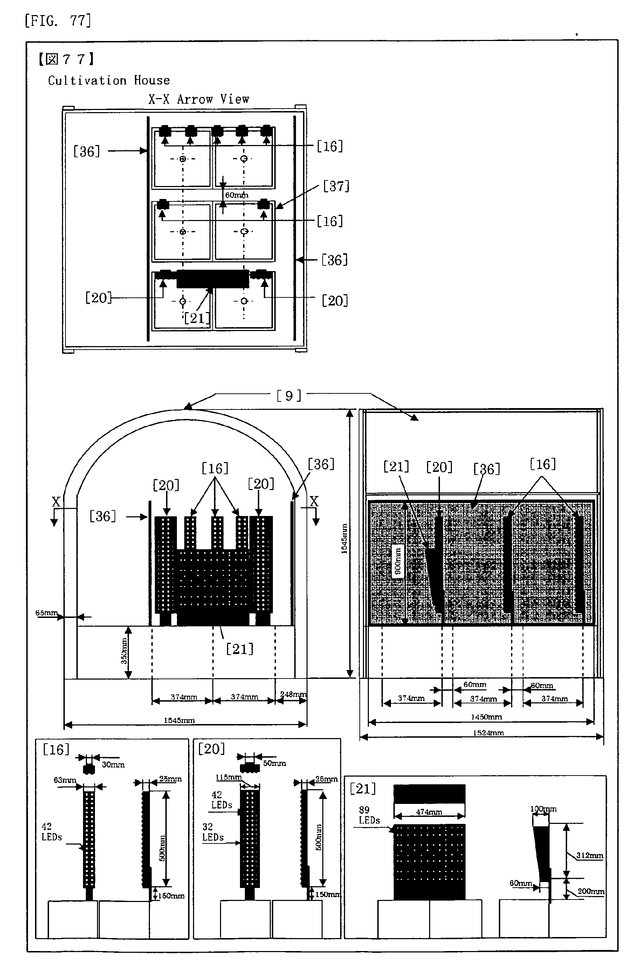

The experiment house was a typical vinyl house whose surroundings and ceiling are completely surrounded by vinyl, not a weatherproof house into which sunlight directly enters.
Eggplant cultivation houses: House 5, 7 and 9.
Tomato cultivation houses: Houses 11, 12, 13 and 14.
Cucumber cultivation houses: House 10, Aboveground house (the inside of the house used in Experiment 2 was renovated).
Houses 9 and 10: The typical vinyl house was installed at a position far away from a red house or a red reflective plate. See FIG. 50.
House 5: A red house, which can be closed, was equipped with a red reflective plate. See FIG. 72.
Ground house: The inside of the house used in the Experiment 2 (see FIG. 31) was renovated as shown in FIG. 73.
House 11: A veneer board was partitioned between the typical vinyl house and an adjacent red house. See FIG. 44.
House 12: The house D of Preliminary Experiment 1 was used with the blue net removed. See FIG. 75.
House 13: The house C of Preliminary Experiment 1 was used with the blue LED removed. The fluorescent lamp of red light R was additionally equipped in the middle of the experiment. See FIG. 76.
House 7: The red house, which can be closed, was equipped with a red reflective plate, an LED of red R and an LED of far-red light FR. See FIG. 77.

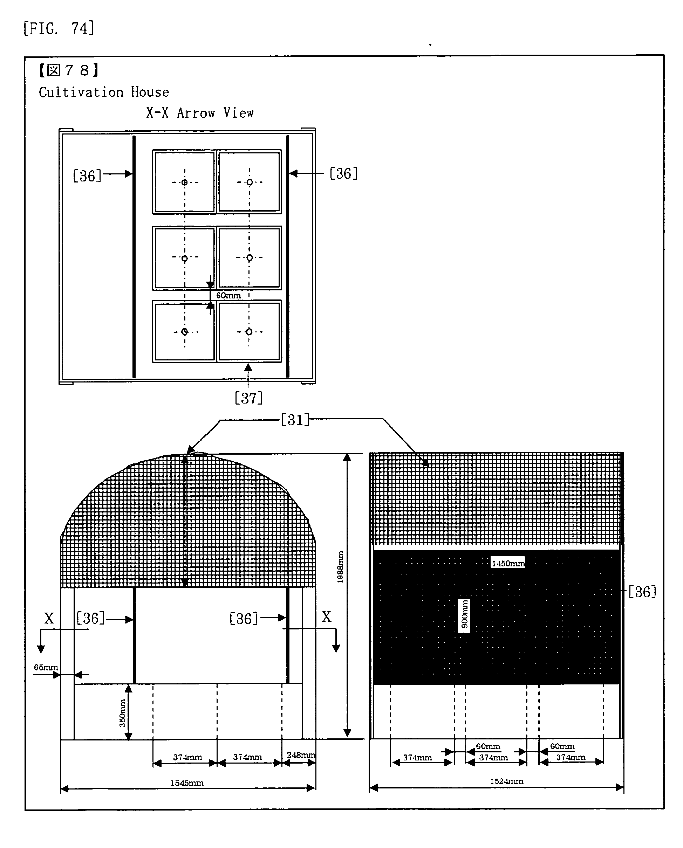

House 14: The red house, which can be closed, was equipped with a red reflective plate. A net of red R was additionally equipped in the middle of the experiment. See FIG. 74.

The fluorescent lamp of red R used in the house 13 was a fluorescent lamp manufactured by Mitsubishi Electric Company, Osram K-K, a starter type, Model No. FL40SP, spectrum of 660 nm at a peak, 40 W, and its brightness had a total flux of 700 lumens.

The LED used in the house 7 is referred to FIGS. See FIG. 77.

4-2: Lighting Environment

Cultivation houses 9, 10 and 11 were the same as the cultivation house 1 of Experiment 1.

A cultivation house 5 was the same as the cultivation house of Experiment 2 (FIG. 31) (a difference in ratio of R/B between the cultivation house 5 and the bare field was 0.231 to 0.261).

A cultivation house 12 was the house D of Preliminary Experiment 1, the blue net of which was removed (a difference in ratio of R/B between the cultivation house 12 and the bare field was about 0.182).

A cultivation house 13 as the house C of Preliminary Experiment 1, the blue LED of which was removed (a difference in ratio of R/B between the cultivation house 13 and the bare field was about 0.175).

A west side of the aboveground house was a position 1 shown in FIGS. 13 and 112, and an east side having two red reflective plates more than the west side had a large variation in ratio of light.

4-3: Operation Sequence

- 8:25 AM: Temperature and humidity measurement
- 10:10 AM: Temperature and humidity measurement
- 1:00 PM: The reflective plate was lowered on the west and raised on the east. A temperature and humidity were measured. Watering of 2 liters each was performed, open cultivation of tomatoes was 4 liters only on a day before a holiday, closed cultivation of tomatoes was 4 liters on a day before a holiday and additionally 4 liters when the tomatoes seem to be very weakened, a total of two days or less a week.
- 3:10 PM: Temperature and humidity measurement
- 6:00 PM (when sunny), 4:30 to 5:00 (when cloudy): The reflective plates were lowered on the east side and raised on the west side.

In a growing process, the tomatoes were grown in natural conditions with no trimming-pruning.

5. Experiment results

1. Cucumbers: Cultivation period, April 14 to June 9, 2007 (H19)

- April 14: The cucumbers were planted at the west side and the east side of the house 10 and the aboveground house.
- May 14: While leaves of the aboveground house were dark green at both the west side and the east side, leaves of the house 10 were thinned in color from the middle downward.
- May 23: The leaves of the house 10 were generally thinned in color from top to bottom, and yellow and brown spots were found from the lower leaves.
- May 29: The lower leaves of the house 10 were thinned and yellowed. Almost all of the leaves, except some of the upper leaves, had yellow and brown spots. The tomatoes of the aboveground house were dark green and healthy at the west side and the east side.
- June 9: All of the leaves of the house 10 were thinned in color in comparison with the aboveground house, and almost all of the leaves had yellow and brown spots. In addition, stems were also increasingly yellowed. Further, pests such as greenflies had increased in number, and fruits were also yellowed and decayed to remarkably reduce a crop yield. The tomatoes of the west side and the east side of the aboveground house had no problems and were healthy, and the crop yield was also good.

Consideration of Cucumbers

In a sequence of the variation in ratio of light from a small value to a large value, the house 10 (no variation in light), the west side of the aboveground house (the ratio of R/B is larger than that of the bare field by 0.231), and the east side of the aboveground house (since the number of red reflective plates was larger than that of the west side, the variation in ratio of light would also have been increased) were provided.

It shows an effect that, in comparison with the house 10 cultivated on the bare field with no variation in ratio of light having diseases; the cucumbers of the aboveground house with variation in ratio of light had no diseases and were healthy. That is, the variation in ratio of light made the plants healthy. As a result, the disease resistance was improved to prevent the disease, and pests did not adhere to the plants, removing necessity of agricultural pesticides.

2. Eggplants: Cultivation period, April 11 to June 8, 2007

- April 11: Eggplants were planted in the houses 5, 7 and 9.
- April 17: Flowers of the houses 5 and 7 bloomed, and thus, closed cultivation started from this day.
- May 12: The bloomed flowers of the houses 5 and 7 were abruptly reduced in number. However, appearances of the flowers were good and healthy.
- May 14: Eggplants of the houses 5 and 7: The closed house was opened from 1: 00 AM and an operation was performed. At this time, the leaves of the eggplants stood up and rolled inside stiffly due to a rapid cooling shock. However, when evening came, the eggplants returned to their original states like the eggplants of the house 9.
- May 15: Eggplants of the houses 5 and 7: Colors of fruits were not good. Occasional discoloration occurred. The leaves stood up straight even when the houses were kept closed.
- May 21: Eggplants of the houses 5 and 7: The eggplants of the house 5 had better shapes and colors than those of the house 7.

The house 5 with no LED had good appearances, and blooming flowers of the houses 5 and 7 were white. In addition, flowers of the house 9 smoothly bloomed and the eggplants were harvested, but the houses 5 and 7 were extremely low. In consideration of Experiment 5 in which the LED was installed to improve the health of the eggplants and blooming of the flowers and obtain the fruits having good shape, color and gloss, the number of LEDs was increased in Experiment 7, but it seemed to have an adverse effect.

- May 24: The eggplants of the houses 5 and 7 were discolored. The eggplants had no gloss, and surfaces of the eggplants were uneven. The eggplants could not be eaten. The state of the house 7 was worse than that of the house 5.
- May 31: A plurality of buds were found from the eggplants of the houses 5 and 7, but the buds were dropped before they bloomed, and therefore there were no flowers.
- June 8: The cultivation experiment was finished.

Consideration of Eggplants

Comparing situations of blooming flowers and a crop yield of the houses 5 and 7, both the number of flowers and the crop yield of the house 5 were larger than those of the house 7. In addition, the observation records on May 21 and 24 read that the fruits of the house 5 had better shapes and colors than those of the house 7.

As described above, attachment of the LED made the plants unhealthy. As shown in FIG. 77, the LED used red light R and far-red light FR. Since each LED directly contacted the leaves of the plants and each light did not cross to be mixed with another light, each light fell on each plant. Accordingly, peak brightness 8000 mcd of the LED of red light R had no relevance to 8 mcd of the far-red light FR in a difference in brightness. That is, the ratio of R/FR of a place on which the far-red light fell was lowered by 8 mcd. In addition, the ratio of R/B of a place on which the red light fell increased by 8000 mcd to also increase the ratio of R/FR.

In Cultivation Experiment 5, the LED of red light R was installed as shown in FIGS. 52, 60 and 55, and in Experiment 7, the red light R and the far-red light FR were installed as shown in FIG. 77. A difference therebetween is, as will be appreciated by comparing FIG. 77 and FIGS. 52, 60 and 55, that, in Experiment 5, 42 LEDs were uniformly installed in an area of a length of 1000 mm and a width of 145 mm, and in Experiment 7, the same number of LEDs were uniformly installed at areas of a length of 500 mm and a width of 115 mm, and a length of 500 mm and a width of 63 mm. That is, Experiment 7 had an installation density twice that of Experiment 5 in which attachment of the LED improved the health of the plants. Further, in Experiment 5, the south side, the middle and the north side each had one, and in Experiment 7, each had 2 to 5 LEDs. However, in Experiment 7 having 4 to 10 times the brightness, the plants became unhealthy.
The reasons for this will be described below.

Lighting environments under sunlight are generally classified into three groups.

[1] A bare field having no blocking or reflection of sunlight, a sunlight spectrum of the lighting environment in which sunlight directly enters with no obstruction.
This spectrum is a standard lighting environment. Data of FIG. 4 is used as standard data that the sunlight spectrum of the bare field is measured. Plants grown under this lighting environment are C4 plants.

[2] Shadows generated by blocking sunlight are classified into shadows generated by blocking sunlight with clouds, and shadows generated by blocking sunlight with a material through which light cannot pass, which corresponds to a shadow generated by trees, leaves, or houses.
Characteristics of spectrum of sunlight under the lighting environment of the shadow portions are **characterized in that** a wavelength of the far-red light range of 700 nm or more is increased as shown in FIG. 2.
In addition, since the ratio of light of the light environment has a ratio of R/B smaller than that of the bare field, a ratio of R/FR is also reduced. See FIG. 92 (Table 2). Plants generated under this lighting environment are shade plants.
[3] Sunlight is reflected by a material through which light cannot pass such as trees, leaves or houses or passes through vinyl, since a small wavelength of energy is decreased much more than a large wavelength, in comparison with a ratio of light of the bare field, the ratio of R/B is increased and the ratio of R/FR is reduced. See FIG. 3 and FIG. 92 (Table 2). A typical example of the lighting environment is a sunny spot of sunlight filtering through foliage of tree branches. There is a sunny spot of sunlight filtering through foliage of tree branches in a plant community. Plants generated in the sunny spot of sunlight filtering through foliage of tree branches of the plant community are $C_3$ plants, and plants generated in a place in which a sunny spot and a shady spot of sunlight filtering through foliage of tree branches are mixed are semi-shade plants. In addition, the eggplants are $C_3$ plants. Referring to FIGS. 52, 55 and 60 and FIG. 77, in both of Experiments 5 and 7, light of the LED was irradiated to a shade by leaves of the eggplants. The house was equipped with a red reflective plate, a red house or a house with red net was also provided, and thus, all of the houses were filled with a spectrum of a sunny spot of sunlight filtering through foliage of tree branches. However, since the eggplants were planted at predetermined intervals of 350 mm, when the eggplants were grown to have many leaves, sunlight filtering through foliage of tree branches was partially provided to the middle of the stems or below, but the middle of the stems or below became shaded by leaves.
The shade from the leaves was an optimal spectrum for the shade plants of group 2.
Since the eggplants were in the sunny spot of sunlight filtering through foliage of tree branches of a group 3, as the LED of red light R was irradiated to the shade by leaves, it varied to the ratio of light of the spectrum of group 3.
In the spectrum of the shade by leaves, as shown in FIG. 2, since the wavelength range of the far-red light of 700 nm or more is much larger than that of the bare field (see FIG. 4) or the sunny spot of sunlight filtering through foliage of tree branches (see FIG. 3), the ratio of R/FR is extremely reduced. This is a property of the spectrum of the shade by leaves.
As the LED of red light R is irradiated to the spectrum of the shade by leaves in balance, Experiment 5 would be or could approach the spectrum of the sunny spot of sunlight filtering through foliage of tree branches of the group 3.
Meanwhile, since light of the LED of the red light R in Experiment 7 was too strong, the light was unbalanced as follows.
As described above, in Experiment 5, the spectrum of the shade by leaves has an optimal brightness to be varied to the spectrum of the sunny spot of sunlight filtering through foliage of tree branches. Accordingly, even though the eggplants were densely planted, since an environment was set in which only one is seemed to be grown in the sunny spot of sunlight filtering through foliage of tree branches, the plants in Experiment 5 were healthy.
Meanwhile, in Experiment 7 in which the lighting environment of the irradiated LED was much brighter than that of Experiment 5 as described above, since it was too bright, the ratio of R/FR approached that of the bare field.
However, both of the sunny spot of sunlight filtering through foliage of tree branches and the shade by leaves have the ratio of R/FR smaller than that of the bare field. Since the light intensity of the red light R is too high, the ratio of light approached that of the bare field, and thus, under the closed environments, the eggplants of Experiment 7 became unhealthy.
Plants have naturally generated to be appropriate to natural environments of the earth, and the eggplants are $C_3$ plants generated in the sunny spot of sunlight filtering through foliage of tree branches in the plant community.
When an air temperature, ventilation, humidity, drainage, a pH of soil and water, and lighting environment are the same as the natural environments of the earth in which the eggplants are generated and a proper season comes, the eggplants are healthy and have disease resistance so that diseases does not occur and pests do no approach.
If the eggplants had disease and pests under these environments, the eggplants would have become extinct long ago.
Generation of diseases and adhesion of pests are caused by cultivation at a place where such natural environments are not provided.

For example, refer to the case in which $C_3$ plants generated in the sunny spot of sunlight filtering through foliage of tree branches in the plant community are cultivated on the bare field, or the case in which the shade plants generated under the shade of trees are cultivated on the bare field or the sunny spot of sunlight filtering through foliage of tree branches. In this case, the plants become unhealthy to easily catch diseases

<Intensive Cultivation>

As described above, Experiment 5 shows that, as the red light R is irradiated to the shade by leaves to approach the spectrum of the sunny spot of sunlight filtering through foliage of tree branches, the intensive cultivation of 4000 to 5000 per Tan (Japan measure of farmland) becomes possible.

(Number of eggplants cultivated through Experiment 5)

In cultivation conditions of the specification from Experiment 5, pots having a size of 35 cm square were disposed at predetermined gaps of 6 cm. This corresponds to 4560 pots per Tan as described below. Provided that a gap between furrows is 40 cm and a width of each furrow is 117 cm, under the cultivation conditions in which the pots having a size of 35 cm square of Experiment 5 were disposed at predetermined gaps of 6 cm, three eggplants were planted in one furrow in a widthwise direction.

Provided that one side of the furrow was 33 m and 33 m of the one side becomes a furrow length, the pots having a size of 35 cm square of Experiment 5 were disposed at predetermined gaps of 6 cm. Accordingly, under the cultivation conditions, along the furrow length of 33 m, 33/(0.35 + 0.06) = 80.49 eggplants were planted.

In Experiment 5, since three eggplants were planted in a width of 117 cm of one furrow, one furrow having a length of 33 m had 80.49×3 = about 240 eggplants, which is the number of eggplants cultivated in one furrow of one Tan. In addition, one Tan has one side of 33 m and the other side of 30 m. In the other side, furrows having a width of 117 cm with a gap between the furrows of 40 cm are provided to 30/(1.17 + 0.40) = 19.1.

Accordingly, since 240 eggplants can be cultivated in one furrow and 19 furrows are provided in one Tan, under the cultivation conditions of the specification, 240×19 = 4560 eggplants can be cultivated.

(Number of general eggplants cultivated per Tan)

Meanwhile, the number of general eggplants cultivated per Tan is 600 to 800 in the case of early maturation cultivation, 900 to 1200 in the case of suppression cultivation, and 1200 to 1700 in the case of forced/semi-forced cultivation. Cultivation having the number more than the above was not considered.

The reason for cultivation of not more than 1700 is that, when more than 1700 eggplants were planted, the eggplants are too dense and leaves block sunlight as they grow. For this reason, a space between the eggplants becomes a shady spot and thus a crop yield of fruits is reduced, because the eggplants become unhealthy to easily catch diseases and reduce their lifespan.

(Accomplishment of intensive cultivation by cultivation conditions of the present invention)

In the cultivation conditions of the present invention, since a spectrum-balance of sunlight is varied to increase the ratio of R/B and reduce the ratio of R/FR in comparison with the bare field, pests cannot approach the eggplants, and the eggplants grow in health with no disease.

However, even when the spectrum-balance is varied, in Experiment 5, since the house is closed to be under a high temperature of 40 °C or more, which is an extremely severe condition, the eggplants become unhealthy and pests adhere to the eggplants.

Nevertheless, as the LED of red light R is shone on the eggplants and the shady spots of the eggplants, the spectrum of the shady spots is varied to the spectrum of the sunny spots of sunlight filtering through foliage of tree branches, and thus, the eggplants recover their health and flowers bloom to bear fruits.

The results of Experiment 5 read that, even when the cultivation is performed with the house closed and the intensive cultivation of 4000 to 5000 per Tan is performed, as the red light R is irradiated to the shade by leaves, the crop yield of the fruits is increased and the fruits become healthy so that the cultivation can be performed for a long time.

With regard to the pests, the result of the house G-B of Experiment 6 shows that while the lighting environment in which the red light R passes through the vinyl coated with thick paint to extremely increase the variation between the ratio of R/B and the ratio of R/FR of sunlight is present as a sunny spot of sunlight filtering through foliage of tree branches in a natural world and $C_3$ plants adapt to the sunny spot of sunlight filtering through foliage of tree branches, the pests abhor the lighting environment in which the variation is extreme.

In Experiment 6, when plants vulnerable to pests were planted from seeds in the vinyl house to which the red light was sprayed, since no pests intruded into the house, there were no wormholes. In addition, when the plants were planted on the bare field and wormholes were found from several grown plants, pests ate the plants even when the seedling with no wormholes was selected and planted in the house.

When the pests flew onto the bare field during the cultivation and adhered to the plants, even when the plants were moved into the house, the pests endured and ate the plants and grew, rather than escaping. Once the pests had grown, even when the ratio of light of the lighting environment was extremely varied, the pests were healthy.

Accordingly, the vegetables vulnerable to pests must be grown from seeds in a house like the house G-B with the fluorescent lamp of the Experiment 6 under conditions that the fluorescent lamp of white light is lit in the house.

3. Tomatoes: Cultivation period, April 13 to July 14, 2007 (H19)

- April 13: Tomatoes were planted in the houses 11, 12 and 13.
- April 19: The house 14 was renovated as a closed house, and the tomatoes were planted. The cultivation was performed with the house opened, not closed.
- May 9: A growth state of the tomatoes cultivated in the typical house 11 through ordinary cultivation was compared with a growth state of the tomatoes cultivated in the red houses 12 and 13 equipped with the red reflective plates. Watering was performed once a week, every Saturday, and the tomatoes were abruptly contracted and withered on this day. The tomatoes of the house 11 were weakest.

- May 12: A red fluorescent lamp having a peak of 660 nm was attached to the house 13. See FIG. 76.
- May 18: A red net was installed at the ceiling of the closed house (see FIG. 74), in which the cultivation was performed with the house 14 opened, so that the variation in ratio of light in the house was increased.
- May 23: The tomatoes in the house 11 seemed to be withered. While the tomatoes of Experiment 4 were also contracted and unhealthy, since Experiment 4 was performed from September 30 to December 8, watering of 2 liters was preferably performed once a week, a day before a holiday. However, the present season was approaching the summer solstice of June, and a large amount of moisture was evaporated due to the heat. For this reason, the watering day of the houses 11, 12, 13 and 14 was varied to Friday and Saturday. On this week, watering was performed on this day (Wednesday) and Saturday, a day before a holiday.
- May 26: After the red net was installed at the house 14, the number of flowers was increased to more than before.
- May 31: The plants of the house 11 were withered and seemed to be unhealthy even when watering was performed on the next day, Friday.
- June 1: After watering on this day, the plants of the house 12 recovered their health more quickly than those of the house 13, and the number of flowers of the house 12 was much larger than that of the house 13.
- June 4: The number of blooming flowers of the house 12 was much different from that of the house 13. The number of flowers of the house 13 was 2 to 3, and the number of flowers of the house 12 was 10 to 25.
- June 5: Since several of the flowers of the tomatoes of the house 14 were fruiting, diameters of all of the fruits and a date when a hormonal agent was sprayed on the flowers to secure the fruits were recorded, and the house was closed. Watering of 2 liters of the closed house 14 was performed once a day, if the day was a holiday, the next working day. Fertilizer was added on Monday and Thursday, if the day was a holiday, the next working day.
- June 8: After the house 14 was closed, the fruits grown with difficulty had bottom rot due to stress. An amount of calcium was increased to solve this problem.
- June 11: In the houses 11, 12 and 13, the tomatoes of the house 12 were healthiest, and the house 11 was substantially the same as the house 13. On this day, the tomatoes of the houses 11, 12 and 13 were drawn out.
- June 13: The house 14 had 14 bottom rots and 24 healthy fruits. Even after the house was closed, new fruits ripened.
- June 19: After the house 14 was closed, while the number of blooming flowers was reduced, new fruits were still increased.
- June 22: In the house 14, after an amount of calcium was increased, leaves or stems became healthier than before. One was harvested.
- June 26: While two fruits could be harvested from the house 14, the fruits had a small size and were split to show their flesh. On June 25, the day before, one was harvested. If the house had been closed at this temperature, it would be a very high temperature.
- July 2: The house 14 was kept open until the plants became healthy and flowers bloomed. Watering of 4 liters was performed on Monday, Wednesday, Friday and Saturday. Fertilization was performed on Wednesday and Friday with Tommy Black 10cc.
- July 7: Two fruits were harvested from the house 14.
- July 9: After the house 14 was kept open, the fruits were not split. 3 unsplit fruits were harvested.
- July 14: Flowers still did not bloom in the house 14. The plants were drawn out and the experiment was finished.

Consideration of Tomatoes

In the cultivation experiment of the tomatoes, there were no pests or diseases.

However, it was seen on June 9 that the tomatoes were seriously contracted on Thursday or Friday before watering in the house 11, and on June 12, the fluorescent lamp of red light having a peak of 660 nm was attached to the house 13 as shown in FIG. 76.

In addition, as the red net was attached to the house 14 on May 18 as shown in FIG. 74, arranging the houses 11, 12, 13 and 14 in a sequence of the variation in ratio of light from large to small, the sequence was the houses 14, 12 and 11. Since the house 13 had the same effect as the LED of the house 7 of the experiment, the house 13 was excluded.

When the houses were arranged in a sequence of a badly withered degree, the sequence was the houses 11, 13, 12 and 14, and in the case of the house 14, the number of flowers was increased to more than before the red net was attached. In addition, the number of flowers of the house 13 with the fluorescent lamp of red light was 2 to 3, but the number of flowers of the house 12 with no fluorescent lamp of red light was 10 to 25 every day. That is, when the fluorescent lamp of red light was attached, the plants became unhealthy. The reason for this is the same as the eggplants of the house 7 of the experiment.

As described above, it will be appreciated that, even when the ratio of R/B was increased by the fluorescent lamp of red light, since the ratio of R/FR was also increased, the plants became unhealthy.

That is, as the ratio of R/B of the ratio of light increased to more than that of the bare field and the variation increased in a direction of reducing the ratio of R/FR, the plants became healthy.

In the closed cultivation of the tomatoes, after three days from the closed cultivation, the fruits had bottom rot. Even though the amount of calcium was increased every day, the effect was continued only at an early stage but not continued for one month.

Within one month after the closed cultivation, the flowers whitened and did not bloom. In order to solve this problem, the house was kept open until the plants became healthy and the flowers bloomed, and watering and fertilization were sufficiently performed for the cultivation. However, their health could not recover. On July 27, the plants were drawn out and the experiment was finished. The tomatoes closed after the fruiting and closed cultivation had no odor, no sour taste, and no sweet taste. The tomatoes not ripened during the closed cultivation and ripened after the open cultivation had little sweet taste, strong odor, and a sour taste, which had disappeared. From this, it will be appreciated that the tomatoes ripened for a long closed time had a taste, which disappeared, and the tomatoes ripened for a short closed time had a sour taste, which disappeared.

That is, it will be appreciated that the sour taste disappeared first, and then, as the closed period was increased, the tastes other than the sour taste disappeared. The analysis results read that the sour taste was reduced but there is no comparison sample, Experiment 8 will be performed to check this point.

**Seventh Embodiment**

Cultivation Experiment 8

1. Purposes of Experiment

1-1: The eggplants were cultivated in the house in which the ratio of light was varied and the typical house to determine whether an insect pest-proof effect was exhibited. In addition, the LED of red light R was installed at the house in which the ratio of light was varied, and consideration of the eggplants and tomatoes of Experiment 7 was verified. That is, when the cultivation was performed by irradiating the LED of red light R while planting of the eggplants, since the eggplants that were just planted had thin leaves, there was no shade from leaves. It is seen that, when the LED of red light R was irradiated in this state, since both of the ratio of R/B and the ratio of R/FR were increased, the eggplants became unhealthy and pests adhered to the eggplants. In addition, it is seen that, when the eggplants were grown and leaves became dense, as the LED of red light R was irradiated, the eggplants became healthy and a crop yield was increased.

1-2: It was known that the tomatoes cultivated and harvested in a closed state in Experiment 7 had no sour taste, no sweet taste and no odor, thus becoming insipid, and the tomatoes cultivated in a closed state for a short time had little sour taste and little sweet taste. Here, in Experiment 8, the tomatoes were compared with the tomatoes ordinarily cultivated in the typical house. In addition, it is checked how nutrition elements and taste elements vary by varying the cultivation period in a closed state.

2. Place of Experiment

Shinonome-cho, Kochi, Kochi

3. Period of Experiment

June 22 to August 29, 2007 (H19)

4. Cultivation Conditions

The house of the experiment was a typical vinyl house whose surroundings and ceiling were also completely surrounded by vinyl, rather than a weatherproof house into which sunlight is introduced.

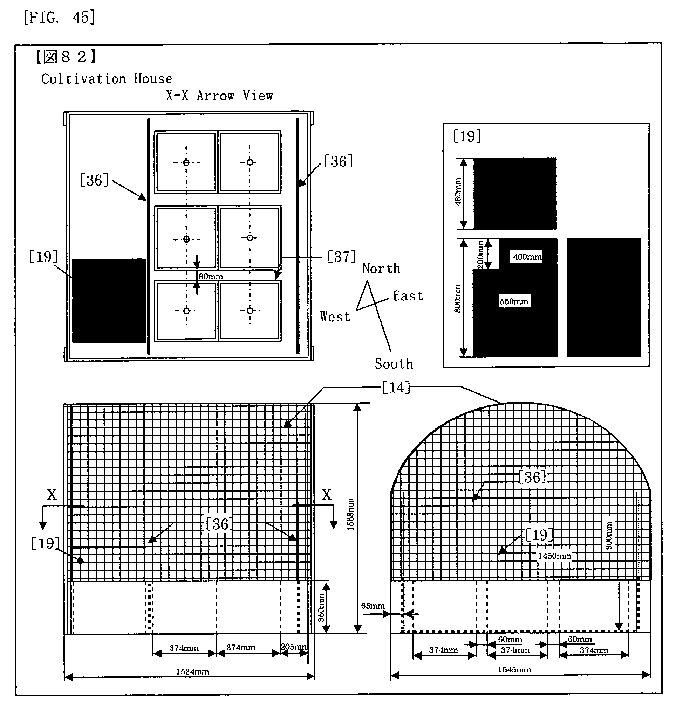

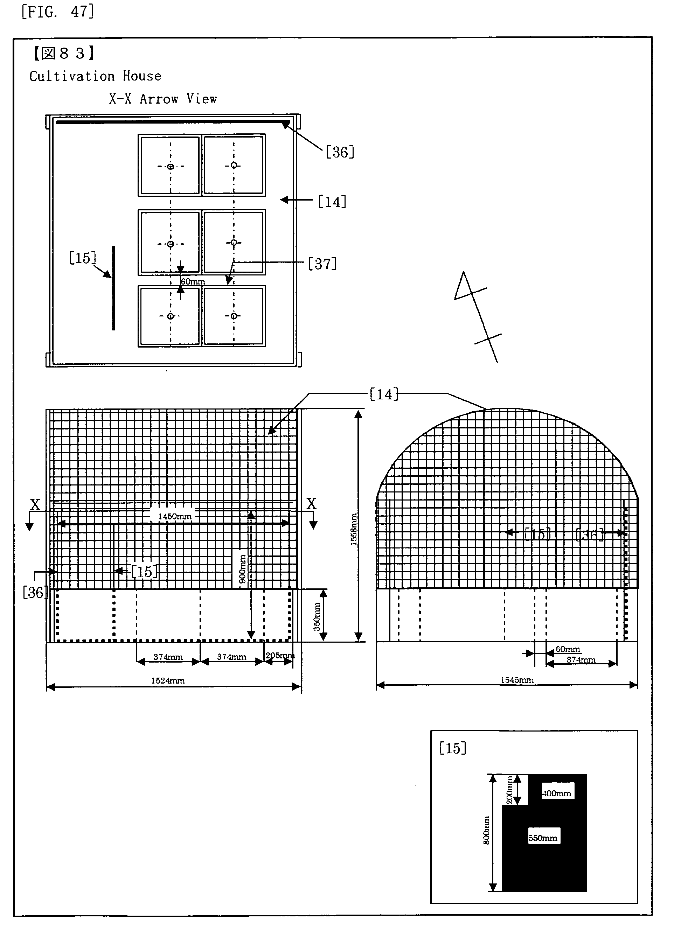

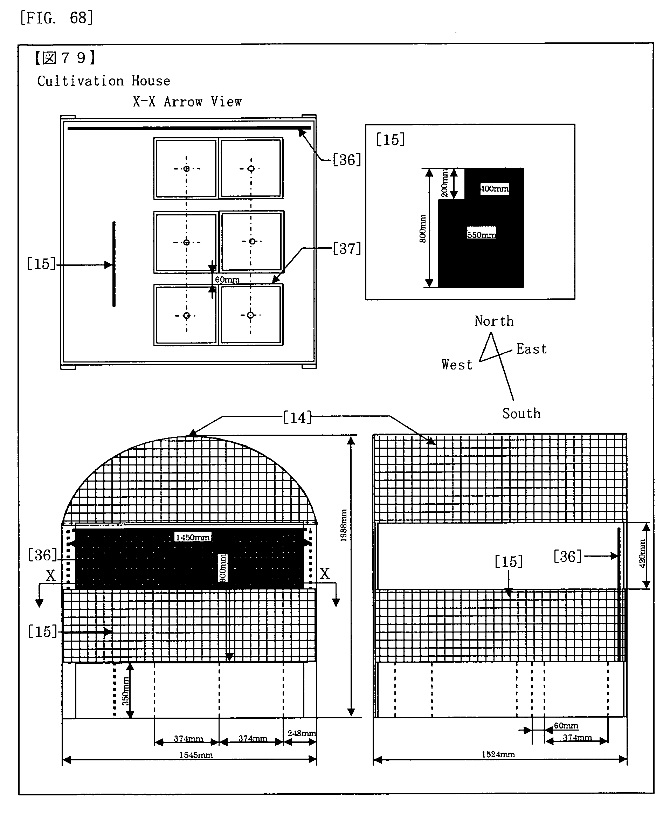

- Eggplant cultivation house: Houses 8, 12, 13 and A
- Tomato cultivation house: Houses 2 and 11
- Houses 12, 13, A and 2: The red house that can be closed is equipped with the red reflective plate and the red net. The houses 13 and A are referred to in FIG. 47, the house 12 is referred to in FIG. 45, and the house 2 is referred to in FIG. 68. Houses 11 and 8: The typical vinyl house was installed at a position far away from the red house or the red reflective plate. See FIG. 44 and 50.

5. Lighting Environment

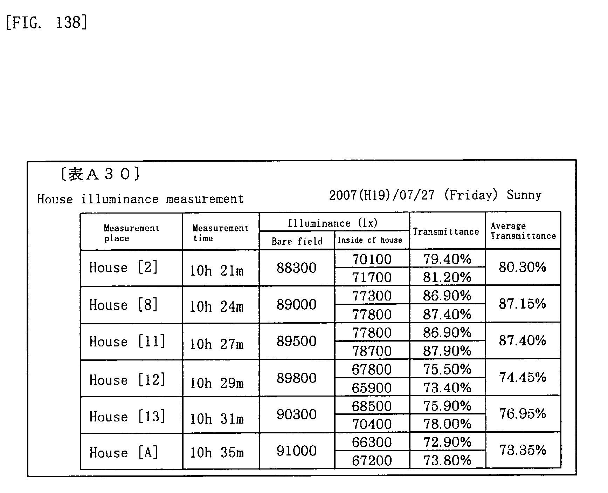

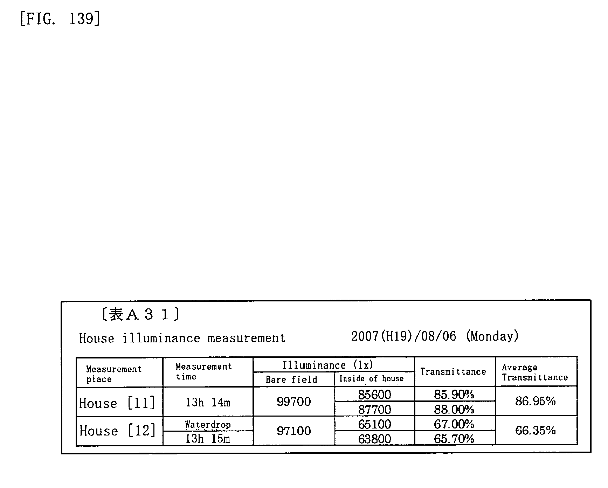

Measurement of illuminance in FIG. 138 (Table A30) was performed after striking and dropping water drops of a measurement place because a large amount of water drops was attached to an inner surface of the vinyl house. The transmittance was somewhat affected by a level of striking and dropping the water drops. Transmittance of the house 12 of FIG. 139 (Table A31) with the water drops was abruptly reduced. Since water drops could not be continuously struck and dropped in a real cultivation place, the transmittance was considerably reduced.

6. Operation Sequence

- 8:25 AM: Temperature and humidity measurement
- 10:10 AM: Temperature and humidity measurement
- 1:00 PM: The reflective plates were lowered at the west side and raised at the east side. A temperature and humidity were measured. Watering of 2 liters each was performed, and watering of 1 liter was performed on the open cultivation tomatoes on Tuesday, Friday and Saturday, and watering of 1 liter was performed on the closed cultivation tomatoes on Monday, Wednesday, Friday and Saturday.

- 3:10 PM: Temperature and humidity measurement
- 6:00 PM (sunny day), 4:30 to 5:00 (rainy day): The reflective plates were lowered at the east side and raised at the west side. However, the reflective plate of the closed cultivation was installed at the north side and fixed thereto. In the growing process, the plants were grown in natural conditions with no trimming-pruning.

7. Cultivation Plants

- Tomatoes: Natsumi, Seedling-seed (no rootstock)
- Eggplants: Shisui, Seedling-seed (no rootstock)

8. Experiment Results

1. Eggplants: Cultivation Period, June 22 to August 29, 2007 (H19)

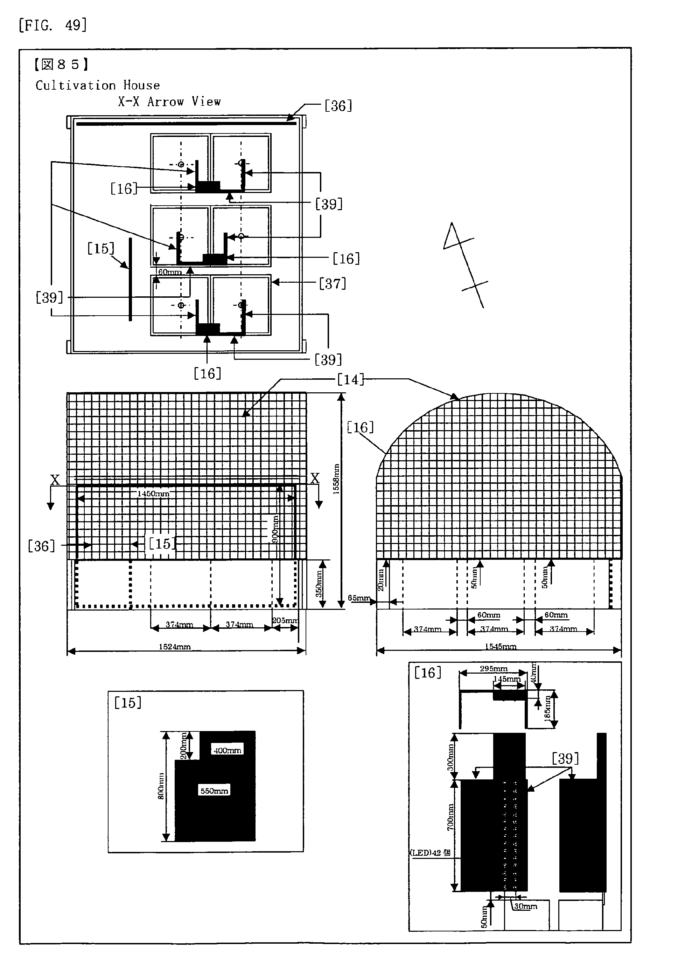

- June 22: The eggplants were planted in the houses 8, 12, 13 and A. The LED of red light R of the house A was lit. See FIG. 49 in which the LED is installed at FIG. 47.
  However, reference number 39 was not designated. Lighting time was 5:00 AM to 7:00 PM.
- June 29: Wormholes were in from each pot of a northwest side, the middle of the west side, and a southwest side of the eggplants of the house A. The LED of red light R was turned OFF. The other house 8, 12 and 13 had no wormholes.
- July 1: A progress of the worm-eaten states of the eggplants of the house A seemed to stop just after the LED of red light R was turned OFF.
- August 3: Occasional worm-eaten leaves having a powdery mildew were found in a lower portion to a middle portion of the stems of the eggplants of the house 8. Fruits harvested on this day were occasionally whitened and purpled, and thus, could not be sold. Such fruits were found from before 10 days. The houses 12, 13 and A also had some good purple colors and gloss.
- August 4: The powdery mildew of the eggplants of the house 8 was propagated to an upper portion thereof. The lower portion of the stem had several blacked leaves. Worm-eaten leaves were found here and there in the entire house. Many surface colors of ripened fruits in the house were still not good. Almost white fruits were also found among them. Since almost none of the fruits could be sold, the cultivation would have been terminated. Since the houses 13 and A were kept closed, white flowers were found one after another. Bloomed flowers seemed to be reduced.
- August 6: One fruit was harvested from the house 8, but it could not be sold. There was little beautiful fruit. The fruits produced in the house 13 had the most beautiful appearances and gloss.
- August 8: The eggplants of the house 8 were drawn out. Leaves of the closed house 13 were denser than those of the house A. This is because growth of the house A having wormholes generated due to lighting of the LED of red light R was slower than that of the house 13. For this reason, the leaves of the house were not dense like the eggplants of Experiment 5, and a shade by leaves was not formed under the middle portion of the stem. If the leaves of the house 13 were less dense, it was not the environment in which the LED is lit.
- August 9: Flowers of the houses 13 and A did not bloom. As the flowers of the eggplants of Experiments 5 and 7 did not bloom, the eggplants abruptly became unhealthy and good fruits could not be obtained. However, the house 13 was still a little early to light the LED, and the house A had a long way to go.
- August 10: While still a bit early, the LED was attached as shown in FIG. 49 (but, reference numeral 39 was not designated). A blind cover was attached to the LED disposed at a height of 2/3 or more of a height of the eggplants, and the LED of red light R was irradiated to only the height of not more than 2/3 having many leaves. This was performed in the house 13, and the LED was not lit in the house A.
- August 14: 6 fruits split vertically were found in the house 13. One fruit was harvested from the house A, and the other had no split. No problem.
- August 17: It was determined that the fruits were splitted because the house 13 was still not approaching the environment in which the LED was irradiated, and thus, an artificial shadow was installed, the leaves of the eggplants were moved under the shadow and the LED of red light R was irradiated thereto. Specifically, the LED was attached to the south side as shown in FIG. 49 and awnings were attached at the east side and the west side so that the inside of the awnings became a shady spot. However, since the leaves were not sufficiently dense, the leaves did not enter the awnings. For this reason, the red light R was irradiated to the sunlight filtering through foliage of tree branches from the sun at the south side. Eventually, the ratio of R/FR was increased to provide an adverse effect. In order to solve this problem, some of the leaves of the eggplants were forcibly inserted into the awnings and irradiated. This was performed in the house 13, not the house A.
- August 20: The cultivation of the house 12 could be performed for a long time in comparison with the house 8. Now, 15 healthier fruits had ripened, and flower blooming and harvest were smoothly progressing. Since a sufficient gap was provided in comparison with the house 8, the cultivation experiment of the house 12 was finished. Split fruits of the eggplants were found in the house A.
- August 21: The house A was also renovated like the house 13, and the leaves were forcibly inserted inside the awnings to be irradiated. See FIG. 49. LED lighting of the house A was started.
- August 24: Fruits were harvested in the house 13, and some fruits remained to be harvested in the future. Since growth of the fruits was slow, it seemed to take time.
- August 25: Many fruits with no split were ripened in the house 13.
- August 29: The eggplants of the houses 13 and A were drawn out on this day and the experiment was finished.

After both of the houses were closed, the blooming was slowly stopped and growth of the fruits was remarkably delayed. For some time after the houses were closed, a crop yield of the house A was increased, and the house 13 had almost no crop. However, in recent times, a crop yield of the house 13 was increased. On this day, 6 fruits were harvested from the house A, and 15 fruits were harvested from the house 13. While one split eggplant was found in the house A and 6 split eggplants were found in the house 13, all of 21 eggplants had a glossy and beautiful purple color.

2. Tomatoes: Cultivation period, June 23 to August 17, 2007 (H19)

- June 23: The tomatoes were planted in the houses 2 and 11.
- July 31: Many leaves of the house 11 were contracted and became unhealthy in comparison with the house 2. Diameters and ripened dates (days when tomatoes-tones are attached) of all of tomatoes of the house 2 were recorded, and the house was closed at 5:00 PM. In Experiment 7, since the plants had bottom rot on a third day after the house was kept closed, the house was closed for one day and then would be kept open for three days. When a holiday was interposed, the house would be kept open for four days or more.
- August 3: Tomatoes of the house 2: On this day, two day had elapsed since the house was left open. Flowers smaller than those of the house 11 bloomed. Fruits were colored one after another.
- August 6: Tomatoes of the house 2: The house was closed at 10:00 AM. After the house was closed, one red fruit in the middle of the east side was largely split, and thus, the house was opened at 4:20 PM. The split fruit in the middle of the east side was harvested.
- August 7: Flowers of the tomatoes of the house 2 were reduced in size. One tomato of the house 11 was harvested and sent to Japan Chemical Analysis Center with the tomatoes harvested on August 6 to be analyzed.
- August 10: Tomatoes of the house 11: Many tomatoes were withered. Watering was performed, but the tomatoes were not recovered.
- August 17: Tomatoes of the house 11: Many tomatoes were withered. Even the day after watering, many tomatoes were withered and were not recovered. Cultivation would have been stopped. Tomatoes of the house 2: leaves or stems were slightly withered and seemed to be healthy, but no flowers bloomed in recent days and only three fruits had ripened. The tomatoes would be recovered and flowers and fruits would be grown through a conventional cultivation after a sufficient time. However, analysis samples according to the purposes of the experiment could be sent to the Analysis Center. In addition, in the growing process of both of the houses 2 and 11, the plants were cultivated in natural conditions with no trimming-pruning, and the plants of the house 2 were healthier than those of the house 11 so that the cultivation was finished.

9. Considerations

9-1. Consideration of Tomatoes

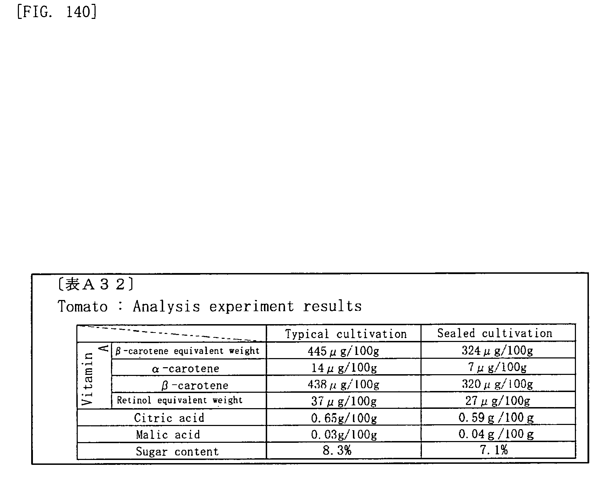

The same experiment result as the cultivation experiment of the tomatoes performed until now was obtained. That is, the cultivation through the red house is healthier than the cultivation through the typical house. Next, it was verified that, according to analysis results of nutrition elements through the closed cultivation, acerbity and bitter taste elements of the eggplants according to the cultivation experiment performed until now disappeared, and concentrations of nutrition elements of the eggplants were varied as shown by the analysis results of Experiment 2.
In addition, it was verified that the unripe taste element of the cucumbers disappeared by the closed cultivation, and concentration of vitamin A or a sugar degree of the tomatoes was thinned by Experiment 8. Referring to Analysis Table of FIG. 140 (Table A32), it would be clear.
According to the closed cultivation, it was verified that the acerbity and bitter taste of the eggplants disappeared, the unripe taste of the cucumbers disappeared, and the sour taste of the tomatoes was disappeared with their nutritional elements.

9-2. Considerations of Eggplants

Experiment 5 was directed to provide brightness appropriate to vary the spectrum of the shade by leaves to the spectrum of the sunny spot of sunlight filtering through foliage of tree branches.
In the case of Experiment 7, since the brightness was too high, the ratio of R/FR was varied to the same level as the bare field. However, the ratios of R/FR of both of the sunny spot of sunlight filtering through foliage of tree branches and the shade by leaves were smaller than those of the bare field.
Since the light intensity of the red light R was too strong, the eggplants of Experiment 7 could not endure the severe environments of the closed house and became unhealthy. In order to check whether the considerations of Experiment 7 are correct, the LED of red light R was irradiated to the eggplants just planted and having only a few leaves. That is, even though the environment is not the natural world, the ratio of light approximate to the sunny spot of sunlight filtering through foliage of tree branches is varied to a near or a larger level with respect to the bare field. As a result, pests ate the plants.

Further, when the LED of red light R was turned OFF, an increase in wormholes was stopped. Accordingly, it was verified that the considerations of Experiment 7 were correct.

Furthermore, unlike the napa cabbage or cabbage vulnerable to pests and easily adhered with pests, in the case of the plants not very vulnerable to pests, as the ratio of light was varied, no pests adhered to the plants.

- August 3: While the eggplants of the house 12 were well cultivated with no problems, the eggplants of the house 8 for comparison were eaten by pests and had powdery mildew, purple colors were discolored here and there, and fruits could not be sold.
- August 4 to 6: Such circumstances were rapidly propagated and few good fruits remained. The eggplants of the house 12 were being cultivated in health. After that, on August 20, the eggplants were drawn out in health and 15 fruits had ripened.

It will be appreciated that, according to the above cultivation experiment result, as the ratio of light was varied to be or approach the sunny spot of sunlight filtering through foliage of tree branches, i.e., as the cultivation was performed under a lighting environment in which the ratio of R/B was increased and the ratio of R/FR was reduced in comparison with the bare field, the pests could be prevented.

- July 30: The houses 13 and A were kept closed. On August 9, flowers did not bloom, and thus, on August 10, while still a little early, blinds were attached to the LED disposed at an upper portion of the dense leaves of the eggplants and the LED of red light R was irradiated as shown in FIG. 49 (but, reference numeral 39 was not designated). This was performed in the house 13, not the house A. This is because, although many leaves were somewhat densely grown in the house 13 to make the shade by leaves, they were still insufficient. In the house A, the leaves were thinned due to the wormholes and the shade by leaves was appropriately present, when the LED was irradiated to form a state of the sunlight filtering through foliage of tree branches, an adverse effect occurred. Since the irradiation was performed too early in the house 13, 6 split fruits were found on August 14. In order to solve this problem, the artificial shadow was fabricated on August 17 and the leaves of the eggplants were pulled by strings into the shadow, and the LED of red light R was irradiated thereto. As shown in FIG. 49, the LED was installed at the south side and the awnings were attached to the east side and the west side, some of the leaves of the eggplants were pulled inside the awnings, and the LED was irradiated.

- August 21: The house A was also improved like the house 13, and the LED was lit like the house 13.
- August 29: In both of the houses A and 13, since blooming of the flowers had stopped and growth of the fruits was remarkably delayed, the plants were drawn out and the experiment was finished. However, the ripened eggplants had gloss, were purple and had good shapes.

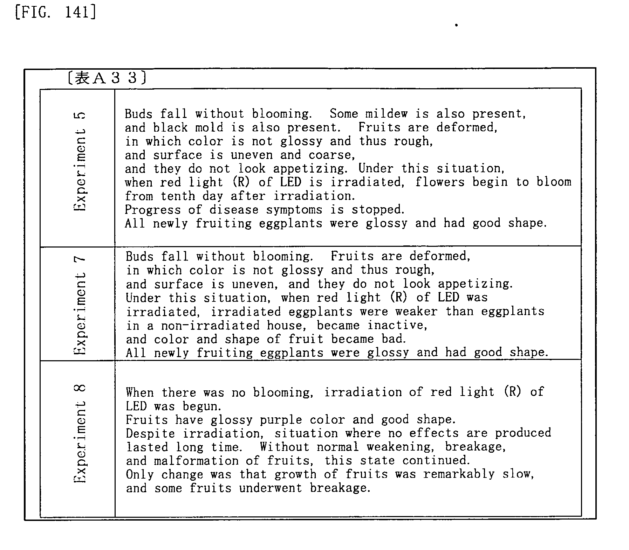

Here, FIG. 141 (Table A33) shows comparisons of experiment results of Experiment 8 and Experiments 7 and 5.

Referring to FIG. 141, Experiment 5 has the spectrum of the shady spot formed by irradiation of the LED of red light R, **characterized in that** the far-red light FR of 700 nm or more was increased as shown in FIG. 2, and the ratio of R/FR was remarkably reduced.

The LED of red light R was irradiated to the spectrum of the shady spot in this state. In Experiment 5, all leaves in contact with the LED were cut out. As a result, the environments like or near the sunny spot of sunlight filtering through foliage of tree branches could be provided as shown in FIG. 3.

In Cultivation Experiment 7, since the brightness of the LED was too high, the ratio of R/FR was extremely increased in comparison with the sunny spot of sunlight filtering through foliage of tree branches, an adverse effect occurred.

In addition, in Experiment 8, when the experiment result was conventional, as the cultivation period was increased, the plants would become unhealthy. However, the plants did not recover but were not weakened, and growth of the fruits was remarkably delayed and some of the fruits were split.

This shows that, while it is closer to Experiment 5 than Experiment 7, Experiment 8 determined whether the ratio of light is closer to the bare field or the shady spot than the sunny spot of sunlight filtering through foliage of tree branches.

In Experiments 7, 5 and 8, all of the eggplants were planted around centers of the pots. In addition, since the LED was fixed to the pot, a difference between the LEDs and the leaves of Experiment 7 and 5 was not large. However, in Experiment 8, the shady spot was artificially provided using a structure blocking sunlight from the south side, the east side and the west side, and the stems were pulled inside the shady spot by strings.

That is, the leaves of the eggplants of Experiment 8 were closer to the LED than that of Experiments 7 and 5. Simultaneously, Experiments 8 and 5 had the same structure of LED irradiation plate.

That is, since the light of the artificial lighting was darkened in proportion to the square of a distance as it moved far away from a light source, the brightness of Experiment 8 was too high.

That is, since a distance between the LED and the leaves of Experiment 8 was much shorter than that of Experiment 5, the ratio of light was too close to the ratio of light of the bare field than the sunny spot of sunlight filtering through foliage of tree branches.

According to Experiments 5, 7 and 8, it will be appreciated that it was very difficult to adjust the brightness like Experiment 5 using the LED of red light R.

In this case, the artificial lighting having the spectrum of the peak wavelength of the red light R higher than the peak wavelength of the spectrum of the other colors was provided, and the light was adjusted to about the illuminance of Experiment 5 to be irradiated.

When the red light R was irradiated, all of the leaves in contact with the artificial lighting were cut out like Experiment 5.

It was verified that Experiment 5 succeeded as the distance between leaves and the artificial lighting had no problem as long as they did not contact each other, and Experiment 8 failed as the leaves were forcibly pulled inside the awnings to be contacted.

**Eighth Embodiment**

Cultivation Experiment 9

1. Purposes of Experiment

The wavelength range of the red light R was 615 to 680 nm, which is coincident with a functional wavelength of photosynthesis.

It is provided to check whether the variation in balance affects a growth speed of plants based on the facts that, as red paint of red light R is sprayed to reach transmittance of 50% or 70%, a ratio of a photosynthesis function wavelength of a cultivation space becomes larger than that of the bare field, and as a balance between the red light R, blue light B and far-red light FR of photomorphogenesis is varied, viability of the plants is improved.

2. Place of Experiment

Shinonome-cho, Kochi, Kochi

3. Period of Experiment

January 11 to March 27, 2008 (H20)

4. Cultivation Conditions

- House G-a: The pots and the LED irradiation facility of FIG. 62 (reference numerals 25 and 30) were removed, water paint (red, see FIG. 20, spray type) was sprayed on vinyl formed of a polyethylene material and having a thickness of 0.05 mm until transmittance reached an average of 46.4%, and two troll boxes having sizes of a length of 770 mm, a width of 250 mm and a height of 350 mm were installed instead of the pots.
- House G-b: The pots and the LED irradiation facility of FIG. 62 (reference numerals 25 and 30) were removed, water paint (red, see FIG. 20, spray type) was sprayed on vinyl formed of a polyethylene material and having a thickness of 0.05 mm until transmittance reached an average of 67.9%, and two troll boxes having sizes of a length of 770 mm, a width of 250 mm and a height of 350 mm were installed instead of the pots.
- House G-c: The fluorescent lamp of white light was attached to the house G-b, and the red paint of the vinyl had a transmittance average of 66.7%. Irradiation time of the fluorescent lamp of white light was 5:40 AM to 8:30 AM, and 4:40 PM to 6:30 PM.
- House G-d: The pots and the LED irradiation facility of FIG. 62 (reference numerals 25 and 30) were removed, and simultaneously, thin pink vinyl was used instead of the vinyl on which the red water paint was sprayed. Sides and a ceiling of the vinyl house were surrounded by the thin pink vinyl, through which sunlight could not enter, and two troll boxes having sizes of a length of 770 mm, a width of 250 mm and a height of 350 mm were installed instead of the pots. The spectrum of the color of the thin pink vinyl is referred to in FIG. 19. The transmittance of the thin pink vinyl is referred to in FIG. 105 (Table A08).

- In order to heat the houses G-a, G-b, G-c and G-d, an electric stove was installed in the vinyl house having the sides and ceiling surrounded by vinyl. House 8: A typical vinyl house was installed at a position far from the red house or the red reflective plate. See FIG. 50. Here, two troll boxes having sizes of a length of 770 mm, a width of 250 mm and a height of 350 mm were installed instead of the pots for cultivation. The vinyl house had sides and a ceiling surrounded by vinyl, through which sunlight could not enter. An electric stove was installed in the vinyl house to heat the house.

5. Lighting Environment

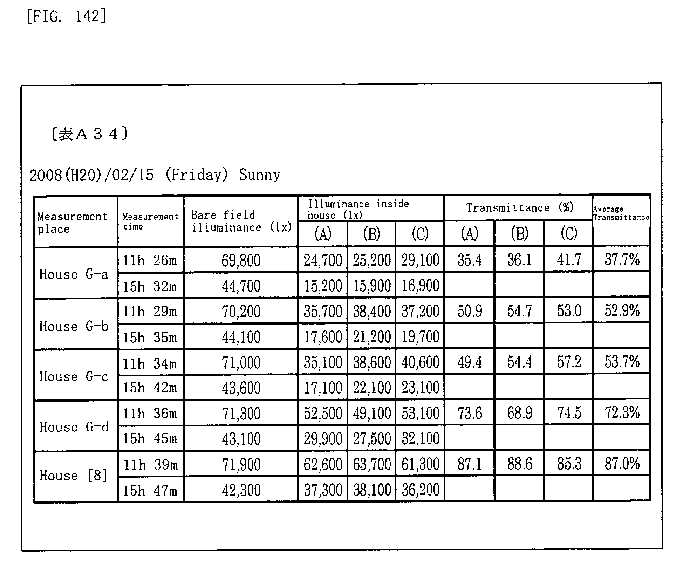

The house 8 was a typical vinyl house in which the electric stove was installed to heat the house. The houses G-a, G-b, G-c and G-d were installed in the typical vinyl house. Accordingly, sunlight passed through the typical vinyl, further passed through the vinyl on which the red paint is sprayed, and then entered a cultivation space. An average transmittance under these conditions is referred to in FIG. 142. The transmittance was measured at three places A, B and C in the cultivation space.

6. Operation Sequence: Watering of 2 liters was performed once a day, a temperature in the house was measured at 8:25 AM, 10:10 AM, 1:00 PM, and 3:10 PM.

7. Cultivation Plants: Spinach, sunny lettuce, and daikon

8. Cultivation Records

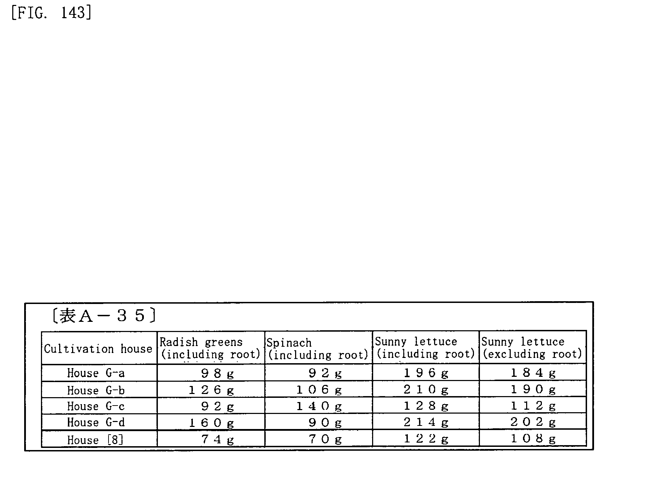

- January 11, 2008 (H20): Spinach, daikon, and sunny lettuce were seeded in the houses G-a, G-b, G-c and G-d, and the house 8.
- January 15: The spinach, daikon, and sunny lettuce of the houses G-a, G-b and G-c had sprouted. The daikon and sunny lettuce of the house G-d had sprouted. No plants of the house 8 had sprouted.
- January 18: While the plants of all types of the houses were sprouted, the houses G-a, G-b and G-c were larger in number than the house G-d and the house 8. This could be seen at a first sight. There was no need to count the plants due to a large difference.
- March 6: The daikon and spinach were harvested.
- March 27: The sunny lettuce was harvested. Comparison of weights is referred to in FIG. 143.

9. Experiment Results

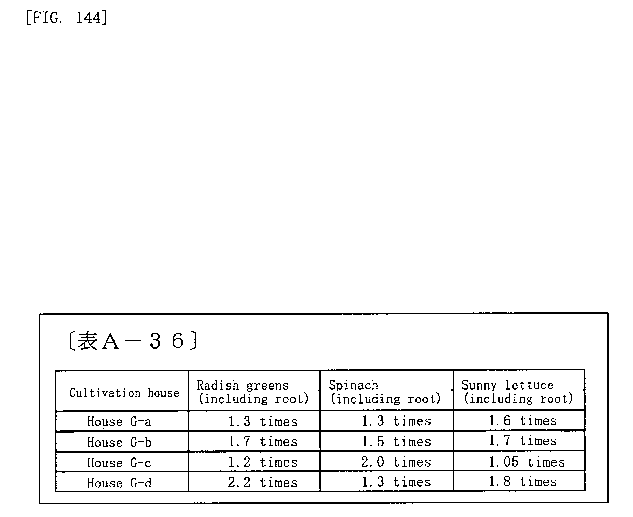

Comparison of weights is referred to in FIG. 143.
Comparison and aggregation of the typical house cultivation and the growth speed are referred to in FIG. 144.

As described above, while some differences were generated according to types of vegetables, all houses had faster growth speeds than the typical house.
While average transmittances of the houses on which the red paint was sprayed were different from each other, all of the houses satisfied photosynthetic rate saturation light intensity.
Accordingly, while elements of the light intensity were under the same conditions, as quality of the light can be seen in FIG. 57, a peak wavelength range of the red light effect of the photomorphogenesis overlaps a peak wavelength range of the photosynthesis. For this reason, it was verified that, since a ratio of the photosynthesis function wavelength of the cultivation space was increased, due to an increase of a photosynthetic rate in comparison with the typical house, the growth speed was also increased. Simultaneously, the houses G-a to G-d had different ratios of light, respectively.
Accordingly, from the experiment result, it will be appreciated that, when the ratio of light is set to the spectrum of the sunny spot of sunlight filtering through foliage of tree branches, the growth of the daikon, spinach, and sunny lettuce can be increased.

Here, since an inlet side and an inner side in the plant community have different ratios of light, in combination of the considerations, from the experiment results, it will be appreciated that $C_3$ plants such as daikon, spinach, and sunny lettuce have different optimal ratios of light. Even if there is an optimal ratio of light, there is no need to find the ratio of light. This is because the ratio of light is varied by reflection or transmission of sunlight.

Accordingly, a species growing naturally under the lighting environment of the inlet side of the plant community is adapted to sunlight with less reflection. That is, the species prefers the environment in which the ratio of light between the lighting environment and the bare field is small, and photosynthetic rate saturation light intensity is high.

Meanwhile, a species growing naturally under the lighting environment of the inner side of the plant community or of the dense plant community is adapted to sunlight reflected many times.

That is, the species prefers the environment in which the ratio of light between the lighting environment and the bare field is large, and photosynthetic rate saturation light intensity is very low.

Accordingly, the cultivation house may be formed of a material through which a visible beam having a wavelength range of 380 to 780 nm of sunlight passes so that a spectrum of the color has peak values to the red light R and the far-red light FR, respectively, and may be formed of a light transmissive material in which a spectral radiance of the wavelength range other than the red light R and the far-red light FR is zero or smaller than that of the red light R and far-red light FR, so that the inside of the cultivation house can secure brightness of the photosynthetic rate saturation light intensity of the cultivated vegetables by a predetermined transmittance of the light transmissive material.

In addition, even in a transparent light transmissive material, since the ratio of light is varied by a material, a thickness, color density, and so on, the inside of the cultivation house can secure brightness of the photosynthetic rate saturation light intensity of cultivated agricultural crops of $C_3$ plants by a predetermined transmittance of the light transmissive material.

**Ninth Embodiment**

Cultivation Experiment 10

1. Purposes: Since summertime in which the sun is bright is substantially bright even when sunlight passes through vinyl to which red color is attached, the eggplants are cultivated in the vinyl house using red vinyl and which secures brightness of photosynthetic rate saturation light intensity of the eggplants, and then the yields of them are compared with each other.

2. Place of Experiment: Shinonome-cho, Kochi, Kochi

3. Period of Experiment: July 15, 2008 (H20) to August 30, 2008 (H20)

4. Experiment Conditions

4-1 Equipment of Cultivation House: The cultivation house disposed in the house and the pots and other things painted red, except for vinyl, are referred to as a "red house" below.

- Cultivation House 2: The red house was surrounded by red vinyl, not typical vinyl.
- Cultivation House 14: The red house using the typical vinyl was equipped with the reflective plate and the red net (see FIG. 74).
- Cultivation House 8: The typical vinyl house was disposed at a position far from the red house (see FIG. 50).

4-2: Spectrum of material used to make lighting environment in cultivation house equal to 4-3

The spectrum of color of the reflective plate and the red vinyl, and water paint (red spray) were used. See FIG. 20. The spectrum of the oil paint used to make the inside of the cultivation house and the net red is referred to in FIG. 23.

4-3: Illuminance of each house and illuminance of bare field

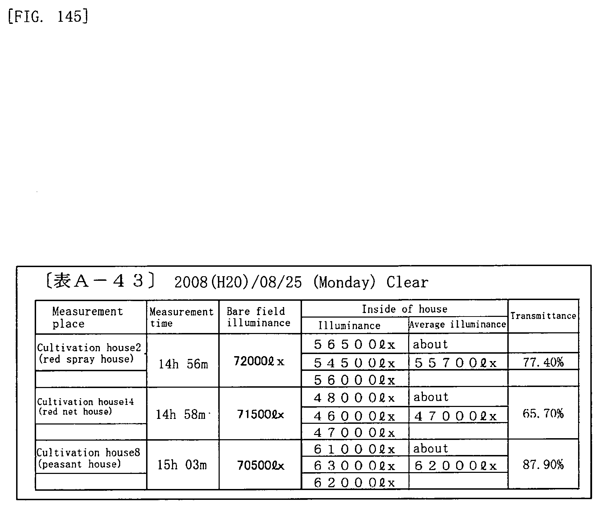

FIG. 145 shows illuminance of the bare field and the insides of the houses 2, 14 and 8 before and after 3:00 PM. The photosynthetic rate saturation light intensity of the eggplants is 40,000 lx.

◊ Aboveground house illuminance measurement

5. Cultivation method of Experiment 10

5-1: Eggplants (Senryo No. 2/solanum melongena)

Operation Sequence: 4 times a day, 8:25 AM, 10:10 AM, 1:00 PM and 3:10 PM, a temperature and humidity are measured. 1:00 PM, the reflective plate is moved from the west side to the east side. The temperature and humidity are measured, and the number of flowers is checked to attach a tomato-tone. Watering is performed. Each is 2 liters.

(A day before a holiday is twice this), before and after sunset, watering is performed. Each is 2 liters. (A day before a holiday is twice this), the reflective plate of the east side is lowered, and the reflective plate of the west side is raised.

6. Experiment Result of Experiment 10

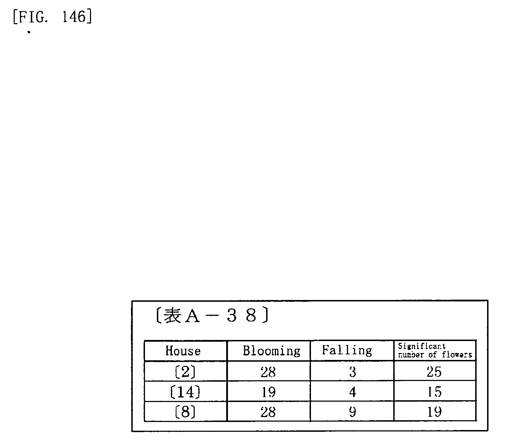

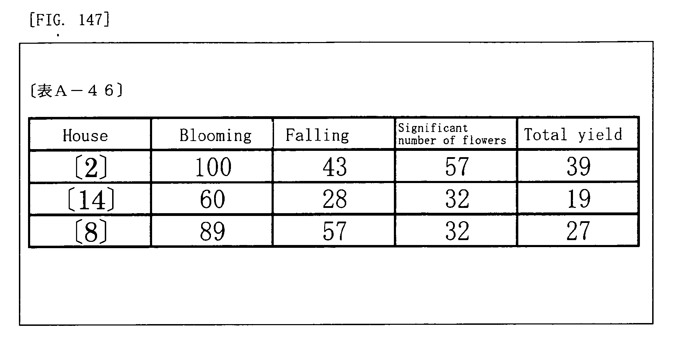

- July 15 (Tuesday): Cultivation started.
- July 19 (Saturday): Flower blooming started. A room temperature in the house 2 arrived at 40 °C.
- July 21 (Monday): A room temperature in the houses 2 and 14 arrived at 40 °C. The flowers of the houses 14 and 8 fell.
- July 26 (Saturday): Since the temperature in the house was too high, fans were installed in the houses 2, 14 and 8. The room temperature was lowered by about 5 °C by the fans.
- August 7 (Thursday): One was harvested from the house 2 and two were harvested from the house 8. Until this day, the number of bloomed flowers, the number of fallen flowers, and the number of effective bloomed flowers calculated by subtracting the number of fallen flowers from the number of bloomed flowers were summed and calculated, and are referred to in FIG. 146 and FIG. 147.
- August 30 (Saturday): Pests were found in the house 8, and no pests were found in the houses 2 and 14. There was a substantial difference between crop yields of the houses 2 and 8. That is, the purposes of the experiment were accomplished, and the experiment was finished on this day.

Any brightness in the houses of the houses 2, 14 and 8 is equal to or higher than 40,000 lx, which is the photosynthetic rate saturation light intensity of the eggplants.
The brightness in the house of the house 8 was highest, the next was the house 2, and the house 14 is lowest. Accordingly, it was natural that the crop yield of the house 14 having the lowest brightness was lowest. However, the house 2 having the brightness lower by about 10% than the house 8 having the highest brightness had the crop yield about 1.44 times larger than the house 8 on August 30. As the ratio of R/B was increased higher than that of the bare field and the ratio of R/FR was reduced lower than that of the bare field, the crop yield was increased even though the brightness was lower by about 10%. In addition, even though the house 14 had the brightness lower by about 24% than the house 8, the house 8 had a crop yield about 1.42 times larger than the house 14.

However, the house 14 having the lowest transmittance, i.e., having the highest ratio of R/B and the lowest ratio of R/FR of the houses 2, 14 and 8 in comparison with the bare field was healthiest.
It was verified by the lowest number of fallen flowers. The second healthiest house was the house 2, and thus, it will be appreciated that the insect-proof effect was increased as the variation in ratio of light was increased. Since the number of fallen flowers of the house 8 was large on August 30, the number of effective flowers calculated by subtracting the number of fallen flowers from the number of bloomed flowers of the house 8 was equal to the house 14. All of the eggplants having bloomed flowers fruited.

Accordingly, equalization of the effective flower numbers shows that the crop yield of the house 8 being 1.42 times higher than the house 14 is merely an intermediate result, and a final difference in crop yield is reduced to be smaller than 1.42 times.

According to the experiment, it will be appreciated that, under the lighting environment in which the ratio of R/B is increased higher than that of the bare field and the ratio of R/FR is reduced lower than that of the bare field, as the cultivations are performed by simultaneously maintaining the brightness of the photosynthetic rate saturation light intensity of the cultivation plants, in addition to the insect-proof effect, the crop yield is also increased.

**Tenth Embodiment**

Cultivation Experiment 11

1. Purposes

The intensive cultivation was successful in Experiment 5, but failed in Experiments 7 and 8 (see FIG. 141). However, it is unclear whether the irradiated light of the LED used in Experiment 5 fell on the leaves, how many LEDs illuminated the leaves, whether the distance between the LEDs and the leaves was suitable, and so on.
In Experiment 5 it is recorded that all of the leaves in contact with the LED were cut off.
Experiment 11 is provided to find how much light in a range of a red light effect of photomorphogenesis is irradiated to set the spectrum of the shady spot of sunlight filtering through foliage of tree branches (see FIG. 2) to the sunny spot of sunlight filtering through foliage of tree branches (see FIG. 3). Even if an amount of light appropriate to be irradiated to the plants is calculated, unlike sunlight, the artificial lighting is reduced in brightness as a distance from a light source is increased.

Accordingly, only when the plants leaves are in contact with the light source, it is varied to the sunny spot of sunlight filtering through foliage of tree branches, and as the leaves move far away from the light source, it approaches the shady spot.

Meanwhile, since positions of the plant leaves have no regularity, it is impossible to control distances between the light sources and the plant leaves to the same distance during the cultivation.

In addition, as the lighting environment of the plants is varied from the shady spot to the sunny spot of sunlight filtering through foliage of tree branches, generally, all of the plants are under the lighting environment of the completely surrounded space.

However, Experiment 5 succeeded by irradiating 42 LEDs to two eggplants. This shows that the lighting environment of the plants has a growth effect even when it is applied to some of the plants, while there is no need to completely surround the plants.

Here, the number of LEDs of 8000 mcd is varied to 3, 6, 9, 13, 17 and 21 to investigate variation in growth effect.

2. Place of Experiment

Shinonome-cho, Kochi, Kochi

3. Period of Experiment: November 13, 2009 (H21) to March 2, 2010 (H22)

4. Experiment Conditions

4-1: Facility for Cultivation House

The house 7 of Experiment 5 was basically used, and threefold vinyl having a thickness of 0.05 mm was used (see FIG. 60)

4-2: LED Irradiation Plate (Reference Numeral 16 of FIG. 60)

A LED irradiation plate 16 of FIG. 60 was removed and a new LED irradiation plate was attached.
8000 mcd house: The LED having a brightness of 8000 mcd at red 660 nm was used. 3, 6, 9, 13, 17 and 21 LEDs were attached to 6 irradiation plates, respectively, and the 6 irradiation plates were installed for 6 pots, respectively. Hereinafter, the house is referred to as an 8000 mcd house.

4-3: LED Lighting Condition 2

All radiation light of a total of 69 LEDs of 21, 17, 13, 9, 6 and 3 LEDs was artificially adjusted to fall on the leaves. It was periodically checked whether the irradiation light did not fall on the growth of the plants, and the irradiation light was adjusted. It is preferable to cut leaves in contact with the LED.

4-4: LED Lighting Condition 3

Irradiation time was 6:00 AM to 6:00 PM as in Experiment 5.

4-5: Lighting Environment

[1] The house was equipped with one sheet of vinyl formed of a polyethylene material containing 1% red pigment and having a thickness of 0.05 mm and two sheets of transparent vinyl formed of a polyethylene material and having a thickness of 0.05 mm, a total of three sheets of vinyl, and a red reflective plate. Transmittance of the house was measured. Upon measurement, the vinyl was stained with some dirt and many water drops. Results of the measurement on January 9, 2010 (H22) in the 8000 mcd house were as follows: measurement time 10:48 AM, the bare field 53,000 lux, an average of the inside of the house about 30,000 lux, and average transmittance 56.6%.

[2] A difference in ratio of R/B between the vinyl house and the bare field calculated according to FIG. 104 and FIG. 107 was (a difference between the fourfold vinyl and the bare field, 0.465)-(a difference between the one-fold vinyl and the bare field, 0.108) = 0.357. Since one-fold of the threefold vinyl contained the 1% red pigment, a difference between the threefold vinyl and the bare field would be larger than 0.357.

[3] Since the threefold vinyl included one sheet of vinyl containing the 1% red pigment and 2 conventional sheets of vinyl, the transmittance was low and the inside of the house was dark. Since the house was darker than 40,000 lux of the photosynthetic rate saturation light intensity of the eggplants, light supplement by a mercury lamp is performed. Irradiation time was 5:00 AM to 7:30 PM.

The mercury lamp was made by Mitsubishi Electric Company, Osram K. K, HF400X, a mercury lamp, and 400 W. One mercury lamp was used for light supplement.

[4] In the 8000 mcd house, after two months elapsed and the plants grew tall and the leaves were dense, observation of the effect of the lit LED was begun. Here, since only one mercury lamp was provided, light supplement intensity between the pots was unbalanced and a difference in growth occurred. While the mercury lamp was being moved to correct the imbalance, since the lighting of the LED began on January 12, 2010 (H22), two mercury lamps were used to reduce the imbalance in light supplement intensity between the pots, while slightly delayed. However, on January 19, the next day, two leaves of the tallest eggplant closest to the mercury lamp were dried up and discolored. Accordingly, on January 20, the next day, the mercury lamp was turned OFF, and the mercury lamp was installed over the outside of the house to measure the light supplement intensity of each pot. Since the measurement results show that an error in average illuminance of each pot compared by comparison experiment was 15.4%, on January 21, the next day, the mercury lamps were increased to 4. The measurement result of 4 mercury lamps was performed in the 8000 mcd house at a measurement time of 11:11 to 11:16 AM, and the bare field had 58,000 lux to 58,500 lux and low illuminance due to influence of thin cloud cover. However, reviewing the illuminance in the house by the light supplement, a north side of an east row was 39,000 lux and 38,500 lux, a middle side was 42,000 lux and 39,500 lux, a south side was 42,500 lux and 41,500 lux, a north side of a west row was 41,000 lux and 39,500 lux, a middle side was 41,500 lux and 42,000 lux, and a south side was 38,500 lux and 40,500 lux. Due to the light supplement effect, the illuminance was kept stable in a high state.

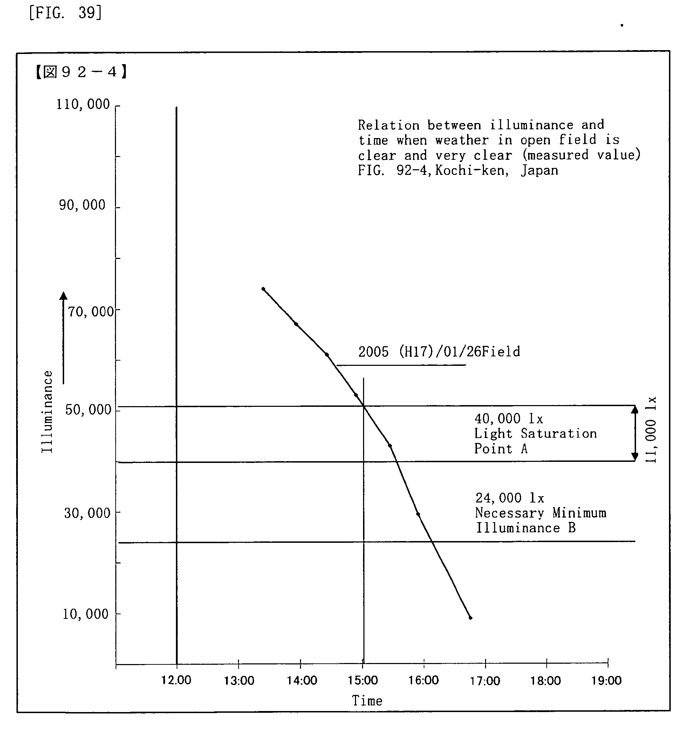

As can be seen from FIG. 39, at about 13:00 on January 26, the illuminance of a sunny day was about 70,000 lux, and at a measurement time of 11:11 to 11:16 AM, the bare field illuminance is 58,000 to 58,500 lux. That is, on a very sunny day with no clouds, since the illuminance in the house as 38,500 to 42,500 lux and necessary minimum illuminance of the eggplants is 24,000 lux, when the photosynthetic rate saturation light intensity was set to 40,000 lux, the light supplement intensity was suitable.

Comparing the pots through the comparison experiment, average illuminance of the pots (the pots of the north, middle and south of the east row, and the pots of the north, middle and south of the west) was as follows: the pots of the north, middle and south of the east row had 38,750 lux, 40,750 lux and 42,000 lux, and the pots of the north, middle and south of the west had 40,250 lux, 41,750 lux and 39,500 lux, respectively. Accordingly, since an error between the maximum 42,000 lux and the minimum 38,750 lux was about 7.7%, comparison precision was suitable.

4-6: Measurement Operation

Measurement times: 8:30, 10:10, 13:00 and 15:00

Measurement Position: A temperature was measured in the house, and humidity was measured in the house.

4-7: Operation Sequence

- 8:25 AM: Temperature and humidity measurement
- 10:10 AM: Temperature and humidity measurement
- 1:00 PM: The reflective plates were lowered on the west side and lowered on the east side. The temperature and humidity were measured. Watering was performed at 2 liters each.
- 3:10 PM: Temperature and humidity measurement
- 4:30 to 5:00 PM: The reflective plates were lowered on the east side and raised on the west side. Watering was performed at 2 liters each (4 liters on a day before a holiday,).
- On Saturday (Friday when Saturday was a holiday), fertilization was performed with Tommy Black (trade name) 50 cc. However, when stems were increased to a height of 50 to 60 cm, fertilization was performed at 150 cc. On a day when fruits were harvested, fertilization was performed at 50 cc each.
- In a growing process, the plants were cultivated in natural conditions with no trimming-pruning.

5. Cultivation Plants

Eggplants: A species is Ryoma, and a rootstock is solanum melongena.

6. Cultivation Records

- November 13: Seedlings were planted in the 8000 mcd house.
- December 14: Flowers bloomed by the day before they were removed, but from this day, fruiting was performed using tomato-tone.
  Since rats intruded into the house in which the cultivation was being performed to cut and eat the leaves of the eggplants, the vinyl was kept closed at nighttime. Accordingly, from about December 17 to a holiday at the end of the year, several flowers fell down.
- December 26: Since the height of the plants was increased, an amount of fertilizer was increased to 100cc a week. Since the end of the year had intermittently continuing holidays, December 27, 30, January 1, 2 and 4, the vinyl was kept closed and the house was heated for 24 hours. In addition, since most of the holidays were sunny, the temperature in the house arrived at 40 °C or more, and many flowers fell down.
- December 26: Since the next day was Sunday, according to the matter of arrangement in which fertilization is performed on a day before a holiday, fertilization was performed at 100 cc.
- December 29: Since the next day was a holiday, according to the matter of arrangement in which fertilization is performed on a day before a holiday, fertilization was performed at 100 cc.
- December 31: Since New Year's vacation started on the next day, according to the matter of arrangement in which fertilization is performed on a day before a holiday, fertilization was performed at 100 cc.
- January 3: Since New Year's vacation continued until the next day, January 4, according to the matter of arrangement in which fertilization is performed on a previous day of a holiday, fertilization was performed at 100 cc.
  While many flowers fell down, since the fertilization was frequently performed, many flowers abruptly bloomed. The blooming flowers outnumbered the fallen flowers.
- January 12: From this day, only two days per week, the temperature in the house would be increased to 40 °C or more. On this day, the house was kept closed at daytime, and the temperature was increased to 40 °C or more. The house was kept closed at nighttime from November 13, upon planting.
  From this day, lighting of the LED started. Every day, it would be checked whether the irradiation light of the LED fell on the leaves.
- January 13: The temperature in the house was 40 °C to 44 °C from 10:00 to 16:00.
- January 14: The temperature in the house was 40 °C to 45 °C from 10:00 to 15:00.
- January 18: The temperature in the house was 40 °C to 47 °C from 13:00 to 15:00.
- January 19: The temperature in the house was 43 °C to 47 °C from 10:00 to 15:00.
- January 20: Since the numbers of installed LEDs are different from each other, the numbers of effectively blooming flowers calculated by subtracting the numbers of fallen flowers from the numbers of blooming flowers differed according to the numbers of LEDs. However, the numbers of LEDs and the numbers of blooming flowers were found not to be correlated.

- January 23: Powdery mildew was found in the pots of the east north side and the west north side.
- January 26: Powdery mildew was also found in the pots of the east south side and the west south side. As a result, the powdery mildew was generated in 4 pots, excluding 2 pots in the middle of the west side and the middle of the east side. Generation of the powdery mildew seemed to be caused by a small difference in ratio of light between the in-house and the bare field due to exchange of the vinyl from threefold to twofold on January 20. Accordingly, on this day, the vinyl was returned to its original threefold. The temperature in the house was 41 °C to 40 °C from 10:00 to 15:00 on this day. The reflective plate of the west side was left up all day long to increase the variation in ratio of light, rather than being lowered.
- January 27: Progress of the symptoms of the west south side and the west north side stopped.
  Since the red reflective plate had a short length, the length was lengthened from one end to the other end of the house.
- January 28: Progress of the symptoms of all of 4 pots having the powdery mildew stopped. The pots of the middle of the west side and the middle of the east side had no powdery mildew. The pots of the west north side and the east north side had heavy symptoms in 4 pots, but all were still early symptoms, and the pot of the west north side had heavy symptoms.
- January 29: Watering of 4 liters was performed in each pot four times a day. The temperature in the house was 40 °C to 41 °C from 10:00 to 15:00.
- January 30 (Saturday): Watering of 6 liters was performed in each pot four times. The symptoms of all of 4 pots were recovering.

Since fertilization was performed at 100 ccx4=400 cc for 5 days from December 26 to January 3 and many flowers abruptly bloomed, fertilization was performed at 150 cc on Saturday every week from January 9 (Saturday). In addition, fertilization was performed at 150 cc twice a week on Wednesday and Saturday from January 20 (Wednesday). Further, fertilization was performed at 150 cc three times a week on Tuesday, Thursday and Saturday from January 26 (Tuesday), and simultaneously, fertilization was performed at 50 cc at each harvest of fruit, i.e., when three fruits were harvested, fertilization was performed at 150 cc. As a result, for 6 days from January 20 (Wednesday) to January 26 (Tuesday), fertilization was performed at 800 cc in the maximally fertilized pot, and fertilization was performed at 500 cc in the minimally fertilized pot. No flowers bloomed from the stems of any of 6 pots and no fruit ripened on January 25, but it was checked on January 28. As a result of consulting an agricultural advisor of the Agriculture Promotion Center, it was found that, in the case of the eggplants, fertilization is generally performed with Tommy Black (trade name of a fertilizer) at 4 to 6 kg/10 ares every month. Since 1000 eggplants are generally planted per 10 ares, when fertilization was performed at 1 kg/week (about 4 kg/month), 1 cc was used for each eggplant, and when fertilization was performed at 1.5 kg/week (6 kg/month), 1.5 cc was used for each eggplant. (Here, describing that a house is installed on 2 Tans and pot cultivation is performed to verify real cultivation, in the case of tomatoes requiring a high degree of sugar, a waterproof sheet was spread on the bottom to reduce an amount of soil and perform the cultivation.

However, in the case of crops such as eggplants, bell peppers, cucumbers, and so on, which are cultivated for a large crop yield, since a large amount of soil is needed; the crops are generally cultivated on the ground. Such advice was received). After consulting with the Agricultural Technology Center, the same answer was received. However, in the experiment of the specification, even in a seedling state, fertilization was performed at 50 cc a week. It may be that 500 cc to 800 cc/6 days was a bit too much fertilizer, but reasons for successful experiments until now were considered. In the experiment, a 30φ (mm) hole was formed in a bottom of the pot having a height of 350 mm and a width of 350 mm. Water was filled in a watering pot having a capacity of 2 liters or 3 liters, and 50 cc of Tommy Black was added and mixed into the watering pot to be fertilized. When about 1 liter was fertilized, water containing Tommy Black flowed out from the bottom of the pot. That is, only about a half was actually fertilized. Further, watering of 2 to 4 liters was performed 2 to 4 times a day (different according to the experiment example). Even at this time, when water of about 1 liter was input, all water entering after that flowed out from the hole of the bottom. That is, even when fertilization was performed for a change, the fertilizer remaining in about a half of the pot was washed out through watering performed several times a day. While fertilization was performed on a day before a holiday once a week, an operator, who arrived at work by accident on a holiday of the year-end and New Year's vacation, performed the fertilization according to the matter of arrangement. As a result, extremely many flowers bloomed instantly. A larger amount of fertilization was performed by an amateur researcher. For this reason, the flowers did not seem to bloom, and a large amount of water was poured from February 29 to wash out the fertilizer.

When a large amount of water was input, since a temperature of the soil was low enough to make the eggplants unhealthy, watering was performed while adjusting a water temperature to 20 to 22 °C. On January 29, 6 liters of tap water at 12 °C was input into each pot 4 times, and in the afternoon, 6 liters of water heated to 20 to 22 °C was input once and 4 liters was input once. From January 30, watering was performed using water heated to 20 to 22 °C. The heated watering was performed four times on six troll boxes every day, a total of 24 times.

- February 1: Each flower bloomed in the pots of the middle of the east side and the west north side. One fruit was harvested from the pot of the west south side.
- February 12: While the heated watering was continued, since several flowers bloomed every day and a sum of 17 fruits were harvested, the watering was continued until February 10 and then the original watering was performed from February 12 (Friday). White spots of the powdery mildew disappeared from the east south sides and the west south sides of the lightest group. The symptoms of the east north side and the west north side of the heaviest group were stopping.

- February 22: The powdery mildew of the east south side and the west south side had completely disappeared and the symptoms had also clearly disappeared. The powdery mildew of the east north side could be seen only when carefully observed. Progress of the powdery mildew of the west north side had stopped. While fruits ripened in 5 pots, excluding the pots in the middle of the west side, the growth had stopped.
- March 2: While flowers had bloomed every day until February 25, flowers had not been blooming recently. Even when the flowers bloomed, the flower fell with no fruit.

Since the plants were planted in the pots, an amount of soil was small. For this reason, it seemed to be close to the limit, and the experiment was finished.

Experiment Results

According to the purposes of the experiment, in two points of view of necessity of completely surrounding the plants with sunlight and determination of appropriate number of LEDs appropriate for the cultivation by varying the number of LEDs of 8000 mcd to 3, 6, 9, 13, 17 and 21, it could be verified by comparing the powdery mildew, the crop yield and a thickness of a stump.

One sheet of vinyl formed of a polyethylene material containing 1% red pigment and having a thickness of 0.05 mm and two sheets of transparent vinyl formed of a polyethylene material and having a thickness of 0.05 mm, that is, a total 3 sheets of vinyl, were installed. When the one sheet of transparent vinyl formed of the polyethylene material and having the thickness of 0.05 mm and the twofold of vinyl was left, the powdery mildew was found in 4 out of 6 pots. In addition, after the powdery mildew was found, when the vinyl was returned to the threefold of vinyl, 2 of the 4 diseased pots recover, and progress of the disease of the other 2 pots stopped.

It was found that the pots with the 9 and 13 LEDs had no disease, a large crop yield, and a thick stump, and thus, there was no need to surround the plants with sunlight.

Considerations of the experiment results will be stated below.

Brightness of an apex of the stem irradiated by the mercury lamp has imbalance corresponding to Article [4] of 4-5: Lighting Environment.

In the brightness of bushes between the stems of each pot, the pot of the east south side was exposed to sunlight at two surfaces of the south side and the east side, and the pot of the west south side was exposed to sunlight at two surfaces of the south side and the west side. The pot of the east north was exposed to sunlight at the east side but was not exposed to sunlight at the north side until noon. The pot of the west north side was also exposed to sunlight at the west side but was not exposed to sunlight like the pot of the east north side. In addition, the pots in the middle of the east and the middle of the west was exposed to sunlight at one only surface of the east side and the west side, respectively. Estimating with Article [1], the pot of the south side of the east west side had the best lighting environment, the pot of the west north side as second, the pot of the east north side was third, and the pot of the middle of the east west side as the worst.

As the stove was installed with the lighting of the LED started and the house closed for two days a week, in two points of view of the crop yield from January 12, when the temperature in the house was 40 °C or more, to this day, and a resistance against the disease (powdery mildew), correlation with the number of irradiated LEDs will be stated below.

The disease was found on the eggplants equipped with the 3 and 6 LEDs when the variation in ratio of light was reduced by changing the threefold vinyl with the twofold vinyl, and the disease was cured by recovering the ratio of light by changing the twofold vinyl with the threefold vinyl. However, although progress of the disease of the eggplants equipped with the 17 and 21 LEDs stopped, the disease could not be cured even when the ratio of light was returned to its original. In addition, the eggplants equipped with the 9 and 13 LEDs had no powdery mildew and were in health even when the threefold vinyl was replaced with the twofold vinyl.

As for the crop yield, the pot of the middle of the east side had the largest number of 10. Three pots of the middle of the east west side and the east south side each had a second largest number of 8. The pot of the east north side had a third largest number of 6 and the pot of the west north had the smallest number of 5.

When the plants were finally drawn out, since the stumps had differences in thickness, the comparison results are as follows.

Reviewing the diameters of the stumps, the pot of the west south side in the pots of the south side of the east west side having the best lighting environment had the largest thickness, and the pot of the middle of the west side in the pots of the middle of the east west side having the worst lighting environment had a second largest thickness. Three pots, i.e., the pot of the east south side having the best lighting environment, the pot of the middle of the east side having the worst lighting environment, and the pot of the east north side having the second best lighting environment, each had a third largest thickness. The pot of the west north side having a third best lighting environment had the smallest thickness of stump.

The plants were planted on November 13, the LED was lit on January 12, and the cultivation was finished on March 2. Accordingly, the thickness of the stump did not have a correlation with the number of LEDs but was largely affected by the number of LEDs. A thickness of the stump of the pot of the west north side with 21 LEDs was extremely small in the 6 pots. While this pot had the third best lighting environment, the disease resistance was weakest and the crop yield was smallest. Accordingly, it was found that 21 LEDs caused an adverse effect. In the pots of the south side of the east west side having the best lighting environment, the pot (6 LEDs) of the west south side had the largest thickness in the 6 pots, and the pot (3 LEDs) of the east south side having the best lighting environment, the pot (17 LEDs) of the east north side having the second best lighting environment and the pot (9 LEDs) of the middle of the east side having the worst lighting environment had substantially the same thickness. In terms of disease resistance, although the disease was found, it was cured. In addition, the pot having the best lighting environment and the pot of the east west side having the worst lighting environment had the same crop yield. Accordingly, it was found that 3 LEDs had an insufficient effect due to the small number.

While the pot (6 LEDs) of the west south side had the largest thickness and the best lighting environment, the pot (6 LEDs) had worse disease resistance and crop yield than the pot (9 LEDs) of the middle of the east side and the pot (13 LEDs) of the middle of the west side. Accordingly, it was found that the 6 LEDs were not optimal. The pot (17 LEDs) of the east north side having the third best lighting environment had a stump thickness smaller than that of the pot (13 LEDs) of the middle of the west side having the fourth best lighting environment and substantially the same thickness as the pot (9 LEDs) of the middle of the east side. In addition, the pot (17 LEDs) had the disease resistance and the drop yield worse than that of the pots (9 and 13 LEDs) of the middle of the east west side. Accordingly, it was found that the 17 LEDs were too larger than the optimal number.

It was found that the pots (9 and 13 LEDs) of the middle of the east west had no powdery mildew and the worst lighting environment, and the pot (9 LEDs) had the best crop yield but the pot (13 LEDs) had the largest stump thickness. Accordingly, conclusively, it was verified that about 9 to 13 LEDs having 8000 mcd were appropriate to the experiment conditions for intensive cultivation.

[Industrial Applicability]

The lighting environment control facility for cultivation of crops, the pest control method, and the intensive cultivation method of the present invention are appropriate for pesticide-free cultivation in a crop cultivation house.

[Description of Reference Numerals]

6: Blue net
7: Red net (oil paint: red)
8: Cultivation house (entirely covered with vinyl and kept closed; in addition, except for the vinyl and the blue net 6 and the blue LED 38, the entire house including a floor, a wall, a column, and the others was painted red)
9: Conventional vinyl house (vinyl: transparent) having sides and ceiling surrounded with vinyl
10: East side of aboveground house
11: Middle of aboveground house
12: West side of aboveground house
13: Temperature indicator insertion port
14: House (red net: oil paint) constructed by installing red net on sides and ceiling of conventional vinyl house (vinyl: transparent) surrounded with vinyl
15: Fixed reflective plate (oil paint: red)
16: LED irradiation plate (oil paint: red) LEDs (42 pieces): Used LED (Sharp, red LED, $10\phi$, LT9560U) half-value angle 12°, peak wavelength 660 nm, peak brightness 8000 mcd
17: Conventional vinyl house (transparent) having sides and ceiling surrounded with vinyl (twofold)
18: fluorescent lamp (shade with oil paint: red) [Mitsubishi Electric Osram Company, Model No. Code 601122, red, FL40SP, starter type, fluorescent lamp, 40 Watt] Fluorescent lamp was added in the middle of experiment.
19: Box in which stove is installed (oil paint: red)
20: LED irradiation plate (oil paint: red)

- LEDs (42 pieces): Used LED (Sharp, red LED, $10\phi$, LT9560U) half-value angle 12°, peak wavelength 660 nm, peak brightness 8000 mcd
- LEDs (32 pieces): Used LED (Stanley, red LED, $5\phi$, PR5305S) half-value angle 40°, peak wavelength 700 nm, peak brightness 8 mcd

21: LED irradiation plate (oil paint: red) LEDs (89 pieces): Used LED (Stanley, red LED, $5\phi$, PR5304S) half-value angle 15°, peak wavelength 700 nm, peak brightness 12 mcd
22: LED irradiation plate (oil paint: red)

- LEDs (42 pieces): Used LED (Sharp, red LED, $10\phi$, LT9560U) half-value angle 12°, peak wavelength 660 nm, peak brightness 8000 mcd
- LEDs (32 pieces): Used LED (Stanley, red LED, $5\phi$, PR5305S) half-value angle 40°, peak wavelength 700 nm, peak brightness 8 mcd

23: Red vinyl (water paint: red)

24: Portion at which vinyl is not installed and through which sunlight enters house

25: LED irradiation plate (oil paint: red) LEDs (24 pieces): Used LED (Sharp, red LED, 10φ, LT9560U) half-value angle 12°, peak wavelength 660 nm, peak brightness 8000 mcd

26: LED irradiation plate (oil paint: red) LEDs (24 pieces): Used LED (Toshiba, red LED, 10φ, TLRH190P), peak wavelength 644 nm, peak brightness 19000 mcd

27: Sun visor (surrounds house to prevent intrusion of sunlight; color of veneer plate as is)

28: LED irradiation plate (color of veneer plate as is) LEDs (117 pieces): Used LED (Toshiba, red LED, 10φ, TLRH190P), peak wavelength 644 nm, peak brightness 19000 mcd

29: Fan (no color)

30: LED irradiation plate (oil paint: red) LEDs (4 pieces): Used LED (Sharp, red LED, 10φ, LT9500U) half-value angle 12°, peak wavelength 660 nm, peak brightness 8000 mcd

31: House (red net: oil paint) constructed by installing red net on sides and ceiling of conventional vinyl house (vinyl: transparent) surrounded with vinyl. Red net was added in middle of experiment

32: White plate

33: Light source

34: Weatherproof vinyl (transparent)

35: Pot for cultivation (color of veneer plate as is)

36: Reflective plate (water paint: red)

37: Pot for cultivation (oil paint: red)

38: Blue LED

39: Surroundings of awning to artificially make shady spot

FIG. 1

1) Substitute Sheet (Rule 26)

FIG. 2

1) Shady Spot of Sunlight Filtering through Foliage of Tree Branches
(in vinyl house)
Radiance/Luminance
12h 30m 10s 2006(H18)/02/03
2) Conditions of Measurement
3) Measurement Start Time
4) Measurement Angle
5) Measurement Method
6) Sunny Spot Illuminance (1x)
7) Start
8) End
9) White Plate
10) Intensity
11) Wavelength (nm)

FIG. 3

1) Sunny Spot of Sunlight Filtering through Foliage of Tree Branches
(in vinyl house)
Radiance/Luminance
12h 32m 57s 2006(H18)/02/03
2) Conditions of Measurement
3) Measurement Start Time
4) Measurement Angle
5) Measurement Method
6) Sunny Spot Illuminance (lx)
7) Start
8) End
9) White Plate
10) Intensity

11) Wavelength (nm)

FIG. 4

1) Bare Field after Tree Branch Measurement
(in vinyl house)
Radiance/Luminance
12h 37m 53s 2006(H18)/02/03
2) Conditions of Measurement
3) Measurement Start Time
4) Measurement Angle
5) Measurement Method
6) Sunny Spot Illuminance (lx)
7) Start
8) End
9) White Plate
10) Intensity
11) Wavelength (nm)

FIG. 6

1) Reflected Light from Green Construction Paper Radiance/Luminance
13h 29m 47s 2006(H18)/03/02
2) Conditions of Measurement
3) Measurement Start Time
4) Measurement Angle
5) Measurement Method
6) Sunny Spot Illuminance (lx)
7) Start
8) End
9) Reflection of Construction Paper
10) Intensity
11) Wavelength (nm)

FIG. 9

1) Jig

FIG. 10

1) Species of Eggplant of Each Pot of Aboveground House
2) Senryo No. 2 Binan (mizu)
3) Kokuyou (naga) Mizunotakumi

FIG. 11

1) Reflected Light from Blue Construction Paper
Radiance/Luminance
13h 27m 16s 2006(H18)/03/02
2) Conditions of Measurement
3) Measurement Start Time
4) Measurement Angle
5) Measurement Method
6) Sunny Spot Illuminance (lx)
7) Start
8) End
9) Reflection of Construction Paper
10) Intensity

11) Wavelength (nm)

FIG. 12

1) Reflected Light from Red Construction Paper
Radiance/Luminance
14h 01m 43s 2006(H18)/03/11
2) Conditions of Measurement
3) Measurement Start Time
4) Measurement Angle
5) Measurement Method
6) Sunny Spot Illuminance (lx)
7) Start
8) End
9) Reflected Light
10) Intensity
11) Wavelength (nm)

FIG. 13

1) SR-2 Power Supply ON 9:40
Calibration 10:39/11:31
2) West
3) Middle
4) North

FIG. 14

1) West
2) Middle
3) North

FIG. 15

1) Sunny Spot in Wooden Box (in Cultivation House)
Radiance/Luminance
14h 52m 38s 2006(H18)/01/10
2) Conditions of Measurement
3) Measurement Start Time
4) Measurement Angle
5) Measurement Method
6) Sunny Spot Illuminance (lx)
7) Start
8) End
9) White Plate
10) Intensity
11) Wavelength (nm)

FIG. 16

1) Inside-of-Sheet
2004(H16)/05/25 Radiance
Time
2) Conditions of Measurement
3) Measurement Start Time
4) Measurement Angle
5) Measurement Method
6) Measured Illuminance

7) Start
8) End
9) White Plate
10) Intensity
11) Wavelength (nm)

FIG. 17

1) Outside-of-Sheet 1
2004(H16)/05/25 Radiance
Time
2) Conditions of Measurement
3) Measurement Start Time
4) Measurement Angle
5) Measurement Method
6) Measured Illuminance
7) Start
8) End
9) White Plate
10) Intensity
11) Wavelength (nm)

FIG. 18

1) Outside-of-Sheet 2
2004(H16)/05/25 Radiance
Time
2) Conditions of Measurement
3) Measurement Start Time
4) Measurement Angle
5) Measurement Method
6) Measured Illuminance
7) Start
8) End
9) White Plate
10) Intensity
11) Wavelength (nm)

FIG. 19

1) Thin Pink Vinyl Direct Measured Light
Radiance / Luminance
11h 39m 41s 2006(H18)/07/28
2) Conditions of Measurement
3) Measurement Start Time
4) Measurement Angle
5) Measurement Method
6) Sunny Spot Illuminance (lx)
7) Start
8) End
9) Direct Measurement
10) Intensity
11) Wavelength (nm)

FIG. 20

1) Water Paint (Red) Direct Measured Light
Radiance / Luminance

13h 09m 50s 2006(H18)/05/24
2) Conditions of Measurement
3) Measurement Start Time
4) Measurement Angle
5) Measurement Method
6) Sunny Spot Illuminance (lx)
7) Start
8) End
9) Reflected Light
10) Intensity
11) Wavelength (nm)

FIG. 21

1) Object Lens
2) Finder Shutter
3) Step Motor
4) Relay Lens
5) Reticle
6) Eyepiece
7) Depolarizer
8) Measurement Angle Sensor
9) Aperture Mirror
10) Spectroscope
11) Step Motor
12) Photomultiplier Tube
13) OP Amp
14) Analog Output
15) Integration Circuit
16) A/D Converter
17) AC Adaptor Connection Terminal
18) AC Adaptor
19) Operating Switch

FIG. 22

1) Reflected Light from Blue Net
Radiance/Luminance
13h 24m 45s 2006(H18)/03/02
2) Conditions of Measurement
3) Measurement Start Time
4) Measurement Angle
5) Measurement Method
6) Sunny Spot Illuminance (lx)
7) Start
8) End
9) Reflection of Net
10) Intensity
11) Wavelength (nm)

FIG. 23

1) Oil Paint (Red) Direct Measurement
Radiance/Luminance
13h 11m 13s 2006(H18)/05/24
2) Conditions of Measurement
3) Measurement Start Time
4) Measurement Angle

5) Measurement Method
6) Sunny Spot Illuminance (lx)
7) Start
8) End
9) Reflected Light
10) Intensity
11) Wavelength (nm)

FIG. 24

1) Blue LED
Radiance/Luminance
19h 10m 35s 2006(H18)/08/28
2)) Intensity
3) Wavelength (nm)

FIG. 25

1) Cultivation House
2) X-X Arrow View

FIG. 26

1) Cultivation House
2) X-X Arrow View

FIG. 27

1) Cultivation House
2) X-X Arrow View

FIG. 28

1) Cultivation House
2) X-X Arrow View

FIG. 29

1) Cultivation House
2) X-X Arrow View

FIG. 30

1) Aboveground House Detail Diagram
2) X-X Arrow View
3) North
4) West
5) East
6) South

FIG. 31

1) Aboveground House Detail Diagram
2) X-X Arrow View
3) North
4) West
5) East
6) South

FIG. 32

    1) Cultivation House
    2) X-X Arrow View

FIG. 33

    1) Cultivation House
    2) X-X Arrow View

FIG. 34

    1) Cultivation House
    2) X-X Arrow View

FIG. 35

    1) Cultivation House
    2) X-X Arrow View

FIG. 36

    1) 110,000
    2) Relation between illuminance and time when weather in open field is clear and very clear (measured value)
    FIG. 92-1, Kochi-ken, Japan
    3) 2004 (H16) /08/12
    4) Illuminance
    5) 40,000 lx Light Saturation Point A
    6) 23,500 lx
    7) 24,000 lx Necessary Minimum Illuminance B
    8) Time

FIG. 37

    1) 110,000
    2) Relation between illuminance and time when weather in open field is clear and very clear (measured value)
    FIG. 92-2, Kochi-ken, Japan
    3) 2004 (H16)/10/16
    4) Illuminance
    5) 40,000 lx Light Saturation Point A
    6) 11,500 lx
    7) 24,000 lx Necessary Minimum Illuminance B
    8) Time

FIG. 38

    1) 110,000
    2) Relation between illuminance and time when weather in open field is clear and very clear (measured value)
    FIG. 92-3, Kochi-ken, Japan
    3) Illuminance
    4) 2004 (H16)/11/09 Open Field
    5) 40,000 lx Light Saturation Point A
    6) 24,000 lx Necessary Minimum Illuminance B
    7) Time

FIG. 39

    1) 110,000

2) Relation between illuminance and time when weather in open field is clear and very clear (measured value)
FIG. 92-4, Kochi-ken, Japan
3) Illuminance
4) 2005 (H17)/01/26
5) 40,000 lx Light Saturation Point A
6) 11,000 lx
7) 24,000 lx Necessary Minimum Illuminance B
8) Time

FIG. 40

1) 110,000
2) Relation between illuminance and time when weather in open field is clear and very clear (measured value)
FIG. 92-5, Kochi-ken, Japan
3) Illuminance
4) 2005 (H17)/03/19
5) 40,000 lx Light Saturation Point A
6) 17,000 lx
7) 24,000 lx Necessary Minimum Illuminance B
8) Time

FIG. 41

1) 110,000
2) Relation between illuminance and time when weather in open field is clear and very clear (measured value)
FIG. 92-6, Kochi-ken, Japan
3) Illuminance
4) 2005 (H17)/06/06 Open Field
5) 40,000 lx Light Saturation Point A
6) 37,000 lx
7) 24,000 lx Necessary Minimum Illuminance B
8) Time

FIG. 42

1) 110,000
2) Relation between illuminance and time when weather in open field is clear and very clear (measured value)
FIG. 92-7, Kochi-ken, Japan
3) Illuminance
4) 2004 (H16)/05/24
5) 40,000 lx Light Saturation Point A
6) 22,500 lx
7) 24,000 lx Necessary Minimum Illuminance B
8) Time

FIG. 43

1) Cultivation House
2) X-X Arrow View

FIG. 44

1) Cultivation House
2) X-X Arrow View

FIG. 45

1) Cultivation House

2) X-X Arrow View
3) North
4) West
5) East
6) South

FIG. 46

1) Cultivation House
2) X-X Arrow View

FIG. 47

1) Cultivation House
2) X-X Arrow View

FIG. 48

1) Cultivation House
2) X-X Arrow View

FIG. 49

1) Cultivation House
2) X-X Arrow View

FIG. 50

1) Cultivation House
2) X-X Arrow View

FIG. 51

1) Cultivation House
2) X-X Arrow View
North
East
West
South

FIG. 52

1) Cultivation House
2) X-X Arrow View

FIG. 53

1) Cultivation House
2) X-X Arrow View
3) North
4) West
5) East
6) South

FIG. 54

1) Cultivation House
2) X-X Arrow View

FIG. 55

1) Cultivation House
2) X-X Arrow View
3) 42 LEDs

FIG. 56

1) Cultivation House
2) X-X Arrow View

FIG. 57

1) Relative Effect
2) Photosynthesis (1)
3) Reaction under strong light of photomorphogenesis (2)
4) Red light effect of photomorphogenesis (3)
5) Far-red light effect of photomorphogenesis (4)
6) Wavelength (nm)
7) Action Spectrum of Photoreaction of Plants

FIG. 58

1) Red Film (Cellophane Material) Direct Measurement Radiance/Luminance
14h 53m 2006(H18)/07/06
2) Conditions of Measurement
3) Measurement Start Time
4) Measurement Angle
5) Measurement Method
6) White Plate
7) Intensity
8) Wavelength (nm)

FIG. 59

1) Red Film (Cellophane Material) Direct Measurement Radiance/Luminance
14h 54m 2006(H18)/07/06
2) Conditions of Measurement
3) Measurement Start Time
4) Measurement Angle
5) Measurement Method
6) Direct Measurement
7) Intensity
8) Wavelength (nm)

FIG. 60

1) Cultivation House
2) X-X Arrow View
3) Detail
4) 42 LEDs

FIG. 61

1) Cultivation House
2) 24 LEDs

FIG. 62

1) Cultivation House
2) 24 LEDs

FIG. 63

1) Red Film (1) Transmitted Light Radiance/Luminance
11h 57m 27s 2007(H19)/02/15
2) Conditions of Measurement
3) Measurement Start Time
4) Measurement Angle
5) Measurement Method
6) Sunny Spot Illuminance (lx)
7) Start
8) End
9) White Plate
10) Intensity
11) Wavelength (nm)

FIG. 64

1) Red Film (2) Transmitted Light Radiance/Luminance 12h 01m 59s 2007(H19)/02/15
2) Conditions of Measurement
3) Measurement Start Time
4) Measurement Angle
5) Measurement Method
6) Sunny Spot Illuminance (lx)
7) Start
8) End
9) White Plate
10) Intensity
11) Wavelength (nm)

FIG. 65
Experiment 6 (Dimension Diagram of Cultivation Apparatus for Changing only Ratio of R/B)
Whole Plan Diagram

2) North
3) West
4) East
5) South
6) D Arrow View
7) Western Pot Outer Dimensions
8) Eastern Pot Outer Dimensions
9) (Number) 13 rows, 117 LEDs

FIG. 66
Experiment 6 (Dimension Diagram of Cultivation Apparatus for Changing only Ratio of R/B)
Each Sectional Diagram

2) Eastern Pot
3) B Arrow View (y-y cross section)
4) Western Pot

FIG. 67

1) Cultivation House
2) X-X Arrow View

FIG. 68

1) Cultivation House
2) X-X Arrow View
3) North
4) West
5) East
6) South

FIG. 69

1) Cultivation House

FIG. 71

1) Because there is no vinyl during day, sunlight is introduced in August and September according to seasons.
2) Afternoon
3) Forenoon
4) Since inclination of sun is great in morning and evening, sunlight is introduced. Since vinyl is present in forenoon and afternoon, sunlight is hardly introduced.

FIG. 72

1) Cultivation House
2) X-X Arrow View

FIG. 73

1) Aboveground House
2) X-X Arrow View
3) North
4) West
5) East
6) South

FIG. 74

1) Cultivation House
2) X-X Arrow View

FIG. 75

1) Cultivation House
2) X-X Arrow View

FIG. 76

1) Cultivation House
2) X-X Arrow View

FIG. 77

1) Cultivation House
2) X-X Arrow View

FIG. 78

1) Ratio of Light for Specifying Spectrum Balance

2) 2004(H16)/08/11
3) Formula
4) Time
5) Illuminance
6) Start
7) End
8) Error%
9) Ratio of R/B
10) Ratio of R/FR
11) Wavelength range adopted as criterion for specifying spectrum balance
12) Blue Light, Red Light, Far-Red Light

FIG. 79

1) Ratio of Light for Specifying Spectrum Balance
2) 2004(H16)/08/11
3) Formula
4) Time
5) Illuminance
6) Start
7) End
8) Error%
9) Ratio of R/B
10) Ratio of R/FR
11) Wavelength range adopted as criterion for specifying spectrum balance
12) Blue Light, Red Light, Far-Red Light

FIG. 80

1) Ratio of Light for Specifying Spectrum Balance
2) 2004(H16)/08/12
3) Formula
4) Time
5) Illuminance
6) Start
7) End
8) Error%
9) Ratio of R/B
10) Ratio of R/FR
11) Wavelength range adopted as criterion for specifying spectrum balance
12) Blue Light, Red Light, Far-Red Light

FIG. 81

1) Ratio of Light for Specifying Spectrum Balance
2) 2004(H16)/08/12
3) Formula
4) Time
5) Illuminance
6) Start
7) End
8) Error%
9) Ratio of R/B
10) Ratio of R/FR
11) Wavelength range adopted as criterion for specifying spectrum balance
12) Blue Light, Red Light, Far-Red Light

FIG. 82

1) Ratio of Light for Specifying Spectrum Balance
2) 2004(H16)/08/12
3) Formula
4) Time
5) Illuminance
6) Start
7) End
8) Error%
9) Ratio of R/B
10) Ratio of R/FR
11) Wavelength range adopted as criterion for specifying spectrum balance
12) Blue Light, Red Light, Far-Red Light

FIG. 83

1) Ratio of Light for Specifying Spectrum Balance
2) 2004(H16)/08/12
3) Formula
4) Time
5) Illuminance
6) Start
7) End
8) Error%
9) Ratio of R/B
10) Wavelength range adopted as criterion for specifying spectrum balance
11) Blue Light, Red Light, Far-Red Light

FIG. 84

1) Time
2) Illuminance (lx)
3) Start
4) End
5) Average
6) House E Bare Field Sunny Spot
7) 13h 18m 01s 13h 22m 23s
8) Blue Light, Red Light, Far-Red Light
9) Wavelength range adopted as criterion for specifying spectrum balance

FIG. 85

1) Measurement Place
2) Measurement Time
3) Illuminance (lx)
4) Start
5) End
6) Average
7) Cultivation house A
8) When reflective plate was installed on one side of cultivation houses B, C and D
When reflective plate was installed on both sides of cultivation houses B, C and D
9) Bare field
Difference between bare field and one-side reflective plate Difference between bare field and both-side reflective plate
10) When reflective plate was installed on one side
11) When reflective plate was installed on both sides
12) 11h 25m 48s 11h 28m 03s 11h 31m 01s
13) 11h 40m 38s 11h 43m 43s 11h 47m 12s
14) 11h 55m 00s 11h 58m 20s 12h 02m 10s

15) 12h 10m 56s 12h 13m 43s 12h 17m 24s

FIG. 86

1) List of percentages that are not affected even when sun sets and it becomes dark
2) January, February, March, April, May, June, July, August, September, October, November, December

FIG. 87

1) 2007(H19)/10/18 (Thursday)
2) Measurement place and remarks
3) Measurement time
4) Illuminance (lx)
5) Bare field Inside of house
6) Transmittance
7) Average transmittance
8) Cultivation house [2]
Vinyl is re-covered on 10/17
9) Cultivation house [3]
Vinyl is re-covered today
10) 11h 19m 11h 21m 11h 25m 11h 23m

FIG. 88

1) Measurement of ratio of light
2007(H19)/10/31 (Wednesday)
Conditions of measurement
SR-2 is perpendicular to white plate
Distance from SR-2 to white plate is 431 mm
Measurement angle of SR-2 is 0.2°
Remarks
Cultivation house B and cultivation house 2 were re-covered with vinyl on October 17, and
Cultivation house 3 and cultivation house 4 were re-covered with vinyl on October 18,
SR-2 Power ON 09:38 AM
Calibration 10:32 AM
2) Measurement place
3) Measurement time
4) Bare field illuminance during measurement (lx)
5) Start
6) End
7) Average
8) Cultivation house B
9) Bare field
10) Difference relative to bare field
11) 10h 51m 18s 10h 54m 02s 10h 57m 28s 11h 00m 19s
11h 03m 24s
11h 05m 49s
11h 08m 41s

FIG. 89

1) Sequence of facilities in which ratio of R/B is greatly changed
Sequence of facilities in which transmittance is high
2) House [2]

FIG. 90

1) Measurement angle

2) Distance from object lens hardware tip to measurement target

FIG. 91

1) Table 1 2006(H18)/01/10 (Angle of SR-2 with respect to white plate: 90 degrees)
2) Measurement time
3) Illuminance (lx)
4) Start
5) End
6) Sunny spot in wooden box
Sunny spot of bare field
7) 13h 37m 12s 13h 40m 54s
14h 52m 38s 14h 56m 31s

FIG. 92

1) Table 2 2006(H18)/02/03 (Angle of SR-2 with respect to white plate: 90 degrees)
2) Time
3) Illuminance (lx)
4) Start
5) End
6) Shady spot of sunlight filtering through foliage of genuine trees
Sunny spot of sunlight filtering through foliage of genuine trees
Bare field after tree branch measurement
Sunlight reflected to leaves of artificial flowers
Shade covered with leaves of artificial flowers
Bare field after artificial flower measurement
7) 12h 30m 10s
12h 32m 57s
12h 37m 53s
14h 18m 15s
14h 21m 35s
14h 23m 11s

FIG. 93

1) Table 3 2006(H18)/03/04 (Angle of SR-2 with respect to white plate: 90 degrees) Hole opening rate 8%
2) Time
3) Illuminance (lx)
4) Start
5) End
6) Blue construction paper on both sides
Hole opening rate 8%, and pitch 119 mm
Bare field
Difference relative to bare field
7) 12h 59m 53s
13h 01m 03s
13h 03m 24s
13h 04m 52s
13h 07m 15s
13h 08m 15s
13h 11m 08s
13h 12m 15s
13h 14m 53s
13h 16m 03s
13h 19m 09s
13h 20m 13s

FIG. 94

1) Ratio of R/B
2) Ratio of R/FR
3) Ratio of light of bare field
Ratio of light of sunny spot of sunlight filtering through foliage
Ratio of light of shady spot of sunlight filtering through foliage
4) Criterion
5) Greater than bare field
6) Smaller than bare field

FIG. 95

1) Table 4 2006(H18)/03/07 (Angle of SR-2 with respect to white plate: 90 degrees) Hole opening rate 15%
2) Time
3) Illuminance (lx)
4) Start
5) End
6) Green construction paper on both sides 620 mm long X 590 mm wide
Hole opening rate 15%, and pitch 315 mm
Bare field
Difference relative to bare field
7) 12h 39m 24s
12h 40m 23s
12h 43m 43s
12h 44m 48s
12h 46m 35s
12h 47m 31s
12h 49m 37s
12h 50m 37s

FIG. 96

1) Table 5 2006(H18)/03/07 (Angle of SR-2 with respect to white plate: 90 degrees) Hole opening rate 8%
2) Time
3) Illuminance (lx)
4) Start
5) End
6) Green construction paper on both sides 620 mm long X 590 mm wide
Hole opening rate 8%, and pitch 315 mm
Bare field
Difference relative to bare field
7) 13h 06m 16s
13h 07m 25s
13h 09m 55s
13h 10m 53s
13h 18m 06s
13h 19m 12s
13h 21m 20s
13h 22m 23s

FIG. 97

1) Table 6 2006(H18)/03/04 (Angle of SR-2 with respect to white plate: 90 degrees) Hole opening rate 8%
2) Time
3) Illuminance (lx)
4) Start
5) End

6) Green construction paper on both
Hole opening rate 8%, and pitch 119 mm
Bare field
Difference relative to bare field
7) 12h 38m 19s
12h 39m 21s
12h 41m 51s
12h 42m 53s
12h 46m 01s
12h 47m 07s
12h 48m 56s
12h 50m 01s
12h 52m 56s
12h 54m 06s
12h 56m 24s
12h 57m 26s

FIG. 98

1) Table 7 2006(H18)/03/04 (Angle of SR-2 with respect to white plate: 90 degrees) Hole opening rate 8%
2) Time
3) Illuminance (lx)
4) Start
5) End
6) Installation of green construction paper on both sides
Hole opening rate 8%, and pitch 315 mm
Bare field
Difference relative to bare field
7) 14h 22m 26s
14h 24m 23s
14h 31m 13s
14h 32m 25s

FIG. 99

1) Table 8 2006(H18)/03/07 (Angle of SR-2 with respect to white plate: 90 degrees) Hole opening rate 8%
2) Time
3) Illuminance (lx)
4) Start
5) End
6) Blue construction paper on both sides
620 mm long X 590 mm wide
Hole opening rate 8%, and pitch 315 mm
Bare field
Difference relative to bare field
7) 13h 25m 17s
13h 26m 12s
13h 36m 47s
13h 37m 48s
13h 39m 47s
13h 40m 45s

FIG. 100

1) Table 9 2006(H18)/03/11 (Angle of SR-2 with respect to white plate: 90 degrees) Hole opening rate 8%
2) Time
3) Illuminance (lx)
4) Start

5) End
6) Red construction paper on both sides
620 mm long X 590 mm wide
Hole opening rate 8%, and pitch 315 mm
Bare field
Difference relative to bare field
7) 13h 45m 24s
13h 46m 16s
13h 48m 20s
13h 49m 17s
13h 51m 37s
13h 52m 36s
13h 54m 29s
13h 55m 28s

FIG. 101

1) Hole opening rate: both sides 8%, and rear side 23%
2) Time
3) Illuminance (lx)
4) Start
5) End
6) Red construction paper on both sides
620 mm long X 590 mm wide
Hole opening rate 8%, and pitch 415 mm
Red construction paper on rear side
450 mm long X 410 mm wide
Hole opening rate 23%,
Bare field
Difference relative to bare field
7) 13h 39m 12s
13h 41m 20s

FIG. 102

1) Spectral radiance before transmitting vinyl sheet
2) Wavelength range adopted as criterion for specifying spectrum balance
3) Blue light
Red light
Far-red light

FIG. 103

1) Spectral radiance after transmitting vinyl sheet
2) Wavelength range adopted as criterion for specifying spectrum balance
3) Blue light
Red light
Far-red light

FIG. 104

1) Before transmitting vinyl sheet
2) After transmitting vinyl sheet
3) Difference before and after transmission

FIG. 105

1) Difference relative to bare field

2) Transmittance
3) Thin pink vinyl
4) Bare field
5) Spraying red paint on vinyl

FIG. 106

1) Measurement place
2) Measurement time
3) Illuminance (lx)
4) Start
5) End
6) Average
7) Red film
Bare field
Difference relative to bare field
8) 11h 57m 27s
11h 59m 00s
12h 01m 59s
12h 03m 12s

FIG. 107

1) Measurement place
2) Measurement time
3) Illuminance (lx)
4) Start
5) End
6) Average
7) Cultivation house [7]
(four types of vinyl)
Bare field
Difference relative to bare field
8) 13h 06m 53s
13h 09m 40s

FIG. 108

1) Illuminance measurement inside and outside cultivation house [7] (eggplants)
2) Measurement place
3) Measurement time
4) Illuminance (lx)
5) Transmittance
6) Bare field (lx)
7) Cultivation house [7]
(four types of vinyl)
Bare field
8) 13h 03m

FIG. 109

1) 2006(H18)/08/24
2) Time
3) Illuminance (lx)
4) Start
5) End
6) Average
7) House E

Bare field sunny spot
8) 13h 18m 01s
13h 22m 23s
9) Blue light, red light, far-red light
10) Wavelength range adopted as criterion for specifying spectrum balance

FIG. 110

1) Measurement place
2) Value of R/B ratio increased over that of bare field
3) Value of R/FR ratio decreased over that of bare field
4) House [1]
5) Spot of sunlight transmitting vinyl
Spot where sunlight is directly irradiated (bare field)

FIG. 111

1) Thickness of polyethylene that is material of rain-cover vinyl: 0.05 mm
2) House
3) Equipment
4) Rank of variation in ratio of light
5) Referring to FIG. 28, rain-cover vinyl, red reflective plate, and red net are covered
Referring to FIG. 29, rain-cover vinyl and red reflective plate.
Referring to FIG. 26, rain-cover vinyl, red reflective plate, and blue LED.
Referring to FIG. 27, rain-cover vinyl, red reflective plate, and blue net.
Referring to FIG. 25, rain-cover vinyl.

FIG. 112

1) Measurement place
2) Measurement time
3) Illuminance (lx)
4) Start
5) End
6) Average
7) West side [1] (
8) Bare field
9) Center [2]
10) East side [3]
11) 11h 27m 20s
11h 29m 46s
11h 34m 49s
11h 36m 56s
11h 44m 03s
11h 46m 42s

FIG. 113

1) Measurement place
2) Measurement time
3) Illuminance (lx)
4) Start
5) End
6) Average
7) East side [4]
Bare field
8) 12h 00m 20s
12h 04m 28s

12h 08m 22s
12h 10m 57s

FIG. 114

1) Date
2) Conditions of cultivation
3) Temperature
4) Results
5) In red house, seal house and maintain inside of house under high temperature.
Working sequence (A)
See FIG. 31
6) In red house, during day, open house between 10:00 AM and 3:00 PM, and lower temperature in house
7) In red house, seal house and maintain inside of house under high temperature.
8) In house whose portion painted in red has been painted brown, seal house and maintain inside of house under high temperature.
9) Maximum temperature 55.5°C
See Graph Table 19
10) Taste was not harsh, but was slightly bitter. In case of eggplants, could be eaten raw.
Following star-marked sentence is also used for reference.
Taste was not harsh, but was quite bitter. Was edible but not very good.
* Sponge portion could be eaten raw.
Eggplants could be typically cultivated without dying.
Eggplants died.

FIG. 115

1) Record of maximum temperature in house during day.
2) Month/Date
3) Temperature
4) 7/3, ....., 7/19
5) 7/20, ....., 7/29
6) 7/30, ....., 8/8
7) No measurement is made on Sundays, public holidays, and holidays designated by company.

FIG. 116

1) Records of maximum temperature in house during day.
2) Month/Date
3) Temperature
4) 8/9, ....., 8/23
5) 8/24, ....., 9/4
6) No measurement is made on Sundays, public holidays, and holidays designated by company.

FIG. 117

1) Records of maximum temperature in house during day.
2) Month/Date
Temperature
3) 9/5, ....., 9/10
4) No measurement is made on Sundays, public holidays, and holidays designated by company.

FIG. 118

1) Records of maximum temperature in house during day.
2) Month/Date
Temperature
3) 9/14, ....., 9/19

4) No measurement is made on Sundays, public holidays, and holidays designated by company.

FIG. 119

1) Senryo No. 2
2) Typical cultivation method of Experiment 1
3) Aboveground house of Experiment 2 (east)
4) Reflective plate in typical house of Experiment 1
5) Water
Potassium
β-carotene
Retinol equivalent weight
Sugar content
Chlorogenic acid
6) 4.9%

FIG. 120

1) Mizunotakumi
2) Typical cultivation method of Experiment 1
3) Aboveground house of Experiment 2 (east)
4) Water
Potassium
β-carotene
Retinol equivalent weight
Sugar content
Chlorogenic acid
5) 4.8%

FIG. 121

1) Degree of disease symptoms
2) How much greater is ratio of R/B than that of bare field?
3) How much less is ratio of R/FR than that of bare field?
4) Equipment
5) House [9]
6) Vinyl
7) Red reflective plate
8) Red reflective plate and red net

FIG. 122

1) Condition of growth
2) How much greater is ratio of R/B than that of bare field?
3) How much less is ratio of R/FR than that of bare field?
4) Outfit
5) House [8]
6) Dying and becoming extremely weak
Undergoing discoloration of leaves at lower stem, weakened overall.
Growing normally.
7) Vinyl
8) Red reflective plate
9) Red net

FIG. 123

1) House [7]
2) Temperature

3) Date

FIG. 124

1) House [7]
2) Month/Date
3) Temperature
4) Date

FIG. 125

1) House [7]
2) Month/Date
3) Temperature
4) Date
5) * Highest temperature during day is shown.

FIG. 125

1) House [7]
2) Month/Date
Temperature
3) * Highest temperature during day is shown.

FIG. 127

1) [Table A] Results of survey for taste examination (Table A) House [7] with mark
2) None
3) Faint
Slight
3) Some
4) Quite
5) Strong
6) Unspecified
8) Harsh taste
Bitter taste
Unripe taste
Sweet taste
Refreshing sense
Good taste
9) Very refreshing
10) Delicious
11) Good but bad aftertaste
12) Not refreshing
13) Not good

FIG. 128

1) [Table B] Results of survey for taste examination (Table B) House [7] without mark
2) None
3) Faint
Slight
3) Some
4) Quite
5) Strong
6) Unspecified
8) Harsh taste
Bitter taste

Unripe taste
Sweet taste
Refreshing sense
Good taste
9) Very refreshing
10) Delicious
11) Good but bad aftertaste
12) Not refreshing
13) Not good

FIG. 129

1) [Table A22] House [5]
2) Month/Date
Temperature
3) Date
4) * Highest temperature during day is shown.

FIG. 130

1) [Table C] Results of survey for taste examination (Table C) House [5] with mark
2) None
3) Faint
Slight
3) Some
4) Quite
5) Strong
6) Unspecified
8) Harsh taste
Bitter taste
Unripe taste
Sweet taste
Refreshing sense
Good taste
9) Very refreshing
10) Delicious
11) Good but bad aftertaste
12) Not refreshing
13) Not good

FIG. 131

1) [Table D] Results of survey for taste examination (Table D) House [5] without mark
2) None
3) Faint
Slight
3) Some
4) Quite
5) Strong
6) Unspecified
8) Harsh taste
Bitter taste
Unripe tasteSweet taste
Refreshing sense
Good taste
9) Very refreshing
10) Delicious
11) Good but bad aftertaste

12) Not refreshing
13) Not good

FIG. 132

1) [Table A24] Vinyl covering date 2006(H18)/09/30
2) Measurement time
3) Bare field (lx)
4) No waterdrop (lx)
5) Waterdrop (lx)
6) Influence of clouds
7) Value inside brackets indicates transmittance

FIG. 133

1) [Table A25] Vinyl covering date 2006(H18)/12/20
2) Measurement time
3) Bare field (lx)
4) No waterdrop (lx)
5) Waterdrop (lx)
6) Value inside brackets indicates transmittance

FIG. 134

1) [Table A26] 2007(H19)/01/25 (Thursday) House [5] Transmittance measurement
Re-covered with vinyl on January 23
2) Measurement time
3) Bare field (lx)
4) No waterdrop (lx)
5) Waterdrop (lx)
6) Value inside brackets indicates transmittance

FIG. 135

1) [Table A27] 2007(H19)/01/25 (Thursday) House [7] Transmittance measurement
Re-covered with dual vinyl on January 23
2) Measurement time
3) Bare field (lx)
4) Inside of dual vinyl (lx)
Waterdrop
5) Transmittance
6) Average transmittance

FIG. 136

1) [Table A28] 2007(H19)/01/29 (Monday) Sunny House [7] Transmittance measurement
Re-covered with dual vinyl on January 25
2) Measurement time
3) Bare field (lx)
4) Inside of dual vinyl (lx)
Waterdrop
5) Transmittance
6) Average transmittance

FIG. 137

1) Number of leaves having wormholes

FIG. 138

1) House illuminance measurement
2) 2007(H19)/07/27 (Friday) Sunny
3) Measurement place
4) Measurement time
5) Illuminance (lx)
6) Bare field
Inside of house
7) Transmittance
8) Average transmittance
9) House [2]
10) 10h 21m, ...... 10h 35m

FIG. 139

1) House illuminance measurement
2) 2007(H19)/08/06 (Monday)
3) Measurement place
4) Measurement time
5) Illuminance (lx)
6) Bare field
Inside of house
7) Transmittance
8) Average transmittance
9) House [11]
10) 13h 14m
Waterdrop
... 13h 15m

FIG. 140

1) Tomato : Analysis experiment results
2) Typical cultivation
3) Sealed cultivation
4) Vitamin A
5) β-carotene equivalent weight
α-carotene
β-carotene
Retinol equivalent weight
Citric acid
Malic acid
Sugar content
6) 8.3%

FIG. 141

1) Experiment 5
2) Buds fall without blooming. Some mildew is also present, and black mold is also present. Fruits are deformed, in which color is not glossy and thus rough, and surface is uneven and coarse, and they do not look appetizing. Under this situation, when red light (R) of LED is irradiated, flowers begin to bloom from tenth day after irradiation. Progress of disease symptoms is stopped. All newly fruiting eggplants were glossy and had good shape.
3) Buds fall without blooming. Fruits are deformed, in which color is not glossy and thus rough, and surface is uneven, and they do not look appetizing. Under this situation, when red light (R) of LED was irradiated, irradiated eggplants were weaker than eggplants in a non-irradiated house, became inactive, and color and shape of fruit became bad.
4) When there was no blooming, irradiation of red light (R) of LED was begun. Fruits have glossy purple color and good shape. Despite irradiation, situation where no effects are produced lasted long time. Without normal weakening, breakage, and malformation of fruits, this state continued. Only change was that growth of fruits was remarkably slow, and some fruits underwent breakage.

FIG. 142

1) 2008(H20)/02/15 (Friday) Sunny
2) Measurement place
3) Measurement time
4) Bare field illuminance (lx)
5) Illuminance inside house (lx)
6) Transmittance (%)
7) Average transmittance
8) House G-a
9) 11h 26m, ...... 15h 47m

FIG. 143

1) Cultivation house
2) Radish greens
(including root)
3) Spinach
(including root)
4) Sunny lettuce
(including root)
5) Sunny lettuce
(excluding root)
6) House G-a

FIG. 144

1) Cultivation house
2) Radish greens
3) Spinach
4) Sunny lettuce
5) (including root)
6) House G-a
7) 1.3 times

FIG. 145

1) 2008(H20)/08/25 (Monday) Clear
2) Measurement place
3) Measurement time
4) Bare field illuminance
5) Inside of house
6) Illuminance
Average illuminance
7) Transmittance
8) Cultivation house 2
(red spray house)
Cultivation house 14
(red net house)
Cultivation house 8
(peasant house)
9) 14h 56m
14h 58m
15h 03m
10) about

# EP 2 457 435 A1

FIG 146

1) House
2) Blooming
3) Falling
4) Significant number of flowers

FIG 147

1) House
2) Blooming
3) Falling
4) Significant number of flowers
5) Total yield

## Claims

1. A lighting environment control facility for cultivation of crops, which is used for pesticide-free cultivation, the lighting environment control facility comprising:

   a crop cultivation house which is formed of a light transmissive material and in which crops are cultivated; and
   a lighting control means for adjusting light to be irradiated on the crops in the crop cultivation house, wherein when spectral radiance of a wavelength range of blue light is denoted by $B_0$, spectral radiance of a wavelength range of red light is denoted by $R_0$, and spectral radiance of a wavelength range of far-red light is denoted by $FR_0$ among the light to be irradiated on the crop cultivation house
   the lighting control means adjusts spectral radiance ($B_1$) of a wavelength range of blue light, spectral radiance ($R_1$) of a wavelength range of red light, and spectral radiance ($FR_1$) of a wavelength range of far-red light among the light to be irradiated on the crops in the crop cultivation house so that
   a ratio of $R_1/B_1$ becomes greater than a ratio of $R_0/B_0$, and a value (RBaV) obtained by subtracting the ratio of $R_0/B_0$ from the ratio of $R_1/B_1$ is greater than RBaV when the lighting control means is not installed, and
   a ratio of $R_0/FR_0$ is greater than a ratio of $R_1/FR_1$, and a value (RFRaV) obtained by subtracting the ratio of $R_1/FR_1$ from the ratio of $R_0/FR_0$ is greater than RFRaV when the lighting control means is not installed.

2. The lighting environment control facility according to claim 1, wherein the lighting control means adjusts the light to be irradiated on the crops in the crop cultivation house so that the spectral radiance ($B_1$) of the wavelength range of the blue light has a shorter wavelength than the spectral radiance of the wavelength range of the blue light when the lighting control means is not installed.

3. The lighting environment control facility according to claim 1 or 2, wherein:

   the lighting control means includes a reflective material that is installed in the crop cultivation house, reflects transmitted light transmitted into the crop cultivation house, and irradiates the reflected light on the crops; and
   the reflective material causes:

   the spectral radiance of the wavelength range of the blue light included in the reflected light to become lower than the spectral radiance of the wavelength range of the blue light of the transmitted light transmitted into the crop cultivation house; and
   the spectral radiance of the wavelength range of the far-red light included in the reflected light to become relatively higher than the spectral radiance of the wavelength range of the red light included in the reflected light.

4. The lighting environment control facility according to one of claims 1 to 3, wherein:

   the lighting control means includes a net installed to cover the crops to be cultivated; and
   the net causes:

   the spectral radiance of the wavelength range of the blue light included in the light to be irradiated on the crops to become lower than the spectral radiance of the wavelength range of the blue light when the net is not installed; and
the spectral radiance of the wavelength range of the far-red light included in the light to be irradiated on the crops to become relatively higher than the spectral radiance of the wavelength range of the red light included in the light to be irradiated on the crops.

5. The lighting environment control facility according to one of claims 1 to 4, wherein a light transmissive material of which the crop cultivation house is formed
attenuates the spectral radiance of the wavelength range of the blue light among the light to be irradiated on the crop cultivation house and transmits the resultant light, and
causes the spectral radiance of the wavelength range of the far-red light included in the transmitted light to become relatively higher than the spectral radiance of the wavelength range of the red light included in the transmitted light.

6. The lighting environment control facility according to one of claims 1 to 5, wherein:

the crops in the crop cultivation house are fruit vegetables; and
the lighting control means adjusts light to be irradiated on the fruit vegetables so that the RBaV is equal to or more than 0.319 and the RFRaV is equal to or more than 0.098.

7. The lighting environment control facility according to one of claims 1 to 6, wherein:

the crops in the crop cultivation house are leaf vegetables; and
the lighting control means adjusts light to be irradiated on the leaf vegetables so that the RBaV is equal to or more than 0.367 and the RFRaV is equal to or more than 0.149.

8. The lighting environment control facility according to claim 7, wherein the lighting control means includes a light source that adjusts a lighting environment to be irradiated on the leaf vegetables.

9. The lighting environment control facility according to claim 8, wherein:

the light source is installed to irradiate light from outside to inside the crop cultivation house, and includes a control means that controls operation of the light source; and
the control means includes:

a house irradiation wavelength measuring apparatus that measures the spectral radiance ($B_0$) of the wavelength range of the blue light, the spectral radiance ($R_0$) of the wavelength range of the red light, and the spectral radiance ($FR_0$) of the wavelength range of the far-red light among the light to be irradiated on the crop cultivation house;
a crop irradiation wavelength measuring apparatus that measures the spectral radiance ($B_1$) of the wavelength range of the blue light, the spectral radiance ($R_1$) of the wavelength range of the red light, and the spectral radiance ($FR_1$) of the wavelength range of the far-red light among the light to be irradiated on the crops to be cultivated in the crop cultivation house; and
a controller that controls the operation of the light source so that a value (RBaV) obtained by subtracting a ratio of $R_0/B_0$ from a ratio of $R_1/B_1$, both of which are calculated on the basis of intensities of wavelengths measured by the house irradiation wavelength measuring apparatus and the crop irradiation wavelength measuring apparatus, becomes greater than RBaV when the lighting control means is not installed, and so that a value (RFRaV) obtained by subtracting a ratio of $R_1/FR_1$ from a ratio of $R_0/FR_0$ becomes greater than RFRaV when the lighting control means is not installed.

10. The lighting environment control facility according to claims 1 to 9, wherein:

the crops in the crop cultivation house are fruit vegetables;
the crop cultivation house is equipped therein with a light source that irradiates light to shady spots where the leaves are shaded due to overlapping of the leaves of neighboring crops according to growth of the cultivated crops; and
the light source adjusts a state of light so that, among the light to be irradiated to the shady spots,
the ratio of $R_1/B_1$ is greater than the ratio of $R_0/B_0$, and the value (RBaV) obtained by subtracting the ratio of $R_0/B_0$ from the ratio of $R_1/B_1$ is equal to or more than 0.319, and

the ratio of $R_0/FR_0$ is greater than the ratio of $R_1/FR_1$, and the value (RFRaV) obtained by subtracting the ratio of $R_1/FR_1$ from the ratio of $R_0/FR_0$ is equal to or more than 0.098.

11. The lighting environment control facility according to claim 10, wherein the light source irradiates light of the wavelength range of the red light on the cultivated crops.

12. A pest control method comprising:

a process of measuring spectral radiance of a wavelength range of red light (R), spectral radiance of a wavelength range of blue light (B), and spectral radiance of a wavelength range of far-red light (FR) in a cultivation environment of target crops as the red light (R), the blue light (B), and the far-red light (FR), respectively;
a process of measuring the spectral radiance of the wavelength range of the red light, the spectral radiance of the wavelength range of the blue light, and the spectral radiance of the wavelength range of the far-red light in a bare field as bare-field red light ($R_0$), bare-field blue light ($B_0$), and bare-field far-red light ($FR_0$), respectively;
a process of calculating a difference between a ratio of the bare-field red light ($R_0$) to the bare-field blue light ($B_0$) and a ratio of the red light (R) to the blue light (B) as an R/B difference (RBaV); and
a process of calculating a difference of a ratio of the bare-field red light ($R_0$) to the bare-field far-red light ($FR_0$) from a ratio of the red light (R) to the far-red light (FR) as an R/FR difference (RFRaV),
wherein respective values of the R/B difference and the R/FR difference are calculated using the bare field as a criterion, thereby determining whether or not to control pests of the target crops, and the crops are cultivated on a condition that the R/B difference and the R/FR difference become predetermined values.

13. The pest control method according to claim 12, wherein, in the crop cultivation house having the lighting environment control facility according to claims 1 to 11, the house is set to a predetermined artificial lighting environment by at least one of a process of reflecting sunlight to a reflective material and a process of transmitting the sunlight to a light transmissive material.

14. The pest control method according to claim 13,
wherein the reflective material and the light transmissive material have a spectrum of color in which spectral radiance of visible light other than a color reflecting the red light (R) and a color reflecting the far-red light (FR) is lower than each of the red light (R) and the far-red light (FR).

15. The pest control method according to claim 12, wherein, in the crop cultivation house having the lighting environment control facility according to claims 1 to 11,
the house is set to a predetermined artificial lighting environment by mixing the red light (R) and the far-red light (FR) using artificial lighting and by irradiating the mixed light on the crops, and
for the mixed light that is irradiated, the spectral radiance of the red light (R) is lower than that of the far-red light (FR), and spectral radiance of visible light other than the red light (R) and the far-red light (FR) is lower than each of the red light (R) and the far-red light (FR).

16. The pest control method according to claim 15,
wherein the mixed light is produced by irradiating at least one of lighting that a combination of lightings of the red light (R) and the far-red light (FR) that are mixed in a cultivation space, and mixed lighting having spectra of the red light (R) and the far-red light (FR).

17. The pest control method according to claim 12, wherein, in the crop cultivation house having the lighting environment control facility according to claims 1 to 11,
the crops are cultivated under an artificial lighting environment in which the ratio of the red light (R) to the blue light (B) in the cultivation environment is changed to be at least 0.319 more than the bare field, and in which the ratio of the red light (R) to the far-red light (FR) in the cultivation environment is changed to be at least 0.098 less than in the bare field, and
for vegetables vulnerable to the pests, the ratio of the red light (R) to the blue light (B) in the cultivation environment is changed to be at least 0.367 more than the bare field, and the ratio of the red light (R) to the far-red light (FR) in the cultivation environment is changed to be at least 0.149 less than in the bare field.

18. The pest control method according to claim 15, wherein, in the crop cultivation house having the lighting environment control facility according to claims 1 to 11,
for vegetables vulnerable to the pests, the ratio of the red light (R) to the blue light (B) in the cultivation environment is changed to be at least 0.367 more than the bare field, and the ratio of the red light (R) to the far-red light (FR) in the cultivation environment is changed to be at least 0.149 less than in the bare field, and

vegetables other than the vegetables vulnerable to the pests are cultivated under an artificial lighting environment in which the ratio of the red light (R) to the blue light (B) in the cultivation environment is changed to be at least 0.319 more than the bare field, and in which the ratio of the red light (R) to the far-red light (FR) in the cultivation environment is changed to be at least 0.098 less than in the bare field.

19. The pest control method according to claim 16, wherein, in the crop cultivation house having the lighting environment control facility according to claims 1 to 11,

for vegetables vulnerable to the pests, the ratio of the red light (R) to the blue light (B) in the cultivation environment is changed to be at least 0.367 more than the bare field, and the ratio of the red light (R) to the far-red light (FR) in the cultivation environment is changed to be at least 0.149 less than in the bare field, and

vegetables other than the vegetables vulnerable to the pests are cultivated under an artificial lighting environment in which the ratio of the red light (R) to the blue light (B) in the cultivation environment is changed to be at least 0.319 more than the bare field, and in which the ratio of the red light (R) to the far-red light (FR) in the cultivation environment is changed to be at least 0.098 less than in the bare field.

20. The pest control method according to claim 13, wherein, in the crop cultivation house having the lighting environment control facility according to claims 1 to 11,

for vegetables vulnerable to the pests, the ratio of the red light (R) to the blue light (B) in the cultivation environment is changed to be at least 0.367 more than the bare field, and the ratio of the red light (R) to the far-red light (FR) in the cultivation environment is changed to be at least 0.149 less than in the bare field, and

vegetables other than the vegetables vulnerable to the pests are cultivated under an artificial lighting environment in which the ratio of the red light (R) to the blue light (B) in the cultivation environment is changed to be at least 0.319 more than the bare field, and in which the ratio of the red light (R) to the far-red light (FR) in the cultivation environment is changed to be at least 0.098 less than in the bare field.

21. The pest control method according to claim 14, wherein, in the crop cultivation house having the lighting environment control facility according to claims 1 to 11,

for vegetables vulnerable to the pests, the ratio of the red light (R) to the blue light (B) in the cultivation environment is changed to be at least 0.367 more than in the bare field, and the ratio of the red light (R) to the far-red light (FR) in the cultivation environment is changed to be at least 0.149 less than in the bare field, and

vegetables other than the vegetables vulnerable to the pests are cultivated under an artificial lighting environment in which the ratio of the red light (R) to the blue light (B) in the cultivation environment is changed to be at least 0.319 more than in the bare field, and in which the ratio of the red light (R) to the far-red light (FR) in the cultivation environment is changed to be at least 0.098 less than in the bare field.

22. The pest control method according to claim 12, wherein, in addition to the irradiation based on at least one of the reflection and transmission of the sunlight,

a predetermined artificial lighting environment is set by using irradiation of artificial light in which the red light (R) and the far-red light (FR) are mixed, and

the artificial lighting is constructed so that the spectral radiance of the red light (R) is lower than that of the far-red light (FR), and spectral radiance of visible light other than the red light (R) and the far-red light (FR) is lower than that of each of the red light (R) and the far-red light (FR).

23. The pest control method according to claim 22, wherein, in the crop cultivation house having the lighting environment control facility according to claims 1 to 11,

for vegetables vulnerable to the pests, the ratio of the red light (R) to the blue light (B) in the cultivation environment is changed to be at least 0.367 more than in the bare field, and the ratio of the red light (R) to the far-red light (FR) in the cultivation environment is changed to be at least 0.149 less than in the bare field, and

vegetables other than the vegetables vulnerable to the pests are cultivated under an artificial lighting environment in which the ratio of the red light (R) to the blue light (B) in the cultivation environment is changed to be at least 0.319 more than in the bare field, and in which the ratio of the red light (R) to the far-red light (FR) in the cultivation environment is changed to be at least 0.098 less than in the bare field.

24. The pest control method according to claim 12, wherein, in the crop cultivation house having the lighting environment control facility according to claims 1 to 11,

greater brightness than or equal to an intensity of light at which a rate of photosynthesis of vegetables that are cultivated in the house is saturated is secured by at least one of a transmittance property of a light transmissive material and a reflectance property of a reflective material, and

for the cultivation environment inside the house, the ratio of the red light (R) to the blue light (B) is greater than that of the bare field, and the ratio of the red light (R) to the far-red light (FR) is less than that of the bare field.

25. The pest control method according to claim 24, wherein:

for the cultivation environment inside the crop cultivation house having the lighting environment control facility according to claims 1 to 11, the ratio of the red light (R) to the blue light (B) becomes at least 0.319 more than that of the bare field, and the ratio of the red light (R) to the far-red light (FR) becomes at least 0.098 less than that of the bare field, and

for vegetables vulnerable to the pests, the ratio of the red light (R) to the blue light (B) is changed to be at least 0.367 more than that of the bare field, and the ratio of the red light (R) to the far-red light (FR) is changed to be at least 0.149 less than that of the bare field.

26. The pest control method according to claim 24, wherein:

an artificial lighting for irradiation in cultivating the vegetables is used, and

as irradiated light of the artificial lighting, the red light (R) has a lower spectral radiance than the far-red light (FR), and spectral radiance of visible light other than the red light (R) and the far-red light (FR) is lower than each of the red light (R) and the far-red light (FR).

27. The pest control method according to claim 26, wherein the irradiated light of the artificial lighting is configured so that the spectral radiance of visible light other than the red light (R) and the far-red light (FR) is zero.

28. The pest control method according to claim 24, wherein:

the light transmissive material is a material used to cultivate the vegetables; and

a material which has a property of transmitting visible light of a wavelength range of 380 to 780 nm among sunlight, which holds a color whose spectrum reflects the red light (R) and a color whose spectrum reflects the far-red light (FR), and in which spectral radiance of a color reflecting the visible light other than the color reflecting the red light (R) and the color reflecting the far-red light (FR) is lower than spectral radiances of the color reflecting the red light (R) and the color reflecting the far-red light (FR) is used as the light transmissive material.

29. The pest control method according to claim 28, wherein the light transmissive material is configured so that the spectral radiance of the color reflecting the visible light other than the color reflecting the red light (R) and the color reflecting the far-red light (FR) is zero.

30. The pest control method according to claim 12, wherein the crops are $C_3$ plants rather than shade plants or semi-shade plants, the ratio of the red light (R) to the blue light (B) in the cultivation environment is caused to be greater than in the bare field, and the ratio of the red light (R) to the far-red light (FR) in the cultivation environment is caused to be less than the bare field.

31. The pest control method according to claim 12, wherein, in the crop cultivation house having the lighting environment control facility according to claims 1 to 11, cultivation light of vegetables in the crop cultivation house is adjusted to a spectrum of light of a sunny spot among sunlight filtering through foliage by changing a spectrum balance of sunlight so that the ratio of the red light (R) to the blue light (B) becomes more than that of the bare field, and so that the ratio of the red light (R) to the far-red light (FR) becomes less than that of the bare field by at least one of reflection and transmission of sunlight without using artificial lighting.

32. An intensive cultivation method, which is a method of cultivating crops using the pest control method according to claims 12 to 31, the method including irradiating artificial lighting on shady spots of dense plant vegetation, wherein the light of the artificial lighting is light which has red light (R) and in which spectral radiance of visible light other than the red light (R) is lower than that of the red light (R).

33. The intensive cultivation method according to claim 32, wherein the light of the artificial lighting is configured to have the red light (R) and so that the spectral radiance of the visible light other than the red light (R) is zero.

34. The intensive cultivation method according to claim 32 or 33, wherein:

the artificial lighting is irradiated on some of plant leaves of the shady spots of dense plant vegetation; and
the light of the artificial lighting is configured to have the red light (R) and so that the spectral radiance of the visible light other than the red light (R) is lower than that of the red light (R).

35. A cultivation method, which is a method of cultivating crops using the pest control method according to claims 12 to 31, the method including:

sealing a cultivation house in which eggplants are cultivated among fruit vegetables;
arranging a time zone in the daytime in which carbon dioxide is made insufficient;
arranging a time zone at night in which oxygen is made insufficient; and
setting a day in which a peak temperature is equal to or higher than a temperature at which the eggplants wither when cultivated in the cultivation house to be equal to or more than one day in a week.

[FIG. 1]

【図1】

760mm

760mm

1900mm

[FIG. 2]

【図2】

[FIG. 3]

【図3】

[FIG. 4]

[FIG. 5]

【図5】

[FIG. 6]

[FIG. 7]

図―F

[33]

SR·2

90°

45°

[32]

[FIG. 8]

図—G
SR-2
[33]
90° 45°
[32]

[FIG. 9]

図—H

Jig

SR·2

90°

[32]

[FIG. 10]

【図93】
Species of Eggplant of Each Pot of Aboveground House

—[6]

N

[38]→

[38]→

Senryo No. 2    Kokuyou (naga)

Binan (mizu)    Mizunotakumi

[FIG. 11]

【図 11】

[FIG. 12]

【図 12】

EP 2 457 435 A1

Reflected Light from Red
Construction Paper
Radiance/Luminance
14h 01m 43s 2006(H18)/03/11

| Conditions of Measurement | | | | | | |
|---|---|---|---|---|---|---|
| Measurement Start Time | Measure-ment Angle | Measure-ment Method | Sunny Spot Illuminance (lx) | | | |
| | | | Start | max | min | End |
| 14h 01m 43s | 0.2 | Reflected Light | 55500 | 56000 | 54000 | 54000 |

Wavelength (nm)

[FIG. 13]

【図９０】

SR-2 Power Supply ON 9:40
Calibration 10:39/11:31

[36]

West — Middle — North

L E D

L E D

[1]    [2]    [3]

[6]

[FIG. 14]

【図9 1】

[36]

| | West | | Middle | | North | |
|---|---|---|---|---|---|---|
| L E D | | | | | | [5] |
| L E D | | | | | | [4] |

[6]

4

[FIG. 15]

EP 2 457 435 A1

【図 15】

Sunny Spot in Wooden Box
(in Cultivation House)
Radiance/Luminance
14h 52m 38s 2006(H18)/01/10

| Conditions of Measurement | | | | | | |
|---|---|---|---|---|---|---|
| Measurement Start Time | Measurement Angle | Measurement Method | Sunny Spot Illuminance (lx) | | | |
| | | | Start | max | min | End |
| 14h 52m 38s | 0.2 | White Plate | 39500 | 39500 | 39000 | 39000 |

Intensity vs Wavelength (nm); y-axis 0.000–0.400; x-axis wavelength bins 380~385(nm) through 775~780(nm)

[FIG. 16]

【図 16】

[FIG. 17]

【図 17】

Outside-of-Sheet 1
2004(H16)/05/25 Radiance
Time    12:51

| Conditions of Measurement | | | | | | |
|---|---|---|---|---|---|---|
| Measurement Start Time | Measurement Angle | Measurement Method | Measured Illuminance | | | |
| | | | Start | max | min | End |
| 12：51 | 0.2 | White Plate | 99000 | 99000 | 99000 | 99000 |

Wavelength (nm)

EP 2 457 435 A1

147

[FIG. 18]

【図 18】

[FIG. 19]

[図 19]

Thin Pink Vinyl Direct
Measured Light
Radiance / Luminance
11h 39m 41s 2006(H18)/07/28

| Conditions of Measurement | | | | | | |
|---|---|---|---|---|---|---|
| Measurement Start Time | Measurement Angle | Measurement Method | Sunny Spot Illuminance (lx) | | | |
| | | | Start | max | min | End |
| 11h 39m 41s | 0.2 | Direct Measurement | 101000 | 101000 | 101000 | 101000 |

Wavelength (nm)

[FIG. 20]

[FIG. 21]

【図21】

[FIG. 22]

EP 2 457 435 A1

【図 22】

Reflected Light from
Blue Net
Radiance/Luminance
13h 24m 45s 2006(H18)/03/02

| Conditions of Measurement | | | | | | |
|---|---|---|---|---|---|---|
| Measurement Start Time | Measure- ment Angle | Measure- ment Method | Sunny Spot Illuminance (lx) | | | |
| | | | Start | max | min | End |
| 13h 24m 45s | 0.2 | Reflection of Net | 74000 | 74000 | 74000 | 74000 |

Intensity

0.400
0.350
0.300
0.250
0.200
0.150
0.100
0.050
0.000

380~385(nm) 390~395(nm) 400~405(nm) 410~415(nm) 420~425(nm) 430~435(nm) 440~445(nm) 450~455(nm) 460~465(nm) 470~475(nm) 480~485(nm) 490~495(nm) 500~505(nm) 510~515(nm) 520~525(nm) 530~535(nm) 540~545(nm) 550~555(nm) 560~565(nm) 570~575(nm) 580~585(nm) 590~595(nm) 600~605(nm) 610~615(nm) 620~625(nm) 630~635(nm) 640~645(nm) 650~655(nm) 660~665(nm) 670~675(nm) 680~685(nm) 690~695(nm) 700~705(nm) 710~715(nm) 720~725(nm) 730~735(nm) 740~745(nm) 750~755(nm) 760~765(nm) 770~775(nm)
385~390(nm) 395~400(nm) 405~410(nm) 415~420(nm) 425~430(nm) 435~440(nm) 445~450(nm) 455~460(nm) 465~470(nm) 475~480(nm) 485~490(nm) 495~500(nm) 505~510(nm) 515~520(nm) 525~530(nm) 535~540(nm) 545~550(nm) 555~560(nm) 565~570(nm) 575~580(nm) 585~590(nm) 595~600(nm) 605~610(nm) 615~620(nm) 625~630(nm) 635~640(nm) 645~650(nm) 655~660(nm) 665~670(nm) 675~680(nm) 685~690(nm) 695~700(nm) 705~710(nm) 715~720(nm) 725~730(nm) 735~740(nm) 745~750(nm) 755~760(nm) 765~770(nm) 775~780(nm)

Wavelength (nm)

[FIG. 23]

EP 2 457 435 A1

【図 23】

Oil Paint (Red)
Direct Measurement
Radiance/Luminance
13h 11m 13s 2006(H18)/05/24

| Conditions of Measurement | | | | | | |
|---|---|---|---|---|---|---|
| Measurement Start Time | Measure-ment Angle | Measure-ment Method | Sunny Spot Illuminance (lx) | | | |
| | | | Start | max | min | End |
| 13h 11m 13s | 0.2 | Reflected Light | 85000 | 85000 | 85000 | 85000 |

Intensity vs Wavelength (nm)

[FIG. 24]

【図 24】

[FIG. 25]

【図25】

Cultivation House

X-X Arrow View

[35]

60mm

[34]

1635m

350mm

374mm  374mm  205mm

1500mm

60mm  60mm

374mm  374mm  374mm

1500mm

X  X

[FIG. 26]

【図２６】

Cultivation House    X-X Arrow View

[FIG. 27]

【図27】
Cultivation House

X-X Arrow View

[36]

[36]

[6]

[37]

[34]

[36]

1965mm

X

X

[6]

300mm

[6]

350mm

1250mm

900mm

374mm

374mm

205mm

374mm

60mm
374mm

60mm
374mm

1500mm

1450mm

1500mm

[FIG. 28]

【図28】

Cultivation House

X-X Arrow View

[7]  [37]

[36]  [36]

60mm

[34]

[7]

[36]  [36]

[36]

[7]

X  X

1985mm

1200mm

900mm

1870mm

555mm

350mm

374mm  205mm

374mm  60mm  60mm

374mm  374mm

1500mm

1500mm

[FIG. 29]

【図29】
Cultivation House

X-X Arrow View

[36]

[36]

[37]

60mm

[34]

[36]

1965mm

X

X

900mm

350mm

374mm  374mm  205mm

60mm  60mm

374mm  374mm  374mm

1500mm

1450mm

1500mm

[FIG. 30]

[FIG. 31]

【図31】

X-X Arrow View

Aboveground House
Detail Diagram

North
West — East
South

EP 2 457 435 A1

[FIG. 32]

【図32】

Cultivation House
X-X Arrow View

[35]

60mm

[34]

1535mm

X    X

350mm

374mm    374mm    205mm

1500mm

60mm    60mm

374mm    374mm    374mm

1500mm

162

[FIG. 33]

【図33】
Cultivation House
X-X Arrow View

[36]

[36]

[37]

60mm

[34]

[36]

1535mm

X

[36]

X

900mm

350mm

374mm    374mm    205mm

60mm    60mm

374mm    374mm    374mm

1450mm

1500mm    1500mm

[FIG. 34]

【図34】
Cultivation House

X-X Arrow View

[36] [36]

[37]

60mm

[38]

[34]

X X

60mm [38]

300mm

350mm

1535mm

374mm 374mm 205mm

1500mm

[36] [38]

1430mm

900mm

374mm 60mm 374mm 60mm 374mm

1450mm

1500mm

[FIG. 35]

【図35】
Cultivation House
X-X Arrow View

[36]    [6]    [37]

60mm

[36]    [36]

[34]

1535mm

X    X

300mm    [6]

350mm

374mm    374mm    205mm

1500mm

[36]    [6]

1250mm

900mm

60mm    60mm

374mm    374mm    374mm

1450mm

1500mm

[FIG. 36]

【図 9 2 − 1 】

Relation between illuminance and
time when weather in open field is
clear and very clear (measured value)
FIG. 92-1, Kochi-ken, Japan

2004 (H16)/08/12

23,500 lx

40,000 lx
Light Saturation
Point A

24,000 lx
Necessary Minimum
Illuminance B

Illuminance

110,000
90,000
70,000
50,000
30,000
10,000

Time

12.00  13:00  14:00  15:00  16:00  17:00  18:00  19:00

[FIG. 37]

【図92−2】

Relation between illuminance and
time when weather in open field is
clear and very clear (measured value)
FIG. 92-2, Kochi-ken, Japan

2004 (H16)/10/16

40,000 lx
Light Saturation
Point A

24,000 lx
Necessary Minimum
Illuminance B

11,500 lx

Illuminance

110,000
90,000
70,000
50,000
30,000
10,000

12:00  13:00  14:00  15:00  16:00  17:00  18:00  19:00

Time

[FIG. 38]

【図92-3】

Relation between illuminance and time when weather in open field is clear and very clear (measured value) FIG. 92-3, Kochi-ken, Japan

2004 (H16)/11/09  Open Field

40,000 lx
Light Saturation
Point A

24,000 lx
Necessary Minimum
Illuminance B

[FIG. 39]

【図9 2 − 4 】

Relation between illuminance and
time when weather in open field is
clear and very clear (measured value)
FIG. 92-4, Kochi-ken, Japan

2005 (H17)/01/26Field

40,000 lx
Light Saturation
Point A

11,000 lx

24,000 lx
Necessary Minimum
Illuminance B

Illuminance

Time

[FIG. 40]

【図9 2－5】

Relation between illuminance and
time when weather in open field is
clear and very clear (measured value)
FIG. 92-5, Kochi-ken, Japan

2005 (H17)/03/19

40,000 lx
Light Saturation
Point A

17,000 lx

24,000 lx
Necessary Minimum
Illuminance B

Illuminance

110,000
90,000
70,000
50,000
30,000
10,000

12.00    13:00    14:00    15:00    16:00    17:00    18:00    19:00

Time

[FIG. 41]

【図 9 2 − 6 】

Relation between illuminance and time when weather in open field is clear and very clear (measured value) FIG. 92-6, Kochi-ken, Japan

2005 (H17)/06/06 Open Field

37,000 lx

40,000 lx Light Saturation Point A

24,000 lx Necessary Minimum Illuminance B

Illuminance

Time

171

[FIG. 42]

【図 9 2 - 7 】

Relation between illuminance and
time when weather in open field is
clear and very clear (measured value)
FIG. 92-7, Kochi-ken, Japan

2004 (H16)/05/24

22,500 lx

40,000 lx
Light Saturation
Point A

24,000 lx
Necessary Minimum
Illuminance B

Illuminance

Time

EP 2 457 435 A1

[FIG. 43]

【図４３】
Cultivation House

X-X Arrow View

[36]

[36]

[37]

60mm

[9]

900mm

[36]

1988mm

X

X

[36]

900mm

65mm

350mm

374mm  374mm  248mm

60mm  60mm

374mm  374mm  374mm

1545mm

1450mm

1524mm

173

[FIG. 44]

【図44】
Cultivation House

X-X Arrow View

[35]

60mm

[9]

1965mm

350mm

374mm    374mm    205mm

60mm    60mm

374mm    374mm    374mm

1500mm

1500mm

X    X

[FIG. 45]

【図82】

Cultivation House

X-X Arrow View

[36]

[36]

[19]

[37]

North

East

West

South

[19]

480mm

200mm

400mm

800mm

550mm

[14]

X

X

[36]

[19]

1558mm

900mm

[36]

[19]

1450mm

350mm

65mm

374mm    374mm    205mm

1524mm

374mm    60mm    60mm

374mm    374mm

1545mm

[FIG. 46]

【図46】
Cultivation House
X-X Arrow View

[36]

[36]

60mm

[37]

[9]

[36]

1965mm

900mm

X

X

[36]

350mm

374mm    374mm    205mm

1500mm

60mm    60mm

374mm    374mm    374mm

1450mm

1500mm

[FIG. 47]

【図83】

Cultivation House

X-X Arrow View

[36]

[14]

[15]

[37]

60mm

[14]

X — X

1450mm

1558mm

900mm

[15]

[36]

350mm

374mm    374mm   205mm

1524mm

[15]    [36]

60mm

374mm

1545mm

[15]

200mm

400mm

800mm

550mm

[FIG. 48]

【図48】
Cultivation House
X-X Arrow View [36]

[FIG. 49]

【図85】
Cultivation House
X-X Arrow View

— [36]

[16]
[39]
[16]
[15]
[37]
[39]
[39]
[16]

[14]
[16]
1558mm
900mm
[15]
350mm
[36]
X   X
1450mm
374mm   374mm   205mm
1524mm

65mm
20mm
50mm
50mm
60mm   60mm
374mm   374mm   374mm
1545mm

[15]
200mm
800mm
400mm
550mm

[16]
295mm
40mm
145mm
185mm
300mm
[39]
700mm
(LED)42個
50mm
30mm

[FIG. 50]

【図５０】
Cultivation House
X-X Arrow View

[35]

60mm

[9]

1535mm

X          X

350mm

374mm    374mm    205mm

1500mm

60mm        60mm

374mm    374mm    374mm

1500mm

[FIG. 51]

【図86】
Cultivation House
X-X Arrow View

[36]

[37]

60mm

[7]

North
East
West
South

[14]

[7]

[7]

[36]

[36]

X
70mm

X

550mm

65mm

840mm

350mm

1750mm
1988mm

374mm
248mm

1545mm

560mm

900mm

60mm
60mm
374mm
374mm
374mm
1450mm

1524mm

[FIG. 52]

【図52】
Cultivation House

X-X Arrow View

[36]

[36]

[16]

[37]

60mm

[9]

[16]

[16]

[36]

[36]

[36]

X ··· X

1988mm

900mm

65mm

350mm

374mm    374mm    248mm

60mm

374mm

60mm

374mm

1545mm

374mm

1450mm

1524mm

[16]

145mm

40mm

(LED)

42 個

1000mm

150mm

EP 2 457 435 A1

[FIG. 53]

【図 8 7】
Cultivation House

X-X Arrow View

[36]

[37]

60mm

[7]

North
East
West
South

[9]

[7]

[7]

[36]

[36]

X

X

65mm

1750mm
1988mm

550mm

840mm

350mm

374mm 248mm

1545mm

550mm

900mm

60mm 60mm

374mm 374mm 374mm

1450mm
1524mm

183

[FIG. 54]

【図54】
Cultivation House

X-X Arrow View

[FIG. 55]

【図55】
Cultivation House

X-X Arrow View [36]

[7] [37]
[22]
60mm

[9]

[22]
[7]
1280mm
[36]
[22]
[7]
[36]
[36]
1200mm
1988mm
900mm
1870mm
X
X
555mm
65mm
350mm
374mm 248mm
374mm 60mm 374mm 60mm 374mm
1545mm
1524mm

[22]
145mm
40mm
(LED)
42LEDs
1000mm
(LED)
32LEDs
150mm

[FIG. 56]

【図 5 6】
Cultivation House
        X-X Arrow View

[35]

60mm

[9]

1558mm

X

X

65mm

350mm

374mm    374mm    205mm

1524mm

60mm

374mm

60mm

374mm

374mm

1545mm

[FIG. 57]

【図５７】

Action Spectrum of Photoreaction of Plants

[FIG. 58]

[図94]

EP 2 457 435 A1

Red Film (Cellophane Material) Direct Measurement
Radiance/Luminance
14h 53m 2006(H18)/07/06

| Conditions of Measurement | | |
|---|---|---|
| Measurement Start Time | Measurement Angle | Measurement Method |
| 14h 53m | 0.2 | White Plate |

Intensity

0.060
0.050
0.040
0.030
0.020
0.010
0.000

Wavelength (nm)

380~385(nm) 390~395(nm) 400~405(nm) 410~415(nm) 420~425(nm) 430~435(nm) 440~445(nm) 450~455(nm) 460~465(nm) 470~475(nm) 480~485(nm) 490~495(nm) 500~505(nm) 510~515(nm) 520~525(nm) 530~535(nm) 540~545(nm) 550~555(nm) 560~565(nm) 570~575(nm) 580~585(nm) 590~595(nm) 600~605(nm) 610~615(nm) 620~625(nm) 630~635(nm) 640~645(nm) 650~655(nm) 660~665(nm) 670~675(nm) 680~685(nm) 690~695(nm) 700~705(nm) 710~715(nm) 720~725(nm) 730~735(nm) 740~745(nm) 750~755(nm) 760~765(nm) 770~775(nm)

385~390(nm) 395~400(nm) 405~410(nm) 415~420(nm) 425~430(nm) 435~440(nm) 445~450(nm) 455~460(nm) 465~470(nm) 475~480(nm) 485~490(nm) 495~500(nm) 505~510(nm) 515~520(nm) 525~530(nm) 535~540(nm) 545~550(nm) 555~560(nm) 565~570(nm) 575~580(nm) 585~590(nm) 595~600(nm) 605~610(nm) 615~620(nm) 625~630(nm) 635~640(nm) 645~650(nm) 655~660(nm) 665~670(nm) 675~680(nm) 685~690(nm) 695~700(nm) 705~710(nm) 715~720(nm) 725~730(nm) 735~740(nm) 745~750(nm) 755~760(nm) 765~770(nm) 775~780(nm)

188

[FIG. 59]

【図95】

Red Film (Cellophane Material) Direct Measurement
Radiance/Luminance
14h 54m    2006(H18)/07/06

| Conditions of Measurement | | |
|---|---|---|
| Measurement Start Time | Measurement Angle | Measurement Method |
| 14h 54m | 0.2 | Direct Measurement |

[FIG. 60]

【図60】

Cultivation House

X-X Arrow View

Detail

[36]

[36]

[16]

[37]

60mm

[16]

145m

40mm

42LEDs

1000mm

150mm

[17]

[16]

[36]

[16]

[36]

900mm

900mm

X        X

1988m

65mm

350mm

374mm    374mm    248mm

1545m

60mm    60mm

374m    374mm    374mm

1450mm

1524mm

[FIG. 61]

【図６１】

Cultivation House

[FIG. 62]

【図62】
Cultivation House

[FIG. 63]

【図96】

[FIG. 64]

【図97】

EP 2 457 435 A1

[FIG. 65]

【図65】
Experiment 6 (Dimension Diagram of
Cultivation Apparatus for Changing only Ratio of R/B)
Whole Plan Diagram

North
East
West
South

[28]

[35]

C Arrow View

D Arrow View

(Western Pot
Outer Dimensions)
374mm×374mm×350mm

B Arrow View

[28]

A Arrow View

[35]

(Eastern Pot Outer Dimensions)
374mm×374mm×350mm

480mm

[28]

(Number)13
rows,
117 LEDs

310mm

100mm

195

[FIG. 66]

【図66】
Experiment 6 (Dimension Diagram of Cultivation Apparatus
for Changing only Ratio of R/B)
Each Sectional Diagram

(Eastern Pot)
B Arrow View (y-y cross section)

[28]
100mm
519mm
0mm
350mm
[35]

(Western Pot)
A Arrow View (x-x cross section)

[28]
245mm
470mm
50mm
350mm
[35]

(Western Pot)
D Arrow View (b-b cross section)

[28]
95mm
520mm
0mm
350mm
[35]

(Western Pot)
C Arrow View (a-a cross section)

[28]
230mm
480mm
60mm
350mm
[35]

[FIG. 67]

【図６７】

Cultivation House

X-X Arrow View

[29]

[36]

[36]

[37]

60mm

[14]

[29]

[36]

1535mm

120mm

350mm

X — [36] — X

374mm　374mm　205mm

1500mm

60mm　60mm

374mm　374mm

1450mm

1500mm

900mm

[FIG. 68]

【図79】

Cultivation House

X-X Arrow View

[36]

[15]

[15]
200mm
400mm
800mm
550mm

[37]

60mm

North

West — East

South

[14]

1988mm

[36]

X          X

[15]

350mm

1450mm

900mm

374mm    374mm    248mm

1545mm

[15]

[36]

420mm

60mm

374mm

1524mm

[FIG. 69]

【図69】

Cultivation House

C

[23]

1500mm

355mm

510mm

1500mm

[37]

B

A

A,C

[23]

B

[23]

1825mm

350mm

350mm

220mm

635mm

[37]

65mm

65mm

374mm

[37]

199

[FIG. 70]

【図８８】

[FIG. 71]

【図89】

Afternoon

Forenoon

Because there is no vinyl during day, sunlight is introduced in August and September according to seasons.

Since inclination of sun is great in morning and evening, sunlight is introduced.
Since vinyl is present in forenoon and afternoon, sunlight is hardly introduced.

[FIG. 72]

【図72】
Cultivation House
X-X Arrow View

[FIG. 73]

EP 2 457 435 A1

【図73】

Aboveground House        X-X Arrow View

North
West — East
South

[FIG. 74]

【図78】
Cultivation House
X-X Arrow View

[36]→ ←[36]

60mm

[37]

[31]

1988mm

X [36]→ [36]→ X

65mm

350mm

374mm 374mm 248mm

1545mm

1450mm

900mm

[36]

374mm 60mm 60mm
374mm 374mm

1524mm

[FIG. 75]

【図75】
Cultivation House

X-X Arrow View

[36]

[36]

[37]

60mm

[9]

[36]

1450mm

900mm

1535mm

X    [36]        [36]    X

350mm

374mm    374mm    205mm

1500mm

374mm    60mm    60mm
         374mm    374mm

1500mm

[FIG. 76]

【図 7 6 】
Cultivation House

X-X Arrow View

[36]
[36]
[37]
[18]
[18]
36mm
100mm
50mm
100mm
1198mm
60mm

[9]
1535mm
[36]
[18]
[36]
[36]
X
X
[18]
[36]
350mm
374mm
374mm
205mm
1500mm
900mm
1450mm
60mm
60mm
374mm
374mm
374mm
1500mm

[FIG. 77]

【図77】

Cultivation House

X-X Arrow View

[36]
[16]
[37]
[16]
[36]
[20]
[21]
[20]

60mm

[9]

[16]
[20]    [20]
[36]    [36]
X       X

[21] [20] [36] [16]

900mm
1545mm

65mm
350mm

374mm  374mm  248mm
1545mm

60mm  60mm
374mm  374mm  374mm
1450mm
1524mm

[16]
30mm
63mm  25mm
42 LEDs
500mm
150mm

[20]
50mm
115mm  25mm
42 LEDs
32 LEDs
500mm
150mm

[21]
89 LEDs  474mm
100mm
312mm
60mm  200mm

[FIG. 78]

〔表33〕

Ratio of Light for Specifying Spectrum Balance　　　　2004(H16)/08/11

| Formula | | | Time | Illuminance | | | | |
|---|---|---|---|---|---|---|---|---|
| | | | | Start | MAX | MIN | End | Error% |
| Ratio of R/B = | $\dfrac{4.4067974}{2.7592858}$ | ≒ 1.597079 | 13:08 | 86000 | 86000 | 85000 | 85000 | 1.16% |
| Ratio of R/B = | $\dfrac{4.4310155}{2.7844212}$ | ≒ 1.5913596 | 13:15 | 85000 | 85000 | 85000 | 85000 | 0% |
| Ratio of R/B = | $\dfrac{4.2609416}{2.6493951}$ | ≒ 1.6082696 | 13:35 | 79000 | 79000 | 78000 | 78000 | 1.27% |
| Ratio of R/B = | $\dfrac{4.3068546}{2.6866992}$ | ≒ 1.6030282 | 13:43 | 78000 | 78000 | 78000 | 78000 | 0% |
| Ratio of R/B = | $\dfrac{3.957512}{2.4006054}$ | ≒ 1.6485475 | 14:04 | 69000 | 70000 | 69000 | 70000 | 1.43% |
| Ratio of R/B = | $\dfrac{3.8065557}{2.2893224}$ | ≒ 1.6627434 | 14:12 | 66000 | 67000 | 66000 | 67000 | 1.49% |

| Ratio of R/FR = | $\dfrac{4.4067974}{2.7970871}$ | ≒ 1.5754952 | 13:08 |
|---|---|---|---|
| Ratio of R/FR = | $\dfrac{4.4310155}{2.828726}$ | ≒ 1.566435 | 13:15 |
| Ratio of R/FR = | $\dfrac{4.2609416}{2.7130281}$ | ≒ 1.5705483 | 13:35 |
| Ratio of R/FR = | $\dfrac{4.3068546}{2.7234175}$ | ≒ 1.5814155 | 13:43 |
| Ratio of R/FR = | $\dfrac{3.957512}{2.5110654}$ | ≒ 1.576029 | 14:04 |
| Ratio of R/FR = | $\dfrac{3.8065557}{2.4151952}$ | ≒ 1.5760861 | 14:12 |

| | Wavelength range adopted as criterion for specifying spectrum balance |
|---|---|
| Blue Light | (420~470nm) |
| Red Light | (615~680nm) |
| Far-Red Light | (700~750nm) |

[FIG. 79]

〔表34〕

| Ratio of Light for Specifying Spectrum Balance | | | 2004(H16)/08/11 | | | | |
|---|---|---|---|---|---|---|---|
| Formula | | Time | Illuminance | | | | |
| | | | Start | MAX | MIN | End | Error% |
| Ratio of R/B $= \dfrac{3.4366493}{2.0169862}$ | $\doteqdot$ 1.7038537 | 14:34 | 59000 | 60000 | 59000 | 60000 | 1.67% |
| Ratio of R/B $= \dfrac{3.388694}{1.9896456}$ | $\doteqdot$ 1.7031646 | 14:42 | 58000 | 59000 | 58000 | 59000 | 1.69% |
| Ratio of R/B $= \dfrac{3.0642401}{1.7890346}$ | $\doteqdot$ 1.7127897 | 15:04 | 53000 | 53000 | 53000 | 53000 | 0% |
| Ratio of R/B $= \dfrac{3.0928449}{1.7919881}$ | $\doteqdot$ 1.7259294 | 15:11 | 53000 | 53000 | 52000 | 52000 | 1.89% |
| Ratio of R/B $= \dfrac{2.5777512}{1.453888}$ | $\doteqdot$ 1.7730053 | 15:34 | 44000 | 44000 | 44000 | 44000 | 0% |
| Ratio of R/B $= \dfrac{2.54839}{1.398834}$ | $\doteqdot$ 1.8217959 | 15:40 | 43000 | 44000 | 43000 | 44000 | 2.27% |
| | | | | | | | |
| Ratio of R/FR $= \dfrac{3.4366493}{2.1886802}$ | $\doteqdot$ 1.5701925 | 14:34 | | | | | |
| Ratio of R/FR $= \dfrac{3.388694}{2.1734907}$ | $\doteqdot$ 1.5591021 | 14:42 | | | | | |
| Ratio of R/FR $= \dfrac{3.0642401}{1.9466577}$ | $\doteqdot$ 1.5741032 | 15:04 | | | | | Wavelength range adopted as criterion for specifying spectrum balance |
| Ratio of R/FR $= \dfrac{3.0928449}{1.9528797}$ | $\doteqdot$ 1.5837355 | 15:11 | | | Blue Light | (420~470nm) | |
| Ratio of R/FR $= \dfrac{2.5777512}{1.6386427}$ | $\doteqdot$ 1.5731014 | 15:34 | | | Red Light | (615~680nm) | |
| Ratio of R/FR $= \dfrac{2.54839}{1.6341613}$ | $\doteqdot$ 1.5594483 | 15:40 | | | Far-Red Light | (700~750nm) | |

[FIG. 80]

〔表３５〕

| Ratio of Light for Specifying Spectrum Balance | | | | | 2004 (H16)/08/12 | | | |
|---|---|---|---|---|---|---|---|---|
| | | | | | | | | |
| Formula | | | Time | | Illuminance | | | |
| | | | | Start | MAX | MIN | End | Error% |
| Ratio of R/B = $\dfrac{4.7197295}{3.0228307}$ | ≒ | 1.5613608 | 13:04 | 98000 | 98000 | 98000 | 98000 | 0% |
| Ratio of R/B = $\dfrac{4.6957399}{3.0119326}$ | ≒ | 1.5590455 | 13:12 | 96000 | 96000 | 96000 | 96000 | 0% |
| Ratio of R/B = $\dfrac{4.6161042}{2.941436}$ | ≒ | 1.5693369 | 13:34 | 92000 | 92000 | 91000 | 91000 | 1.09% |
| Ratio of R/B = $\dfrac{4.5631152}{2.9032011}$ | ≒ | 1.5717531 | 13:40 | 90000 | 90000 | 90000 | 90000 | 0% |
| Ratio of R/B = $\dfrac{4.3192633}{2.7291989}$ | ≒ | 1.5826121 | 14:04 | 83000 | 83000 | 83000 | 83000 | 0% |
| Ratio of R/B = $\dfrac{4.2613396}{2.6617605}$ | ≒ | 1.6009478 | 14:10 | 81000 | 81000 | 81000 | 81000 | 0% |
| | | | | | | | | |
| Ratio of R/FR = $\dfrac{4.7197295}{3.0301844}$ | ≒ | 1.5575717 | 13:04 | | | | | |
| Ratio of R/FR = $\dfrac{4.6957399}{3.022126}$ | ≒ | 1.5537869 | 13:12 | | | | | |
| Ratio of R/FR = $\dfrac{4.6161042}{2.992289}$ | ≒ | 1.5426666 | 13:34 | | | | | Wavelength range adopted as criterion for specifying spectrum balance |
| Ratio of R/FR = $\dfrac{4.5631152}{2.9297555}$ | ≒ | 1.5575072 | 13:40 | | | | Blue Light | (420~470nm) |
| Ratio of R/FR = $\dfrac{4.3192633}{2.7867737}$ | ≒ | 1.5499153 | 14:04 | | | | Red Light | (615~680nm) |
| Ratio of R/FR = $\dfrac{4.2613396}{2.746014}$ | ≒ | 1.5518273 | 14:10 | | | | Far-Red Light | (700~750nm) |

EP 2 457 435 A1

[FIG. 81]

〔表36〕

| Ratio of Light for Specifying Spectrum Balance | | | | 2004(H16)/08/12 | | | | |
|---|---|---|---|---|---|---|---|---|
| | | | | | | | | |
| Formula | | | | Time | Illuminance | | | |
| | | | | | Start | MAX | MIN | End | Error% |

| Formula | | | | Time | Start | MAX | MIN | End | Error% |
|---|---|---|---|---|---|---|---|---|---|
| Ratio of R/B = | $\frac{3.9797892}{2.4457689}$ | ≒ | 1.6272139 | 14:34 | 74000 | 74000 | 74000 | 74000 | 0% |
| Ratio of R/B = | $\frac{3.9156117}{2.3869134}$ | ≒ | 1.6404498 | 14:41 | 72000 | 72000 | 72000 | 72000 | 0% |
| Ratio of R/B = | $\frac{3.53036}{2.1390539}$ | ≒ | 1.6504306 | 15:04 | 64000 | 64000 | 64000 | 64000 | 0% |
| Ratio of R/B = | $\frac{3.442496}{2.0535476}$ | ≒ | 1.6763653 | 15:10 | 62000 | 62000 | 62000 | 62000 | 0% |
| Ratio of R/B = | $\frac{3.0836858}{1.7886202}$ | ≒ | 1.7240585 | 15:34 | 55000 | 55000 | 54000 | 54000 | 1.82% |
| Ratio of R/B = | $\frac{2.9658339}{1.697309}$ | ≒ | 1.7473742 | 15:40 | 52000 | 52000 | 52000 | 52000 | 0% |
| | | | | | | | | | |
| Ratio of R/FR = | $\frac{3.9797892}{2.555894}$ | ≒ | 1.5571026 | 14:34 | | | | | |
| Ratio of R/FR = | $\frac{3.9156117}{2.5018146}$ | ≒ | 1.5651087 | 14:41 | | | | | |
| Ratio of R/FR = | $\frac{3.53036}{2.2796543}$ | ≒ | 1.5486383 | 15:04 | | | | Wavelength range adopted as criterion for specifying spectrum balance | |
| Ratio of R/FR = | $\frac{3.442496}{2.2098098}$ | ≒ | 1.5578246 | 15:10 | | | | Blue Light | (420～470nm) |
| Ratio of R/FR = | $\frac{3.0836858}{1.9832001}$ | ≒ | 1.554904 | 15:34 | | | | Red Light | (615～680nm) |
| Ratio of R/FR = | $\frac{2.9658339}{1.9002919}$ | ≒ | 1.5607254 | 15:40 | | | | Far-Red Light | (700～750nm) |

211

[FIG. 82]

〔表37〕

| Ratio of Light for Specifying Spectrum Balance | | | | 2004(H16)/08/12 | | | | |
|---|---|---|---|---|---|---|---|---|
| | | | | | | | | |
| Formula | | | Time | Illuminance | | | | |
| | | | | Start | MAX | MIN | End | Error% |
| Ratio of R/B = $\frac{2.4477395}{1.3586932}$ | ≒ | 1.8015395 | 16:04 | 43000 | 43000 | 43000 | 43000 | 0% |
| Ratio of R/B = $\frac{2.3457917}{1.2876043}$ | ≒ | 1.8218266 | 16:10 | 41000 | 41000 | 41000 | 41000 | 0% |
| Ratio of R/B = $\frac{1.8159013}{0.9414908}$ | ≒ | 1.9287509 | 16:34 | 32000 | 32000 | 32000 | 32000 | 0% |
| Ratio of R/B = $\frac{1.6950033}{0.8705887}$ | ≒ | 1.9469622 | 16:40 | 30000 | 30000 | 30000 | 30000 | 0% |
| Ratio of R/B = $\frac{1.156417}{0.5613819}$ | ≒ | 2.059947 | 17:04 | 20000 | 20000 | 20000 | 20000 | 0% |
| Ratio of R/B = $\frac{1.0401527}{0.4936108}$ | ≒ | 2.1072324 | 17:11 | 18000 | 18000 | 18000 | 18000 | 0% |
| | | | | | | | | |
| Ratio of R/FR = $\frac{2.4477395}{1.5741433}$ | ≒ | 1.5549661 | 16:04 | | | | | |
| Ratio of R/FR = $\frac{2.3457917}{1.5016861}$ | ≒ | 1.5621052 | 16:10 | | | | | |
| Ratio of R/FR = $\frac{1.8159013}{1.1648495}$ | ≒ | 1.558915 | 16:34 | | | | Wavelength range adopted as criterion for specifying spectrum balance | |
| Ratio of R/FR = $\frac{1.6950033}{1.0886536}$ | ≒ | 1.5569721 | 16:40 | | | | Blue Light | (420～470nm) |
| Ratio of R/FR = $\frac{1.156417}{0.7465891}$ | ≒ | 1.5489337 | 17:04 | | | | Red Light | (615～680nm) |
| Ratio of R/FR = $\frac{1.0401527}{0.6672405}$ | ≒ | 1.5588872 | 17:11 | | | | Far-Red Light | (700～750nm) |

[FIG. 83]

〔表 3 8〕

Ratio of Light for Specifying Spectrum Balance      2004(H16)/08/12

| Formula | | Time | Illuminance | | | | |
|---|---|---|---|---|---|---|---|
| | | | Start | MAX | MIN | End | Error% |
| $\text{Ratio of R/B} = \dfrac{0.5999992}{0.2703899}$ | $\fallingdotseq$ 2.2190149 | 17:36 | 9000 | 9000 | 9000 | 9000 | 0% |
| $\text{Ratio of R/B} = \dfrac{0.4855217}{0.2218351}$ | $\fallingdotseq$ 2.1886605 | 17:43 | 8000 | 8000 | 8000 | 8000 | 0% |
| $\text{Ratio of R/B} = \dfrac{0.4177516}{0.1859945}$ | $\fallingdotseq$ 2.2460425 | 17:50 | 7000 | 7000 | 7000 | 7000 | 0% |

| | | |
|---|---|---|
| $\text{Ratio of R/B} = \dfrac{0.5999992}{0.3908934}$ | $\fallingdotseq$ 1.5349436 | 17:36 |
| $\text{Ratio of R/B} = \dfrac{0.4855217}{0.3190807}$ | $\fallingdotseq$ 1.5216269 | 17:43 |
| $\text{Ratio of R/B} = \dfrac{0.4177516}{0.275105}$ | $\fallingdotseq$ 1.518517 | 17:50 |

| | Wavelength range adopted as criterion for specifying spectrum balance |
|---|---|
| Blue Light | (420~470nm) |
| Red Light | (615~680nm) |
| Far-Red Light | (700~750nm) |

EP 2 457 435 A1

[FIG. 84]

〔表A01〕

| | R/B | R/FR | Time | Illuminance | | | | |
|---|---|---|---|---|---|---|---|---|
| | | | | Start | MAX | MIN | End | Average |
| House E | 1.382 | 1.719 | 13h 18m 01s | 95900 | 96400 | 95900 | 96400 | 96150 |
| Bare Field Sunny Spot | 1.279 | 1.754 | 13h 22m 23s | 94700 | 95100 | 94700 | 94800 | 94825 |
| | Blue Light | Red Light | Far-Red Light | | | | | |
| | | | | | | | | |
| Wavelength range adopted as criterion for specifying spectrum balance | (420~470nm) | (615~680nm) | (700~750nm) | | | | | |

214

[FIG. 85]

〔表２３〕

| Measurement Place | Measurement Time | Illuminance | | | | | R／B | R／FR |
|---|---|---|---|---|---|---|---|---|
| | | Start | MAX | MIN | End | Average | | |
| Cultivation house A (When reflective plate was installed on one side of cultivation houses B, C and D) | 11h 25m 48s | 88500 | 88500 | 88500 | 88500 | 88500 | 1.409 | 1.624 |
| Cultivation house A (When reflective plate was installed on both sides of cultivation houses B, C and D) | 11h 28m 03s | 88500 | 88500 | 88500 | 88500 | 88500 | 1.455 | 1.618 |
| Bare field | 11h 31m 01s | 88500 | 88500 | 88000 | 88500 | 88375 | 1.27 | 1.682 |
| Difference between bare field and one-side reflective plate | | | | | | | 0.139 | -0.058 |
| Difference between bare field and both-side reflective plate | | | | | | | 0.185 | -0.064 |
| Cultivation house B (When reflective plate was installed on one side) | 11h 40m 38s | 90000 | 90000 | 90000 | 90000 | 90000 | 1.46 | 1.612 |
| Cultivation house B (When reflective plate was installed on both sides) | 11h 43m 43s | 90000 | 90500 | 90000 | 90500 | 90250 | 1.528 | 1.634 |
| Bare field | 11h 47m 12s | 90500 | 90500 | 90500 | 90500 | 90500 | 1.265 | 1.679 |
| Difference between bare field and one-side reflective plate | | | | | | | 0.195 | -0.067 |
| Difference between bare field and both-side reflective plate | | | | | | | 0.263 | -0.045 |
| Cultivation house C (When reflective plate was installed on one side) | 11h 55m 00s | 90500 | 90500 | 90000 | 90000 | 90250 | 1.445 | 1.627 |
| Cultivation house C (When reflective plate was installed on both sides) | 11h 58m 20s | 90000 | 90000 | 90000 | 90000 | 90000 | 1.518 | 1.62 |
| Bare field | 12h 02m 10s | 91000 | 91000 | 91000 | 91000 | 91000 | 1.27 | 1.68 |
| Difference between bare field and one-side reflective plate | | | | | | | 0.175 | -0.053 |
| Difference between bare field and both-side reflective plate | | | | | | | 0.248 | -0.06 |
| Cultivation house D (When reflective plate was installed on both sides) | 12h 10m 56s | 90500 | 90500 | 90000 | 90000 | 90250 | 1.457 | 1.618 |
| Cultivation house D (When reflective plate was installed on both sides) | 12h 13m 43s | 89500 | 90000 | 89500 | 89500 | 89625 | 1.526 | 1.617 |
| Bare field | 12h 17m 24s | 89000 | 89000 | 89000 | 89000 | 89000 | 1.275 | 1.697 |
| Difference between bare field and one-side reflective plate | | | | | | | 0.182 | -0.079 |
| Difference between bare field and both-side reflective plate | | | | | | | 0.251 | -0.08 |

[FIG. 86]

［表Ａ０２］
List of percentages that are not affected
even when sun sets and it becomes dark

|  | 1Jan. | 2Feb. | 3Mar. | 4Apr. | 5May | 6Jun. | 7Jul. | 8Aug. | 9Sep. | 10Oct. | 11Nov. | 12Dec. |
|---|---|---|---|---|---|---|---|---|---|---|---|---|
| % | 22 | — | 30 | — | 36 | 50 | — | 37 | — | 22 | 0 | — |

[FIG. 87]

[表A03]
2007(H19)/10/18 (Thursday)

| Measurement place and remarks | Measurement time | Illuminance (lx) | | Transmittance | Average transmittance |
|---|---|---|---|---|---|
| | | Bare field | Inside of house | | |
| Cultivation house [2] (Vinyl is re-covered on 10/17) | 11h 19m | 69000 | 46400 | 67.20% | 69.20% |
| | | | 47800 | 69.30% | |
| | | | 49100 | 71.20% | |
| Cultivation house [3] (Vinyl is re-covered today) | 11h 21m | 69300 | 54500 | 78.60% | 80.10% |
| | | | 56500 | 81.50% | |
| | | | 55600 | 80.20% | |
| Cultivation house [4] (Vinyl is re-covered today) | 11h 25m | 69900 | 59300 | 84.80% | 83.00% |
| | | | 58000 | 83.00% | |
| | | | 56800 | 81.30% | |
| Cultivation house [B] (Vinyl is re-covered on 10/17) | 11h 23m | 69500 | 52000 | 74.80% | 76.70% |
| | | | 54400 | 78.30% | |
| | | | 53500 | 77.00% | |

[FIG. 88]

〔表A04〕

○ Measurement of ratio of light

2007(H19)/10/31 (Wednesday)

Conditions of measurement 
{ SR-2 is perpendicular to white plate
Distance from SR-2 to white plate is 431 mm
Measurement angle of SR-2 is 0.2° }

Remarks
[ Cultivation house B and cultivation house 2 were re-covered with vinyl on October 17, and
Cultivation house 3 and cultivation house 4 were re-covered with vinyl on October 18 ]

[ SR-2 Power ON   09:38 AM
Calibration        10:32 AM ]

| Measurement place | R/B | R/FR | Measurement time | Bare field illuminance during measurement (lx) | | | | |
|---|---|---|---|---|---|---|---|---|
| | | | | Start | MAX | MIN | End | Average |
| Cultivation house B | 1.636 | 1.476 | 10h 51m 18s | 66500 | 66500 | 66500 | 66500 | 66500 |
| Bare field | 1.325 | 1.536 | 10h 54m 02s | 67500 | 67500 | 67500 | 67500 | 67500 |
| Difference relative to bare field | 0.311 | -0.06 | | | | | | |
| Cultivation house 4 | 1.599 | 1.487 | 10h 57m 28s | 68000 | 68000 | 68000 | 68000 | 68000 |
| Bare field | 1.328 | 1.552 | 11h 00m 19s | 68000 | 68000 | 68000 | 68000 | 68000 |
| Difference relative to bare field | 0.271 | -0.066 | | | | | | |
| Cultivation house 2 | 1.747 | 1.453 | 11h 03m 24s | 68000 | 68000 | 68000 | 68000 | 68000 |
| Bare field | 1.327 | 1.551 | 11h 05m 49s | 68000 | 68000 | 68000 | 68000 | 68000 |
| Difference relative to bare field | 0.42 | -0.098 | | | | | | |
| Cultivation house 3 | 1.636 | 1.483 | 11h 08m 41s | 68500 | 68500 | 68500 | 68500 | 68500 |
| Difference relative to bare field | 0.309 | -0.068 | | | | | | |

[FIG. 89]

| 〔表Ａ０５〕 | | | | |
|---|---|---|---|---|
| | 1 | 2 | 3 | 4 |
| Sequence of facilities in which ratio of R/B is greatly changed | House [2] | House B | House [3] | House [4] |
| Sequence of facilities in which transmittance is high | House [4] | House [3] | House B | House [2] |

[FIG. 90]

〔表Ａ０６〕

| Measurement angle | Distance from object lens hardware tip to measurement target | | | | | | | | |
|---|---|---|---|---|---|---|---|---|---|
| | 305 | 350 | 400 | 500 | 600 | 800 | 1000 | 2000 | 5000 |
| 2° | 10 | 11.7 | 13.5 | 17 | 20.6 | 27.7 | 34.8 | 70.5 | 181 |
| 0.2° | 1 | 1.17 | 1.35 | 1.7 | 2.06 | 2.77 | 3.48 | 7.05 | 18.1 |

[FIG. 91]

〔表 1〕

Table 1   2006(H18)/01/10 (Angle of SR-2 with respect to white plate: 90 degrees)

| | R／B | R／FR | Measurement time | Illuminance (lx) | | | |
|---|---|---|---|---|---|---|---|
| | | | | Start | M A X | M I N | End |
| Sunny spot in wooden box | 1.752 | 1.390 | 13h 37m 12s | 54000 | 54000 | 53500 | 53500 |
| Sunny spot of bare field | 1.534 | 1.446 | 13h 40m 54s | 53500 | 53500 | 53500 | 53500 |
| Sunny spot in wooden box | 2.027 | 1.359 | 14h 52m 38s | 39500 | 39500 | 39000 | 39000 |
| Sunny spot of bare field | 1.770 | 1.416 | 14h 56m 31s | 37000 | 37500 | 37000 | 37000 |

[FIG. 92]

.

〔表2〕

Table 2   2006(H18)/02/03 (Angle of SR-2 with respect to white plate: 90 degrees)

| | R／B | R／FR | time | Illuminance (lx) | | | |
|---|---|---|---|---|---|---|---|
| | | | | Start | MAX | MIN | End |
| Shady spot of sunlight filtering through foliage of genuine trees | 1.236 | 0.714 | 12h 30m 10s | 58500 | 58500 | 58000 | 58000 |
| Sunny spot of sunlight filtering through foliage of genuine trees | 1.821 | 1.313 | 12h 32m 57s | 58000 | 59000 | 58000 | 58500 |
| Bare field after tree branch measurement | 1.544 | 1.471 | 12h 37m 53s | 62000 | 62000 | 62000 | 62000 |
| Sunlight reflected to leaves of artificial flowers | 1.853 | 1.449 | 14h 18m 15s | 45000 | 45500 | 45000 | 45500 |
| Shade covered with leaves of artificial flowers | 1.306 | 1.297 | 14h 21m 35s | 44000 | 44000 | 43500 | 43500 |
| Bare field after artificial flower measurement | 1.590 | 1.471 | 14h 23m 11s | 50000 | 50000 | 50000 | 50000 |

[FIG. 93]

[表3]

Table 3 2006(H18)/03/04 (Angle of SR-2 with respect to white plate: 90 degrees Hole opening rate 8%

| | R／B | R／FR | Time | Illuminance (lx) | | | |
|---|---|---|---|---|---|---|---|
| | | | | Start | MAX | MIN | End |
| Blue construction paper on both sides Hole opening rate 5%, and pitch 110 mm | 1.360 | 1.461 | 12h 59m 53s | 73500 | 73500 | 73500 | 73500 |
| Bare field | 1.349 | 1.490 | 13h 01m 03s | 73500 | 73500 | 73000 | 73000 |
| Difference relative to bare field | 0.011 | -0.029 | | | | | |
| Blue construction paper on both sides Hole opening rate 5%, and pitch 215 mm | 1.364 | 1.497 | 13h 03m 24s | 72500 | 72500 | 72500 | 72500 |
| Bare field | 1.357 | 1.510 | 13h 04m 52s | 72000 | 72500 | 72000 | 72500 |
| Difference relative to bare field | 0.007 | -0.013 | | | | | |
| Blue construction paper on both sides Hole opening rate 5%, and pitch 315 mm | 1.358 | 1.492 | 13h 07m 15s | 72000 | 72000 | 72000 | 72000 |
| Bare field | 1.364 | 1.496 | 13h 08m 15s | 72000 | 72000 | 72000 | 72000 |
| Difference relative to bare field | -0.006 | -0.004 | | | | | |
| Blue construction paper on both sides Hole opening rate 8%, and pitch 415 mm | 1.366 | 1.490 | 13h 11m 08s | 71000 | 71000 | 71000 | 71000 |
| Bare field | 1.366 | 1.498 | 13h 12m 15s | 71500 | 71500 | 71500 | 71500 |
| Difference relative to bare field | 0.000 | -0.008 | | | | | |
| Blue construction paper on both sides Hole opening rate 5%, and pitch 515 mm | 1.355 | 1.499 | 13h 14m 53s | 69000 | 69500 | 69000 | 69500 |
| Bare field | 1.357 | 1.503 | 13h 16m 03s | 69500 | 69500 | 69500 | 69500 |
| Difference relative to bare field | -0.002 | -0.004 | | | | | |
| Blue construction paper on both sides Hole opening rate 8%, and pitch 615 mm | 1.355 | 1.496 | 13h 19m 09s | 68500 | 68500 | 68500 | 68500 |
| Bare field | 1.362 | 1.500 | 13h 20m 13s | 68000 | 68000 | 68000 | 68000 |
| Difference relative to bare field | -0.007 | -0.004 | | | | | |

[FIG. 94]

.

| 〔表Ａ０７〕 | Ratio of R/B | Ratio of R/FR |
|---|---|---|
| Ratio of light of bare field | Criterion | Criterion |
| Ratio of light of sunny spot of sunlight filtering through foliage | Greater than bare field | Smaller than bare field |
| Ratio of light of shady spot of sunlight filtering through foliage | Smaller than bare field | Smaller than bare field |

[FIG. 95]

Table 4　2006(H18)/03/07
(Angle of SR-2 with respect to white plate: 90 degrees)　Hole opening rate 15%

| | R／B | R／FR | Time | Illuminance (lx) | | | |
|---|---|---|---|---|---|---|---|
| | | | | Start | MAX | MIN | End |
| Green construction paper on both sides 620 mm long X 590 mm wide<br>Hole opening rate 15%, and pitch 315 mm | 1.451 | 1.474 | 12h 39m 24s | 72000 | 72000 | 72000 | 72000 |
| Bare field | 1.372 | 1.509 | 12h 40m 23s | 72500 | 72500 | 72500 | 72500 |
| Difference relative to bare field | 0.078 | -0.035 | | | | | |
| Green construction paper on both sides 620 mm long X 590 mm wide<br>Hole opening rate 15%, and pitch 415 mm | 1.427 | 1.469 | 12h 43m 43s | 72000 | 72000 | 72000 | 72000 |
| Bare field | 1.369 | 1.498 | 12h 44m 48s | 72000 | 72000 | 72000 | 72000 |
| Difference relative to bare field | 0.058 | -0.029 | | | | | |
| Green construction paper on both sides 620 mm long X 590 mm wide<br>Hole opening rate 15%, and pitch 515 mm | 1.415 | 1.476 | 12h 46m 35s | 72000 | 72000 | 72000 | 72000 |
| Bare field | 1.376 | 1.509 | 12h 47m 31s | 72000 | 72000 | 72000 | 72000 |
| Difference relative to bare field | 0.039 | -0.034 | | | | | |
| Green construction paper on both sides 620 mm long X 590 mm wide<br>Hole opening rate 15%, and pitch 615 mm | 1.404 | 1.481 | 12h 49m 37s | 71500 | 71500 | 71500 | 71500 |
| Bare field | 1.378 | 1.514 | 12h 50m 37s | 72000 | 72000 | 72000 | 72000 |
| Difference relative to bare field | 0.027 | -0.033 | | | | | |

[FIG. 96]

〔表5〕

Table 5  2006(H18)/03/07  (Angle of SR-2 with respect to white plate: 90 degrees)
Hole opening rate 8%

| | R／B | R／FR | Time | Illuminance (lx) | | | |
|---|---|---|---|---|---|---|---|
| | | | | Start | MAX | MIN | End |
| Green construction paper on both sides 620 mm long X 590 mm wide<br>Hole opening rate 8%, and pitch 315 mm | 1.459 | 1.464 | 13h 06m 16s | 69500 | 69500 | 69500 | 69500 |
| Bare field | 1.372 | 1.513 | 13h 07m 25s | 69500 | 69500 | 69500 | 69500 |
| Difference relative to bare field | 0.087 | -0.049 | | | | | |
| Green construction paper on both sides 620 mm long X 590 mm wide<br>Hole opening rate 8%, and pitch 415 mm | 1.451 | 1.484 | 13h 09m 55s | 69000 | 69000 | 69000 | 69000 |
| Bare field | 1.381 | 1.522 | 13h 10m 53s | 69000 | 69000 | 69000 | 69000 |
| Difference relative to bare field | 0.069 | -0.038 | | | | | |
| Green construction paper on both sides 620 mm long X 590 mm wide<br>Hole opening rate 8%, and pitch 515 mm | 1.434 | 1.476 | 13h 18m 06s | 67500 | 67500 | 67000 | 67000 |
| Bare field | 1.390 | 1.509 | 13h 19m 12s | 68000 | 68000 | 68000 | 68000 |
| Difference relative to bare field | 0.044 | -0.033 | | | | | |
| Green construction paper on both sides 620 mm long X 590 mm wide<br>Hole opening rate 8%, and pitch 615 mm | 1.440 | 1.497 | 13h 21m 20s | 67500 | 67500 | 66500 | 66500 |
| Bare field | 1.397 | 1.513 | 13h 22m 23s | | | | |
| Difference relative to bare field | 0.043 | -0.017 | | | | | |

Green construction paper on both sides 620 mm long X 590 mm wide
Hole opening rate 15%, and pitch 315 mm           12h 39m 24s

Bare field           12h 40m 23s

Difference relative to bare field
Green construction paper on both sides 620 mm long X 590 mm wide
Hole opening rate 15%, and pitch 415 mm           12h 43m 43s

Bare field           12h 44m 48s

Difference relative to bare field
Green construction paper on both sides 620 mm long X 590 mm wide
Hole opening rate 15%, and pitch 515 mm           12h 46m 35s

Bare field           12h 47m 31s

Difference relative to bare field
Green construction paper on both sides 620 mm long X 590 mm wide
Hole opening rate 15%, and pitch 615 mm           12h 49m 37s

Bare field           12h 50m 37s

Difference relative to bare field

226

[FIG. 97]

〔表6〕

Table 6   2006(H18)/03/04 (Angle of SR-2 with respect to white plate: 90 degrees)
Hole opening rate 8%

| | R／B | R／FR | Time | Illuminance (lx) | | | |
|---|---|---|---|---|---|---|---|
| | | | | Start | MAX | MIN | End |
| Green construction paper on both Hole opening rate 8%, and pitch 119 mm | 1.412 | 1.472 | 12h 38m 19s | 74000 | 74000 | 74000 | 74000 |
| Bare field | 1.357 | 1.495 | 12h 39m 21s | 74000 | 74000 | 74000 | 74000 |
| Difference relative to bare field | 0.055 | −0.024 | | | | | |
| Green construction paper on both Hole opening rate 8%, and pitch 215 mm | 1.378 | 1.478 | 12h 41m 51s | 74500 | 74500 | 74500 | 74500 |
| Bare field | 1.355 | 1.491 | 12h 42m 53s | 74500 | 74500 | 74500 | 74500 |
| Difference relative to bare field | 0.024 | −0.013 | | | | | |
| Green construction paper on both Hole opening rate 8%, and pitch 315 mm | 1.364 | 1.492 | 12h 46m 01s | 74000 | 74000 | 74000 | 74000 |
| Bare field | 1.353 | 1.505 | 12h 47m 07s | 74500 | 74500 | 74500 | 74500 |
| Difference relative to bare field | 0.011 | −0.013 | | | | | |
| Green construction paper on both Hole opening rate 8%, and pitch 415 mm | 1.357 | 1.494 | 12h 48m 56s | 74000 | 74000 | 74000 | 74000 |
| Bare field | 1.359 | 1.504 | 12h 50m 01s | 74000 | 74000 | 74000 | 74000 |
| Difference relative to bare field | −0.002 | −0.010 | | | | | |
| Green construction paper on both Hole opening rate 8%, and pitch 515 mm | 1.350 | 1.489 | 12h 52m 56s | 74000 | 74000 | 74000 | 74000 |
| Bare field | 1.343 | 1.492 | 12h 54m 06s | 74000 | 74000 | 74000 | 74000 |
| Difference relative to bare field | 0.007 | −0.003 | | | | | |
| Green construction paper on both Hole opening rate 8%, and pitch 615 mm | 1.350 | 1.494 | 12h 56m 24s | 74000 | 74000 | 74000 | 74000 |
| Bare field | 1.347 | 1.496 | 12h 57m 26s | 74000 | 74000 | 74000 | 74000 |
| Difference relative to bare field | 0.003 | −0.002 | | | | | |

[FIG. 98]

〔表7〕

Table 7  2006(H18)/03/04 (Angle of SR-2 with respect to white plate: 90 degrees)
Hole opening rate 8%

| | R/B | R/FR | Time | Illuminance (lx) | | | |
|---|---|---|---|---|---|---|---|
| | | | | Start | MAX | MIN | End |
| Installation of green construction paper on both sides / Hole opening rate 8%, and pitch 315 mm | 1.424 | 1.475 | 14h 22m 26s | 58000 | 58000 | 58000 | 58000 |
| Bare field | 1.397 | 1.504 | 14h 24m 23s | 58000 | 58000 | 58000 | 58000 |
| Difference relative to bare field | 0.027 | -0.029 | | | | | |
| Installation of green construction paper on both sides / Hole opening rate 8%, and pitch 415 mm | 1.438 | 1.470 | 14h 31m 13s | 56000 | 56000 | 56000 | 56000 |
| Bare field | 1.405 | 1.494 | 14h 32m 25s | 56000 | 56000 | 56000 | 56000 |
| Difference relative to bare field | 0.032 | -0.024 | | | | | |

EP 2 457 435 A1

[FIG. 99]

〔表8〕

Table 8  2006(H18)/03/07 (Angle of SR-2 with respect to white plate: 90 degrees)
Hole opening rate 8%

| | R／B | R／FR | Time | Illuminance (lx) | | | |
|---|---|---|---|---|---|---|---|
| | | | | Start | MAX | MIN | End |
| Blue construction paper on both sides 620 mm long X 590 mm wide Hole opening rate 8%, and pitch 315 mm | 1.469 | 1.478 | 13h 25m 17s | 67500 | 67500 | 67000 | 67000 |
| Bare field | 1.391 | 1.512 | 13h 26m 12s | 66000 | 66000 | 66000 | 66000 |
| Difference relative to bare field | 0.078 | -0.034 | | | | | |
| Blue construction paper on both sides 620 mm long X 590 mm wide Hole opening rate 8%, and pitch 415 mm | 1.469 | 1.478 | 13h 36m 47s | 64000 | 64000 | 63500 | 63500 |
| Bare field | 1.414 | 1.515 | 13h 37m 48s | 64500 | 64500 | 64000 | 64000 |
| Difference relative to bare field | 0.055 | -0.038 | | | | | |
| Blue construction paper on both sides 620 mm long X 590 mm wide Hole opening rate 8%, and pitch 515 mm | 1.450 | 1.495 | 13h 39m 47s | 64000 | 64000 | 64000 | 64000 |
| Bare field | 1.418 | 1.519 | 13h 40m 45s | 64500 | 64500 | 64000 | 64000 |
| Difference relative to bare field | 0.031 | -0.025 | | | | | |

[FIG. 100]

〔表9〕

Table 9  2006(H18)/03/11 (Angle of SR-2 with respect to white plate: 90 degrees)
Hole opening rate 8%

|  | R／B | R／FR | Time | Illuminance (lx) | | | |
|---|---|---|---|---|---|---|---|
|  |  |  |  | Start | MAX | MIN | End |
| Blue construction paper on both sides 620 mm long X 590 mm wide Hole opening rate 8%, and pitch 315 mm | 1.639 | 1.481 | 13h 45m 24s | 62000 | 62000 | 62000 | 62000 |
| Bare field | 1.399 | 1.549 | 13h 46m 16s | 62000 | 62000 | 62000 | 62000 |
| Difference relative to bare field | 0.241 | -0.068 |  |  |  |  |  |
| Blue construction paper on both sides 620 mm long X 590 mm wide Hole opening rate 8%, and pitch 415 mm | 1.576 | 1.491 | 13h 48m 20s | 61000 | 61000 | 61000 | 61000 |
| Bare field | 1.388 | 1.544 | 13h 49m 17s | 61000 | 61000 | 60000 | 60000 |
| Difference relative to bare field | 0.189 | -0.052 |  |  |  |  |  |
| Blue construction paper on both sides 620 mm long X 590 mm wide Hole opening rate 8%, and pitch 515 mm | 1.563 | 1.498 | 13h 51m 37s | 60500 | 60500 | 60500 | 60500 |
| Bare field | 1.399 | 1.549 | 13h 52m 36s | 61000 | 61000 | 60000 | 60000 |
| Difference relative to bare field | 0.164 | -0.051 |  |  |  |  |  |
| Blue construction paper on both sides 620 mm long X 590 mm wide Hole opening rate 8%, and pitch 615 mm | 1.537 | 1.511 | 13h 54m 29s | 59500 | 59500 | 59500 | 59500 |
| Bare field | 1.380 | 1.551 | 13h 55m 28s | 59500 | 59500 | 59500 | 59500 |
| Difference relative to bare field | 0.157 | -0.039 |  |  |  |  |  |

EP 2 457 435 A1

[FIG. 101]

〔表１０〕
Hole opening rate: both sides 8%, and rear side 23%

| | R／B | R／FR | Time | Illuminance (lx) | | | |
|---|---|---|---|---|---|---|---|
| | | | | Start | MAX | MIN | End |
| Red construction paper on both sides 620 mm long X 590 mm wide Hole opening rate 8%, and pitch 415 mm Red construction paper on rear side 450 mm long X 410 mm wide Hole opening rate 23% | 1.761 | 1.454 | 13h 39m 12s | 62000 | 63000 | 62500 | 62500 |
| Bare field | 1.406 | 1.544 | 13h 41m 20s | 62500 | 62500 | 62500 | 62500 |
| Difference relative to bare field | 0.355 | -0.091 | | | | | |

231

[FIG. 102]

〔表11〕

Spectral radiance before transmitting vinyl sheet

| | Wavelength range adopted as criterion for specifying spectrum balance |
|---|---|
| Blue light | 3.2408204 <br> (420～470nm) |
| Red light | 4.5835271 <br> (615～680nm) |
| Far-red light | 2.9729010 <br> (700～750nm) |

[FIG. 103]

〔表１２〕

Spectral radiance after transmitting vinyl sheet

|  | Wavelength range adopted as criterion for specifying spectrum balance |
|---|---|
| Blue light | 2.7541377 |
|  | (420～470nm) |
| Red light | 4.1935218 |
|  | (615～680nm) |
| Far-red light | 2.7818510 |
|  | (700～750nm) |

[FIG. 104]

.

〔表13〕

| | Before transmitting vinyl sheet | After transmitting vinyl sheet | Difference before and after transmission |
|---|---|---|---|
| R／B | 1.4143107 | 1.522626 | 0.108 |
| R／FR | 1.5417692 | 1.5074575 | 0.034 |

[FIG. 105]

[表Ａ０８]

| | R／B | Difference relative to bare field | R／FR | Difference relative to bare field | Transmittance |
|---|---|---|---|---|---|
| Thin pink vinyl | 1.495 | 0.225 | 1.645 | 0.033 | 75.70% |
| Bare field | 1.27 | | 1.678 | | — |
| Spraying red paint on vinyl | 1.639 | 0.367 | 1.543 | 0.149 | 82.20% |
| Bare field | 1.272 | | 1.692 | | — |

EP 2 457 435 A1

[FIG. 106]

.

[表AO9]

| Measurement place | Measurement time | Illuminance (lx) | | | | | R/B | R/FR |
|---|---|---|---|---|---|---|---|---|
| | | Start | MAX | MIN | End | Average | | |
| Red film | 11時57分27秒 | 70000 | 70000 | 70000 | 70000 | 70000 | 41.035 | 1.315 |
| Bare field | 11時59分00秒 | 70500 | 70500 | 70500 | 70500 | 70500 | 1.392 | 1.502 |
| Difference relative to bare field | | | | | | | 39.643 | -0.187 |
| Red film | 12時01分59秒 | 70500 | 70500 | 70500 | 70500 | 70500 | 40.876 | 1.295 |
| Bare field | 12時03分12秒 | 71000 | 71000 | 71000 | 71000 | 71000 | 1.396 | 1.516 |
| Difference relative to bare field | | | | | | | 39.48 | -0.221 |

236

EP 2 457 435 A1

[FIG. 107]

〔表14〕

| Measurement place | Measurement time | Illuminance (lx) | | | | | R/B | R/FR |
|---|---|---|---|---|---|---|---|---|
| | | Start | MAX | MIN | End | Average | | |
| Cultivation house [7] (four types of vinyl) | 13h 06m 53s | 60000 | 60000 | 60000 | 60000 | 60000 | 1.810 | 1.423 |
| Bare field | 13h 09m 40s | 59500 | 59500 | 59500 | 59500 | 59500 | 1.345 | 1.619 |
| Difference relative to bare field | | | | | | | 0.465 | -0.196 |

[FIG. 108]

〔表１５〕

Illuminance measurement inside and outside cultivation house [7] (eggplants)

| Measurement place | Measurement time | Illuminance (lx) | Transmittance | Cultivation house [7] (lx) | |
|---|---|---|---|---|---|
| | | | | Bare field (lx) | |
| Cultivation house [7] (four types of vinyl) | 13h 03m | 43500 | | 69.60% | |
| Bare field | 13h 03m | 62500 | | | |

[FIG. 109]

〔表－Ａ１０〕　2006(H18)/08/24

| | R/B | R/FR | Time | Illuminance (lx) | | | | |
|---|---|---|---|---|---|---|---|---|
| | | | | Start | MAX | MIN | End | Average |
| House E | 1.382 | 1.719 | 13h 18m 01s | 95900 | 96400 | 95900 | 96400 | 96150 |
| Bare field sunny spot | 1.279 | 1.754 | 13h 22m 23s | 94700 | 95100 | 94700 | 94800 | 94825 |
| | Blue light | red light | far-red light | | | | | |
| | | | | | | | | |
| Wavelength range adopted as criterion for specifying spectrum balance | (420~470nm) | (615~680nm) | (700~750nm) | | | | | |
| | | | | | | | | |

[FIG. 110]

〔表－16〕

| | Measurement place | R／B | R／FR | Value of R/B ratio increased over that of bare field | Value of R/FR ratio decreased over that of bare field |
|---|---|---|---|---|---|
| House [1] | Spot of sunlight transmitting vinyl | 1.375 | 1.626 | 0.091 | 0.030 |
| | Spot where sunlight is directly irradiated (bare field) | 1.284 | 1.656 | 0.000 | 0.000 |
| House [2] | Spot of sunlight transmitting vinyl | — | — | 0.196 | 0.054 |
| | Spot where sunlight is directly irradiated | 1.349 | 1.640 | 0.093 | 0.019 |
| | bare field | 1.256 | 1.659 | | |
| House [3] | Spot of sunlight transmitting vinyl | — | — | 0.167 | 0.065 |
| | Spot where sunlight is directly irradiated | 1.330 | 1.648 | 0.064 | 0.030 |
| | bare field | 1.266 | 1.678 | | |
| House [5] | Spot of sunlight transmitting vinyl | — | — | 0.319 | 0.098 |
| | Spot where sunlight is directly irradiated | 1.513 | 1.578 | 0.216 | 0.063 |
| | bare field | 1.297 | 1.641 | | |
| House [6] | Spot of sunlight transmitting vinyl | — | — | 0.199 | 0.041 |
| | Spot where sunlight is directly irradiated | 1.381 | 1.644 | 0.096 | 0.006 |
| | bare field | 1.285 | 1.650 | | |

240

[FIG. 111]

[表 A 1 1] (Thickness of polyethylene that is material of rain-cover vinyl: 0.05 mm)

| | | House | Equipment |
|---|---|---|---|
| Rank of variation in ratio of light | 1 | House (5) | Referring to FIG. 28, rain-cover vinyl, red reflective plate, and red net are covered |
| | 2 | House (6) | Referring to FIG. 29, rain-cover vinyl and red reflective plate. |
| | 3 | House (2) | Referring to FIG. 26, rain-cover vinyl, red reflective plate, and blue LED. |
| | 4 | House (3) | Referring to FIG. 27, rain-cover vinyl, red reflective plate, and blue net. |
| | 5 | House (1) | Referring to FIG. 25, rain-cover vinyl. |

[FIG. 112]

〔表－1 7〕

| Measurement place | Measurement time | Illuminance (lx) | | | | | R／B | R／F R |
|---|---|---|---|---|---|---|---|---|
| | | Start | MAX | MIN | End | Average | | |
| West side [1] | 11h 27m 20s | 62500 | 62500 | 62500 | 62500 | 62500 | 1.606 | 1.409 |
| Bare field | 11h 29m 46s | 62500 | 63000 | 62500 | 63000 | 62750 | 1.375 | 1.549 |
| Center [2] | 11h 34m 49s | 63000 | 63000 | 63000 | 63000 | 63000 | 1.628 | 1.5 |
| Bare field | 11h 36m 56s | 63500 | 63500 | 63500 | 63500 | 63500 | 1.382 | 1.573 |
| East side [3] | 11h 44m 03s | 64000 | 64000 | 64000 | 64000 | 64000 | 1.62 | 1.546 |
| Bare field | 11h 46m 42s | 65000 | 65000 | 65000 | 65000 | 65000 | 1.36 | 1.577 |

[FIG. 113]

| [表－18] | | | | | | | | |
|---|---|---|---|---|---|---|---|---|
| Measurement place | Measurement time | Illuminance (lx) | | | | | R/B | R/FR |
| | | Start | MAX | MIN | End | Average | | |
| East side[4] | 12h 00m 20s | 66000 | 66000 | 65500 | 65500 | 65750 | 1.604 | 1.601 |
| Bare field | 12h 04m 28s | 65500 | 65500 | 65500 | 65500 | 65500 | 1.354 | 1.589 |
| East side[5] | 12h 08m 22s | 65000 | 65000 | 65000 | 65000 | 65000 | 1.63 | 1.536 |
| Bare field | 12h 10m 57s | 64500 | 65000 | 64500 | 65000 | 64750 | 1.36 | 1.568 |

[FIG. 114]

〔表－Ａ１２〕

| Date | Conditions of cultivation | Temperature | Results |
|---|---|---|---|
| 7/3→8/8 | In red house, seal house and maintain inside of house under high temperature. | Maximum temperature 55.5° C | Taste was not harsh, but was slightly bitter. In case of eggplants. could be eaten raw. |
| | Working sequence (A) | | Following star-marked sentence is also used for reference. |
| | See FIG. 31 | See Graph Table 19 | |
| 8/9→9/4 | In red house, during day, open house between 10:00 AM and 3:00 PM, and lower temperature in house | Maximum temperature 47.5° C | Taste was not harsh, but was quite bitter. Was edible but not very good. |
| | Working sequence (B) | | * Sponge portion could be eaten raw. |
| | See FIG. 31 | See Graph Table 20 | |
| 9/5→9/10 | In red house, seal house and maintain inside of house under high temperature. | Maximum temperature 45° C | Eggplants could be typically cultivated without dying. |
| | Working sequence (C) | | |
| | See FIG. 30 | See Graph Table 21 | |
| 9/14→9/19 | In house whose portion painted in red has been painted brown, seal house and maintain inside of house under high temperature. | Maximum temperature 45° C | Eggplants died. |
| | See FIG. 30 | See Graph Table 22 | |
| | Working sequence (C) | | |

[FIG. 115]

表－19 Record of maximum temperature in house during day.

| Month/Date | 7/3 | 7/4 | 7/7 | 7/10 | 7/11 | 7/12 | 7/14 | 7/15 | 7/16 | 7/19 |
|---|---|---|---|---|---|---|---|---|---|---|
| Temp. | — | — | $34°$ | $38°$ | $40.5°$ | $42°$ | $50.5°$ | $50.5°$ | $28°$ | $28.5°$ |

| Month/Date | 7/20 | 7/21 | 7/22 | 7/23 | 7/24 | 7/25 | 7/26 | 7/27 | 7/28 | 7/29 |
|---|---|---|---|---|---|---|---|---|---|---|
| Temp. | $28.5°$ | $30°$ | $34°$ | $25.5°$ | $45°$ | $47°$ | $51.5°$ | $28°$ | $51°$ | $55.5°$ |

| Month/Date | 7/30 | 7/31 | 8/1 | 8/2 | 8/3 | 8/4 | 8/5 | 8/6 | 8/7 | 8/8 |
|---|---|---|---|---|---|---|---|---|---|---|
| Temp. | $27.5°$ | $51°$ | $50.5°$ | $41.5°$ | $51°$ | $50.5°$ | $47.5°$ | $27.5°$ | $51°$ | $54°$ |

No measurement is made on Sundays, public holidays, and holidays designated by company.

[FIG. 116]

表－2 Records of maximum temperature in house during day.

| Month/Date | 8/9 | 8/10 | 8/11 | 8/14 | 8/17 | 8/18 | 8/19 | 8/21 | 8/22 | 8/23 |
|---|---|---|---|---|---|---|---|---|---|---|
| Temp. | 42.5° | 44° | 44° | 41° | 33.5° | 28° | 38.5° | 41.5° | 39° | 38° |

| Month/Date | 8/24 | 8/25 | 8/26 | 8/27 | 8/28 | 8/29 | 8/30 | 8/31 | 9/1 | 9/2 | 9/4 |
|---|---|---|---|---|---|---|---|---|---|---|---|
| Temp. | 38° | 39° | 39° | 26° | 44.5° | 47.5° | 33° | 33.5° | 35.5° | 34° | 43° |

No measurement is made on Sundays, public holidays, and holidays designated by company.

[FIG. 117]

| 表 － 2 1 Records of maximum temperature in house during day. | | | | | |
|---|---|---|---|---|---|
| Month/Date | 9/5 | 9/6 | 9/7 | 9/8 | 9/10 |
| Temp. | 37° | 25° | 42. 5° | 45° | － |
| No measurement is made on Sundays, public holidays, and holidays designated by company. | | | | | |

[FIG. 118]

| 表－２２ Records of maximum temperature in house during day. | | | |
|---|---|---|---|
| Month/Date | 9/14 | 9/15 | 9/16 | 9/19 |
| Temp. | 12° | 10. 5° | 27° | 45° |

No measurement is made on Sundays, public holidays, and holidays designated by company.

[FIG. 119]

| 〔表－Ａ１３〕 Senryo No. 2 | | | |
|---|---|---|---|
| | Typical cultivation method of Experiment 1 | Aboveground house of Experiment 2 (east) | Reflective plate in typical house of Experiment 1 |
| Water | 93. 4g/100g | 94. 6 g /100 g | 94. 1g/100g |
| | | 94. 2 g /100 g | |
| Potassium | 225mg/100g | 211mg/100 g | 202mg/100g |
| | | 216mg/100 g | |
| β-carotene | 106 μ g/100g | 98 μ g/100 g | 94 μ g/100g |
| | | 92 μ g/100 g | |
| Retinol equivalent weight | 9 μ g/100g | 8 μ g/100 g | 8 μ g/100g |
| | | 8 μ g/100 g | |
| Sugar content | 4. 9% | 4. 0% | 4. 2% |
| | | 4. 2% | |
| Chlorogenic acid | 0. 18g/100g | 0. 064 g /100 g | 0. 12g/100g |
| | | 85mg/100 g | |

[FIG. 120]

〔表－Ａ１４〕 Mizunotakumi

| | Typical cultivation method of Experiment 1 | Aboveground house of Experiment 2 (east) |
|---|---|---|
| Water | — | 94. 0g/100g |
| Potassium | 245mg/100g | 196mg/100g |
| $\beta$ -carotene | — | 119 $\mu$ g/100g |
| Retinol equivalent weight | — | 10 $\mu$ g/100g |
| Sugar content | 4. 8% | 4. 8% |
| Chlorogenic acid | 0. 23g/100g | 0. 12g/100g |

[FIG. 121]

〔表－Ａ１６〕

| | Degree of disease symptoms | How much greater is ratio of R/B than that of bare field? | How much less is ratio of R/FR than that of bare field? | Equipment |
|---|---|---|---|---|
| House [9] | 10 | 0.091 | 0.03 | Vinyl |
| House [1] | 6 | 0.199 | 0.041 | Vinyl / Red reflective plate |
| House [4] | 1.5 | 0.319 | 0.098 | Vinyl / Red reflective plate and red net |

[FIG. 122]

〔表 A 1 7〕

| | Condition of growth | How much greater is ratio of R/B than that of bare field? | How much less is ratio of R/FR than that of bare field? | Equipment |
|---|---|---|---|---|
| House [8] | Dying and becoming extremely weak | 0. 091 | 0. 03 | Vinyl |
| House [2] | Undergoing discoloration of leaves at lower stem weakened overall. | 0. 199 | 0. 041 | Vinyl<br>Red reflective plate |
| House [3] | Growing normally. | 0. 319 | 0. 098 | Vinyl<br>Red reflective plate<br>Red net |

[FIG. 123]

〔表Ａ１８〕 House [7]

| | 10/28 | 29 (Date) | 30 | 31 | 11/1 | 2 | 3 | 4 | 5 (Date) | 6 | 7 | 8 | 9 | 10 |
|---|---|---|---|---|---|---|---|---|---|---|---|---|---|---|
| Temp. | 29.5° | — | 40° | 39° | 36° | 38° | — | 38° | — | 33° | 32° | 34° | 38° | 36° |

| | 11/11 | 12 (Date) | 13 | 14 | 15 | 16 | 17 | 18 | 19 (Date) | 20 | 21 | 22 | 23 | 24 |
|---|---|---|---|---|---|---|---|---|---|---|---|---|---|---|
| Temp. | — | — | 35° | 30° | 33.5° | 35° | 34° | 25° | — | 32° | 33.5° | 27° | — | 29° |

| | 11/25 | 26 (Date) | 27 | 28 | | | | | | | | | | |
|---|---|---|---|---|---|---|---|---|---|---|---|---|---|---|
| Temp. | 25.5° | — | 28° | 30° | | | | | | | | | | |

EP 2 457 435 A1

[FIG. 124]

.

〔表A19〕 House [7]

| Month/<br>Date | 11/28 | 29 | 30 | 12/1 | 2 | 3<br>(Date) | 4 | 5 | 6 |
|---|---|---|---|---|---|---|---|---|---|
| Temp. | 30 | 31 | 32 | 38 | 47.8 | | 38 | 37 | 42 |

254

[FIG. 125]

〔表Ａ２０〕 House [7]

| Month/ Date | 12/7 | 8 | 9 | 10 (Date) | 11 |
|---|---|---|---|---|---|
| Temp. | 35 | 11 | 13 | | 11.5 |

※ Highest temperature during day is shown.

[FIG. 126]

〔表Ａ２１〕House [7]

| Month/Date | 12/12 | 13 | 14 |
|---|---|---|---|
| Temp. | 42 | 43 | 36 |

※ Highest temperature during day is shown.

[FIG. 127]

[Table A]  Results of survey for taste examination  (Table A)  House [7] with mark

| | None | Faint Slight | Some | Quite | Strong | Unspecified |
|---|---|---|---|---|---|---|
| Harsh taste | 6 | 3 | 0 | 0 | 0 | 1 |
| Bitter taste | 3 | 4 | 3 | 0 | 0 | 0 |
| Unripe taste | 2 | 6 | 2 | 0 | 0 | 0 |
| Sweet taste | 3 | 4 | 3 | 0 | 0 | 0 |

| Refreshing sense | Very refreshing | | Unspecified | | Not refreshing | |
|---|---|---|---|---|---|---|
| | 8 | | 1 | | 1 | |

| Good taste | Delicious | Good but bad aftertaste | Not good |
|---|---|---|---|
| | 6 | 1 | 3 |

[FIG. 128]

[Table B] Results of survey for taste examination
(Table B) House [7] without mark

| | None | Faint Slight | Some | Quite | Strong | Unspecified |
|---|---|---|---|---|---|---|
| Harsh taste | 14 | 0 | 0 | 0 | 0 | 3 |
| Bitter taste | 11 | 5 | 1 | 0 | 0 | 0 |
| Unripe taste | 10 | 6 | 0 | 0 | 0 | 1 |
| Sweet taste | 1 | 7 | 9 | 0 | 0 | 0 |
| Refreshing sense | Very refreshing | | Unspecified | | Not refreshing | |
| | 16 | | 1 | | 0 | |
| Good taste | Delicious | | Good but bad aftertaste | | Not good | |
| | 15 | | 2 | | 0 | |

[FIG. 129]

[Table A22] House [5]

| Month/Date | 12/7 | 8 | 9 | 10 (Date) | 11 | 12 | 13 | 14 |
|---|---|---|---|---|---|---|---|---|
| Temp. | 29 | 41 | 43 | | 41.5 | 42 | 43 | 31 |

❈ Highest temperature during day is shown.

[FIG. 130]

[Table C]  Results of survey for taste examination
(Table C)  House [5] with mark

| | None | Faint Slight | Some | Quite | Strong | Unspecified |
|---|---|---|---|---|---|---|
| Harsh taste | 13 | 1 | 0 | 0 | 0 | 0 |
| Bitter taste | 4 | 7 | 3 | 0 | 0 | 0 |
| Unripe taste | 6 | 8 | 0 | 0 | 0 | 0 |
| Sweet taste | 5 | 5 | 3 | 1 | 0 | 0 |
| Refreshing sense | Very refreshing | | Unspecified | | Not refreshing | |
| | 8 | | 4 | | 2 | |
| Good taste | Delicious | | Good but bad aftertaste | | Not good | |
| | 8 | | 5 | | 1 | |

[FIG. 131]

[Table D]  Results of survey for taste examination
(Table D)  House [5] without mark

| | None | Faint Slight | Some | Quite | Strong | Unspecified |
|---|---|---|---|---|---|---|
| Harsh taste | 20 | 1 | 0 | 0 | 0 | 0 |
| Bitter taste | 15 | 5 | 1 | 0 | 0 | 0 |
| Unripe taste | 13 | 7 | 0 | 0 | 0 | 1 |
| Sweet taste | 1 | 7 | 11 | 2 | 0 | 0 |

| Refreshing sense | Very refreshing | | Unspecified | | Not refreshing | |
|---|---|---|---|---|---|---|
| | 18 | | 3 | | 0 | |

| Good taste | Delicious | | Good but bad aftertaste | | Not good | |
|---|---|---|---|---|---|---|
| | 19 | | 2 | | 0 | |

[FIG. 132]

[Table A24] Vinyl covering date   2006(H18)/09/30

| Measurement time | Bare field (lx) | No waterdrop(lx) | Waterdrop (lx) |
|---|---|---|---|
| 11:56 | 63700 | 54300 [85.2%] | 38700 [60.8%] |
| 12:00 | 64700 | 53400 Influence of clouds [82.5%] | 39500 [61.1%] |

Value inside brackets indicates transmittance

[FIG. 133]

| [Table A25] Vinyl covering date    2006(H18)/12/20 | | | |
|---|---|---|---|
| Measurement time | Bare field (lx) | No waterdrop(lx) | Waterdrop (lx) |
| 11:47 | 59800 | 53500 [89.5%] | 43300 [72.4%] |
| 11:50 | 62200 | 56600 [91.0%] | 44600 [71.7%] |
| Value inside brackets indicates transmittance | | | |

[FIG. 134]

| [Table A26] 2007(H19)/01/25 (Thursday) House [5] Transmittance measurement | | | |
|---|---|---|---|
| Measurement time | Bare field (lx) | No waterdrop(lx) | Waterdrop (lx) |
| 11:57 | 71100 | 67500 [94.9%] | 57400 [80.7%] |
| 12:00 | 72500 | 68600 [94.6%] | 58100 [80.1%] |
| Value inside brackets indicates transmittance | | | |

[FIG. 135]
.

| [Table A27] 2007(H19)/01/25 (Thursday) House [7] Transmittance measurement (Re-covered with dual vinyl on January 23) | | | | |
|---|---|---|---|---|
| Measurement time | Bare field (lx) | Inside of dual vinyl (lx) | Transmittance | Average transmittance |
| | | Waterdrop | | |
| 11:51 | 70800 | 47700 | 67.40% | 68.05% |
| 11:53 | 70900 | 48700 | 68.70% | |

[FIG. 136]

[Table A28] 2007(H19)/01/29 (Monday) Sunny House [7] Transmittance measurement (Re-covered with dual vinyl on January 25)

| Measurement time | Bare field (lx) | Inside of dual vinyl (lx) | Transmittance | Average transmittance |
|---|---|---|---|---|
| | | Waterdrop | | |
| 12:02 | 71000 | 49800 | 70.10% | 71.30% |
| 12:05 | 71200 | 51600 | 72.50% | |

[FIG. 137]

.

〔表A29〕

| | 1 | 2 | 3 | 4 | 5 | 6 | 7 | 8 | 9 | 10 |
|---|---|---|---|---|---|---|---|---|---|---|
| Number of leaves having wormholes | 4 | 4 | 4 | 4 | 2 | 2 | 4 | 4 | 2 | 4 |

[FIG. 138]

〔表A30〕

House illuminance measurement          2007(H19)/07/27 (Friday) Sunny

| Measurement place | Measurement time | Illuminance (lx) | | Transmittance | Average Transmittance |
|---|---|---|---|---|---|
| | | Bare field | Inside of house | | |
| House [2] | 10h 21m | 88300 | 70100 | 79.40% | 80.30% |
| | | | 71700 | 81.20% | |
| House [8] | 10h 24m | 89000 | 77300 | 86.90% | 87.15% |
| | | | 77800 | 87.40% | |
| House [11] | 10h 27m | 89500 | 77800 | 86.90% | 87.40% |
| | | | 78700 | 87.90% | |
| House [12] | 10h 29m | 89800 | 67800 | 75.50% | 74.45% |
| | | | 65900 | 73.40% | |
| House [13] | 10h 31m | 90300 | 68500 | 75.90% | 76.95% |
| | | | 70400 | 78.00% | |
| House [A] | 10h 35m | 91000 | 66300 | 72.90% | 73.35% |
| | | | 67200 | 73.80% | |

[FIG. 139]

〔表Ａ３１〕

House illuminance measurement          2007(H19)/08/06 (Monday)

| Measurement place | Measurement time | Illuminance (lx) | | Transmittance | Average Transmittance |
|---|---|---|---|---|---|
| | | Bare field | Inside of house | | |
| House [11] | 13h 14m | 99700 | 85600 | 85.90% | 86.95% |
| | | | 87700 | 88.00% | |
| House [12] | Waterdrop 13h 15m | 97100 | 65100 | 67.00% | 66.35% |
| | | | 63800 | 65.70% | |

[FIG. 140]

〔表A32〕
Tomato : Analysis experiment results

| | | | Typical cultivation | Sealed cultivation |
|---|---|---|---|---|
| Vitamin A | | β-carotene equivalent weight | 445 μ g/100g | 324 μ g/100g |
| | | α-carotene | 14 μ g/100g | 7 μ g/100g |
| | | β-carotene | 438 μ g/100g | 320 μ g/100g |
| | | Retinol equivalent weight | 37 μ g/100g | 27 μ g/100g |
| Citric acid | | | 0.65g/100g | 0.59 g/100 g |
| Malic acid | | | 0.03g/100g | 0.04 g/100 g |
| Sugar content | | | 8.3% | 7.1% |

[FIG. 141]

〔表A33〕

| | |
|---|---|
| Experiment 5 | Buds fall without blooming.  Some mildew is also present, and black mold is also present.  Fruits are deformed, in which color is not glossy and thus rough, and surface is uneven and coarse, and they do not look appetizing. Under this situation, when red light (R) of LED is irradiated, flowers begin to bloom from tenth day after irradiation. Progress of disease symptoms is stopped. All newly fruiting eggplants were glossy and had good shape. |
| Experiment 7 | Buds fall without blooming.  Fruits are deformed, in which color is not glossy and thus rough, and surface is uneven, and they do not look appetizing. Under this situation, when red light (R) of LED was irradiated, irradiated eggplants were weaker than eggplants in a non-irradiated house, became inactive, and color and shape of fruit became bad. All newly fruiting eggplants were glossy and had good shape. |
| Experiment 8 | When there was no blooming, irradiation of red light (R) of LED was begun. Fruits have glossy purple color and good shape. Despite irradiation, situation where no effects are produced lasted long time.  Without normal weakening, breakage, and malformation of fruits, this state continued. Only change was that growth of fruits was remarkably slow, and some fruits underwent breakage. |

[FIG. 142]

〔表A 3 4〕

2008(H20)/02/15 (Friday) Sunny

| Measurement place | Measurement time | Bare field illuminance (lx) | Illuminance inside house (lx) | | | Transmittance (%) | | | Average Transmittance |
|---|---|---|---|---|---|---|---|---|---|
| | | | (A) | (B) | (C) | (A) | (B) | (C) | |
| House G-a | 11h 26m | 69,800 | 24,700 | 25,200 | 29,100 | 35.4 | 36.1 | 41.7 | 37.7% |
| | 15h 32m | 44,700 | 15,200 | 15,900 | 16,900 | | | | |
| House G-b | 11h 29m | 70,200 | 35,700 | 38,400 | 37,200 | 50.9 | 54.7 | 53.0 | 52.9% |
| | 15h 35m | 44,100 | 17,600 | 21,200 | 19,700 | | | | |
| House G-c | 11h 34m | 71,000 | 35,100 | 38,600 | 40,600 | 49.4 | 54.4 | 57.2 | 53.7% |
| | 15h 42m | 43,600 | 17,100 | 22,100 | 23,100 | | | | |
| House G-d | 11h 36m | 71,300 | 52,500 | 49,100 | 53,100 | 73.6 | 68.9 | 74.5 | 72.3% |
| | 15h 45m | 43,100 | 29,900 | 27,500 | 32,100 | | | | |
| House [8] | 11h 39m | 71,900 | 62,600 | 63,700 | 61,300 | 87.1 | 88.6 | 85.3 | 87.0% |
| | 15h 47m | 42,300 | 37,300 | 38,100 | 36,200 | | | | |

[FIG. 143]

[表A－３５]

| Cultivation house | Radish greens (including root) | Spinach (including root) | Sunny lettuce (including root) | Sunny lettuce (excluding root) |
|---|---|---|---|---|
| House G-a | ９８ｇ | ９２ｇ | １９６ｇ | １８４ｇ |
| House G-b | １２６ｇ | １０６ｇ | ２１０ｇ | １９０ｇ |
| House G-c | ９２ｇ | １４０ｇ | １２８ｇ | １１２ｇ |
| House G-d | １６０ｇ | ９０ｇ | ２１４ｇ | ２０２ｇ |
| House [8] | ７４ｇ | ７０ｇ | １２２ｇ | １０８ｇ |

[FIG. 144]

〔表Ａ－３６〕

| Cultivation house | Radish greens (including root) | Spinach (including root) | Sunny lettuce (including root) |
|---|---|---|---|
| House G-a | 1.3 times | 1.3 times | 1.6 times |
| House G-b | 1.7 times | 1.5 times | 1.7 times |
| House G-c | 1.2 times | 2.0 times | 1.05 times |
| House G-d | 2.2 times | 1.3 times | 1.8 times |

[FIG. 145]

| [表A－４３] 2008(H20)/08/25 (Monday) Clear | | | | | |
|---|---|---|---|---|---|
| Measurement place | Measurement time | Bare field illuminance | Inside of house | | Transmittance |
| | | | Illuminance | Average illuminance | |
| Cultivation house2 (red spray house) | 14h 56m | 72000ℓx | 5 6 5 0 0ℓx | about | |
| | | | 5 4 5 0 0ℓx | 5 5 7 0 0ℓx | 77.40% |
| | | | 5 6 0 0 0ℓx | | |
| Cultivation house14 (red net house) | 14h 58m | 71500ℓx | 4 8 0 0 0ℓx | about | |
| | | | 4 6 0 0 0ℓx | 4 7 0 0 0ℓx | 65.70% |
| | | | 4 7 0 0 0ℓx | | |
| Cultivation house8 (peasant house) | 15h 03m | 70500ℓx | 6 1 0 0 0ℓx | about | |
| | | | 6 3 0 0 0ℓx | 6 2 0 0 0ℓx | 87.90% |
| | | | 6 2 0 0 0ℓx | | |

[FIG. 146]

〔表Ａ－３８〕

| House | Blooming | Falling | Significant number of flowers |
|-------|----------|---------|-------------------------------|
| 〔2〕 | 28 | 3 | 25 |
| 〔14〕 | 19 | 4 | 15 |
| 〔8〕 | 28 | 9 | 19 |

[FIG. 147]

〔表A-46〕

| House | Blooming | Falling | Significant number of flowers | Total yield |
|---|---|---|---|---|
| 〔2〕 | 100 | 43 | 57 | 39 |
| 〔14〕 | 60 | 28 | 32 | 19 |
| 〔8〕 | 89 | 57 | 32 | 27 |

**EP 2 457 435 A1**

| INTERNATIONAL SEARCH REPORT | International application No. |
|---|---|
| | PCT/JP2010/004634 |

A.  CLASSIFICATION OF SUBJECT MATTER
*A01G7/00*(2006.01)i, *A01G13/02*(2006.01)i, *A01M29/00*(2006.01)i

According to International Patent Classification (IPC) or to both national classification and IPC

B.  FIELDS SEARCHED

Minimum documentation searched (classification system followed by classification symbols)
A01G7/00, A01G13/02, A01M29/00

Documentation searched other than minimum documentation to the extent that such documents are included in the fields searched
Jitsuyo Shinan Koho       1922-1996   Jitsuyo Shinan Toroku Koho   1996-2010
Kokai Jitsuyo Shinan Koho  1971-2010   Toroku Jitsuyo Shinan Koho   1994-2010

Electronic data base consulted during the international search (name of data base and, where practicable, search terms used)
JSTPlus(JDreamII), JST7580(JDreamII), CiNii

C.  DOCUMENTS CONSIDERED TO BE RELEVANT

| Category* | Citation of document, with indication, where appropriate, of the relevant passages | Relevant to claim No. |
|---|---|---|
| Y<br>A | Takafumi TOYAMA, "Photoselective covering materials for plant growth regulation.", Shokubutsu no Kagaku Chosetsu, 1999, 34(2), pages 283 to 293 | 1-8,10-34<br>9,35 |
| Y<br>A | JP 59-213348 A  (Mitsubishi Monsanto Kasei Biniru Kabushiki Kaisha), 03 December 1984 (03.12.1984), entire text (Family: none) | 1-8,10-34<br>9,35 |
| Y<br>A | JP 2007-135583 A  (Tokyo University of Science), 07 June 2007 (07.06.2007), entire text; all drawings (Family: none) | 1-8,10-34<br>9,35 |

☒  Further documents are listed in the continuation of Box C.        ☐  See patent family annex.

*    Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search<br>30 September, 2010 (30.09.10) | Date of mailing of the international search report<br>12 October, 2010 (12.10.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2010/004634 |

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2006-42706 A (Shigetaka KAMAHARA),<br>16 February 2006 (16.02.2006),<br>claim 5<br>(Family: none) | 8,10-34<br>9,35 |
| A | JP 6-46685 A (Nippon Soda Co., Ltd.),<br>22 February 1994 (22.02.1994),<br>entire text<br>(Family: none) | 1-35 |
| A | JP 2004-121173 A (Matsushita Electric Works,<br>Ltd.),<br>22 April 2004 (22.04.2004),<br>paragraph [0002]<br>(Family: none) | 1-35 |

Form PCT/ISA/210 (continuation of second sheet) (July 2009)

**EP 2 457 435 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006042706 A
- JP 2004121173 A
- JP 2007109678 A
- JP 2006204250 A
- JP 2007222039 A